# EUROPEAN PATENT APPLICATION

(11) **EP 1 705 608 A1**
(43) Date of publication of application: **27.09.2006**
(21) Application number: 06251616.6
(22) Date of filing: 24.03.2006
(51) Int. Cl.: G06Q 10/00

(54) **Client -server architecture for managing customer vehicle leasing**

(30) Priority: 25.03.2005 US 90400
(71) Applicant: The Crawford Group, Inc., St. Louis, MO 63105 (US)
(72) Inventor: Schuchardt, Jeff D., St. Louis, MO 63123 (US); McDaris, Mark E., Wildwood, Missouri, MO 63005 (US)
(74) Representative: Hackney, Nigel John

(57) **Abstract**

A system for managing a credit profile for a customer having a fleet of leased vehicles, the system comprising: (a) a client computer; (b) a server in communication with the client computer; and (c) a database in communication with the server, the database being configured to store a plurality of customer credit profiles, each customer credit profile comprising a credit limit for a customer and a leased vehicle limit for a customer, the credit limit corresponding to a maximum amount of monetary credit that has been authorized for extension to the customer, the leased vehicle limit corresponding to a maximum number of leased vehicles that are authorized for the customer's leased vehicle fleet; and wherein the server is configured to (1) provide a plurality of GUIs for display on the client computer, wherein at least one of the GUIs is configured to submit a request for a change to a customer's credit profile in response to user input, at least one of the GUIs is configured to display at least a portion of the customer's credit profile in response to user input, and at least one of the GUIs is configured to receive input from the user corresponding to an action to take on the submitted request, and (2) update the customer's credit profile in accordance with the action input. Also disclosed herein is a method for managing a credit profile for a customer having a fleet of leased vehicles.

## Description

### Field of the Invention:

The present invention relates to an improved client-server system for managing customer vehicle leases. In particular, the present invention relates to an improved web-enabled client-server system for managing the customer's credit in connection with customer vehicle leases.

### Background and Summary of the Invention:

At any given time, a fleet management company may lease numerous vehicles to a plurality of customers for use in the customers' respective vehicle fleets. For example, a given company may lease several vehicles for use by its sales personnel. Another company may lease vehicles not only for use by its sales personnel but also for use by its field service personnel. Yet another company may lease vehicles not only for use by its sales personnel and field service personnel, but also for its executives. A fleet management company may be hired be these companies to manage the companies' leased vehicle fleets. The types of vehicles being leased and the types of leases may vary not only from customer company to customer company, but also within a single customer company. For many customers, both large and small, the needs of their leased vehicle fleets are complex and constantly shifting over time, which inevitably creates complex management issues for fleet managers who are tasked with making management decisions for multiple customers, each of which has its own unique fleet of leased vehicles.

Among the issues that face fleet managers is the delicate matter of determining appropriate credit limits for a customer in connection with that customer's leased vehicle fleet. By allowing customers to lease too many vehicles, a fleet manager may create a situation where the customer's ability to meet its lease payment obligations is threatened. At the same time, by placing too many limits on a customer's leasing ability, a fleet manager may not only alienate the customer but also negatively impact the fleet management company by not realizing the full business potential of the fleet manager's relationship with that customer. It is often the case that the standard credit reports provided by third vendors are insufficient to meet the needs of fleet managers who are assessing the credit to be extended to lease customers.

These issues become particularly acute for fleet managers in connection with customers that are small to medium-sized businesses. Unlike large corporations, financial information about small to medium-sized businesses can be harder to obtain. Furthermore, the margin of error for fleet managers when making decisions on how much credit to extend to small businesses or medium-sized businesses is often less comfortable than it is with respect to large companies because the funds available to such businesses to pay leasing costs are typically significantly less than the funds that a large corporation can access. As such, the inventors herein believe that a tool is needed that allows fleet managers to conduct detailed assessments of their customers' credit profiles so that those fleet managers can make more informed decisions when extending credit to their customers.

In a previous system operated by the assignee of the present invention, fleet managers did not have access to an integrated tool that provided those fleet managers with detailed views of their customers' financial situations and fleet investments and from which those fleet managers could assess a customer's credit situation. For example, no standardized technique was used to determine the risk associated with each customer's fleet. Each fleet manager was essentially free to make independent decisions with respect to his/her customer's credit situation. Moreover, the acquisition and display of customer financial data was not uniform; no standardized technique was available to identify the reliability of the customer financial data. Moreover, this system was limited in the degree to which it could communicate the reliability of the customer's stored financial information in that the system only noted whether financial statements or tax returns were available for the customer (and for how many previous years this data was available). No indicators were systematically provided as to the reliability of that financial data.

In an effort to meet the delicate credit profile management needs for managers of leased vehicle fleets, disclosed herein is an integrated system that provides fleet managers with efficient access to vast stores of financial information about a customer and further allows fleet managers with multiple levels of approval authority to submit requests for changes to a customer's credit profile, review those requests, and take final actions on such requests (i.e., approve or reject the requests). Credit reviews are performed in the context of projected leased vehicle needs of the customer to enable a determination of whether the customer's credit profile supports those needs. The inventive system preferably also allows fleet managers to perform periodic reviews of a customer's credit profile.

Through use of the invention which provides the set of graphical user interfaces (GUIs) disclosed herein, users of the present invention can obtain valuable and detailed views of specific aspects of the customer's various credit limits, the customer's current fleet of leased vehicles, the customer's projected fleet needs, the risk associated with both the customer's current fleet and projected fleet, as well as a wide array of financial information about the customer. Through use of the information displayed in these GUIs, fleet managers can make informed decisions when extending credit to customers.

As such, according to one aspect of the present invention, disclosed herein is a system for managing a credit profile for a customer having a fleet of leased vehicles, the system comprising: (a) a client computer; (b) a server in communication with the client computer; and (c) a database in communication with the server, the database being configured to store a plurality of customer credit profiles; and wherein the server is configured to (1) provide a plurality of GUIs for display on the client computer, wherein at least one of the GUIs is configured to submit a request for a change to a customer's credit profile in response to user input, at least one of the GUIs is configured to display at least a portion of the customer's credit profile in response to user input, and at least one of the GUIs is configured to receive input from the user corresponding to an action to take on the submitted request, and (2) update the customer's credit profile in accordance with the action input. As used herein, the term "credit profile" refers to stored data about a customer company's creditworthiness in connection with vehicle leasing, and includes at least a credit limit corresponding to a maximum amount of monetary credit that has been authorized for extension to the customer and a leased vehicle limit corresponding to a maximum number of leased vehicles that are authorized for the customer's leased vehicle fleet. However, in addition to these fields, the credit profile may also include other limits placed on customers (e.g., a per vehicle credit limit, a per vehicle aftermarket equipment (AME) credit limit, a maximum maintenance management amount, and a maximum risk management amount), as described in greater detail below. The increased number of such limits is believed to be particularly valuable when making decisions in connection with extending credit to small and medium-sized customers.

According to another aspect of the present invention, disclosed herein is a method for managing a credit profile for a customer having a fleet of leased vehicles, the method comprising: (a) providing at least one GUI through which a user can submit a request to review a proposed change to a customer's stored credit profile; (b) providing at least one GUI through which a user can view data stored in a customer's credit profile in response to a submitted credit review request; (c) providing at least one GUI through which a user can provide input corresponding to an approval or rejection of the credit profile change request; and (d) updating the customer's stored credit profile in accordance with the user's approval or rejection input.

According to yet another aspect of the present invention, the financial information about the customer that may be stored in each customer's credit profile is preferably accompanied by an identifier that indicates the level of scrutiny that was applied to that financial information, preferably by an external auditor. Preferably a plurality of identifiers exist, each of which corresponds to a different level of scrutiny. These financial information scrutiny indicators are particularly valuable in connection with managing the credit profiles for customers that are smaller in scale than typical large corporations. For many small to medium-sized businesses, fully audited financial statements are not always readily available, but credit decisions will nevertheless have to be made. By providing the scrutiny indicators for customer financial information discussed above, fleet managers are provided with the ability to make better informed decisions when extending credit to their customers.

The method preferably further comprises providing at least one GUI through which a user can selectively choose to request a change in either or both of the customer's credit limit and the customer's vehicle limit, and optionally other credit profile parameters as disclosed in greater detail below.

These and other feature of the invention will be in part apparent and in part pointed out to those of ordinary skill in the art upon a review of the teachings herein. The below described preferred embodiment is meant to be illustrative of the invention and not limiting. Instead the invention is intended to be limited only by the claims and their legal equivalents.

### Brief Description of the Drawings:

Figure 1 illustrates a preferred hardware environment for the preferred embodiment of the present invention;
Figure 2 illustrates an exemplary preferred credit conditions page;
Figure 3 illustrates an exemplary preferred credit hold summary page;
Figure 4 illustrates an exemplary preferred credit hold creation page;
Figure 5 illustrates an exemplary preferred credit hold update page;
Figure 6 illustrates an exemplary preferred order hold summary page;
Figure 7 illustrates an exemplary preferred order hold creation/release page;
Figures 8(a)-(c) illustrate an exemplary preferred financial summary display page;
Figures 9(a)-(c) illustrate an exemplary preferred financial summary creation page'
Figure 10 illustrates an exemplary preferred credit review history page;
Figure 11 illustrates an exemplary preferred credit review creation page;
Figures 12(a) and 12(b) illustrate an exemplary preferred customer credit limits page;
Figure 13 illustrates an exemplary preferred customer leased vehicle plan page;
Figures 14(a) and 14(b) illustrate an exemplary preferred leased vehicle plan details page;
Figure 15 illustrates an exemplary preferred fleet risk analysis page;
Figure 16 illustrates an exemplary preferred credit review notes introduction page;
Figure 17 illustrates an exemplary preferred customer description notes page;
Figure 18 illustrates an exemplary preferred customer-lessor relationship description page;
Figure 19 illustrates an exemplary preferred customer financial condition description page;
Figure 20 illustrates an exemplary preferred fleet profile notes page;
Figure 21 illustrates an exemplary preferred credit review approvals page;
Figure 22 illustrates an exemplary preferred credit review approvals update page; and
Figures 23(a)-(d) illustrate an exemplary credit report produced by the preferred embodiment of the present invention.

### Detailed Description of the Preferred Embodiment:

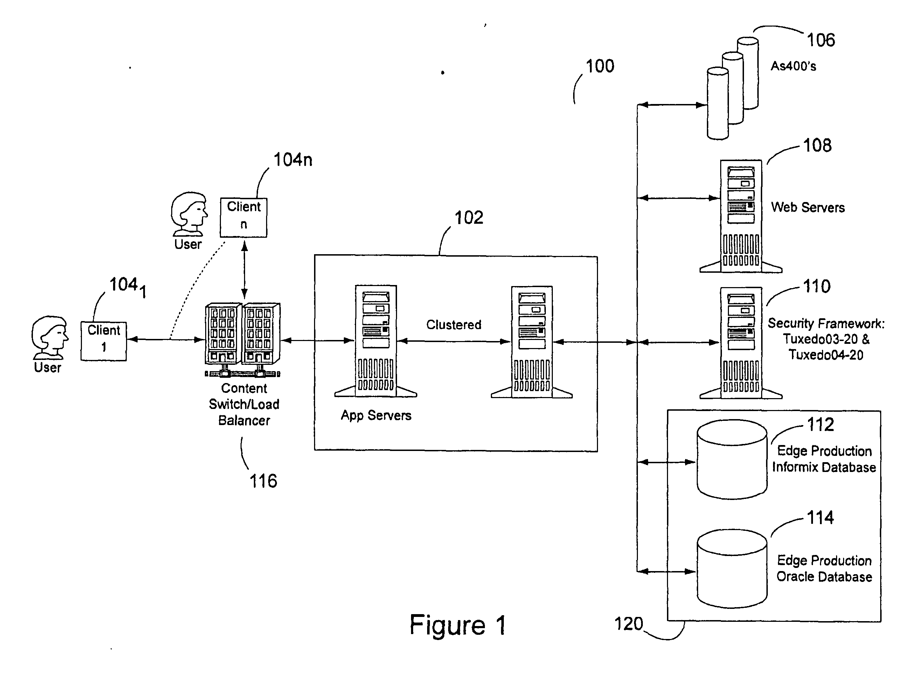

Figure 1 depicts a suitable hardware architecture for the preferred embodiment of the present invention. The system 100 comprises an application server 102 (preferably clustered servers) in communication with, at the front end, a plurality of client computers 104₁ through 104ₙ (preferably via a content switch/load balancer 116 that acts as a network traffic cop as is known in the art). The client computers 104 can interconnect with the application server 102 via any known technique for data communication, although a local area network (LAN) connection such as with an intranet is preferred. At the back end, the application server 102 is preferably in communication with one or more databases and other servers via TCP/IP over an Ethernet connection. Once again, any known technique for data communication can be used by the application server 102 to communicate with the one or more databases and backend servers.

Application server 102 can preferably access database 120, wherein database 120 is preferably configured to store the customer credit profiles and data related thereto, such as data about the customer's current and planned leased vehicle fleets, including but not limited to data such as quote data and order data for each customer's fleet. Database 120 may comprise one or more databases. As shown in Figure 1, database 120 comprises a database 112 in which the majority of the customer data is stored and a database 114 in which vehicle-specific data from a third party provider such as Autodata is stored. Database 112 may be an Informix production database on a Sun E4500 running Solaris 2.6 and database 114 may be an Oracle production database on an IBM RS6000 running AIX 5.2. If desired, the data stored in databases 112 and 114 can be combined into a single Oracle database. However, it should be understood by those of ordinary skill in the art that still other data storage arrangements could be used. For example, the data stored in databases 112 and 114 could be stored in several distributed databases.

The application server 102 may also be in communication with a plurality of AS/400's 106, which are preferably configured to maintain vehicle information for leased vehicles from activation through lease deletion. Furthermore, the application server may also be in communication with one or more web servers 108. which are preferably configured to access any vehicle image data that may be needed, as well as a security framework system 110. The security framework server 110 preferably is configured to control which users have access to which GUIs as well as what actions each user can take on each GUI. As explained in greater detail below, this security is preferably based on assigned security clearances for various users.

Preferred hardware for the application server 102 and web servers 108 comprise IBM RS6000 servers running AIX 5.2. Preferred hardware for the client computers 104 are standard desktop PCs. Preferred hardware for the content switch/load balancer 116 is a Cisco 11503 running a 5.0.0 OS. Preferred hardware for the AS/400s 106 are IBM AS/400s. Preferred hardware for the security framework system servers 110 are HP Proliant DL360 G3 servers running Windows 2000. However, it should be understood by those having ordinary skill in the art that any of a number of hardware platforms are also suitable for use in the practice of the present invention depending on the processing needs and resources that are available to a practitioner of the present invention. Moreover, system configurations other than that shown in Figure 1 may also be used in the practice of the present invention.

Application servers 102 preferably execute credit management software that allows users of the client computers 104 to interact with the various databases on the backend of system 100 and manage the credit profile of a customer who leases a fleet of vehicles from one or more lessors. Preferably the client computer users are employees of a fleet management company, which is preferably also the lessor of the leased vehicles. However, this need not be the case as the lessor could be one or more outside entities. Through software installed on the client computers 104 (preferably standard browser software), the client computer users can access the credit management software to manage lease customers' credit profiles via a plurality of interactive graphical user interfaces (GUIs) that are displayed on the client computer by the credit management software.

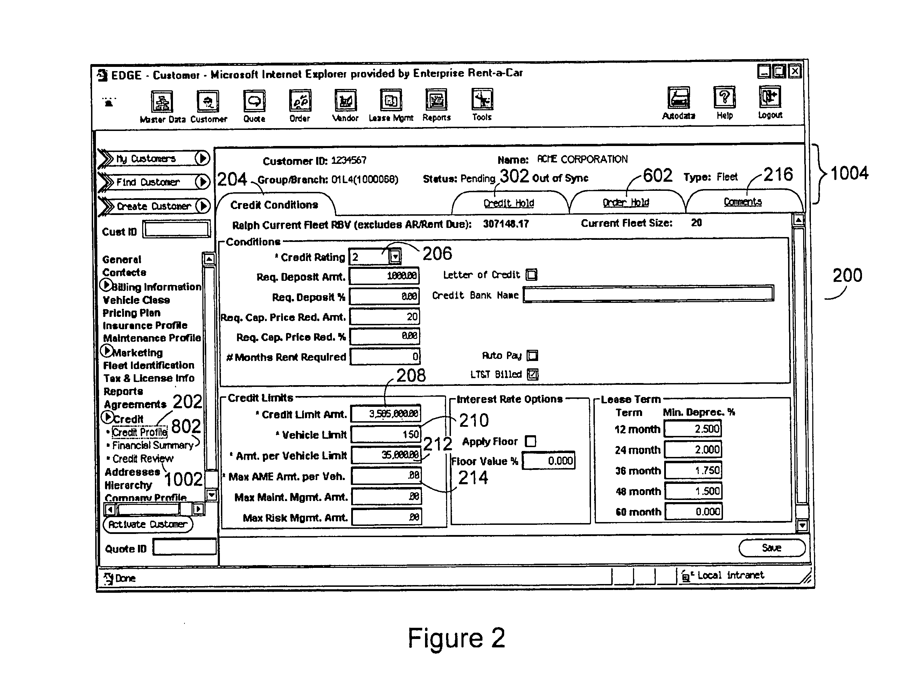

As explained in greater detail in connection with Figures 2-23(d) and the enclosed exhibits, this credit management software allows the client computer users to, among other things, efficiently evaluate the creditworthiness of lease customers, submit requests for changes in a lease customer's credit profile, and approve or reject such submitted requests.

Figures 2-7 depict various preferred GUI pages through which the user can create and revise a customer's credit profile as well as place and release various holds on the customer's credit and ability to order new leased vehicles. These pages can be accessed by the user upon selection of the "credit profile" link 202 displayed on the left hand side of the GUIs.

Page 200 of Figure 2 is displayed after user selection of the credit conditions folder tab 204. For customers that do not already have a credit profile stored in database 120, page 200 allows the user to enter data for the various fields shown to establish the customer's credit profile. These fields include a credit rating 206 for the customer (preferably an integer value between 1 and 3, with "1" representing a best rating for the customer's creditworthiness, with "3" representing a worst rating for the customer's creditworthiness, and with "2" representing a middle rating for the customer's creditworthiness). However, it should be understood that other rating scales could readily be used in the practice of the present invention. The customer's credit rating controls the level of scrutiny that is applied to orders for leased vehicles placed by a customer; preferably, the better the credit rating, the less scrutiny that is applied and the poorer the credit rating, the more scrutiny that is applied. The fields also include a credit limit amount 208 which represents a maximum amount of credit that can be extended to the customer. In the context of vehicle lease management, this credit limit amount effectively translates to the maximum sum of the delivered prices (or capitalized prices) for the customer's leased vehicles based on the customer's needs over a 12 month period. The fields on page 200 also include a vehicle limit 210, which represents the maximum number of leased vehicles that are authorized by the credit profile for the customer's fleet. Additional fields on page 200 include a value 212 that represents that maximum amount of risk allowed by the credit profile for any given vehicle in the customer's fleet and a value 214 that represents a maximum amount of risk allowed by the credit profile for the aftermarket equipment (AME) added to any given vehicle in the customer's fleet. Additional fields on page 200 include a required deposit amount which represents per vehicle security deposit amount, a required deposit percentage which represents a per vehicle percentage of a delivered vehicle's invoice price that is to be used as a security deposit, a required capitalized price reduction amount which represents money paid down, per vehicle, by the customer that reduces the vehicles' delivered prices, a maximum required capitalized price reduction percentage which represents a percentage of money paid down, per vehicle, by the customer that goes toward reducing the vehicles' delivered prices, the number of months of rent required which is essentially an alternate form of sizing the customer's security deposit, whether a letter of credit from a financial institution (bank) is required, the name of the financial institution providing the letter of credit, whether direct debit is to be used, whether license, tax, and title (LT&T) is to be billed, a maximum maintenance management amount which represents a maximum number of customer vehicles for which the fleet management company will cover maintenance costs with unsecured credit (e.g., providing costs to cover maintenance services for vehicles that the customer possesses but are unsecured vis-à-vis the fleet management company, and a maximum risk management amount which represents a maximum number of customer vehicles for which the fleet management company will provide risk management services with unsecured credit, whether an interest rate floor is to be applied, and a percentage for the floor interest rate percentage, and the 12/24/36/48/60 month depreciation percentage values for the lease term. Page 200 may also include a field for indicating whether equity rollover is required. Page 200 also preferably displays, in a display-only format, the overall reduced book value (RBV) for the customer's current fleet of leased vehicles (preferably excluding any account receivable rent that is due) and the number of leased vehicles in the customer's current fleet.

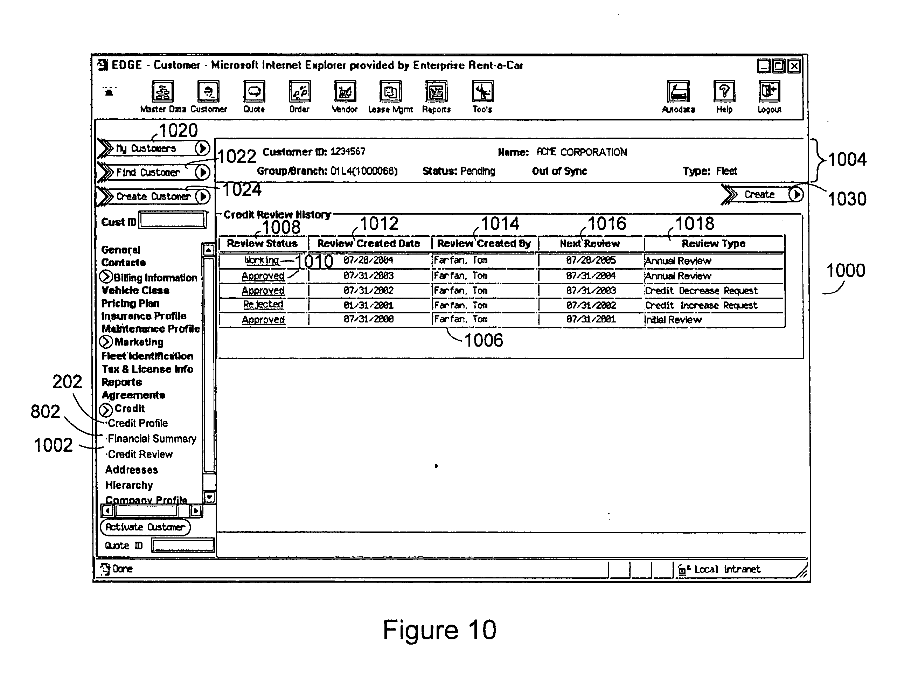

Once the customer's credit profile has been created, page 200 preferably becomes display-only, with any changes to the customer's credit profile being initiated through the credit review process described below in connection with Figures 10-22. However, this need not be the case.

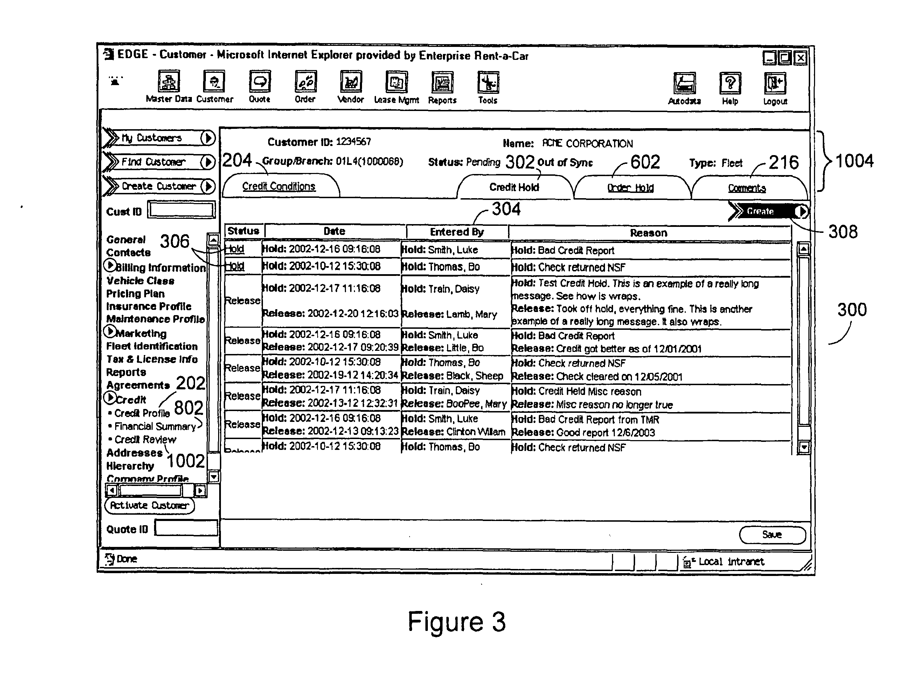

Page 300 of Figure 3 is displayed after user selection of the credit hold folder tab 302. Page 300 preferably displays a table 304 that summarizes the credit hold history for the customer. A credit hold represents a decision by the fleet management company to no longer provide new quotes or place orders for a given customer. Credit holds are typically put in place if a fleet manager has significant credit concerns about the customer. Credit holds can be released by fleet managers with appropriate authority based on the fleet manager's assessment of the customer's financial situation. Table 304 preferably displays not only current credit holds (whose status is indicated in table 304 by the "hold" link 306), but also previous credit holds (whose status is indicated in table 304 with the "release" denomination). Table 304 preferably also identifies, for each credit hold, the hold creation date (and release date where applicable), the name of the user who created the credit hold, and the reason that the credit hold was created. Links 306 are preferably provided in table 304 to call up, upon user selection, a page that allows the user to take an action (such as a release action or a maintain hold action) on a given credit hold. Furthermore, create button 308 is preferably provided for user selection to create a new credit hold for the customer.

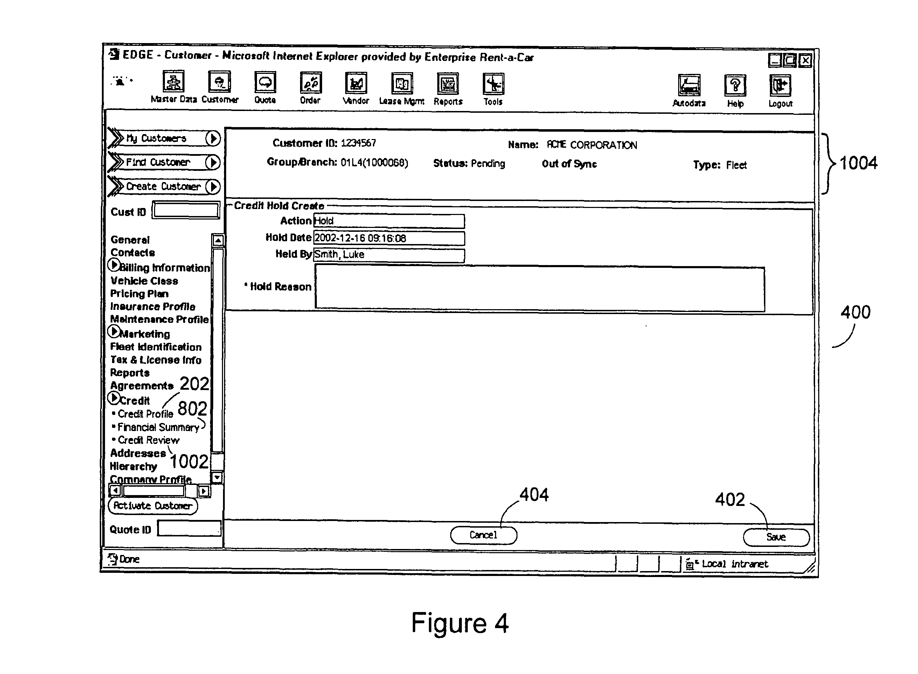

Page 400 of Figure 4 is preferably displayed upon user selection of the create button 308 on page 300. Page 400 is a create credit hold GUI. Page 400 preferably identifies that the user intends to create a credit hold, displays the name of the user creating the credit hold, and displays the current date in a display-only fashion. Another field is preferably provided for user entry of the reason why the credit hold is being created. After the user has entered such a reason on the page, the user can select the save button 402 to save the credit hold in the system. Alternatively, the user can choose to not create the credit hold by selecting the cancel button 404.

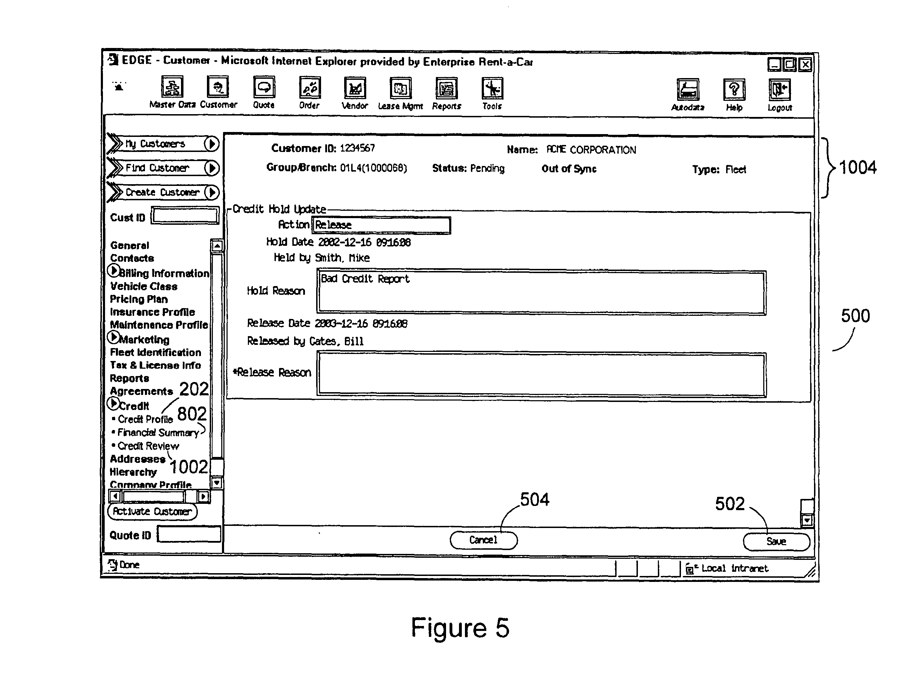

Page 500 of Figure 5 is preferably displayed upon user selection of a hold link 306 on page 300. Page 500 is a create credit hold update GUI that allows the user take action on the existing credit hold that corresponds to the link 306 selected in table 304. Page 500 preferably identifies that the user intends to release a credit hold, displays the date on which the credit hold was created, displays the name of the user who created the credit hold, displays the reason why the credit hold was created, displays the name of the user releasing the credit hold, and displays the current date in a display-only fashion. Another field is preferably provided for user entry of the reason why the credit hold is being released. After the user has entered a reason for the release on the page, the user can select the save button 502 to save the credit hold release in the system. Alternatively, the user can choose to maintain the credit hold by selecting the cancel button 504 rather than the save button 502.

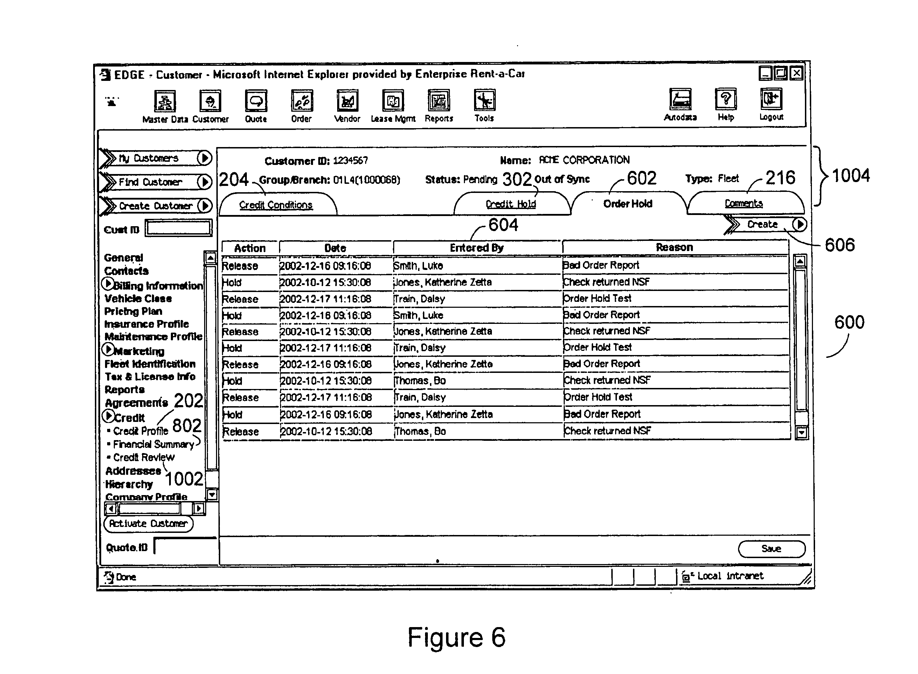

Page 600 of Figure 6 is displayed after user selection of the order hold folder tab 602. Page 600 preferably displays a table 604 that summarizes the order hold history for the customer. An order hold represents a decision by the fleet management company to no longer place new orders for a given customer. Order holds are typically put in place when conditions are less dire than the conditions for a credit hold. Order holds can be released by fleet managers with appropriate authority based on the fleet manager's assessment of the customer's financial situation. Table 604 preferably displays not only current order holds (whose status is indicated in table 604 by the "hold" denomination), but also previous order holds (whose status is indicated in table 604 with the "release" denomination). Table 604 preferably also identifies, for each order hold, the order hold creation date (or release date where applicable), the name of the user who created the order hold, and the reason that the order hold was created. Furthermore, create button 606 is preferably provided for user selection to create a new order hold or an order hold release for the customer.

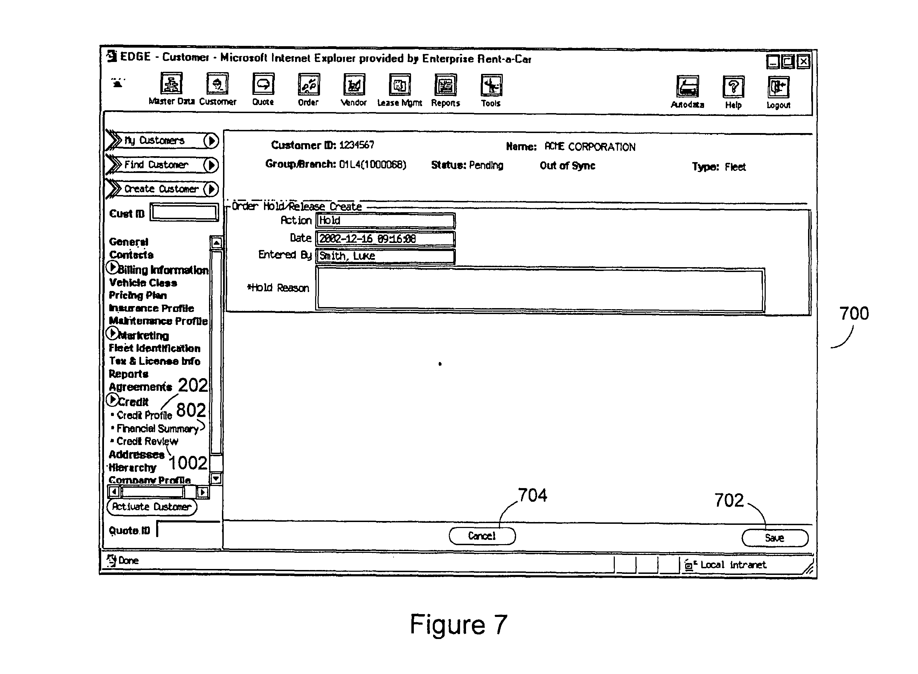

Page 700 of Figure 7 is preferably displayed upon user selection of the create button 606 on page 600. Page 700 is a create/release order hold GUI. Page 700 preferably includes a field in which the user can specify whether a hold or a release is being created, displays the name of the user creating the order hold, and displays the current date in a display-only fashion. Another field is preferably provided for user entry of the reason why the order hold is being created or released. After the user has entered such a reason on the page, the user can select the save button 702 to save the order hold in the system. Alternatively, the user can choose to not create the order hold by selecting the cancel button 704.

Also, user selection of the comments tab 216 on any of the pages shown in Figures 2, 3, and 6 is preferably effective to display a page (not shown) that allows the user to enter and store any comments he/she may have about the customer's credit profile. Additional details about the system in connection with Figures 2-7 are described in Exhibit A appended hereto.

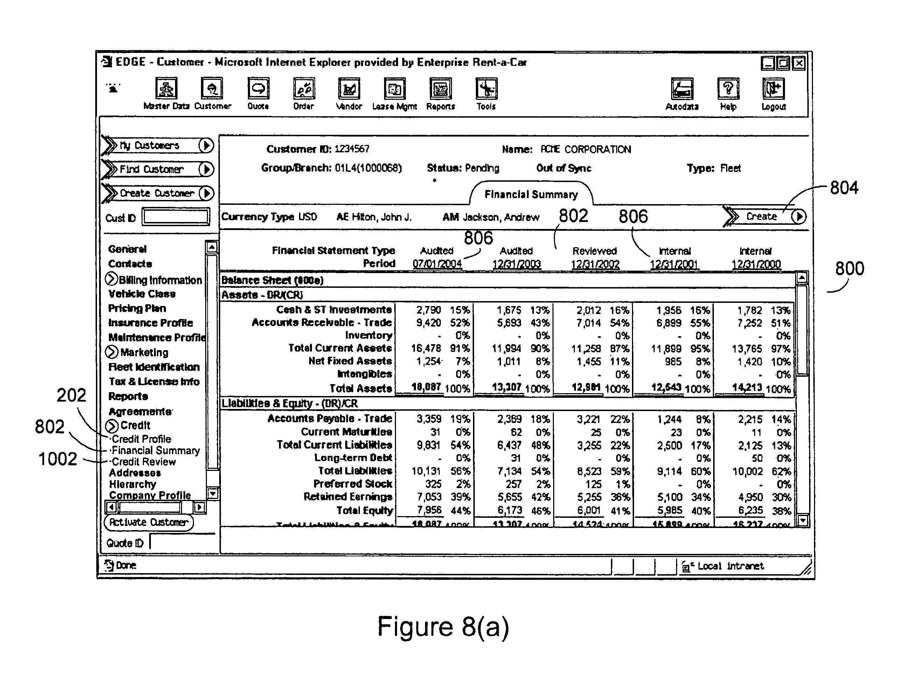

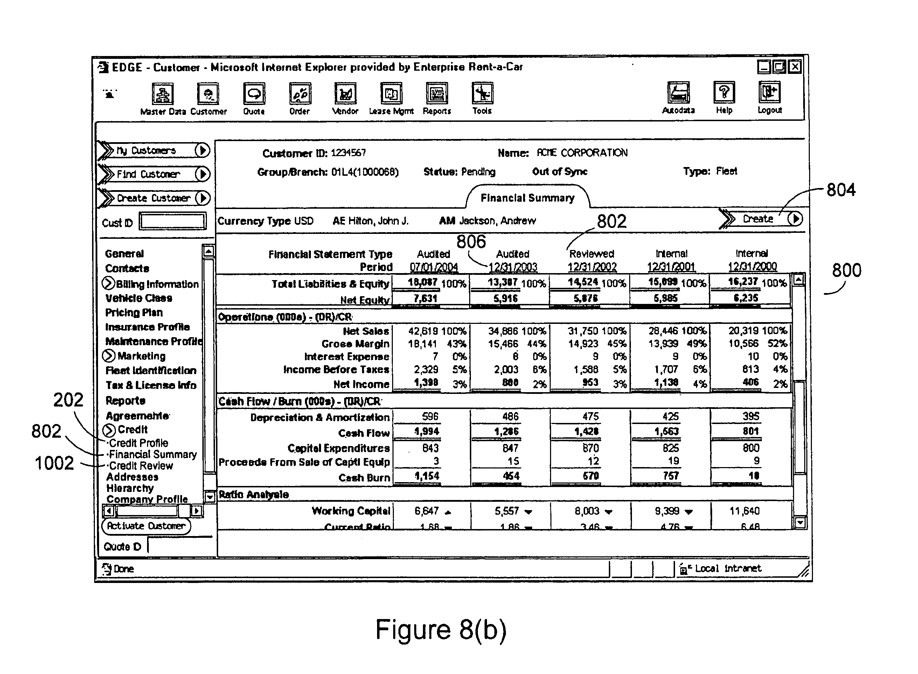

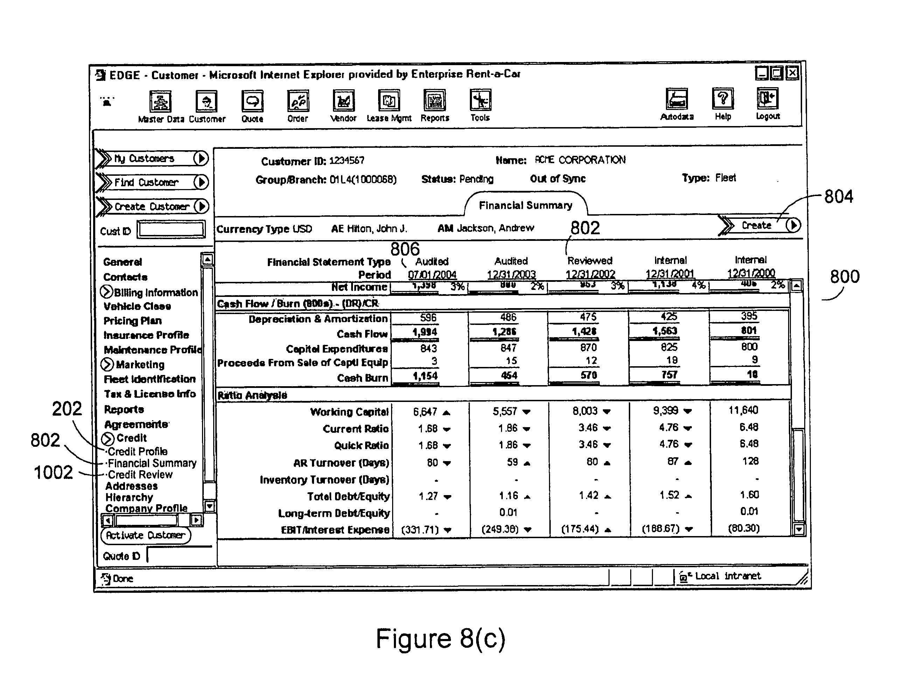

In the event the user selects the "financial summary" link 802 displayed on the left hand side of the GUIs, the GUI page 800 of Figures 8(a)-(c) is preferably displayed. As shown in Figures 8(a)-(c), table 802 of page 800 preferably provides a detailed summary of the customer's financial information. This information is preferably displayed in a display-only manner. Table 802 preferably provides this financial information for not only the most recent financial statement date, but also for several of the previous months or years.

Further still, table 802 preferably identifies the level of scrutiny that was applied to the financial information. Financial information that was audited by a third party auditor is preferably designated by an "audited" indicator. Financial information that has been reviewed by a third party auditor, but has not been fully audited, is preferably designated by a "reviewed" indicator. Financial information that has been compiled by a third party accountant or auditor, but not yet reviewed or audited, is preferably designated by a "compiled" indicator. Financial information that has been created internally by the customer and not subject to any third party auditing is preferably designated by an "internal" indicator. Lastly, financial information that is a tax return for the customer is preferably designated by a "tax return" indicator. These indicators for the different levels of scrutiny that have been applied to customer financial information is particularly important in connection with managing the credit profiles for customers that are smaller in scale than typical large corporations. For many small to medium-sized businesses, fully audited financial statements are not always readily available, but credit decisions will nevertheless have to be made. By providing the scrutiny indicators for customer financial information discussed above, fleet managers are provided with the ability to make better informed decisions when extending credit to their customers.

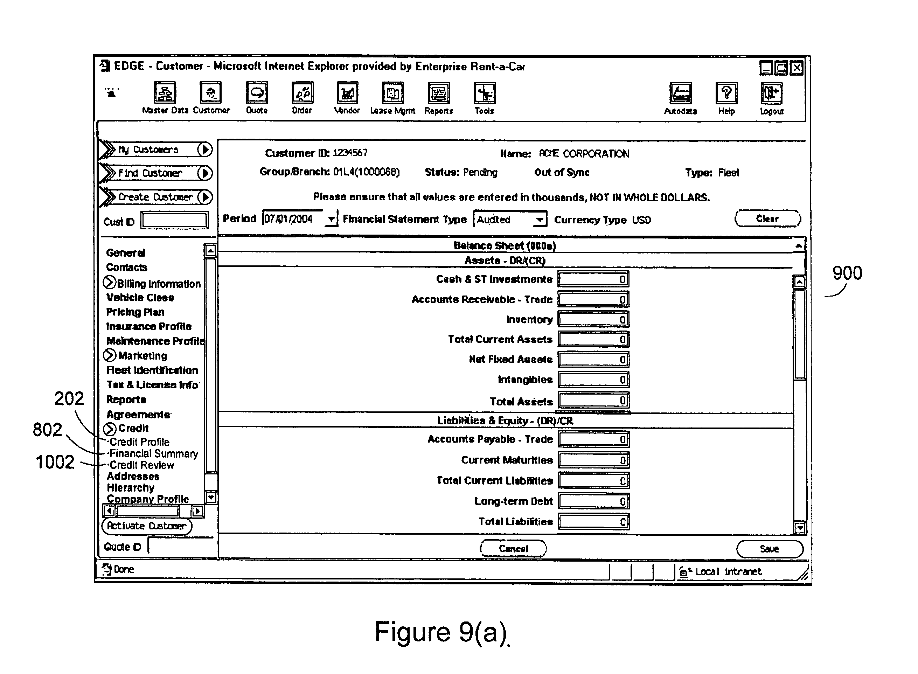

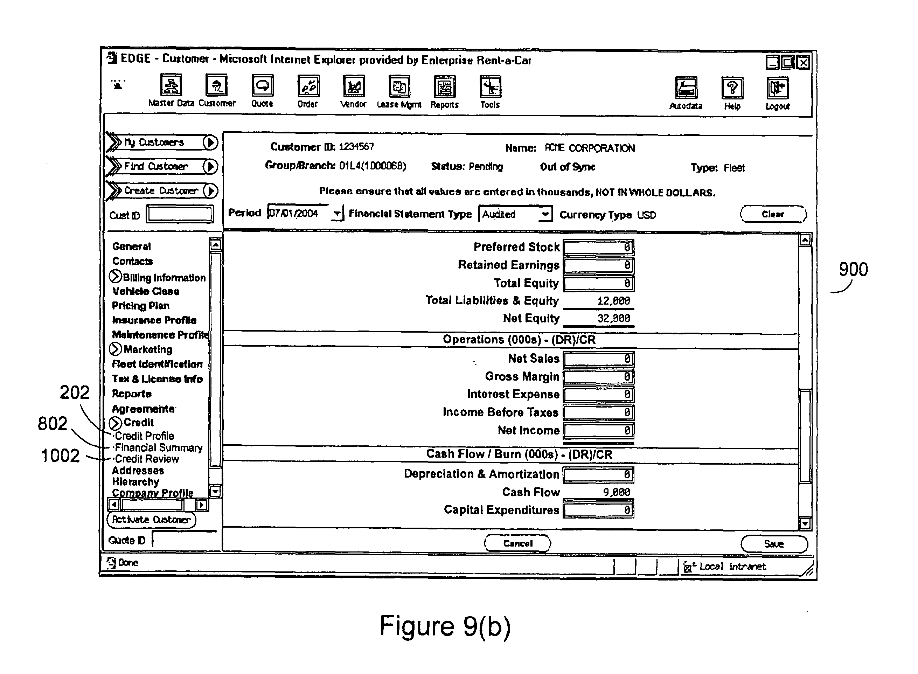

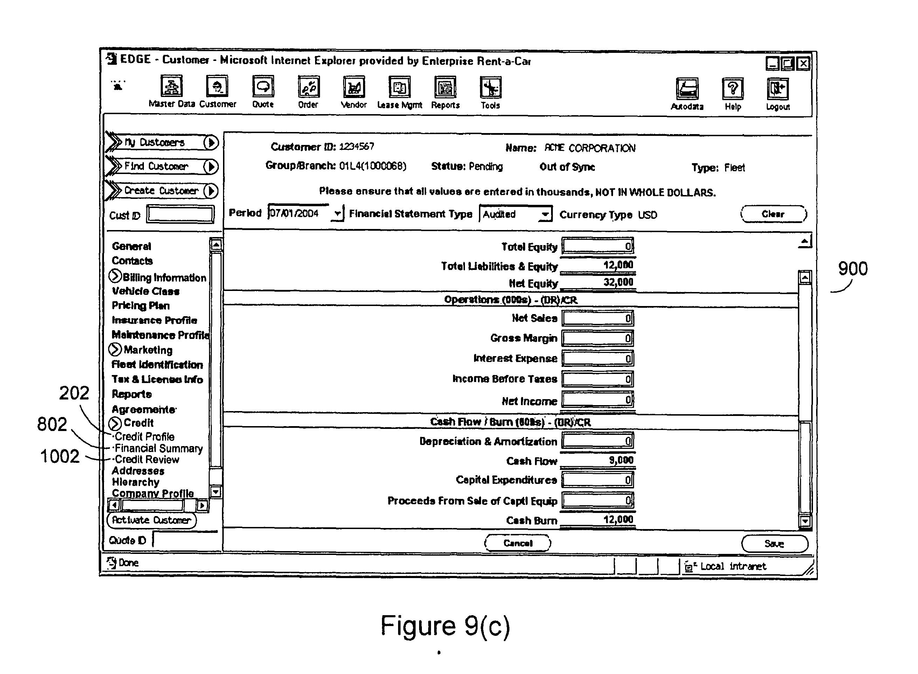

If the customer does not already have financial information stored in database 120, or if the user wants to add a new financial information to an existing customer, the user can select the create button 804 on page 800. User selection of button 804 is effective to display page 900 of Figures 9(a)-(c). Page 900 includes several pre-defined fields in which the user can enter financial data about the customer. Further, the user can identify the date for which the financial data being entered on page 900 is applicable. Further still, within field 904, the user can identify the type of financial statement from which the financial data being entered on page 900 came. Button 906 is effective upon user selection to clear the fields of the user-entered values. Button 910 is effective upon user selection to return the user to page 800 without making any changes to the customer's stored financial information. Button 908 is effective upon user selection to save the financial information entered on page 900 into the system to update the customer's stored financial information.

In the event the user wishes to update an existing financial statement displayed in table 802 of page 800, the user can select the link 806 applicable to that statement. User selection of a link 806 is preferably effective to display a page like that shown in Figures 9(a)-(c) in which the customer can modify one or more of the financial information data values. Additional details about the system in connection with Figures 8(a)-9(c) are described in Exhibit B appended hereto.

User selection of the "credit review" link 1002 displayed in the left hand side of the GUIs is effective to display credit review history page 1000 of Figure 10. Page 1000 preferably provides users with a window and link into any past credit reviews performed on a customer as well as any credit review that is currently being performed. Display section 1004 preferably identifies information about the credit review history shown in table 1006, particularly the name and customer identifier for which the credit reviews are applicable. The user can reach page 1000 for the customer whose credit will be reviewed via a variety of selection mechanisms, including the "my customers" button 1020 that is effective upon user selection to display a page that lists all of the customers that have been assigned to a particular user (in a preferred embodiment, different fleet managers are assigned different customers, and database 120 preferably stores data that associates each customer with one or more fleet managers). User selection of a customer or customer number that is listed on such a page is preferably effective to display a page in the customer credit review process for that customer, such as page 1000. The GUIs can also include a "find customer" button 1022 that is effective upon user selection to display a search page for finding customers that match a user-specified search query, a customer identifier search field 1026 for finding customers by their identifiers, and a "create customer" button 1024 through which the user can begin the process of adding a new customer to the system.

Table 1006 lists the credit review history for the customer identified in section 1004. Column 1008 identifies the review status for each credit review. Preferably, the possible review status values are "working" (for pending credit reviews), "approved" (for previous credit review of a type that was approved), and "rejected" (for previous credit reviews relating to a type that was rejected). These values are displayed as links 1010 within column 1008. Upon user selection of a link 1010, the user is preferably routed to page 1100 described below. Additional read-only columns of table 1006 include a "review created date" column 1012 for identifying the date on which the pertinent credit review was created, a "review created by" column 1014 for identifying the user who created the pertinent credit review, a "next review" column 1016 for identifying a date on which a next credit review is to take place, and a "review type" column 1018 for identifying the type for the pertinent credit review (e.g., an annual credit review, an initial credit review, and credit reviews related to requested increases/decreases in credit).

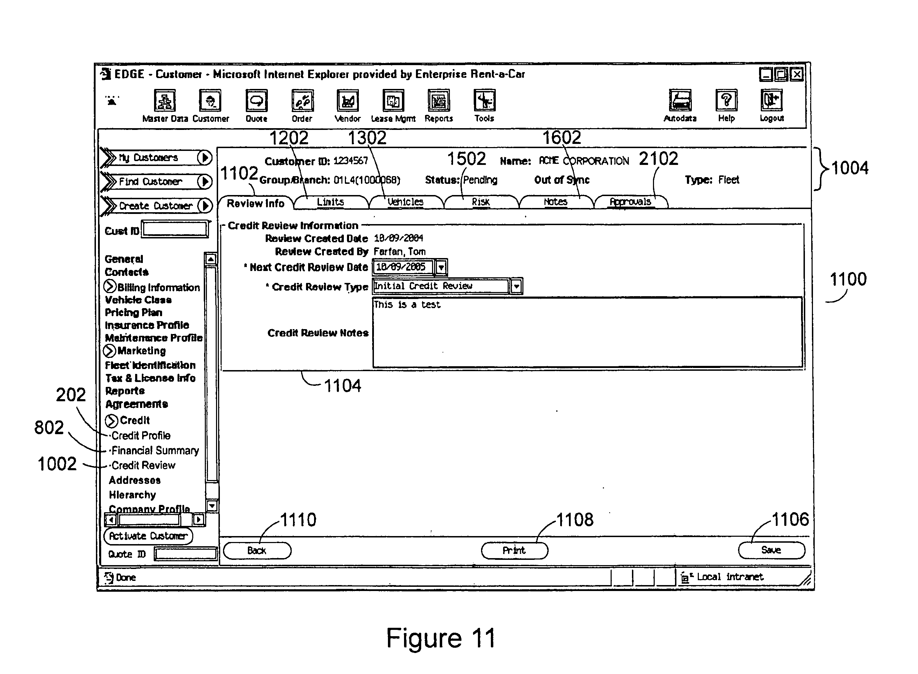

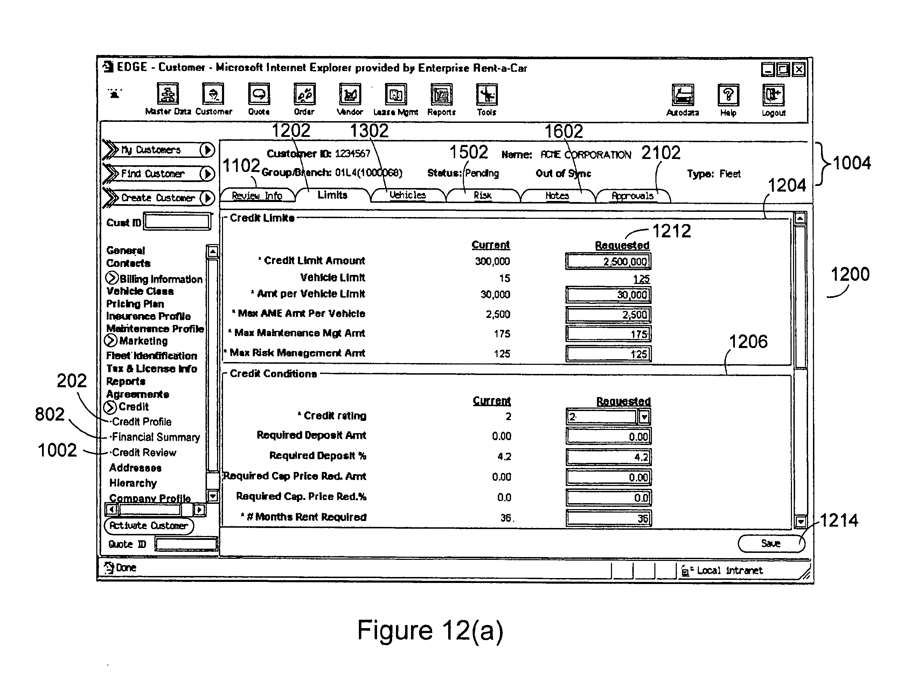

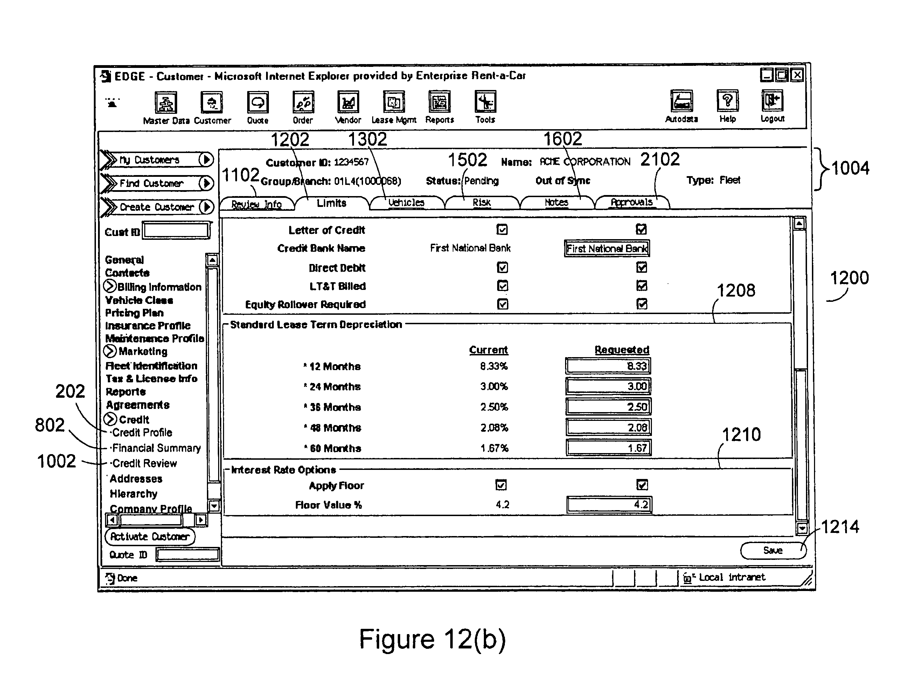

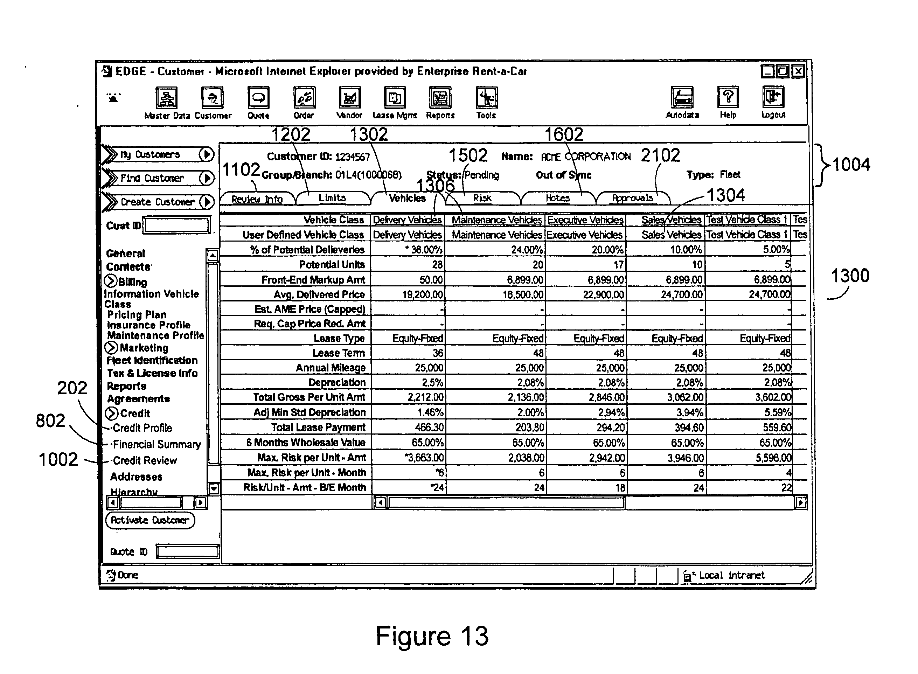

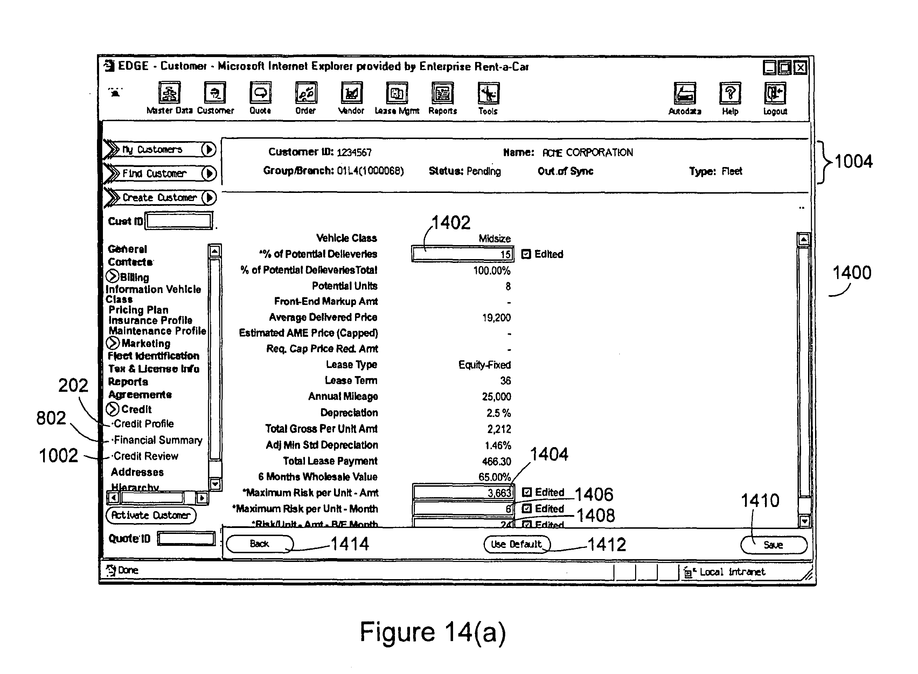

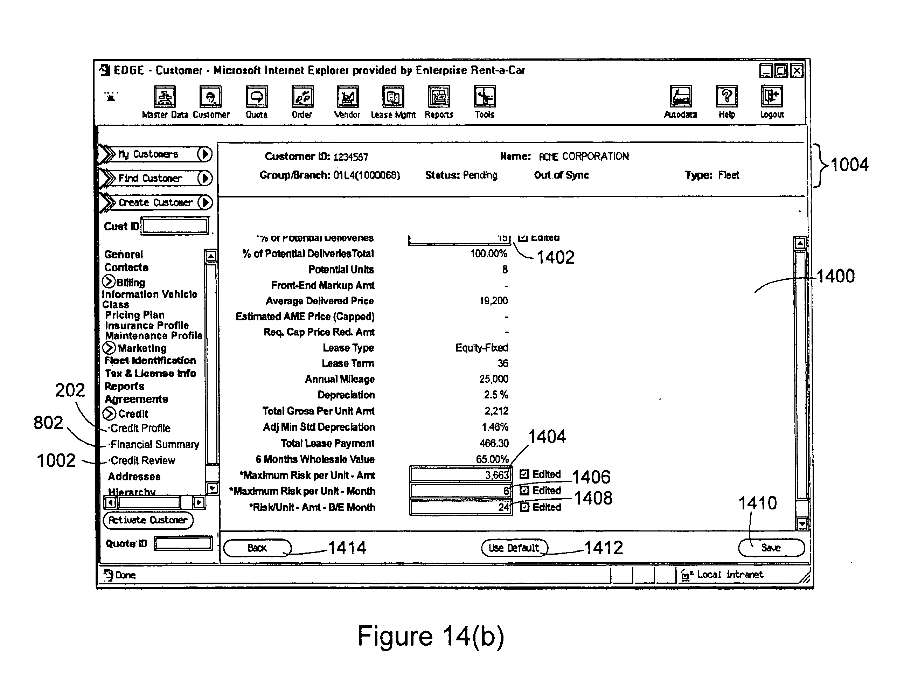

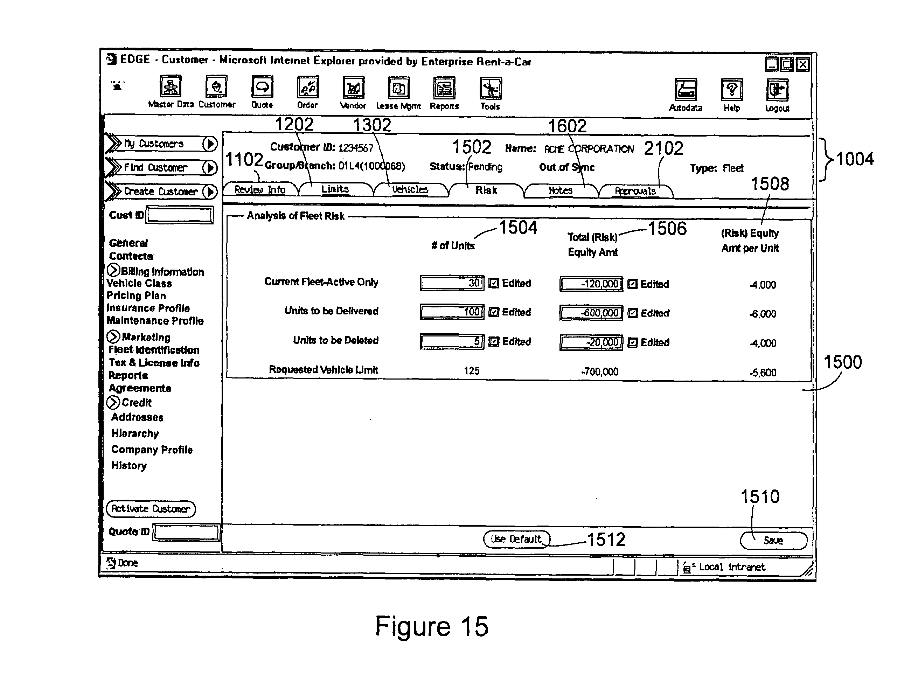

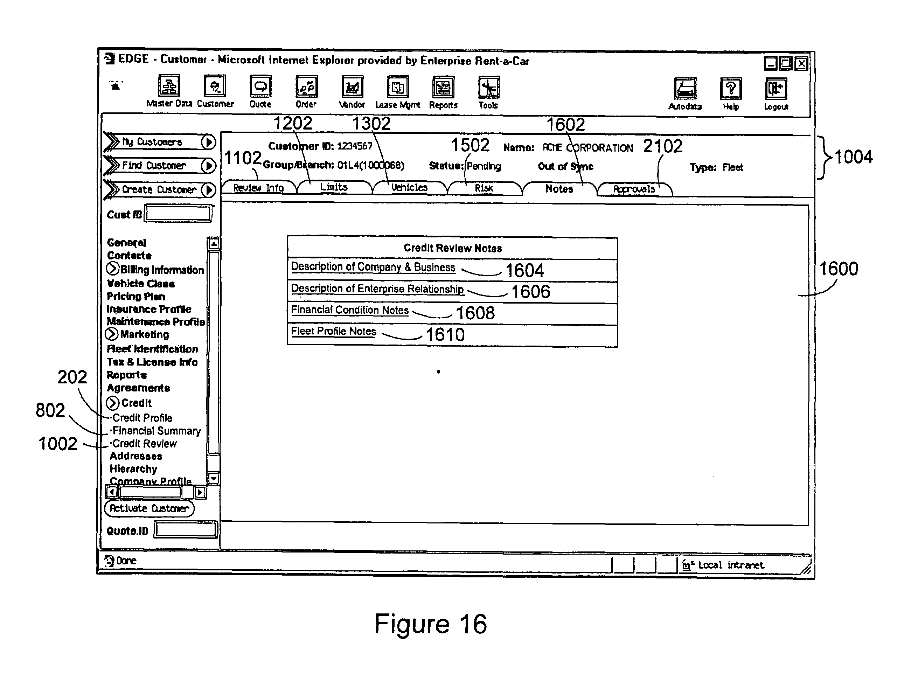

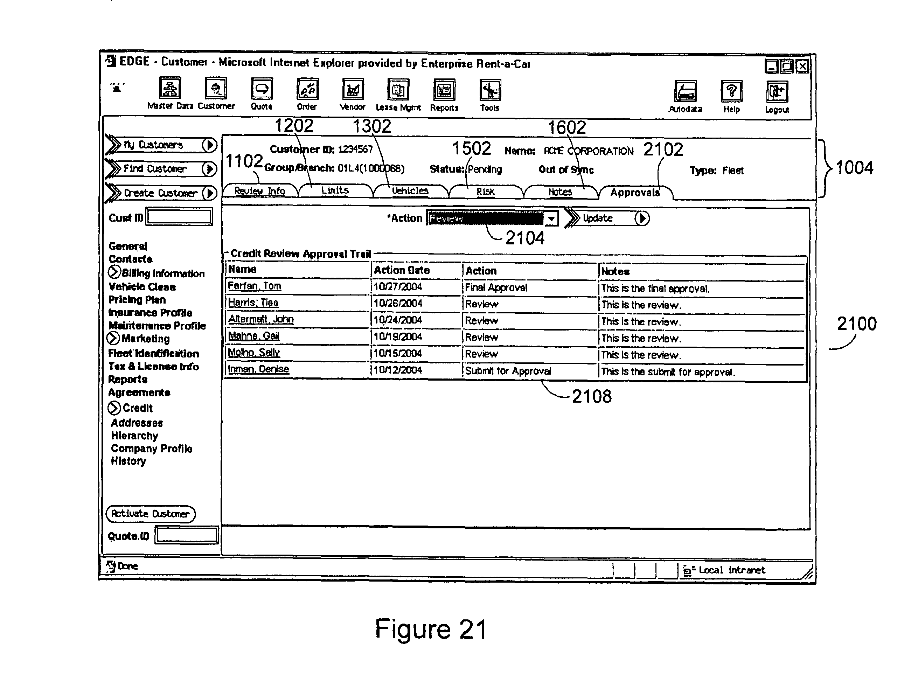

User selection of the create button 1030 is preferably effective to display a page through which the user can create a new credit review for the customer identified in section 1004. Preferably, button 1030 is disabled if there is already an open credit review for that customer. Figure 11 depicts a preferred credit review creation page 1100 that is displayed after selection of button 1030. The page 1100 also displays the following folder tabs: review information tab 1102 (for displaying page 1100), limits tab 1202 (discussion to follow in connection with Figures 12(a) and (b)), vehicle tab 1302 (discussion to follow in connection with Figures 13, 14(a), and 14(b)), risk tab 1502 (discussion to follow in connection with Figure 15), notes tab 1602 (discussion to follow in connection with Figures 16-20), and approvals tab 2102 (discussion to follow in connection with Figure 21). When page 1100 is first displayed, preferably only tab 1102 is active.

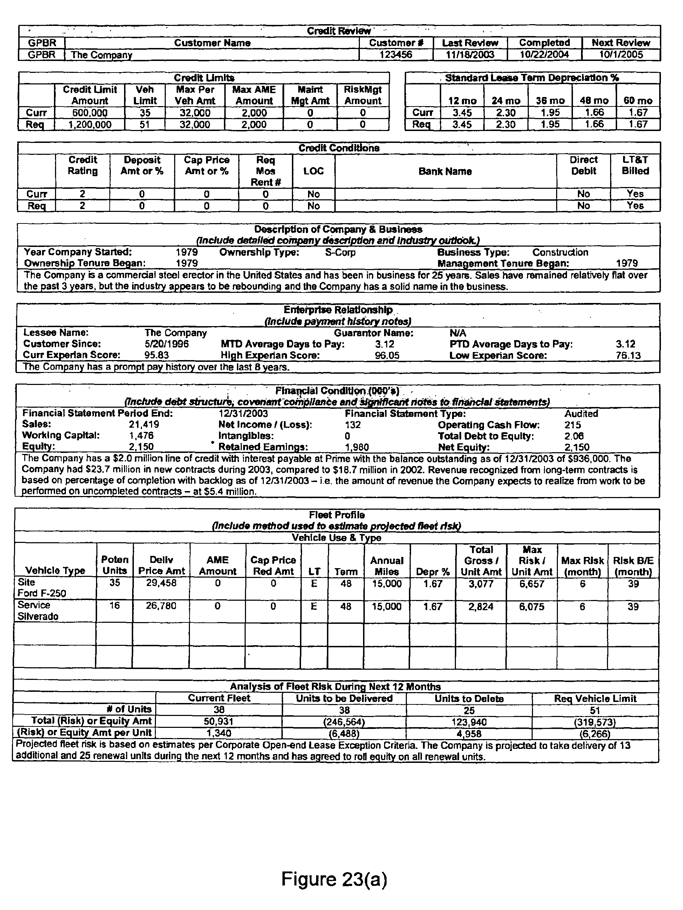

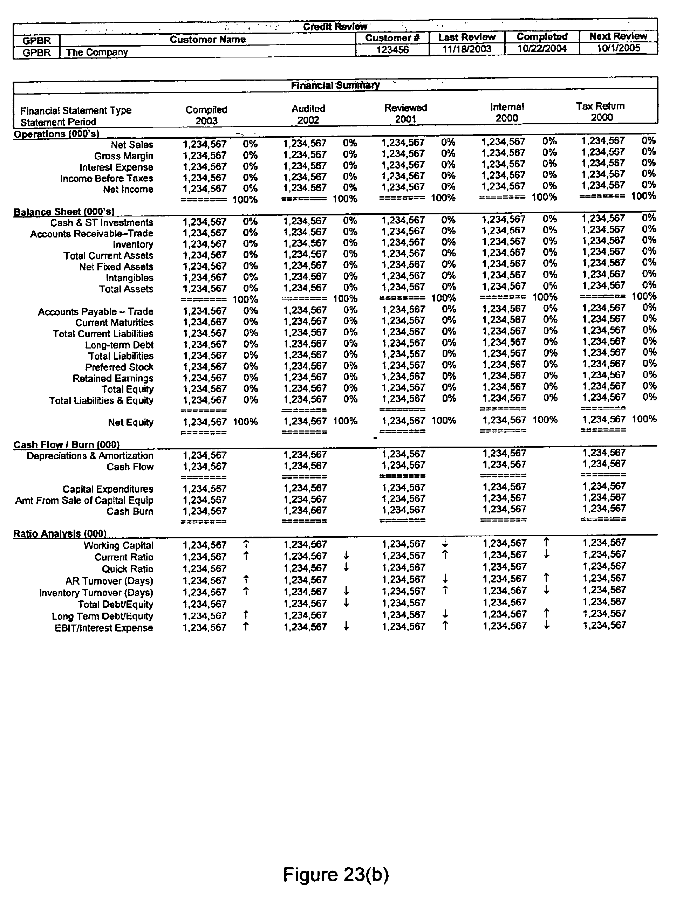

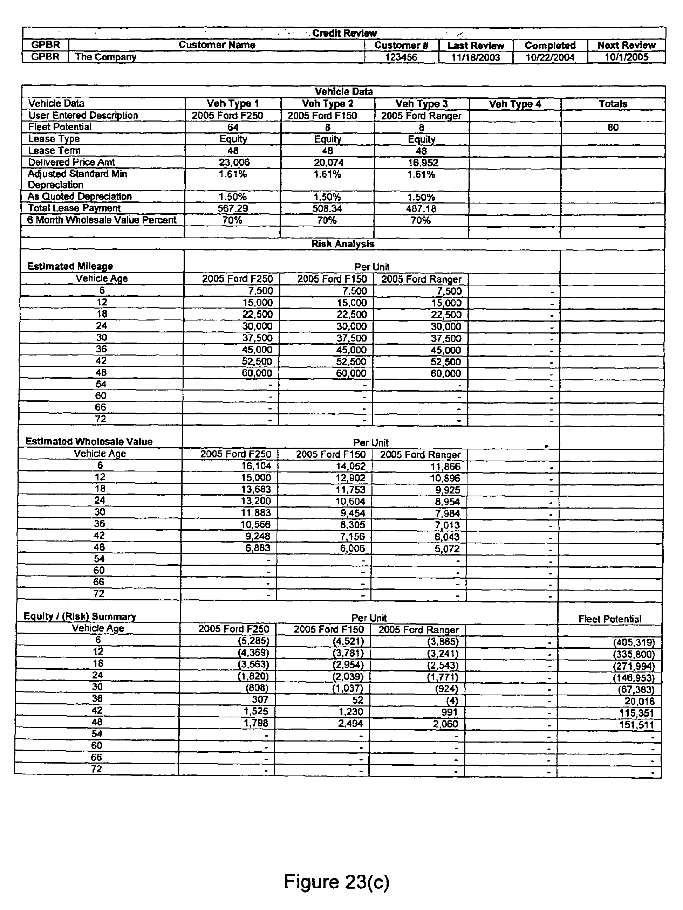

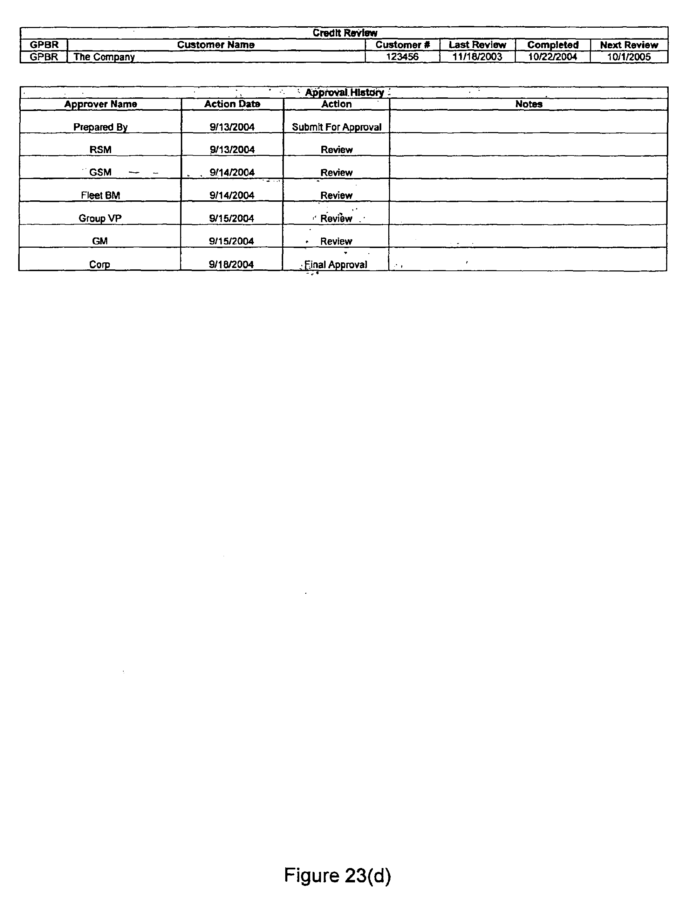

Section 1104 of page 1100 provides credit review information for the credit review to be created. Section 1104 identifies the creation date, the user who created the credit review, the date on which the next credit review is to occur (which preferably defaults to the one year anniversary of the creation date, but can preferably be modified by user action), the credit review type (which preferably defaults to an "initial credit review", but can preferably be modified by user action), and a credit review notes text field in which the user can enter any notes about the created credit review. Possible selections for credit review type preferably include initial credit review, annual credit review, credit increase request, and credit decrease request. Once the user has chosen a next credit review date and selected a type for the credit review (and optionally entered notes for the credit review), the user can select the save button 1106 to activate the folder tabs other than the review information tab 1102. User selection of the back button 1110 is effective to return the user to page 1000. User selection of the print button 1108 is effective to display a page from which the user is provided with the ability to selectively print the different sections of the credit profile report shown in Figures 23(a)-(d), preferably in any combination of section. The credit report of Figures 23(a)-(d) essentially provides, in a single hard copy report, all of the information that is available for display to the user via the pages 800, 1200, 1300, 1400, 1500, 1700, 1800, 1900 and 2100. Additional details about the system in connection with Figures 10 and 11 is described in Exhibit C appended hereto.

Figures 12(a) and (b) depict the credit limits page 1200 that is displayed upon user selection of the limits tab 1202. Page 1200 preferably displays the current values stored in the customer's credit profile for the customer's credit limits (section 1204), credit conditions (section 1206), standard lease term depreciation (section 1208), and interest rate options (section 1210). Page 1200 also preferably allows the user to request modifications to the different data fields within these different sections of the customer's credit profile, wherein the request is subject to approval by a user with appropriate security and approval authority. However, the requested vehicle limit value in column 1212 of section 1204 is preferably a calculated value, wherein this value is calculated from data entered on the risk analysis page 1500 shown in Figure 15. Among the changes that the user can request via page 1200 are changes to the customer's credit limit, amount per vehicle limit, maximum after market equipment (AME) amount per vehicle, maximum maintenance management amount, maximum risk management amount, credit rating, required deposit amount, required deposit percentage, required capitalized price reduction amount, maximum required capitalized price reduction percentage, the number of months of rent required, whether a letter of credit from a financial institution (bank) is required, the name of the financial institution providing the letter of credit, whether direct debit is to be used, whether license, tax, and title (LT&T) is to be billed, whether equity rollover is required, the 12/24/36/48/60 month depreciation percentage values, whether an interest rate floor is to be applied, and a percentage for the floor interest rate percentage.

User selection of the save button 1214, the credit review data for the requested credit data for the customer is updated in accordance with the data entered by the user in the various fields of page 1200. Additional details about the system in connection with Figure 12 are described in Exhibit D appended hereto.

Figure 13 depicts the vehicles plan page 1300 that is displayed upon user selection of the vehicles tab 1302. Page 1300 preferably includes a table 1304 that displays data corresponding to the customer's planned fleet of leased vehicles. The data in table 1304 is preferably broken down such that each column corresponds to a different vehicle class. From this page, the user can get a sense of the customer's fleet mix and overall fleet investment. The vehicle class identifiers in each column are preferably links 1306 to a vehicle plan details page 1400 for entering vehicle lease plan data, such as that shown in Figures 14(a) and. (b).

Through the vehicle plan details page 1400, the user can enter pertinent data for planned vehicle leases, preferably broken down by vehicle class. However, this need not be the case, as page 1400 could also be designed to enter data on a vehicle-by-vehicle basis. Within field 1402, the user can enter a percentage that corresponds to how much of the customer's leased fleet will be made up of leased vehicles of the selected vehicle class. As would be readily understood by those of ordinary skill in the art, this data can also be entered as an integer representing the number of vehicles within the fleet that will be comprised of vehicles matching the selected vehicle class. Within field 1404, the user can specify a maximum risk amount per vehicle for the selected vehicle class which represents the greatest monthly difference between a vehicle's RBV and estimated actual market value. Within field 1406, the user can specify the lease month in which the maximum risk amount per vehicle for the selected vehicle class is to occur. Within field 1408, the user can specify the break/even (B/E) lease month for risk per vehicle for the selected vehicle class, which signifies the lease month where the vehicle's RBV first becomes equal to or lower than the vehicle's estimated actual market value.

Alongside each field on page 1400 in which the user can enter data, an edited checkbox is preferably provided, wherein user placement of a check within the checkbox is effective to open up the corresponding field for data entry. The remaining data fields of page 1400 are preferably display-only data values that are retrieved from stored information for the customer. Button 1410 is effective upon user selection to save the vehicle class details entered on page 1400. User selection of button 1412 is effective to revert the various data fields of page 1400 that the user may have modified back to their default settings. Button 1414 is effective upon user selection to return the user to page 1300 of Figure 13. Additional details about the system in connection with Figures 13, 14(a) and 14(b) are described in Exhibit E appended hereto.

Figure 15 depicts the risk analysis page 1500 that is displayed upon user selection of the risk tab 1502. Page 1500 preferably interacts with the user to set the requested number of leased vehicles for the customer's fleet and identify the total risk/equity amount for the customer (wherein risk is preferably expressed as a negative number and wherein equity is preferably expressed as a positive number) corresponding to the requested number of leased vehicles. Within the fields of column 1504, the user can enter the number of leased vehicles for each of the following three categories - the number of active units in the customer's current fleet of leased vehicles, the number of new units to be added to the customer's fleet of leased vehicles over a rolling 12 month period, and the number of units to be deleted from the customer's fleet of leased vehicles. Initially, these values are pre-set to default values. These default values can be retrieved from data stored in database 120 corresponding to the customer's current fleet size as well as data corresponding to planned deliveries to the customer's fleet and planned deletions from the customer's fleet over a 12 month period. However, via the edited checkbox, the user can enter new values therefor. The requested vehicle limit value in column 1504 is preferably a display only value that is calculated as the current number of units plus the number of new units to be delivered minus the number of units to be deleted. This value represents the number of vehicles that will be present in the customer's fleet of leased vehicles if the credit profile change request is approved.

Within the fields of column 1506, the user can enter monetary risk/equity amounts for each of the same three categories described in connection with column 1504. Initially, these values are pre-set to default values. Any of a number of techniques can be used to calculate the default risk values, as would be understood by those having ordinary skill in the art, none of which are preferred in the practice of the present invention so long as these default risk values are reasonably based on the factors discussed below. Market values for vehicles are often calculated using past sales experience, either internally or as determined by a third party data source, for that vehicle or previous year make model and series (MMSs) in combination with an expected vehicle utilization, which includes factors such as the cost of the vehicle, the length of the lease term, lease structure, anticipated mileage for the vehicle during the lease term, and any additional equipment that may be present on the vehicle. The risk values in turn can be determined from the market values based on vehicle depreciation tables, as would be understood by those of ordinary skill in the art. It is worth noting that those of ordinary skill in the art may choose to use more or fewer factors when determining risk values. Via the edited checkbox, the user can enter new values for the risk amount. The requested vehicle limit amount in column 1506 is preferably a display-only value that is calculated as the sum of the values in the three categories of column 1506 that are described above.

The values in column 1508 are per unit risk/equity amounts that are calculated by dividing the values for each category in column 1506 by that category's corresponding unit count in column 1504.

User selection of the save button 1510 is effective to update the credit review for the customer in accordance with the data entered on page 1500. User selection of button 1512 is effective to return the data on page 1500 to their default values. Additional details about the system in connection with Figure 15 are described in Exhibit F appended hereto.

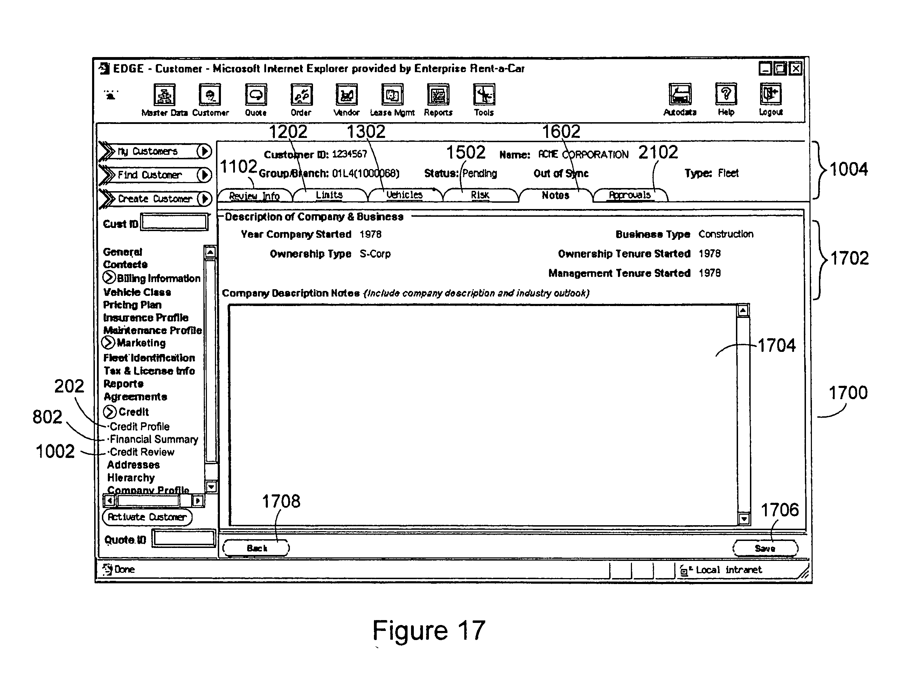

Figure 16 depicts a notes index page 1600 that is displayed upon user selection of the notes tab 1602. Page 1600 preferably displays a list of pages that are available for display that summarize various notes about the identified customer. For example, link 1604 is user-selectable to call up page 1700 of Figure 17. Within section 1702, page 1700 displays various biographical data about the identified customer (e.g. year the customer company was founded, the type of business the customer company is engaged in, etc.). Within field 1704, the user can type in any notes that the user wishes to add about the customer company. Button 1706 is effective upon user selection to save any notes that have been added in field 1704 and button 1708 is effective upon user selection to return the user to page 1600.

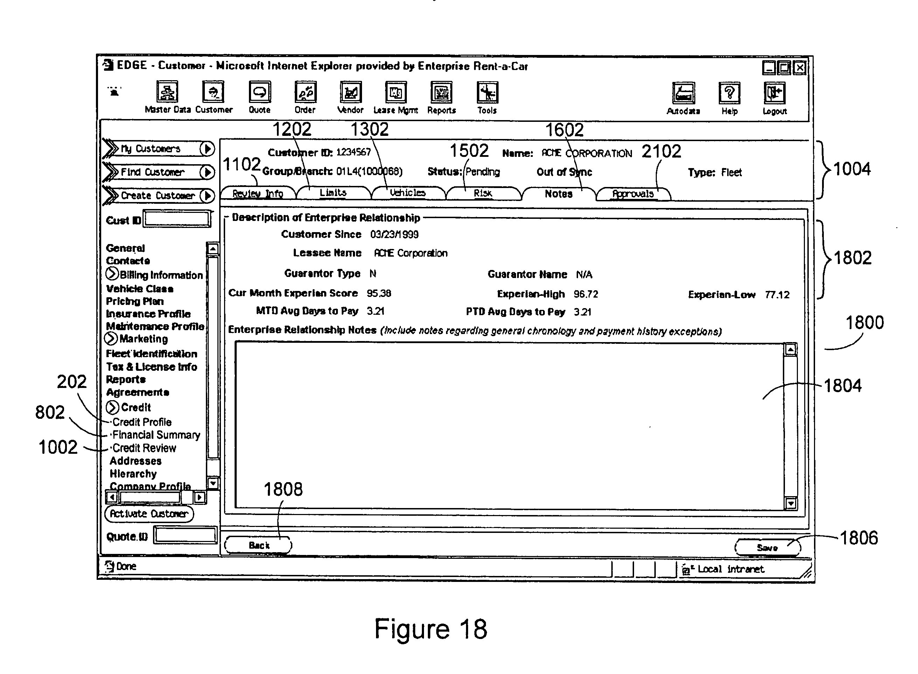

Via link 1606 on page 1600, the user can call up page 1800 of Figure 18. Within section 1802, page 1800 preferably displays various data about the customer's relationship with the fleet management company (e.g., how long the customer has been a customer, the average amount of time that it takes for the customer to pay its bills to the fleet management company, etc.). Within field 1804, the user can type in any notes that the user wishes to add about the customer company. Button 1806 is effective upon user selection to save any notes that have been added in field 1804 and button 1808 is effective upon user selection to return the user to page 1600.

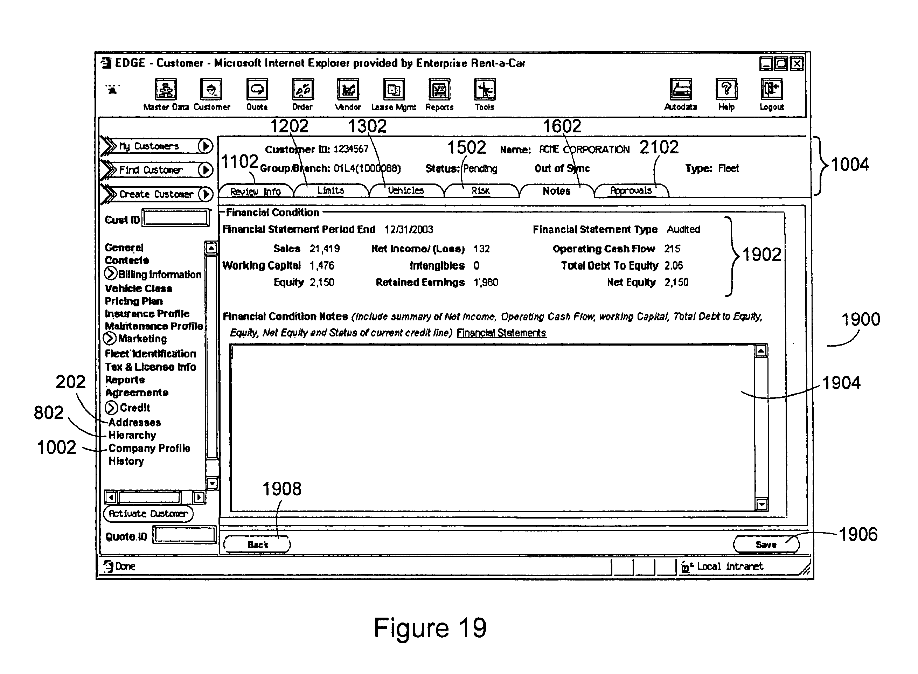

Via link 1608 on page 1600, the user can call up page 1900 of Figure 19. Within section 1902, page 1900 preferably displays various financial information about the customer (e.g., the customer's sales revenue for the latest reporting period, net income/losses, the customer's working capital, etc.). Within field 1904, the user can type in any notes that the user wishes to add about the customer company. Button 1906 is effective upon user selection to save any notes that have been added in field 1904 and button 1908 is effective upon user selection to return the user to page 1600. Page 1900 may optionally include a link to view a page that displays greater financial information about the customer.

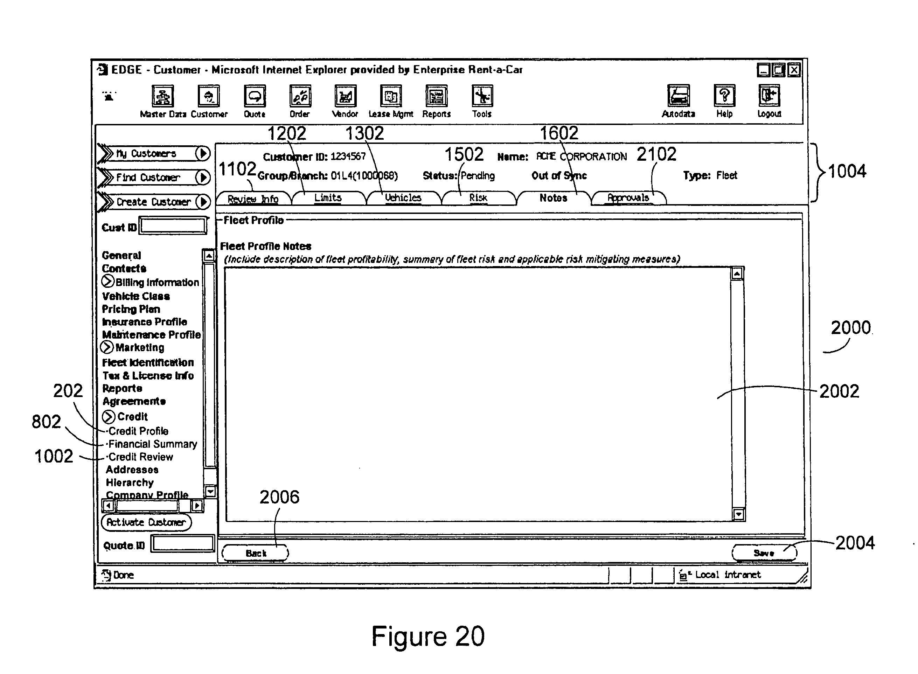

Lastly, via link 1610 on page 1600, the user can call up page 2000 of Figure 20. Within field 2002, the user can type in any notes that the user wishes to add about the customer company, particularly about the customer's fleet of leased vehicles. Button 2004 is effective upon user selection to save any notes that have been added in field 2002 and button 2006 is effective upon user selection to return the user to page 1600.

Thus, through page 1600, 1700, 1800, 1900, and 2000, the user is provided with easy access to information that can be of value when evaluating a customer's credit and further possesses the ability to add notes that may subsequently aid analysis of the customer's creditworthiness. Additional details about the system in connection with Figures 16-20 are described in Exhibit G appended hereto.

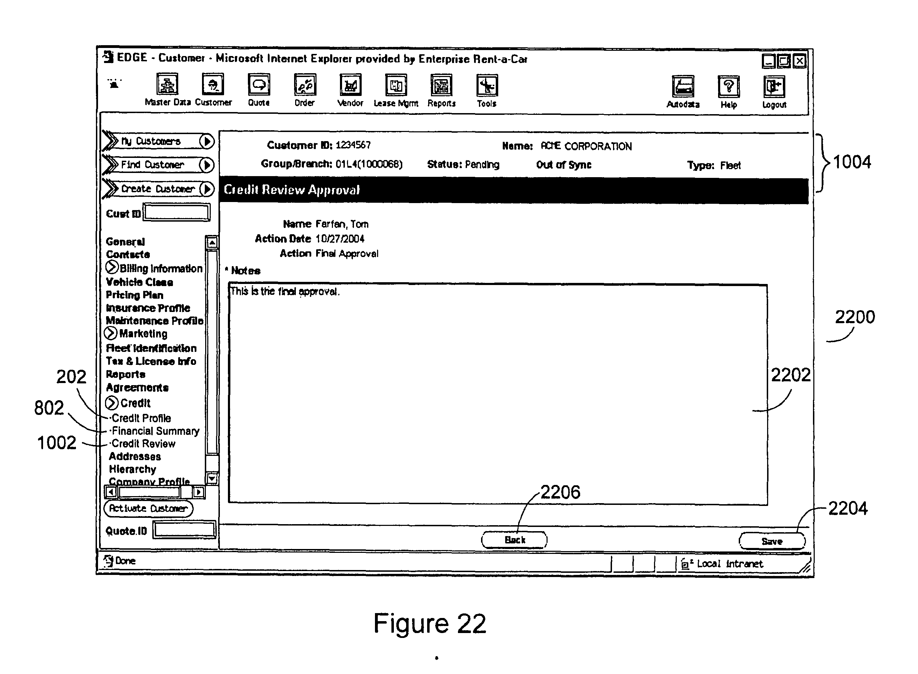

Figure 21 depicts a credit review approvals page 2100 that is displayed upon user selection of the approvals tab 2102. Page 2100 preferably shows a list of users who have taken an action in the selected credit review and further allows users to update any notes on that user's own actions (as well as view other user's actions). The user preferably identifies the action that he/she is taking on the credit review via field 2104 and its associated drop down menu. User selection of the "update" button on page 2100 is preferably effective to update the credit profile in accordance with the action identified by field 2104. The preferred choices of action include: (1) submitting a credit review for approval, (2) reviewing a credit review, (3) rejecting a credit review, (4) providing final approval for a credit review. Figure 22 illustrates an exemplary page 2200 that is displayed after a user takes action via field 2104. Within page 2200, the action to be taken by the user is identified and a notes field 2202 is provided in which the user can enter notes regarding his/her action. Button 2204 is provided for finalizing the action to be taken and button 2206 is provided for returning the user to page 2100. Upon selection of the save button 2204, the status of the credit review is updated in accordance with the action taken by the user.

Table 2108 preferably shows the credit review approval trail for the identified customer. The table columns are preferably (1) the name of the user who took action on the credit review, (2) the date on which each user took action, (3) the action taken by each user, and (4) the notes entered by the user upon taking action. User selection of one of the links in the name column of table 2108 is preferably effective to call up a page that displays the comments in full for that linked name.

In the event the user either provides final approval or rejects a credit review, a snapshot of the credit review data is preferably saved at that time and subsequent accesses to that credit review are of a display-only variety. Preferably, only users with sufficient authority to approve or reject a credit review are given the ability to take such actions from page 2100.

If the user provides final approval, it is preferred that the customer's credit profile be updated in accordance with the approved credit review (e.g., updating the customer's credit limit to a new value). Furthermore, upon approval, it is preferred that the system automatically perform a credit check against the updated credit profile for any outstanding quotes or orders for that customer that have a status of "pending approval", "pending pre-approval" or the like. Additional details about the system in connection with Figures 21-22 are described in Exhibit H appended hereto.

As discussed above, each customer is preferably assigned to one or more users who may be called upon to review the customer's credit profile. Each user who has the ability to take action on a credit review (as opposed to users whose access is limited to a read-only view of the GUIs or limited to credit review initiation) preferably has an associated assigned credit approval level that is stored by the system. This assigned credit approval level preferably identifies either or both of a maximum number of lease vehicles for a customer's fleet that the user can approve and a maximum amount of risk for a given customer that the user can approve. By storing such approval limits for each user, the fleet management company can maintain control over the system users, preferably by assigning greater approval powers to more experienced fleet managers and lesser approval powers to less experienced fleet managers or to sales personnel. In turn, customer credit profile reviews can be assigned to different fleet managers based on the level of approval commensurate with the customer's credit needs. That is, a credit profile review for a customer having a fleet of 25 vehicles and a credit limit of $500,000 would preferably be assigned to a user who has sufficient authority to take action on a fleet or credit limit of that size, rather than being assigned to a user who only has sufficient authority to take approval action for fleets of less than 15 vehicles or $300,000. Software can be readily configured within the system, preferably within either or both the security framework system 110 or application server 102 to automatically assign and route customer credit reviews to users based on the users' assigned approval limits such that the credit profiles assigned to each user for review is of a scope that is commensurate with that user's credit approval limit. In turn, upon logging onto the system, the user can be presented with a page that lists credit reviews that have been assigned to him/her.

It is also worth noting that in many cases, the customer for whom the credit profile exists is a business entity having many subsidiaries and related companies that also maintain a fleet of leased vehicles. In such cases, that business entity can be referred to as a master customer, and the master customer's credit profile will preferably control credit decisions for all of the master customer's subsidiaries and related companies, each of which can be referred to as a subcustomer. As such, when assembling a credit profile or performing a credit review, this customer hierarchy will be taken into account by treating all of the subcustomer data as if it were master customer data. Thus, the master customer's credit profile preferably includes all of the financial information and vehicle information for the subcustomers within the master customer's hierarchy. Subcustomers preferably will not have an associated credit profile.

However, this need not be the case. In an alternative embodiment, each subcustomer (including any business unit of the master customer that is classified as a profit center) can have its own associated credit profile. This in turn, would provide users of the inventive system with the ability to make separate credit decisions for each subcustomer.

The following numbered statements are included in order to set out preferred features and aspects of embodiments of the present invention.
1. A system configured for managing a plurality of credit profiles for a plurality of customers by a user, each of said customers having a fleet of leased vehicles, the system comprising:
   a client computer for the user's use;
   a server in communication with the client computer; and
   a database in communication with the server and thus the user through the client computer, the database being configured to store a plurality of customer credit profiles; and
   wherein the server is configured to (1) provide a plurality of GUIs for display on the client computer, at least one of the GUIs being configured to receive data from the user corresponding to a request for a change to one of said customer's credit profiles in response to user input, at least one of the GUIs being configured to display at least a portion of one of said customer's credit profiles in response to user input, and at least one of the GUIs being configured to receive input from the user corresponding to an action to take on the submitted request, and (2) update the customer's credit profile in accordance with the received action input.
2. The system of statement 1 wherein each credit profile comprises a credit limit and a vehicle limit, and wherein at least one of the GUIs is configured to display a selected customer credit profile's current credit limit, the selected customer credit profile's current vehicle limit, a field for user entry of a requested credit limit for the selected customer credit profile, and a field for user entry of a requested vehicle limit for the selected customer credit profile.
3. The system of statement 2 wherein the customer credit profile further comprises a per vehicle credit limit that represents a maximum amount of credit authorized for any given vehicle in the customer's fleet, and wherein at least one of the GUIs is configured to display the customer credit profile's current per vehicle credit limit and a field for user entry of a requested per vehicle credit limit for the customer credit profile.
4. The system of statement 3 wherein the customer credit profile further comprises a per vehicle aftermarket equipment (AME) credit limit that represents a maximum amount of credit authorized for AME for any given vehicle in the customer's fleet, and wherein at least one of the GUIs is configured to display the customer credit profile's current AME credit limit and a field for user entry of a requested AME credit limit for the customer credit profile.
5. The system of statement 3 wherein the customer credit profile further comprises a maximum maintenance management amount, and wherein at least one of the GUIs is configured to display the customer credit profile's current maximum maintenance management amount and a field for user entry of a requested maximum maintenance management amount for the customer credit profile.
6. The system of statement 3 wherein the customer credit profile further comprises a maximum risk management amount, and wherein at least one of the GUIs is configured to display the customer credit profile's current maximum risk management amount and a field for user entry of a requested maximum risk management amount for the customer credit profile.
7. The system of statement 3 wherein the customer credit profile further comprises a plurality of lease term depreciation percentages applicable to a plurality of lease months, and wherein at least one of the GUIs is configured to display the customer credit profile's current lease term depreciation percentages and a plurality of fields for user entry of a plurality of requested lease term depreciation percentages for the customer credit profile.
8. The system of statement 1 wherein the customer credit profile further comprises a credit rating that represents a level of scrutiny that will applied to credit checks applied to a leased vehicle order by the customer, and wherein at least one of the GUIs is configured to display the customer credit profile's credit rating, and a field for user entry of a requested credit rating for the customer credit profile.
9. The system of statement 1 wherein at least one of the GUIs is configured with a plurality of fields for user entry of lease data by vehicle class for leased vehicles in a customer's planned vehicle fleet.
10. The system of statement 1 wherein at least one of the Guts is configured to display a calculated risk amount corresponding to a planned leased vehicle fleet for the customer.
11. The system of statement 1 wherein at least one of the GUIs is configured to display a calculated risk amount corresponding to current leased vehicles in the customer's leased vehicle fleet and a calculated risk amount corresponding to leased vehicles that are planned for delivery to the customer's leased vehicle fleet.
12. The system of statement 1 wherein at least one of the GUIs is configured to display a calculated risk amount corresponding to current leased vehicles in the customer's leased vehicle fleet and a calculated risk amount corresponding to leased vehicles that are planned for delivery to the customer's leased vehicle fleet, and wherein that at least one GUI is further configured to allow the user to modify at least one of the displayed risk amounts.
13. The system of statement 1 wherein at least one of the GUIs is configured to allow the user to initiate a credit review for a customer's credit profile and specify a type of credit review that is to be undertaken.
14. The system of statement 13 wherein the credit review type comprises a credit review for at least one selected from the group consisting of a requested increase in credit limit and a requested increase in vehicle limit.
15. The system of statement 13 wherein the customer credit profile further comprises a credit rating that represents a level of scrutiny that will applied to credit checks applied to a leased vehicle order by the customer, and wherein the credit review type comprises a credit review for a requested change in credit rating.
16. The system of statement 1 wherein at least one of the GUIs is configured to allow the user to schedule a future credit review for the customer's credit profile.
17. The system of statement 1 wherein at least a plurality of credit profiles are applicable to a plurality of master customers, each master customer comprising at least one subcustomer, each subcustomer also having its own leased vehicle fleet, wherein the database is not configured to store credit profiles that are unique to subcustomers.
18. The system of statement 1 wherein the customer credit profile further comprises financial information for the customer and an identifier associated with that financial information that represents a level of scrutiny applied to that financial information by an external auditor, and wherein at least one of the GUIs is configured to display the credit profile's financial information and the identifier associated therewith.
19. A method for user management of a plurality of customer credit profiles, at least one of said customers having a fleet of leased vehicles, the method comprising:
   providing at least one GUI through which a user can submit a request to review a proposed change to a customer's stored credit profile;
   providing at least one GUI through which a user can view data stored in a customer's credit profile in response to a submitted credit review request;
   providing at least one GUI through which a user can provide input corresponding to an approval or rejection of the credit profile change request; and
   updating the customer's stored credit profile in accordance with the user's approval or rejection input.
20. The method of statement 19 wherein the credit profile comprises a credit limit, and wherein the credit profile change request comprises a change in the credit profile's credit limit.
21. The method of statement 19 wherein the credit profile comprises a vehicle limit, and wherein the credit profile change request comprises a change in the credit profile's vehicle limit.
22. The method of statement 19 wherein the credit profile comprises a credit limit and a vehicle limit, the method further comprising:
   providing at least one GUI through which a user can selectively choose to request a change in either or both of the customer's credit limit and the customer's vehicle limit.
23. The method of statement 22 further comprising:
   providing at least one GUI through which a user can view the customer credit profile's current credit limit and current vehicle limit.
24. The method of statement 22 wherein the customer credit profile further comprises at least one member selected from the group consisting of a per vehicle credit limit that represents a maximum amount of credit authorized for any given vehicle in the customer's fleet, a per vehicle aftermarket equipment (AME) credit limit that represents a maximum amount of credit authorized for AME for any given vehicle in the customer's fleet, a maximum maintenance management amount, and a maximum risk management amount, the method further comprising:
   providing at least one GUI through which a user can request a change to the at least one member selected from the group.
25. The method of statement 22 wherein the customer credit profile further comprises a plurality of lease term depreciation percentages applicable to a plurality of lease months, the method further comprising:
   providing at least one GUI through which a user can request a change to at least one of the credit profile's lease term depreciation percentages.
26. The method of statement 22 wherein the customer credit profile further comprises a credit rating that represents a level of scrutiny that will applied to a credit check applied to a leased vehicle order by the customer, the method further comprising:
   providing at least one GUI through which a user can request a change to the credit profile's credit rating.
27. The method of statement 22 further comprising:
   providing at least one GUI through which a user can enter lease data broken down by vehicle class for leased vehicles in a customer's planned vehicle fleet, the entered lease data for display to a user when that user is evaluating the credit profile change request.
28. The method of statement 22 further comprising:
   providing at least one GUI through which a user can specify a type of credit review to be performed on a customer's credit profile.
29. The method of statement 19 further comprising:
   providing at least one GUI through which a user can view a calculated risk amount corresponding to current leased vehicles in the customer's leased vehicle fleet and a calculated risk amount corresponding to leased vehicles that are planned for delivery to the customer's leased vehicle fleet, and wherein that at least one GUI is further configured to allow the user to modify at least one of the displayed risk amounts.
30. The method of statement 19 further comprising:
   providing at least one GUI through which a user provide input corresponding to scheduling a future credit review for the customer's credit profile; and
   scheduling a future credit review for the customer's credit profile in response to scheduling input received from the user,.
31. The method of statement 19 further comprising storing a master customer credit profile that serves as the credit profile for a master customer and each subcustomer of the master customer.
32. The method of statement 19 wherein the customer credit profile further comprises financial information for the customer and an identifier associated with that financial information that represents a level of scrutiny applied to that financial information by an external auditor, the method further comprising:
   providing at least GUI that is configured to display the credit profile's financial information and the identifier associated therewith.
33. A method for user management of credit for a plurality of fleet customers, each fleet customer having a fleet of leased vehicles, the method comprising:
   providing at least one GUI through which a user can submit a request to review a proposed change to a customer's stored credit information, the stored credit information comprising financial data about the customer and an identifier associated with the financial data that corresponds to a level of scrutiny applied to the financial data;
   providing at least one GUI through which a user can view the customer credit information's financial data and the identifier associated therewith;
   providing at least one GUI through which a user can provide input corresponding to an approval or rejection of the credit information change request; and
   updating the customer's stored credit information in accordance with the user's approval or rejection input.
34. The method of statenent 33 wherein the identifier corresponds to a level of scrutiny applied to the financial data by an external party.
35. The method of statement 34 wherein a plurality of different identifiers are available for association with each customer's financial information, the plurality of identifiers comprising an identifier that indicates the financial data has been reviewed but not fully audited by an external auditor and at least one identifier that indicates the financial data has not been reviewed by an external auditor.
36. The method of statement 35 wherein the plurality of identifiers further comprise an identifier that indicates the financial data is a tax return.
37. The method of statement 33 wherein each of a plurality of users has an assigned approval limit, the method further comprising:
   assigning a credit information review for a credit information change request to a user at least partially on the basis of the user's assigned approval limit.
38. The method of statement 37 wherein the assigned approval limit comprises at least one selected from the group consisting of a per customer maximum vehicle limit and a per customer maximum credit limit.

While the present invention has been described above in relation to its preferred embodiment, various modifications may be made thereto that fall within the invention's scope, as would be recognized by those of ordinary skill in the art. Such modifications to the invention will be recognizable upon review of the teachings herein by those of ordinary skill in the art. As such, the full scope of the present invention is to be defined solely by the appended claims and their legal equivalents.

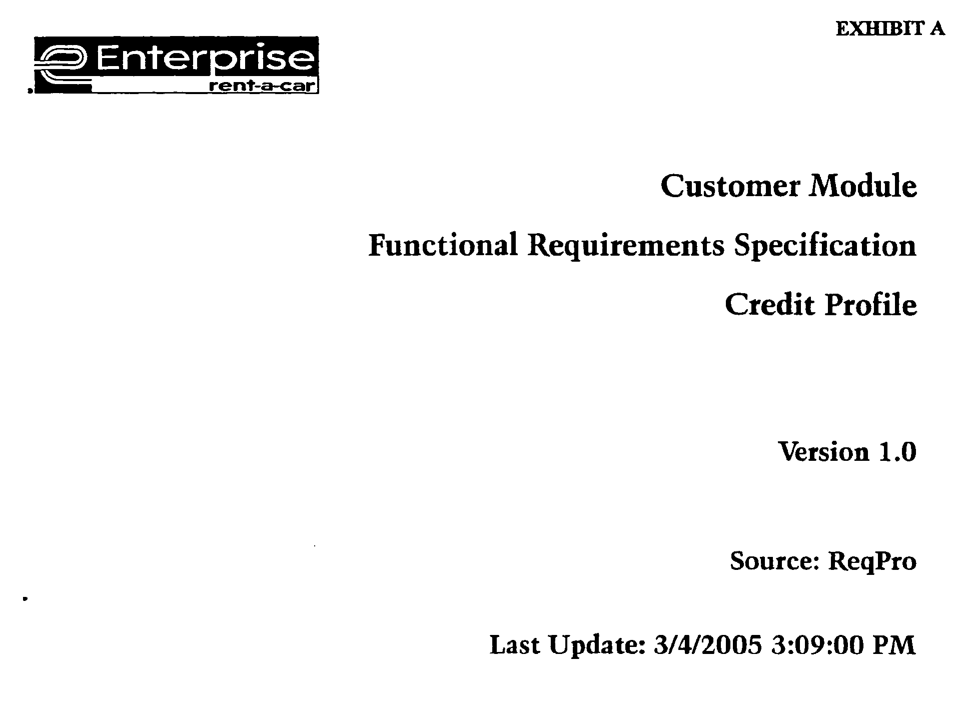

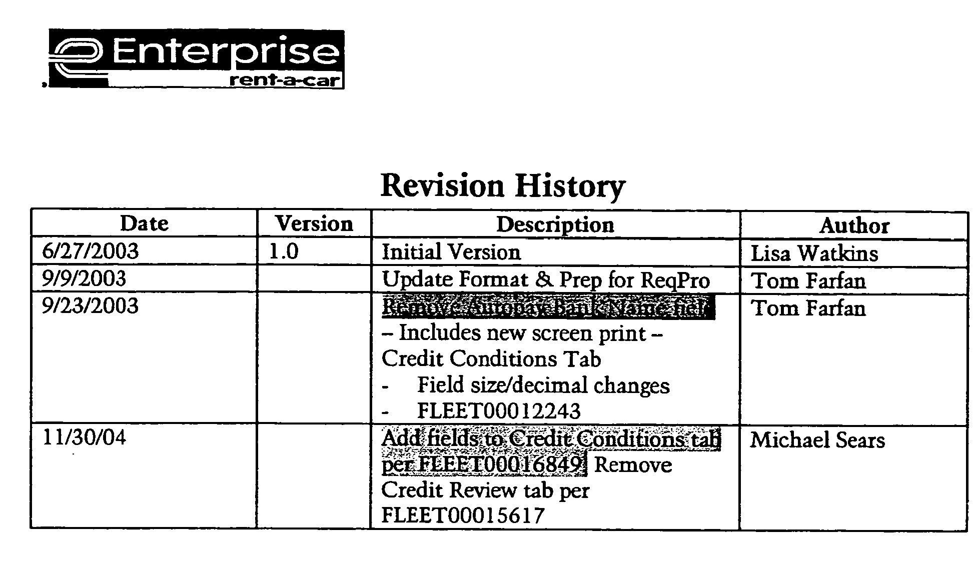

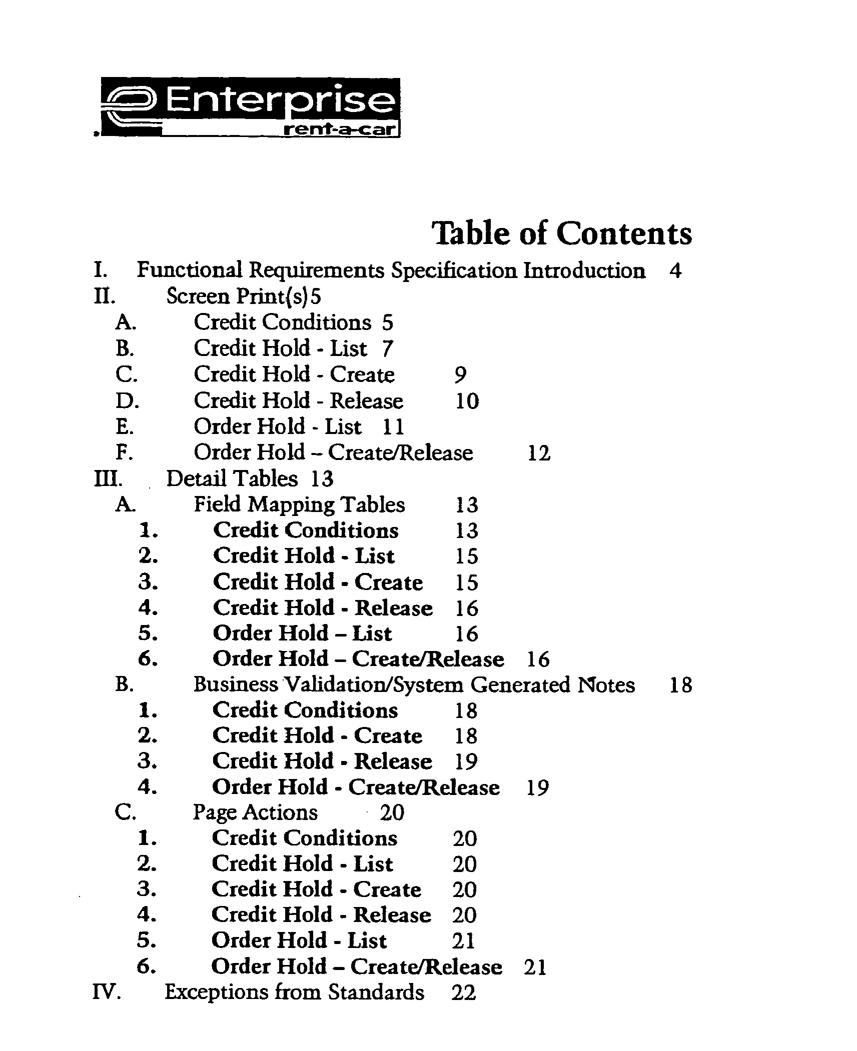

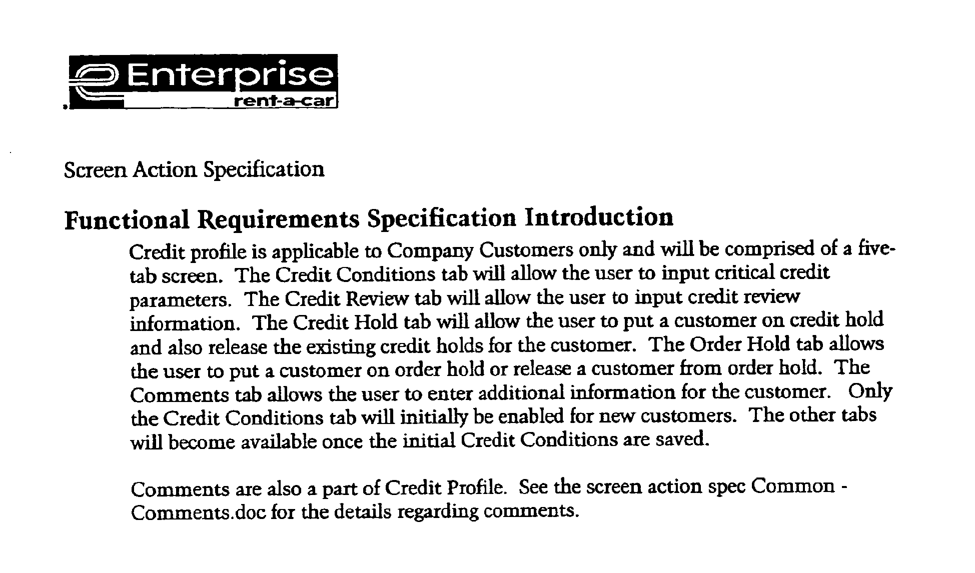

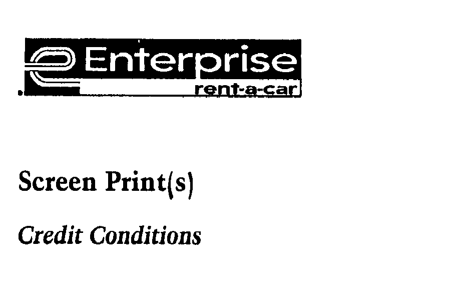

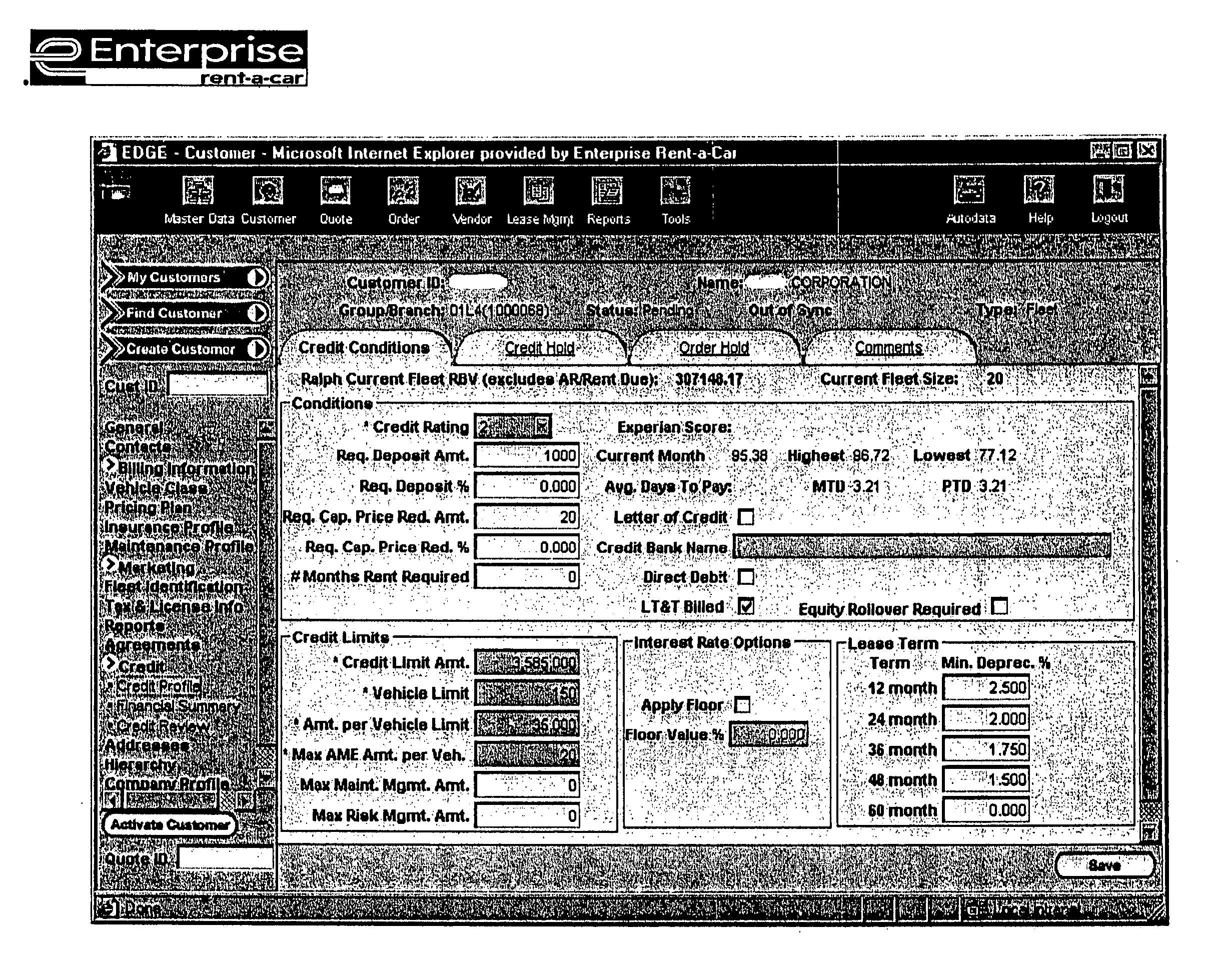

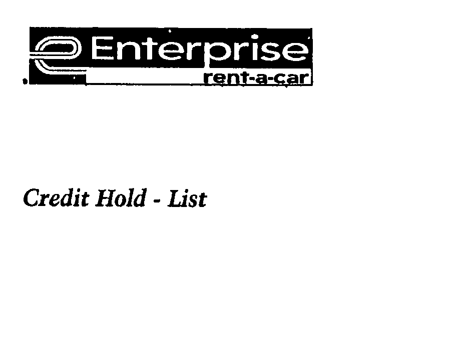

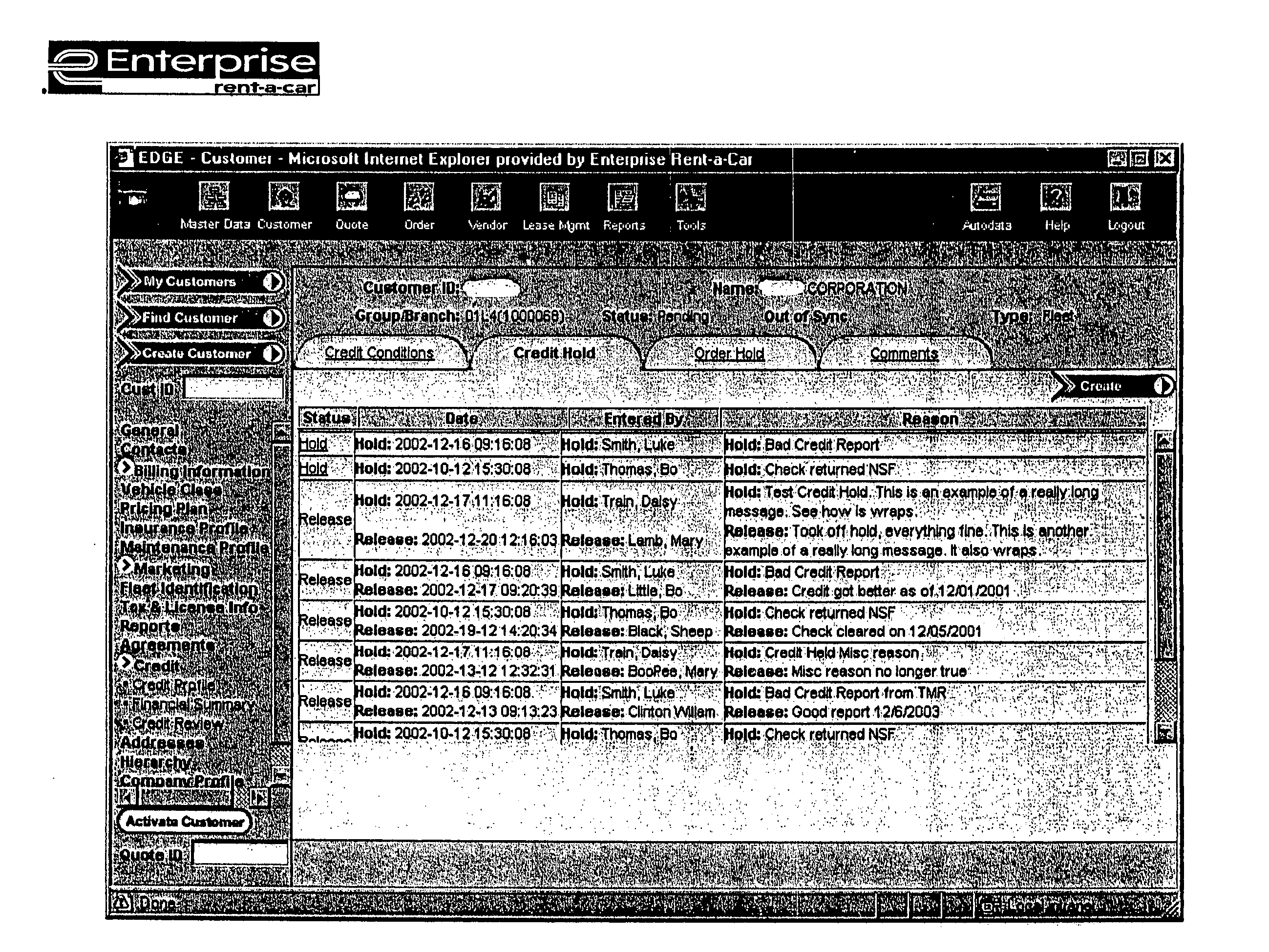

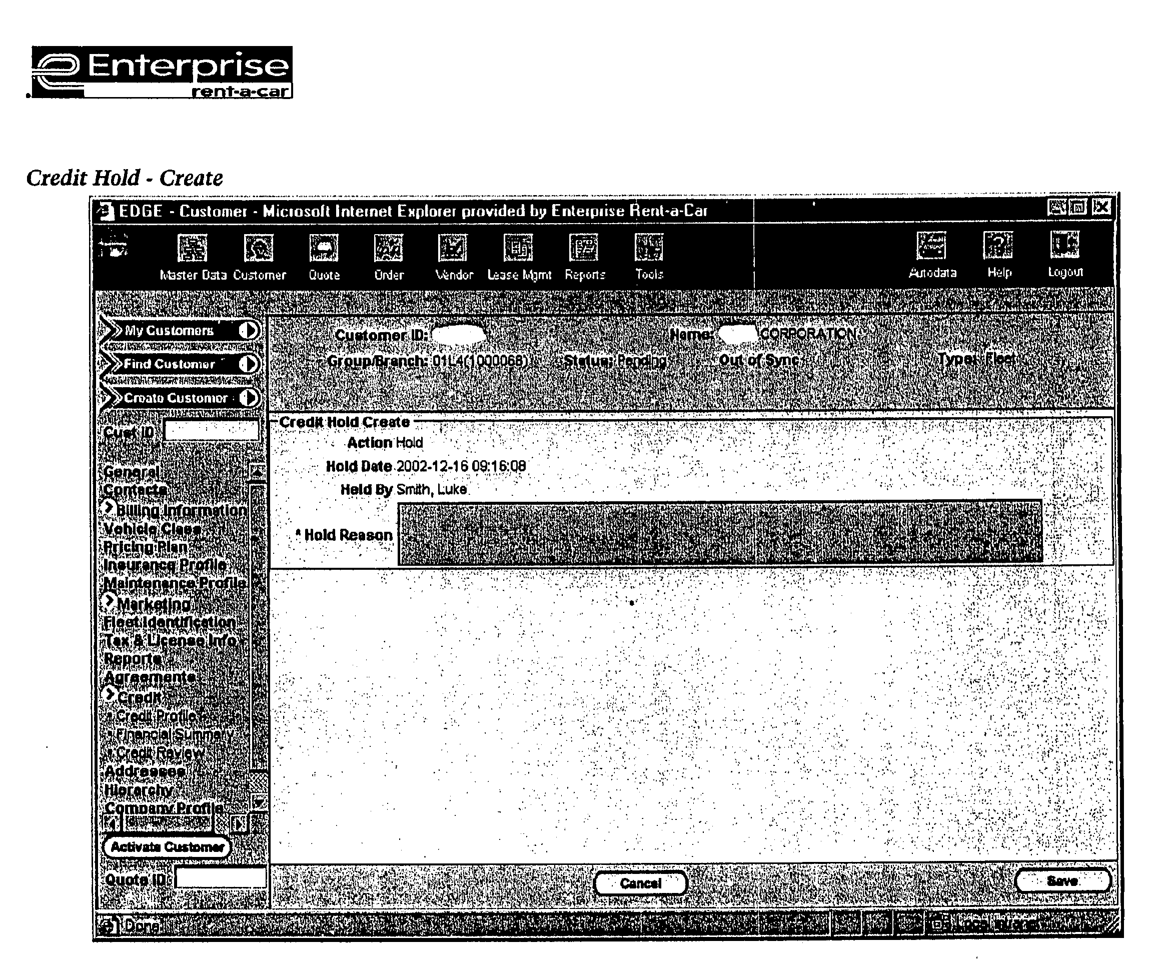

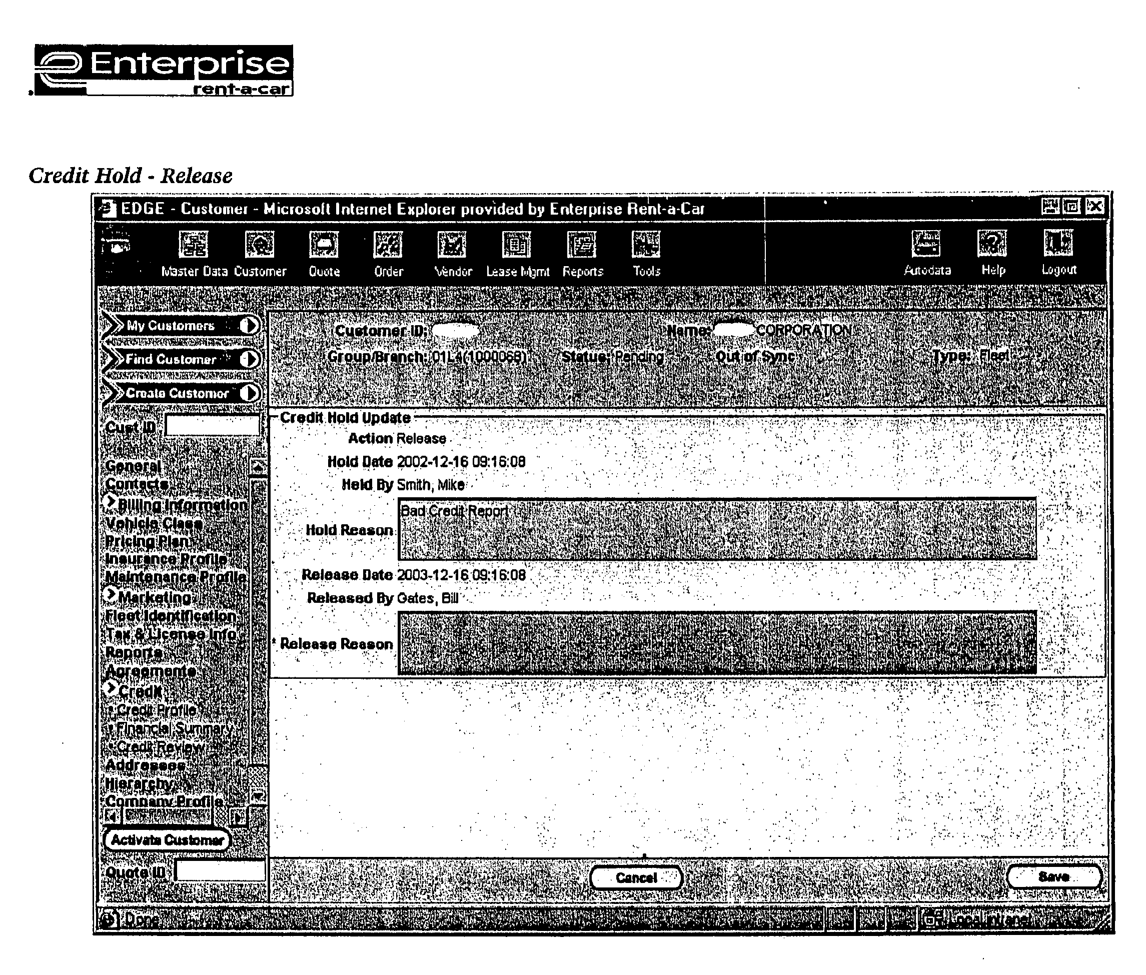

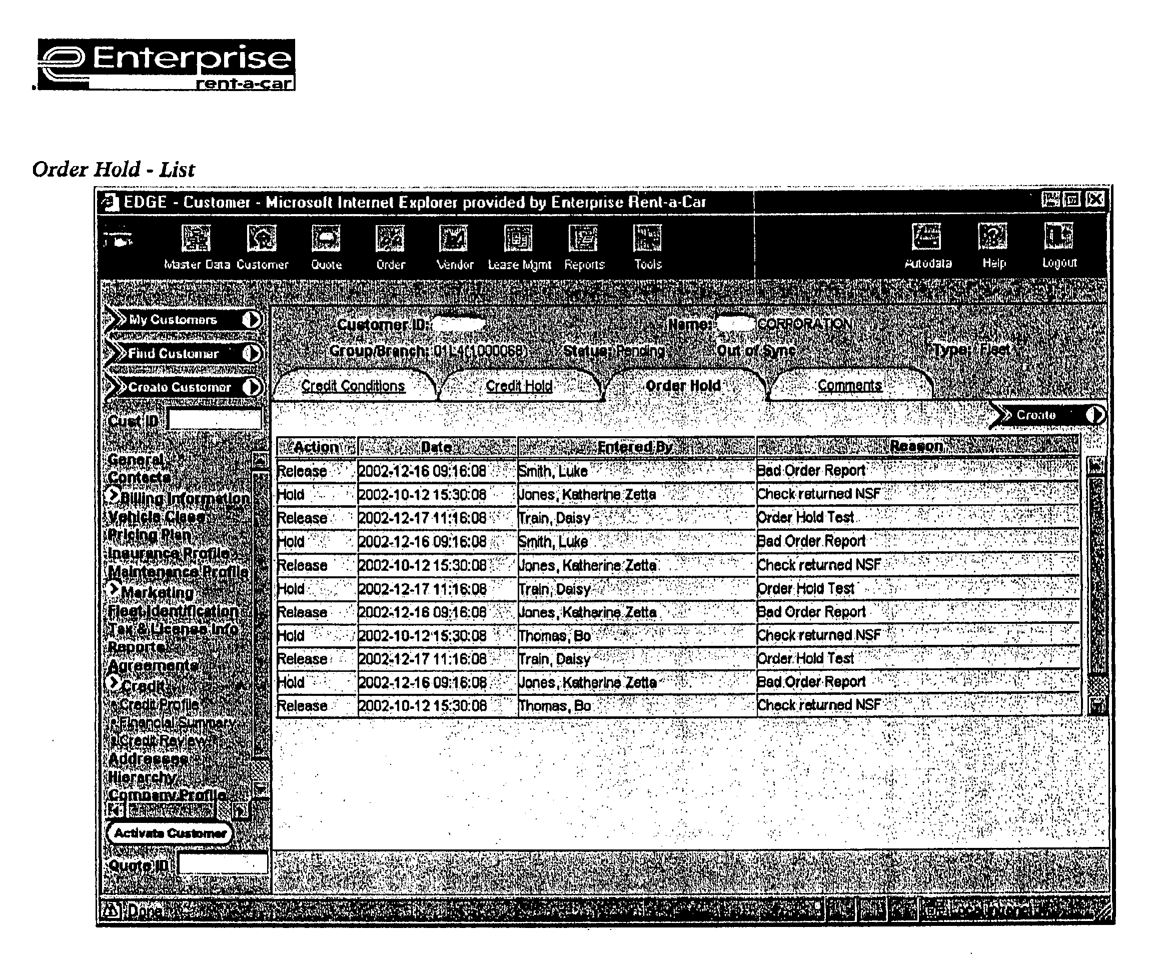

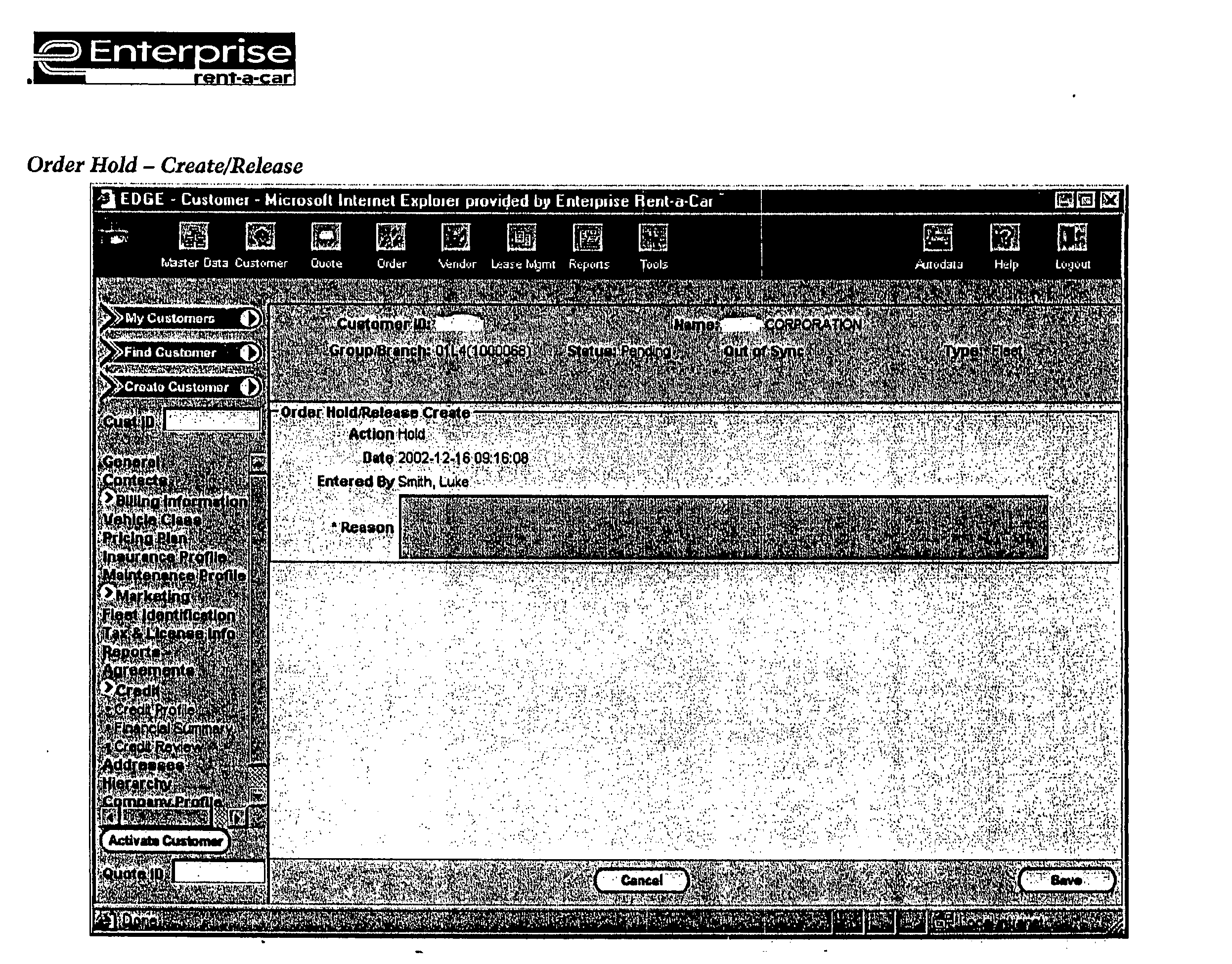

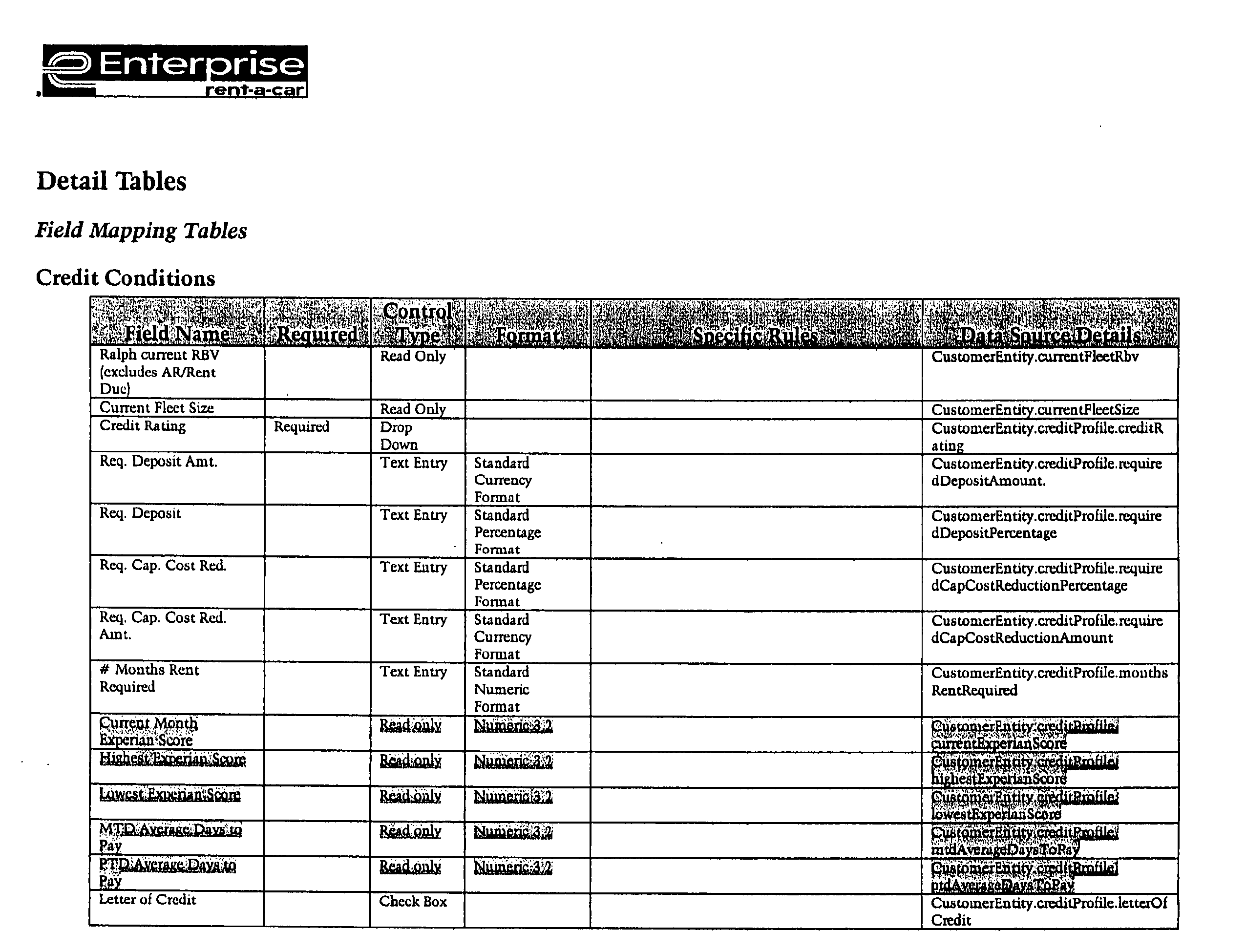

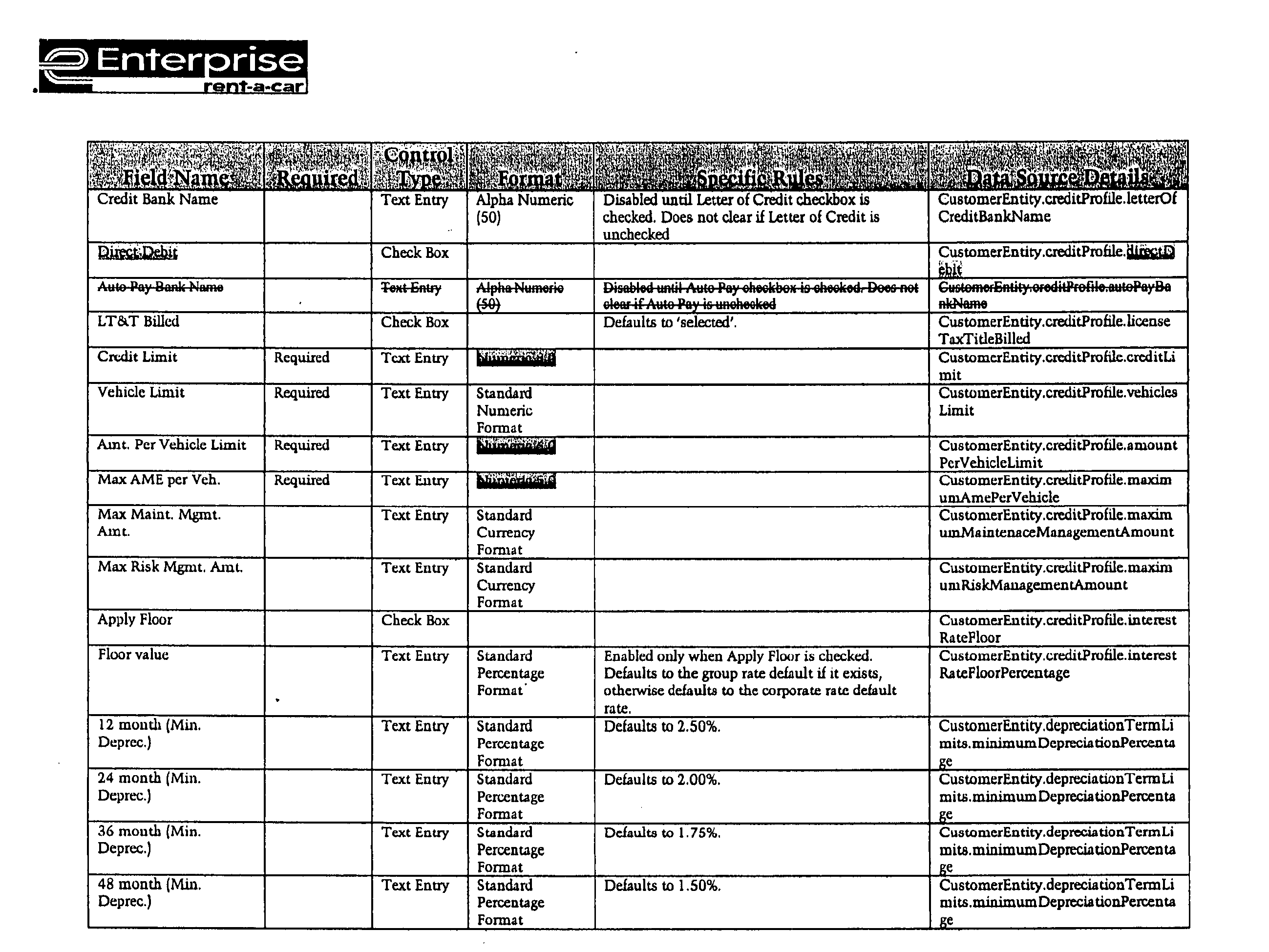

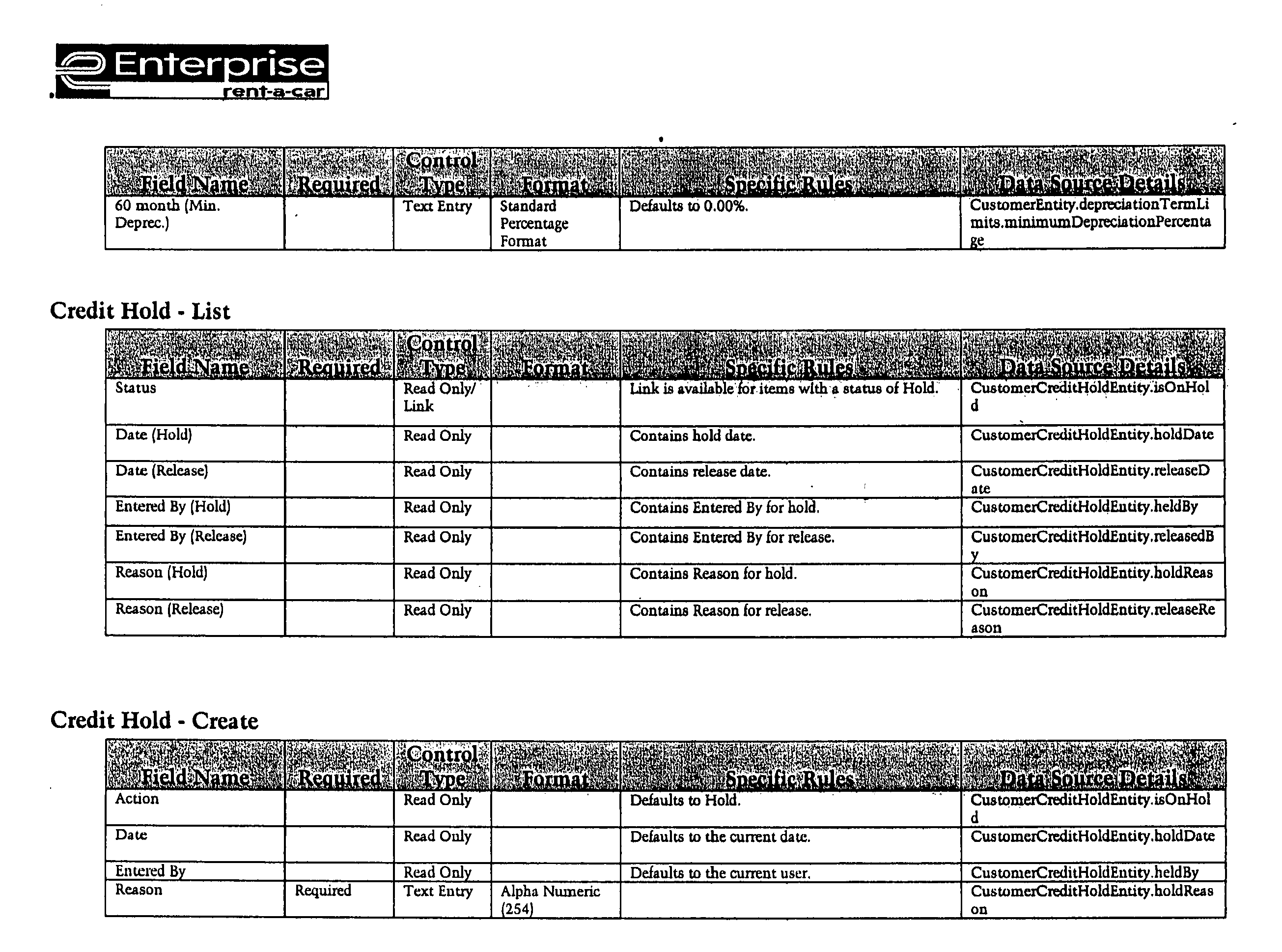

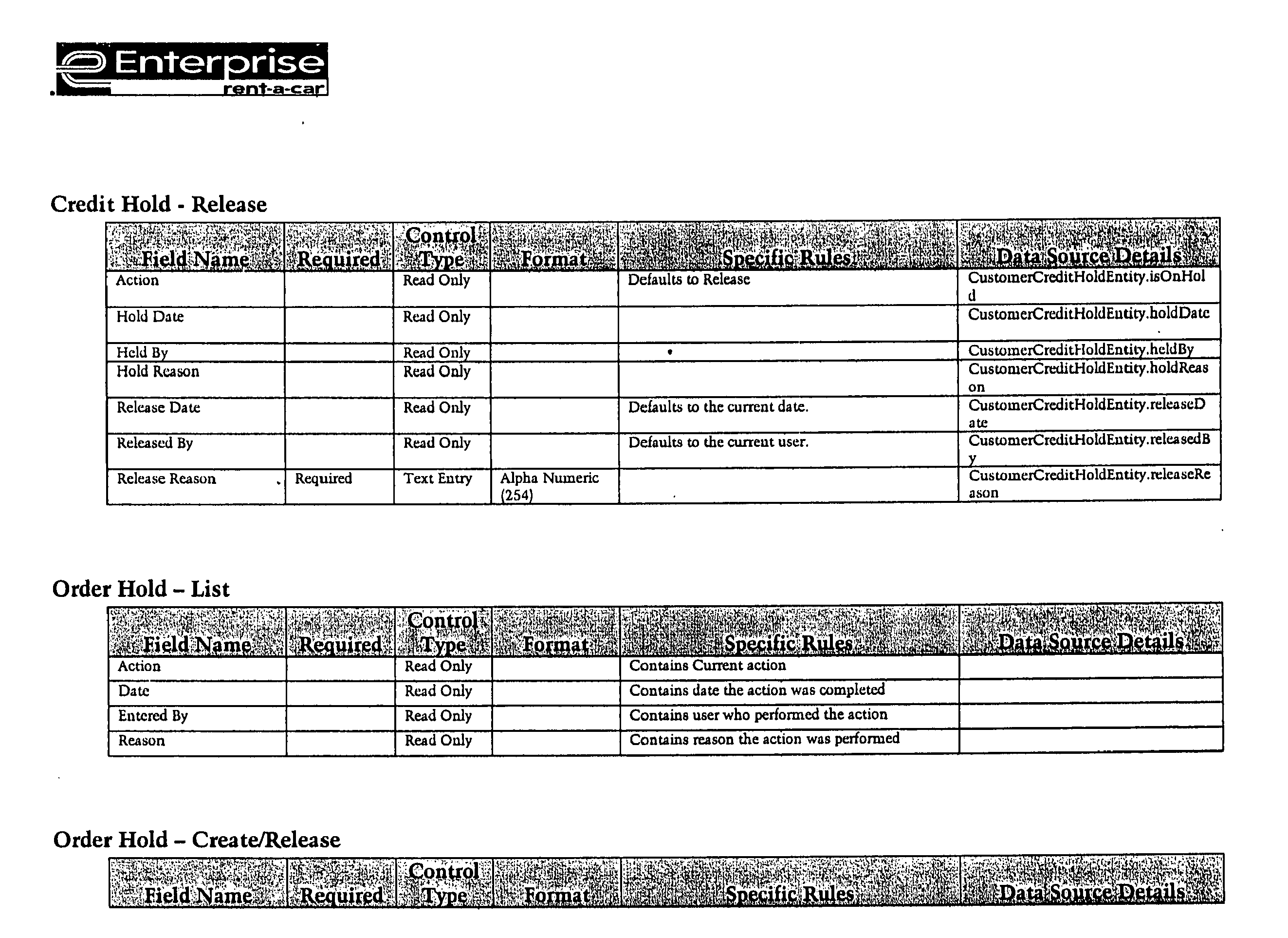

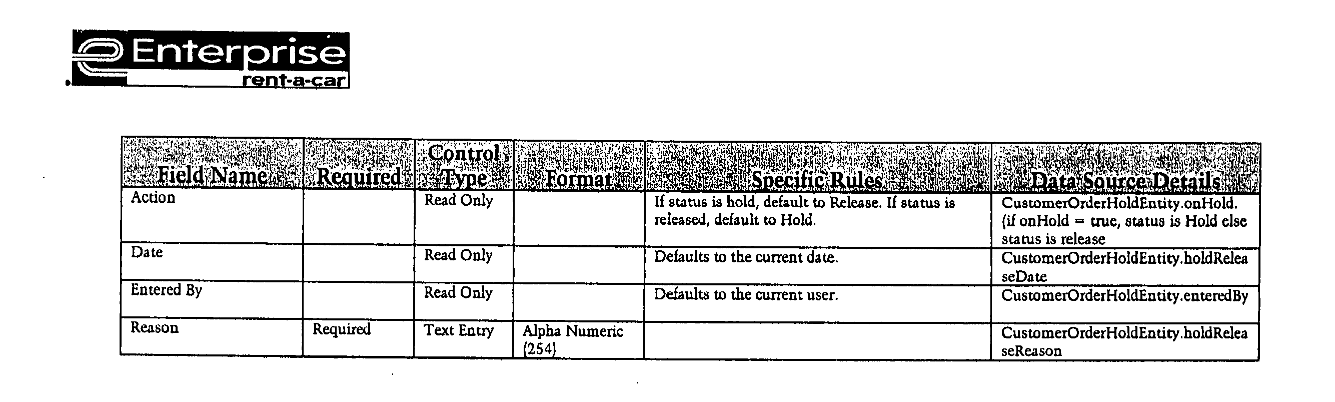

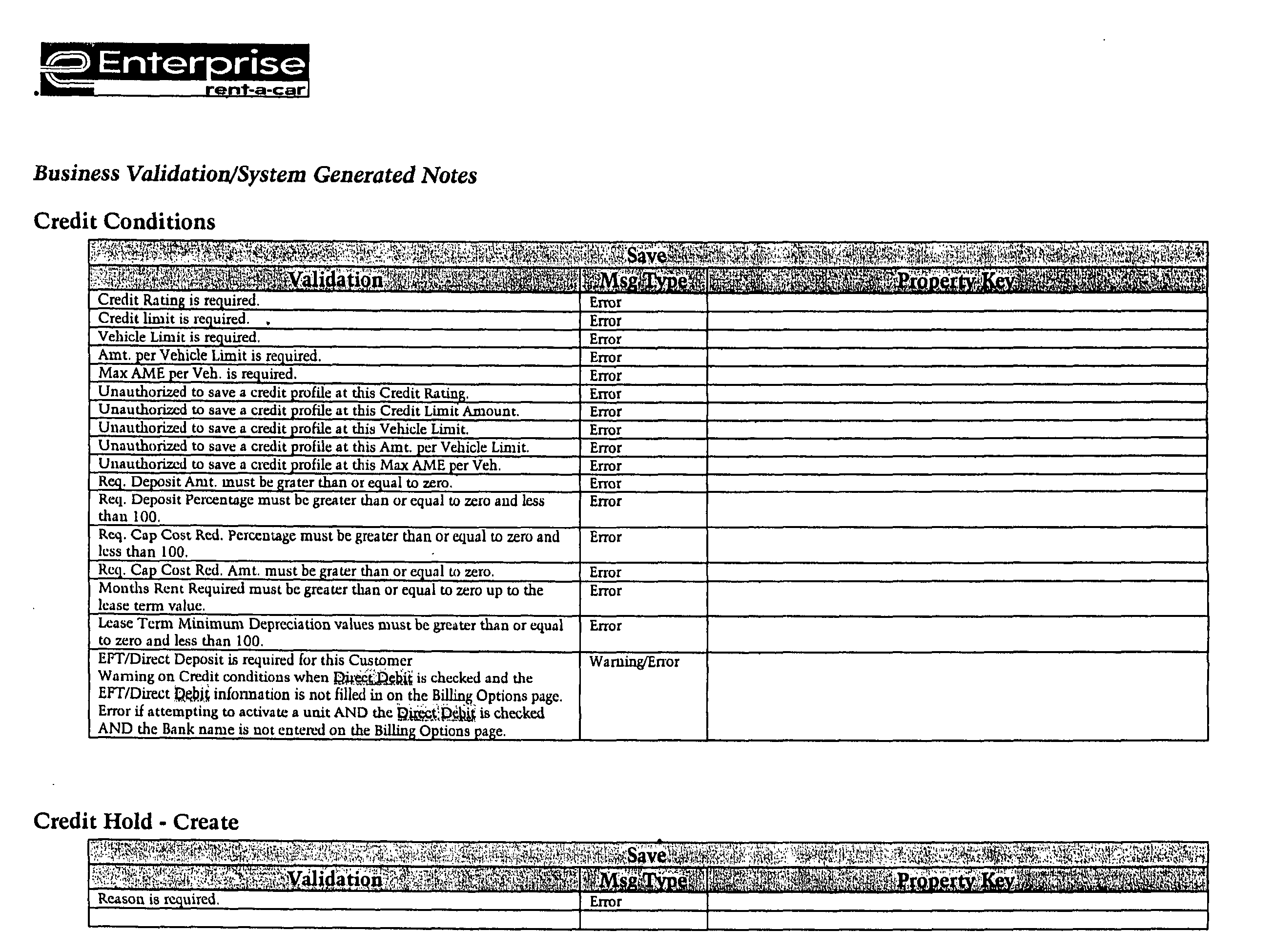

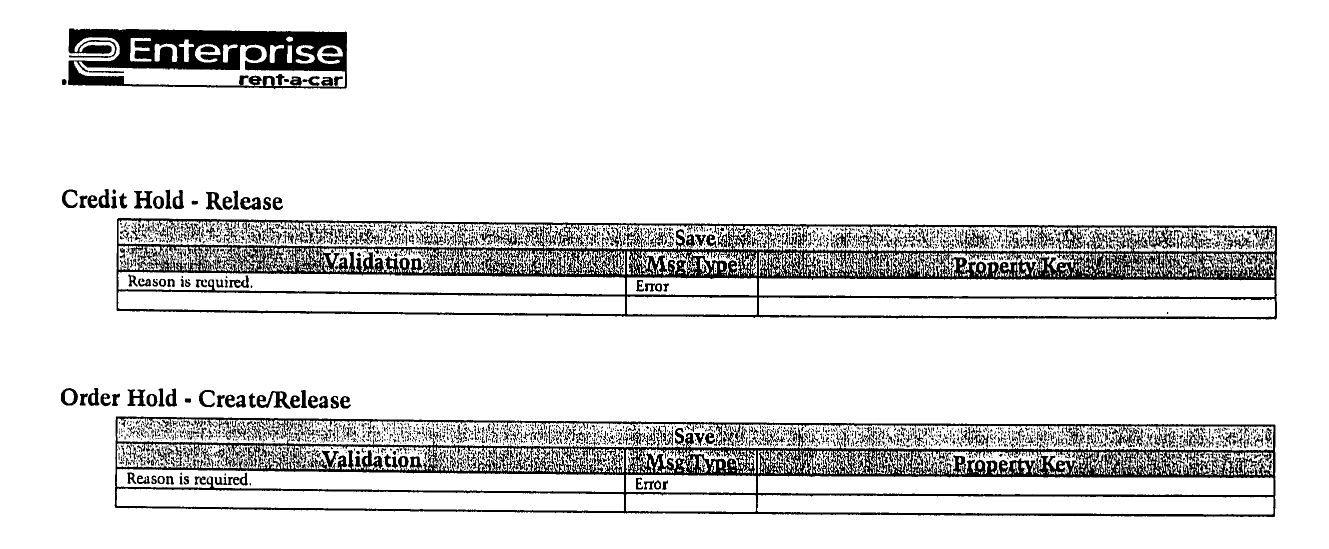

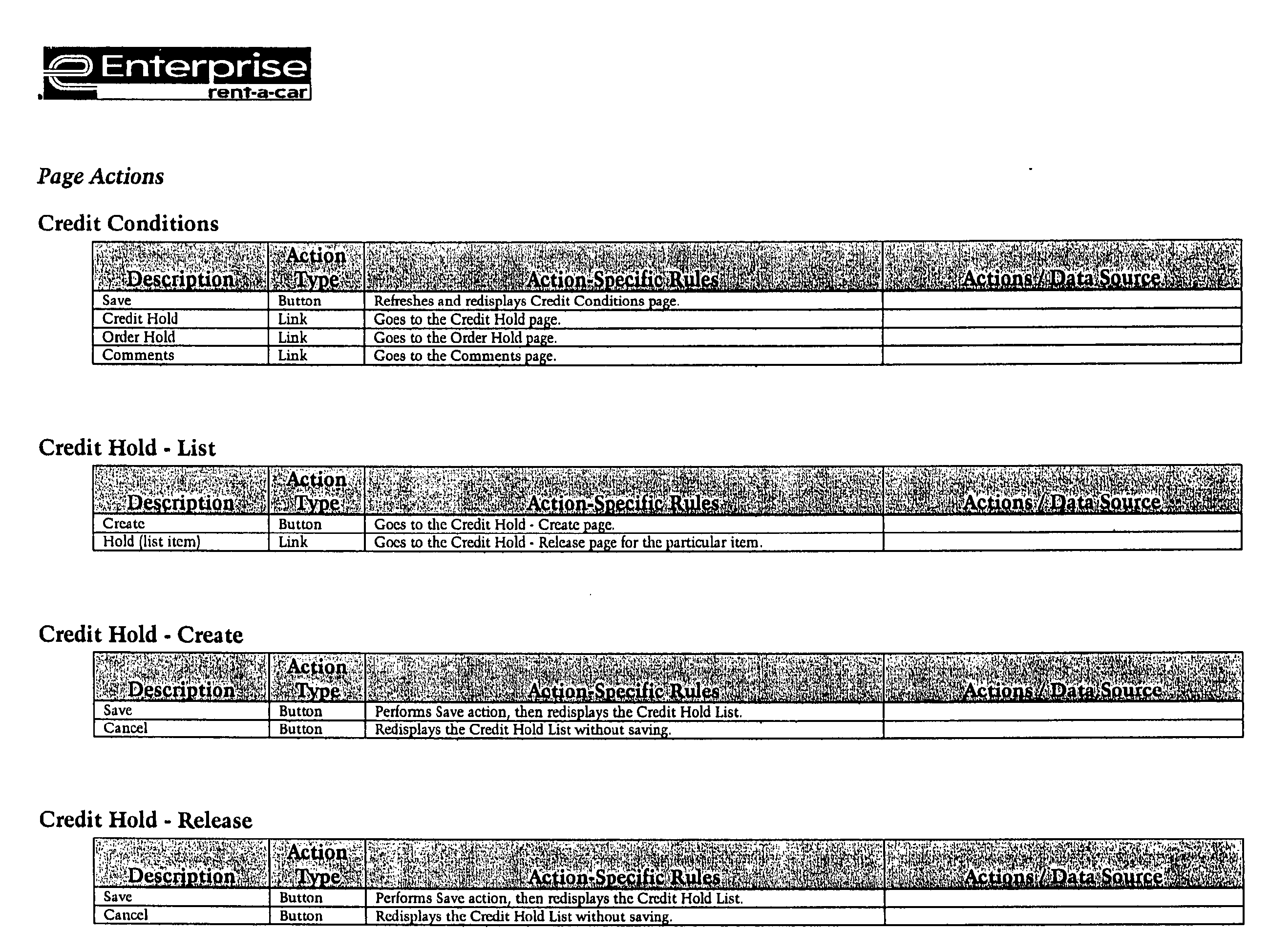

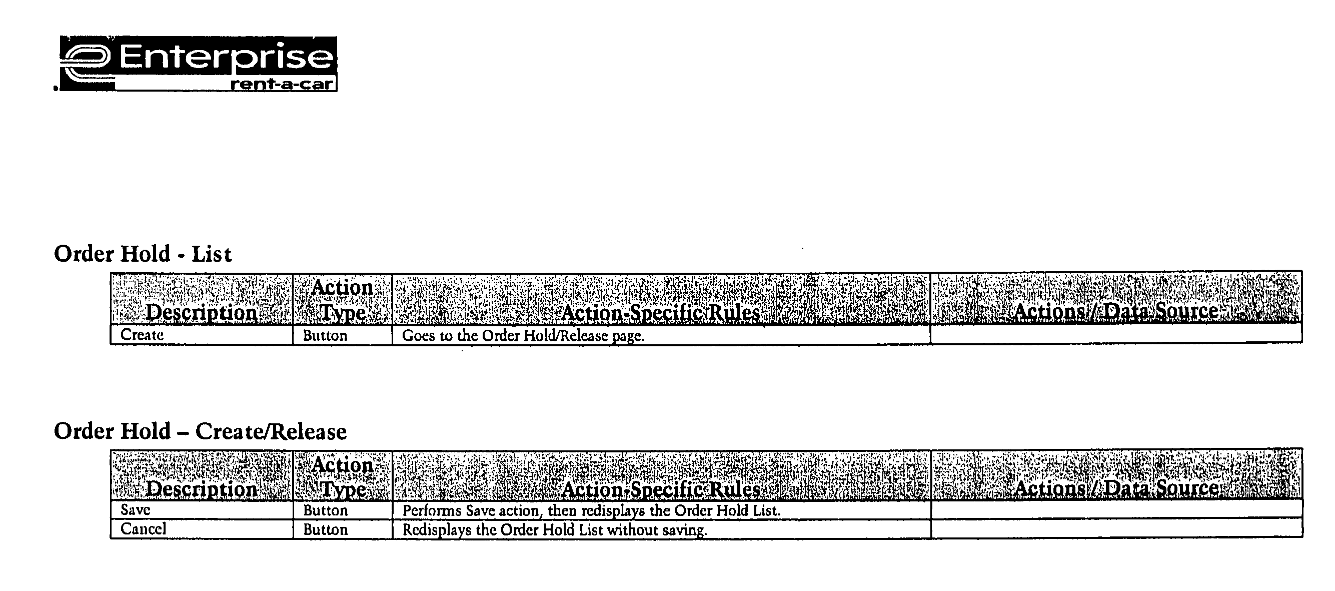

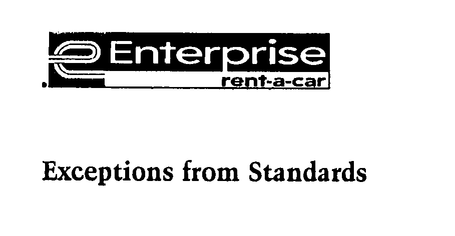

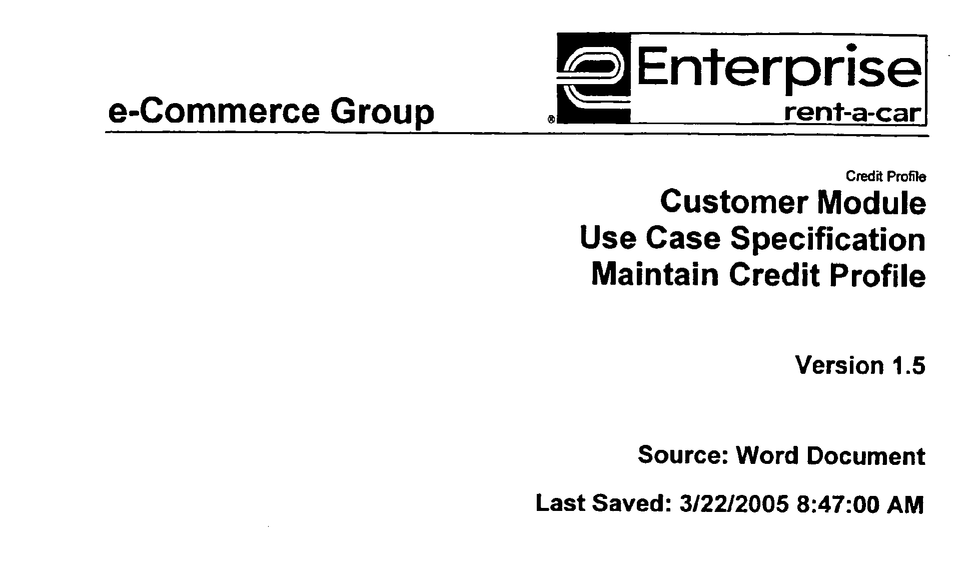

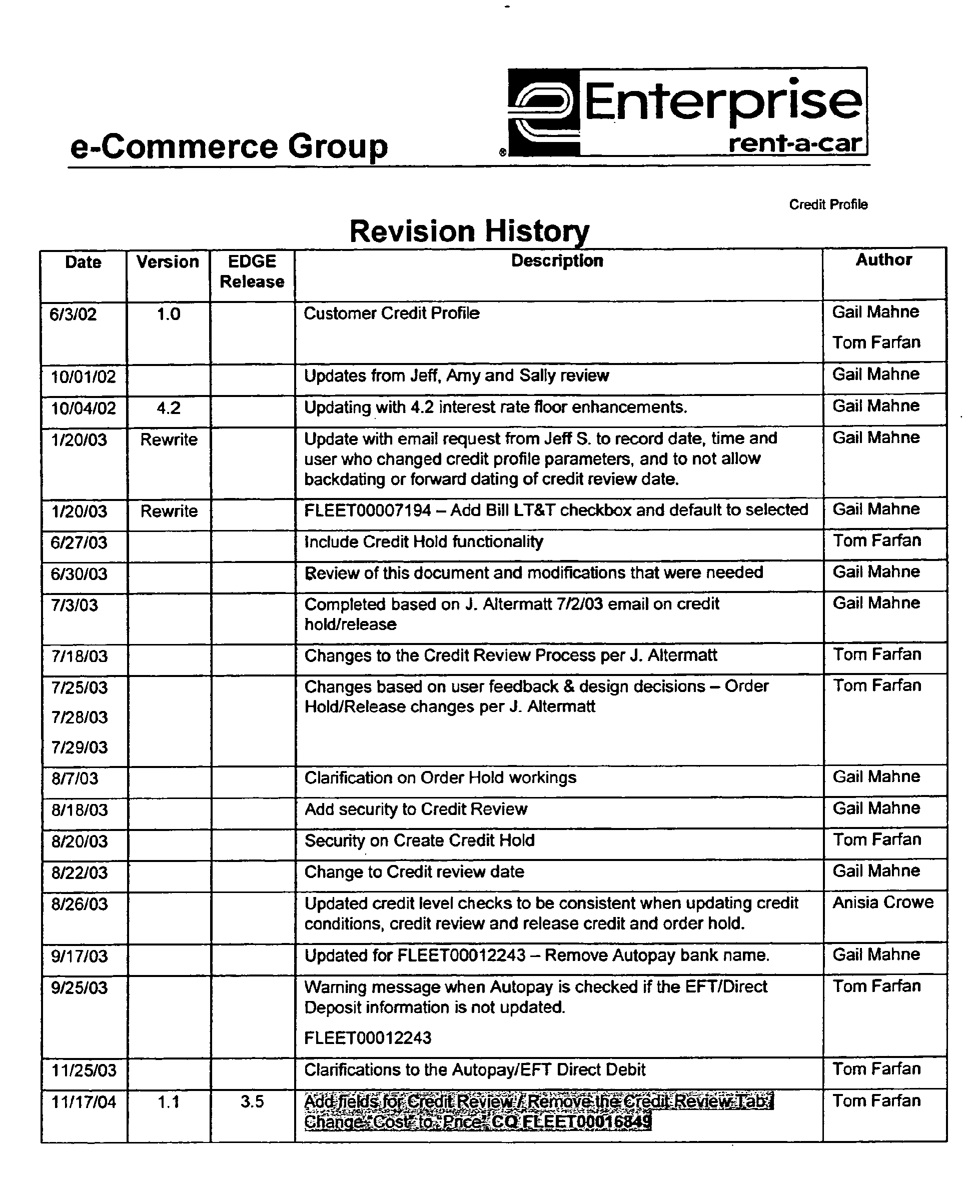

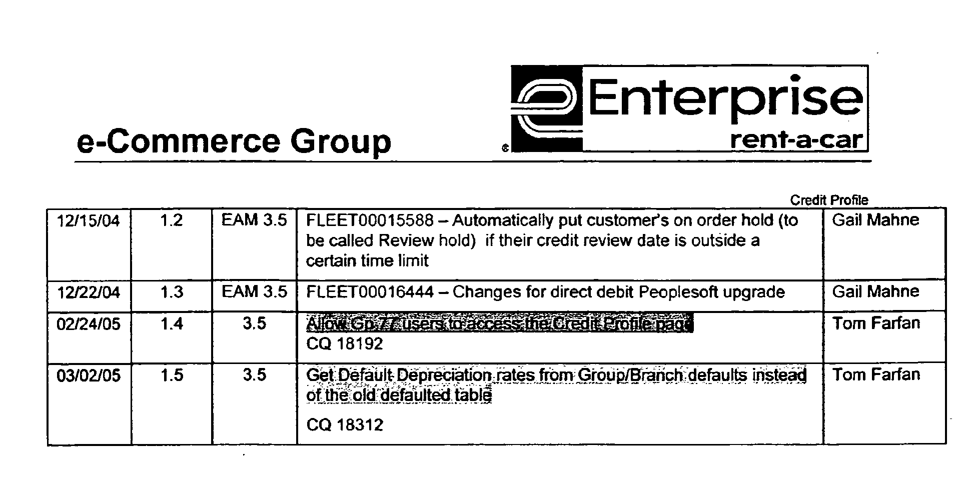

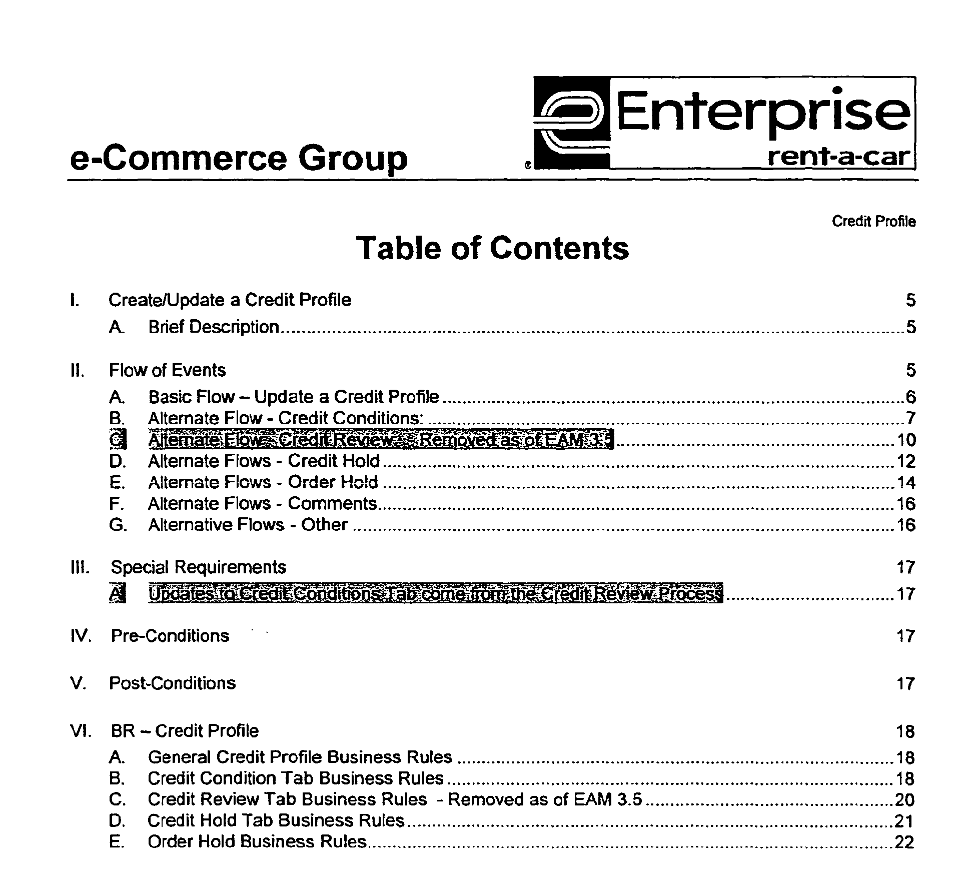

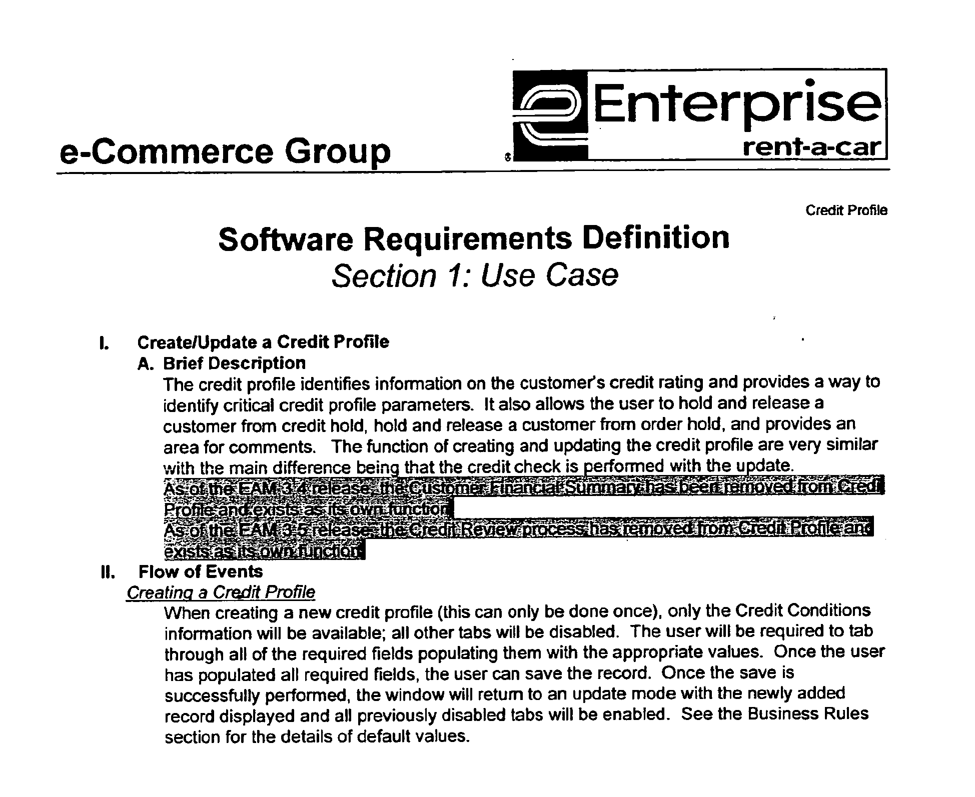

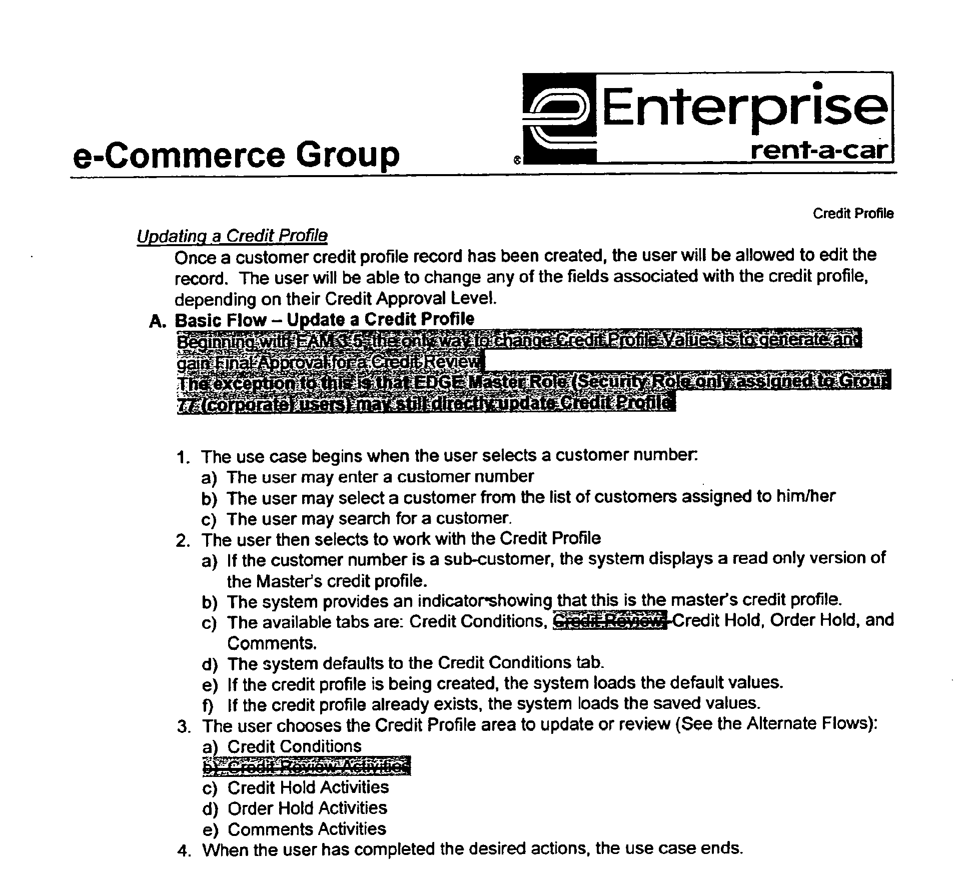

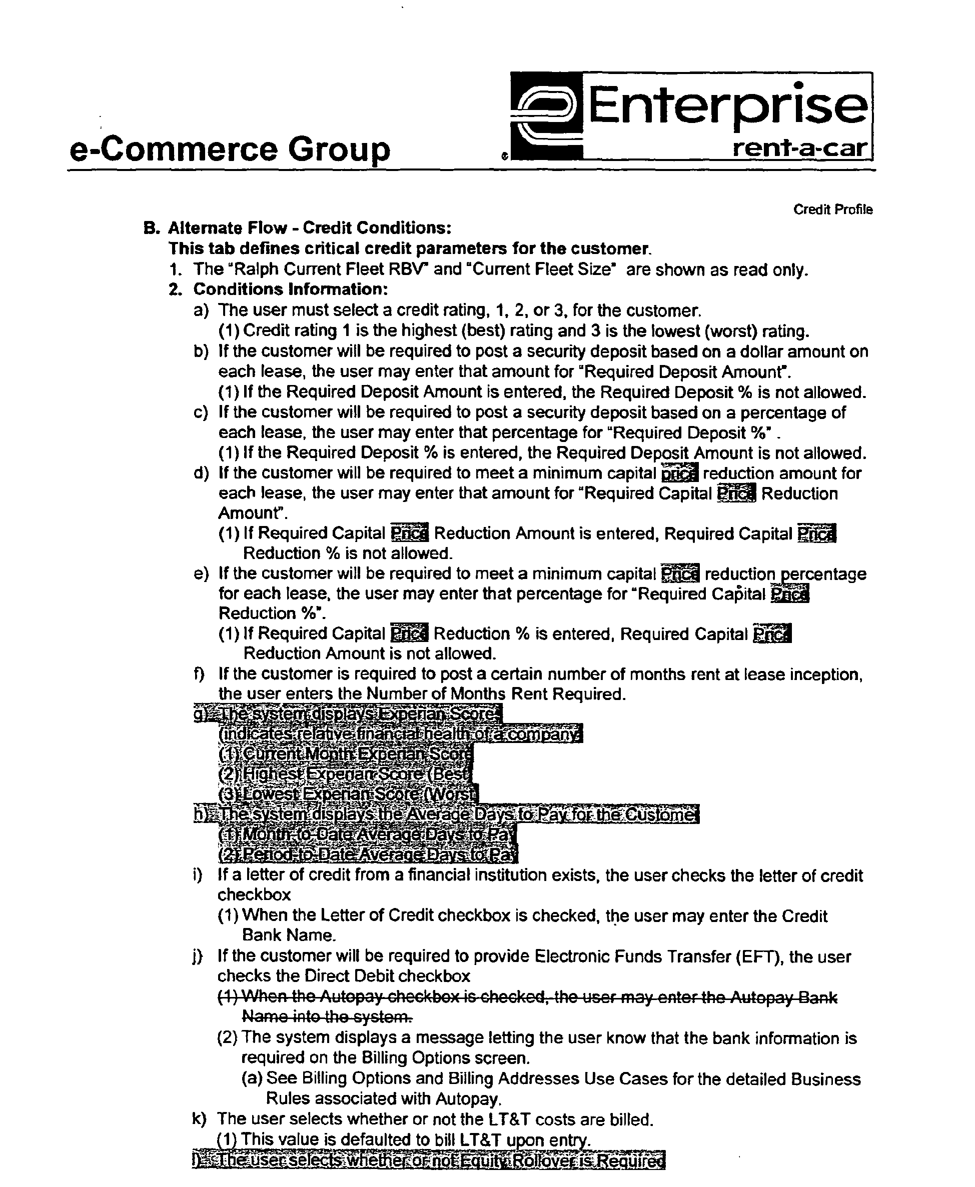

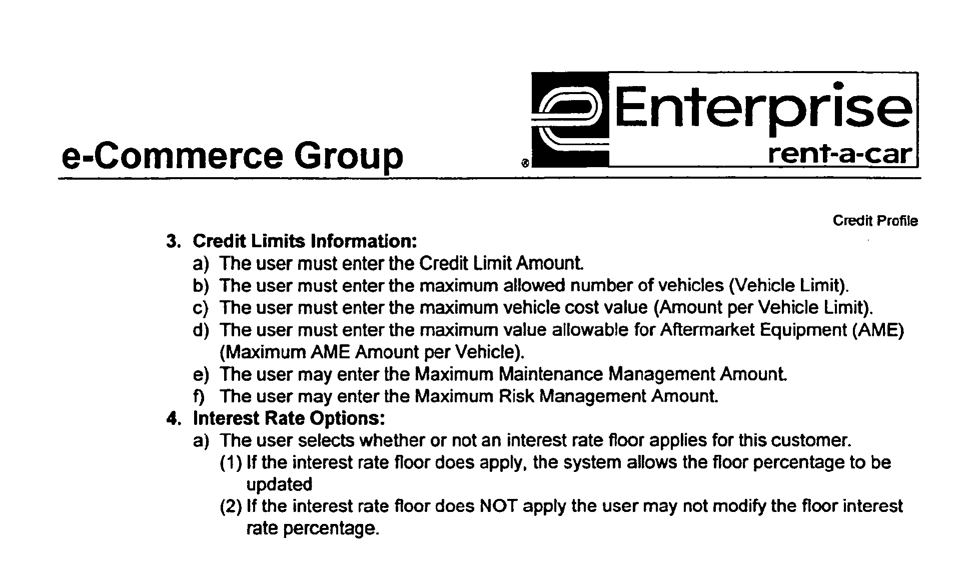

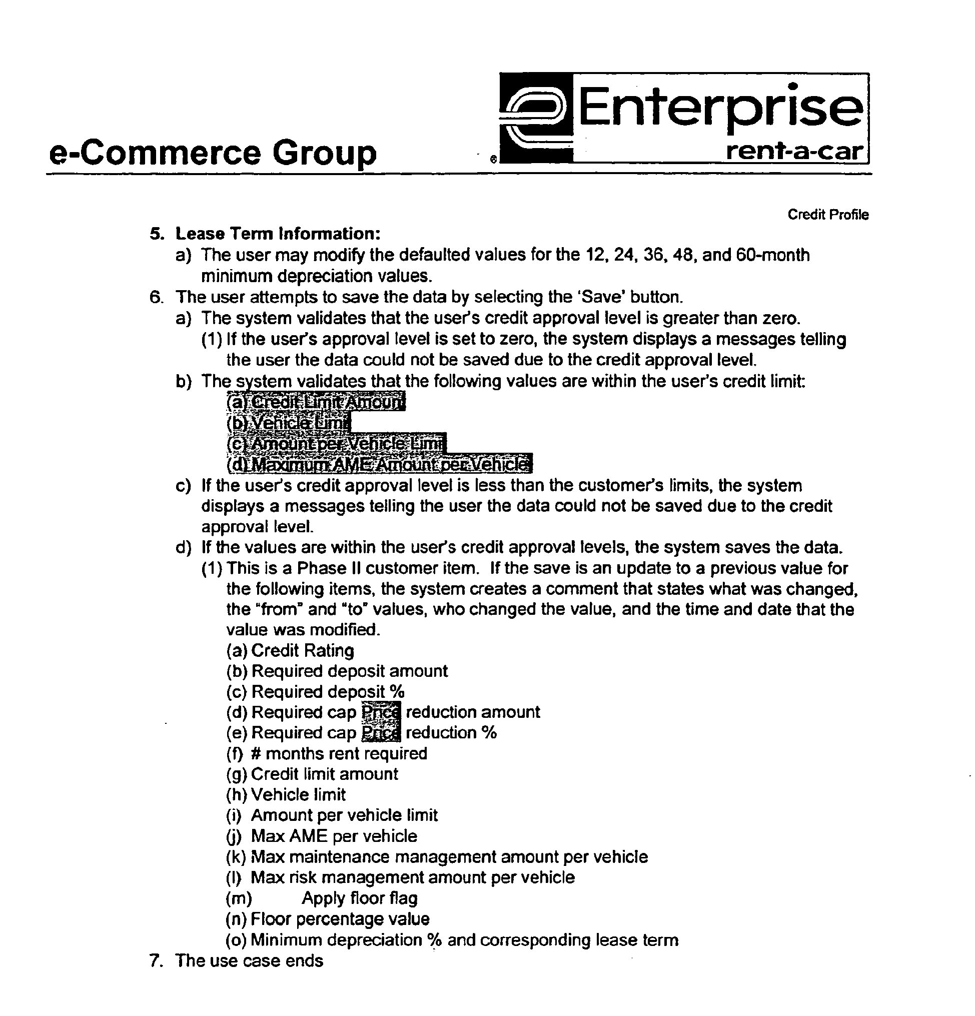

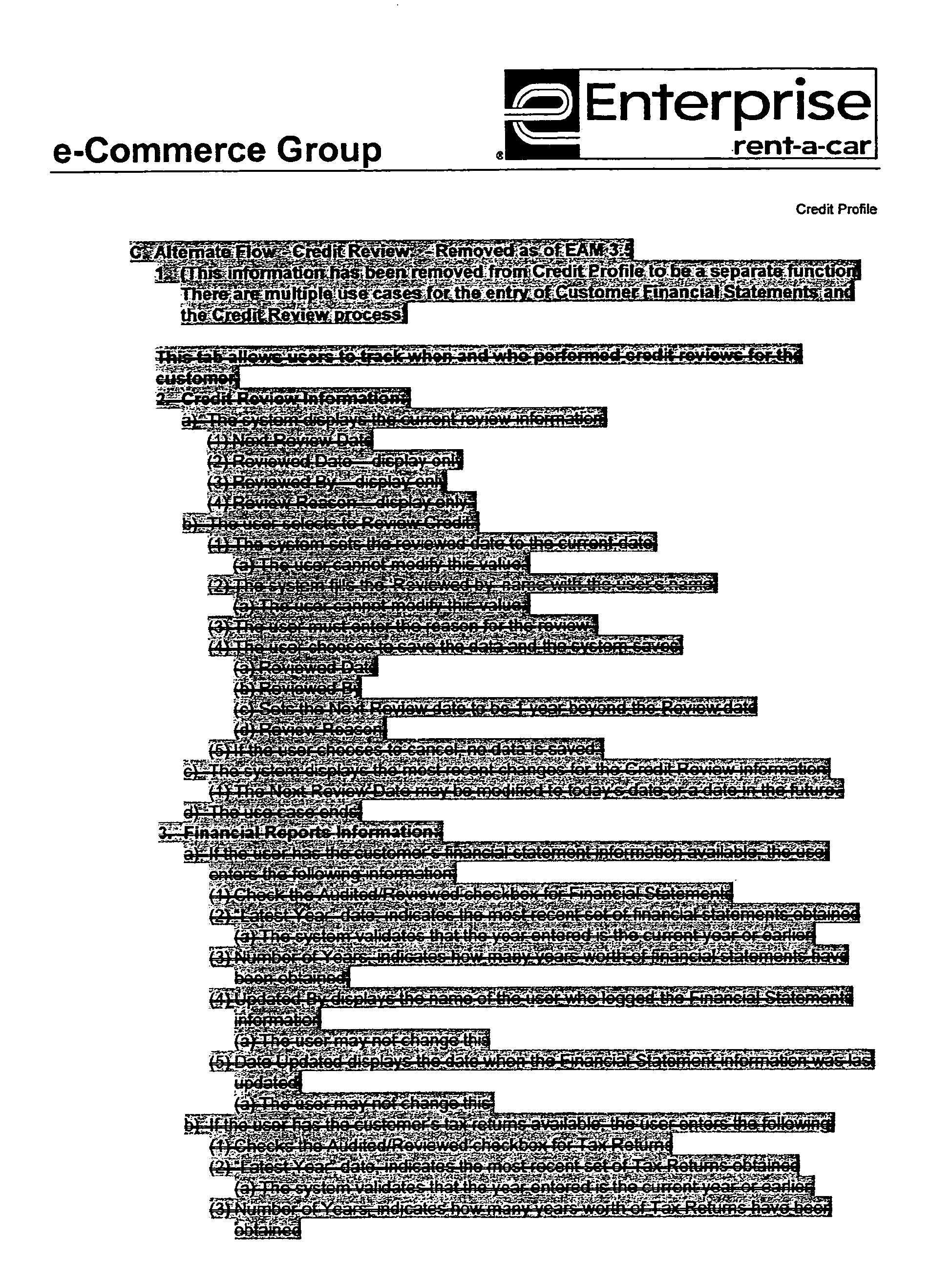

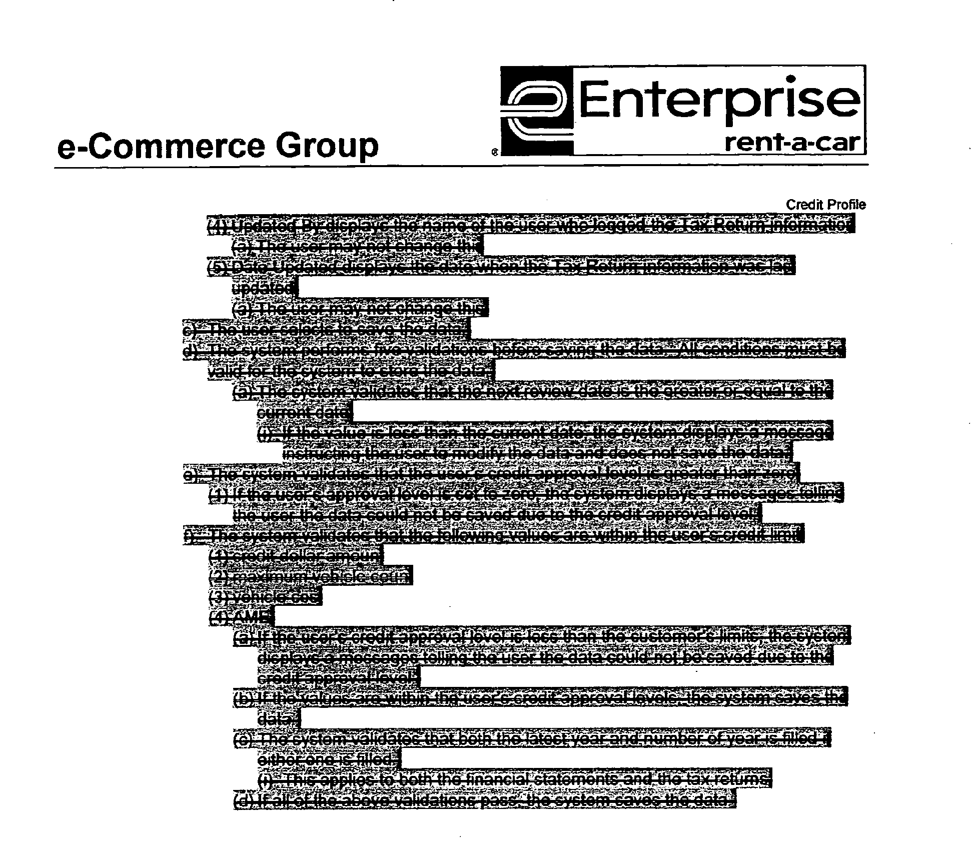

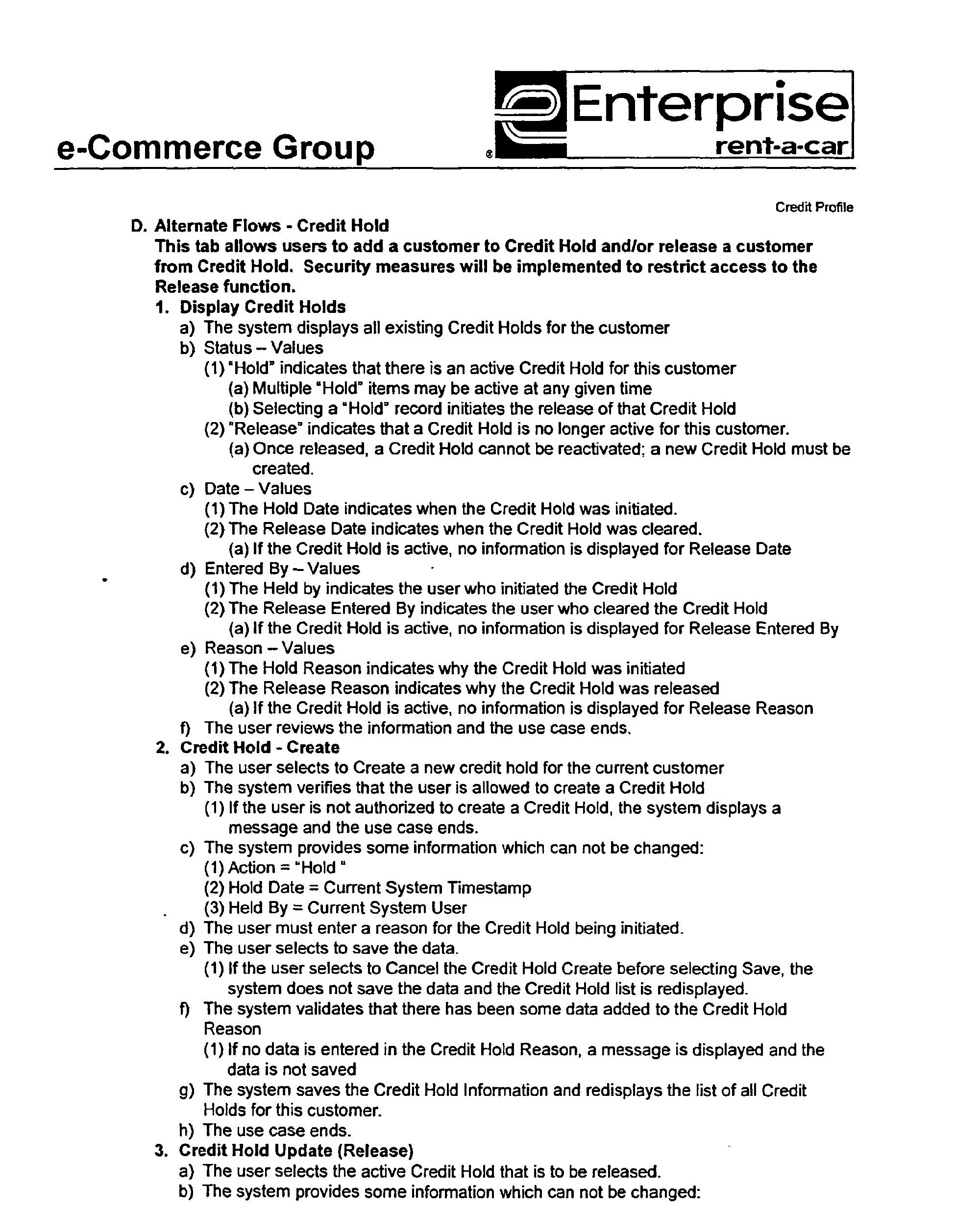

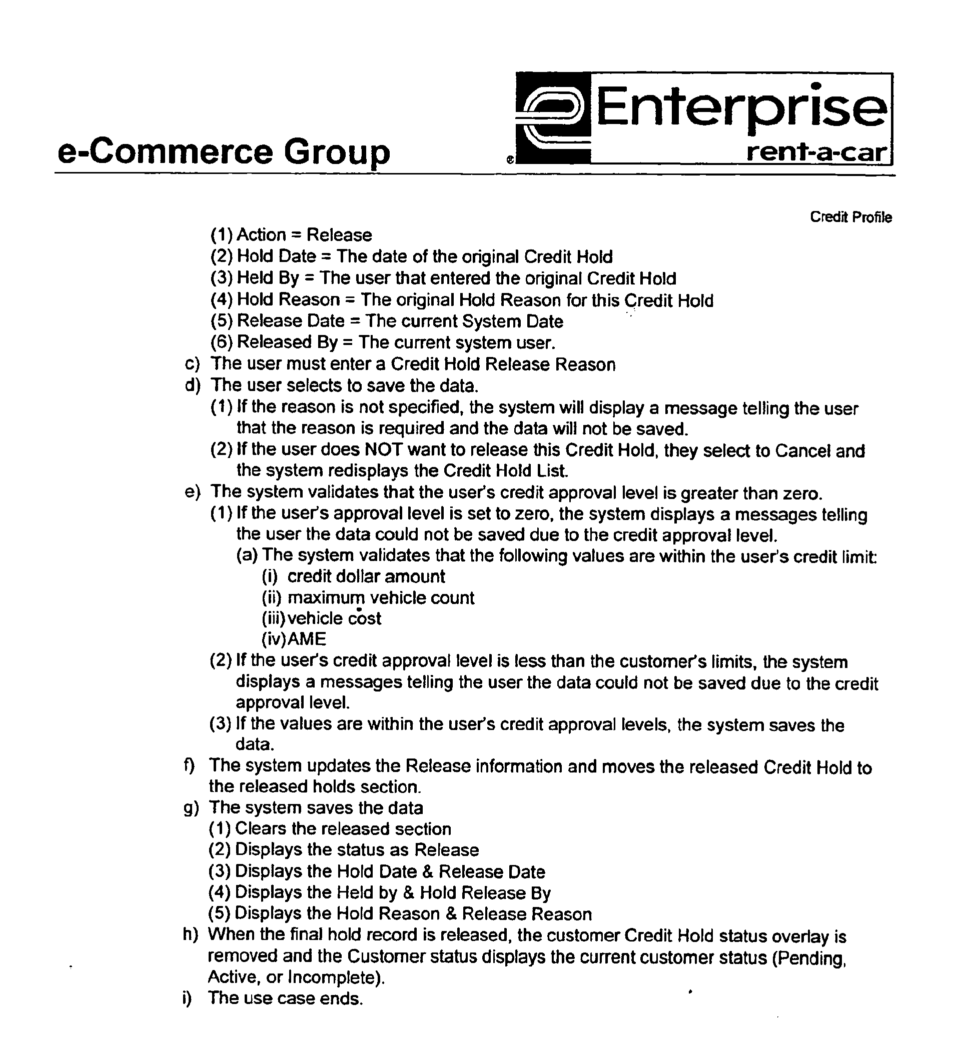

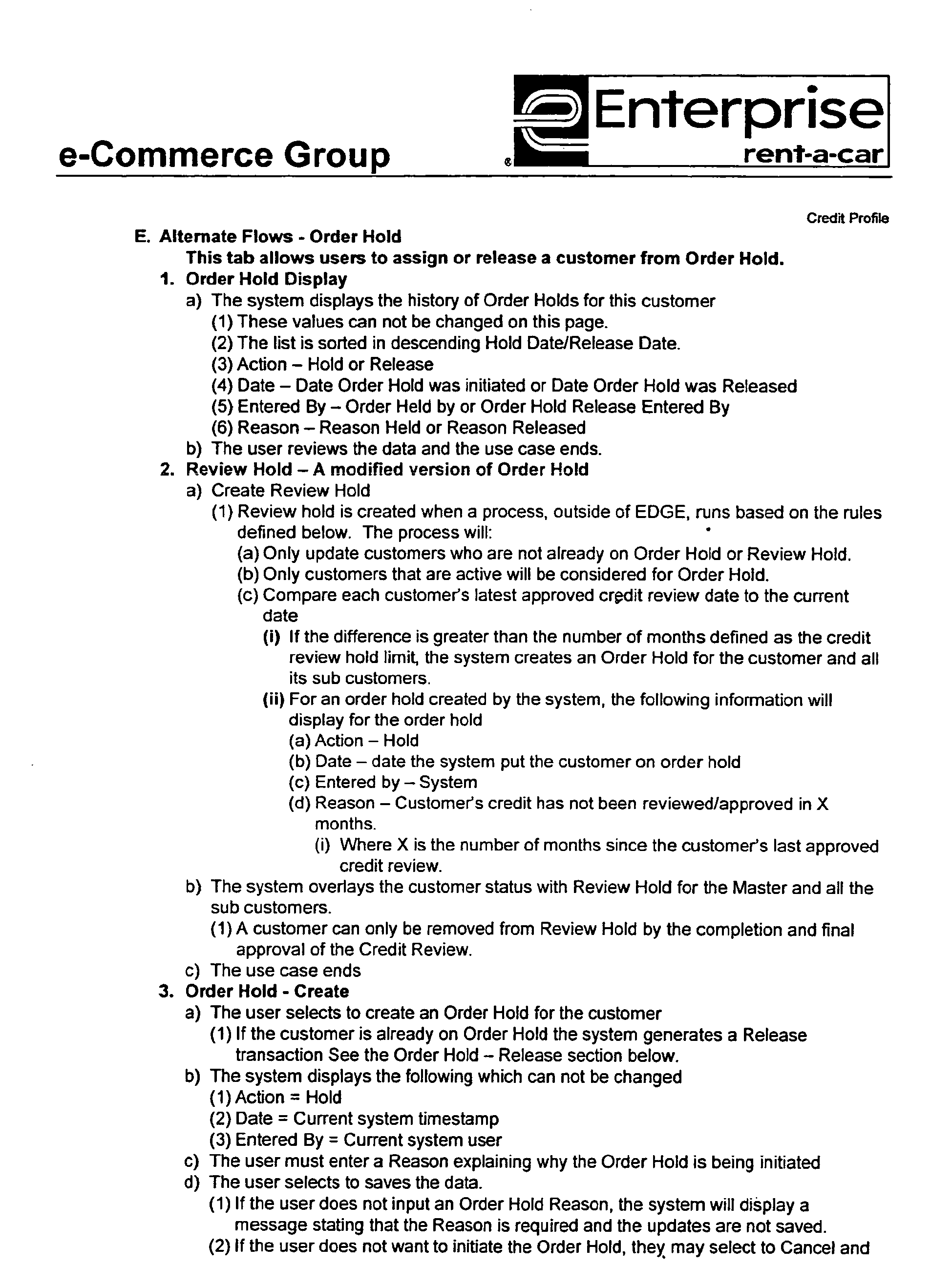

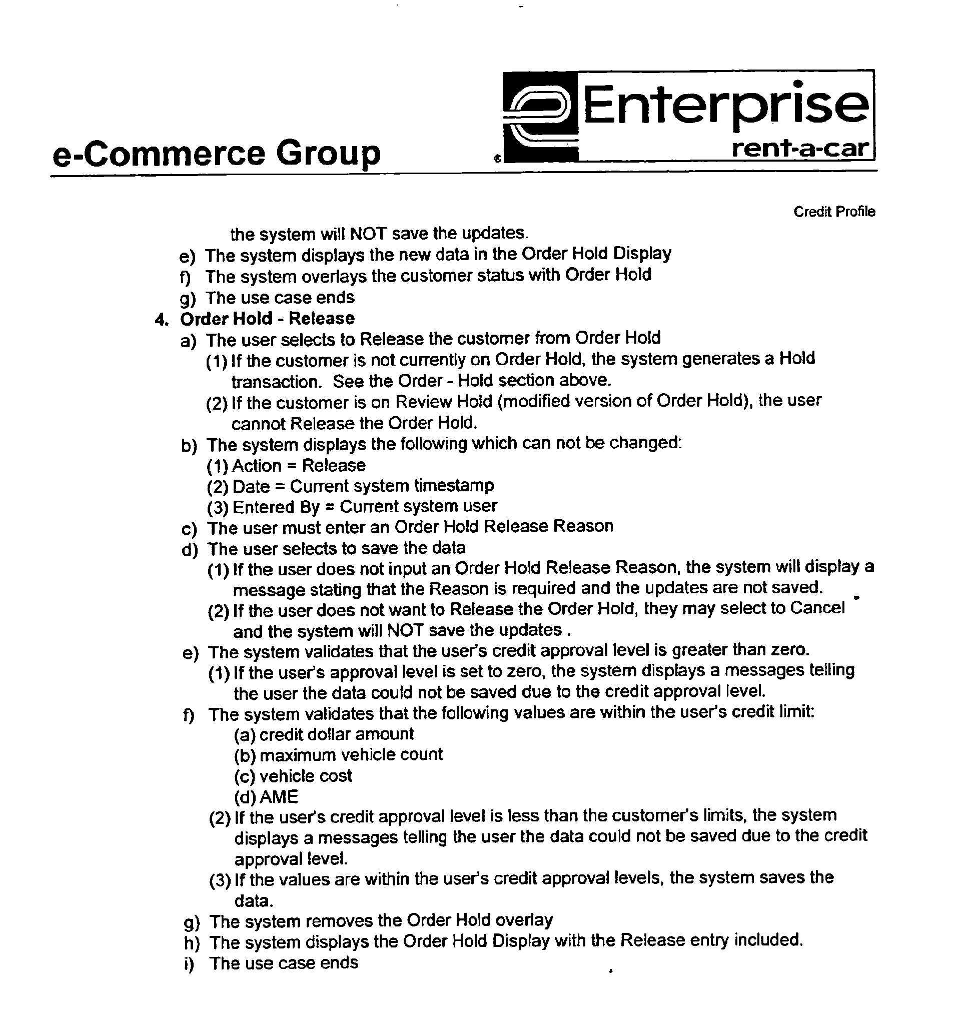

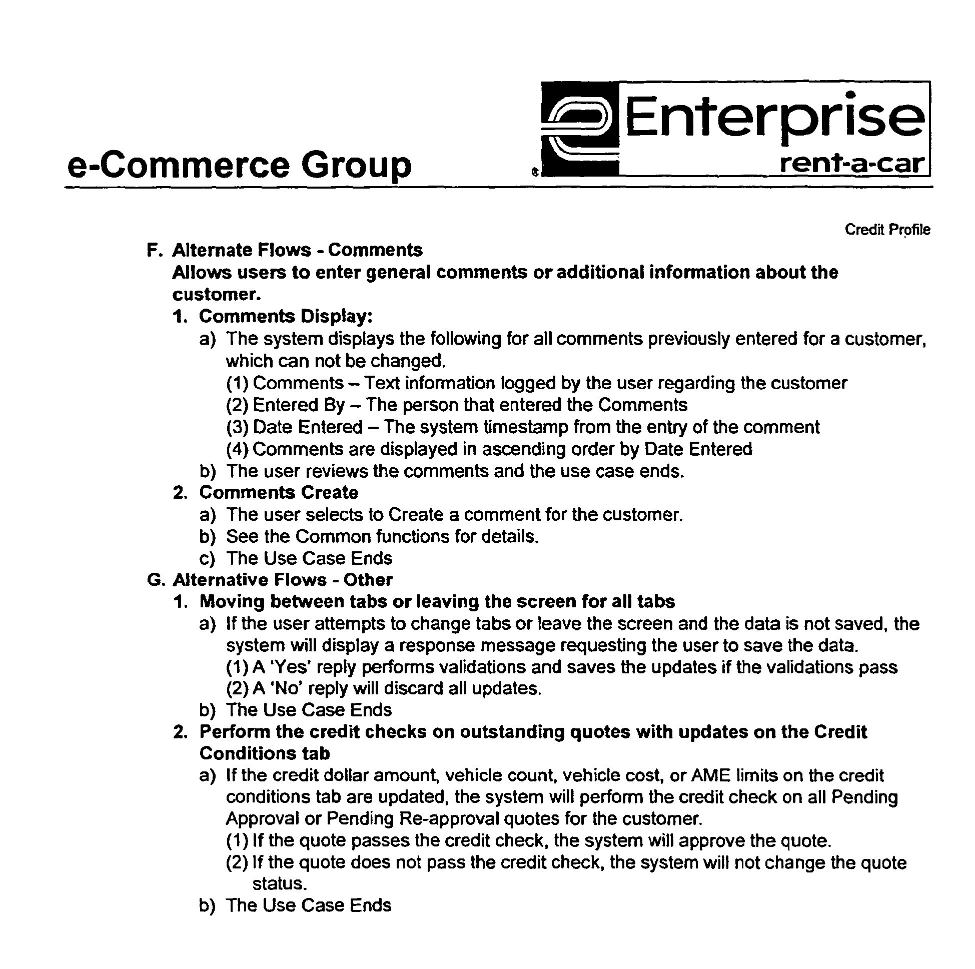

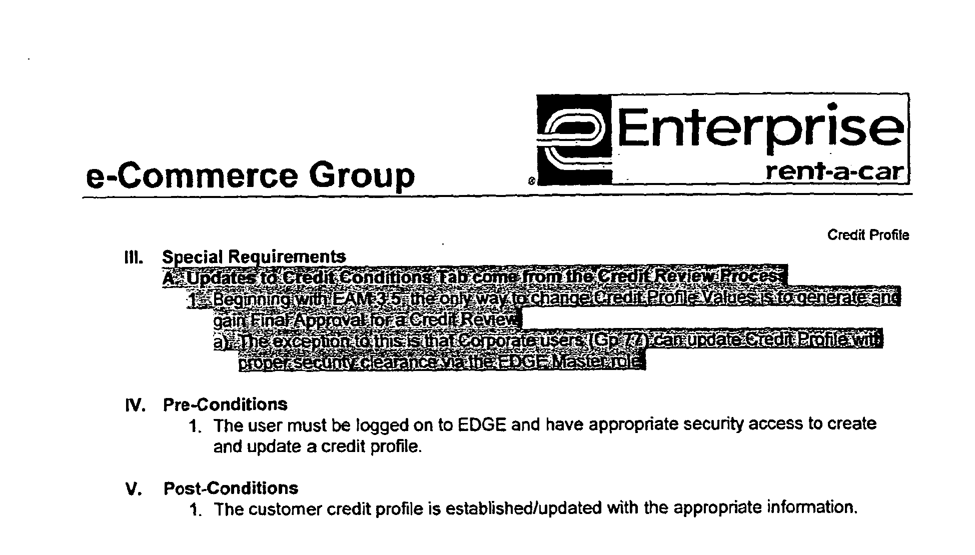

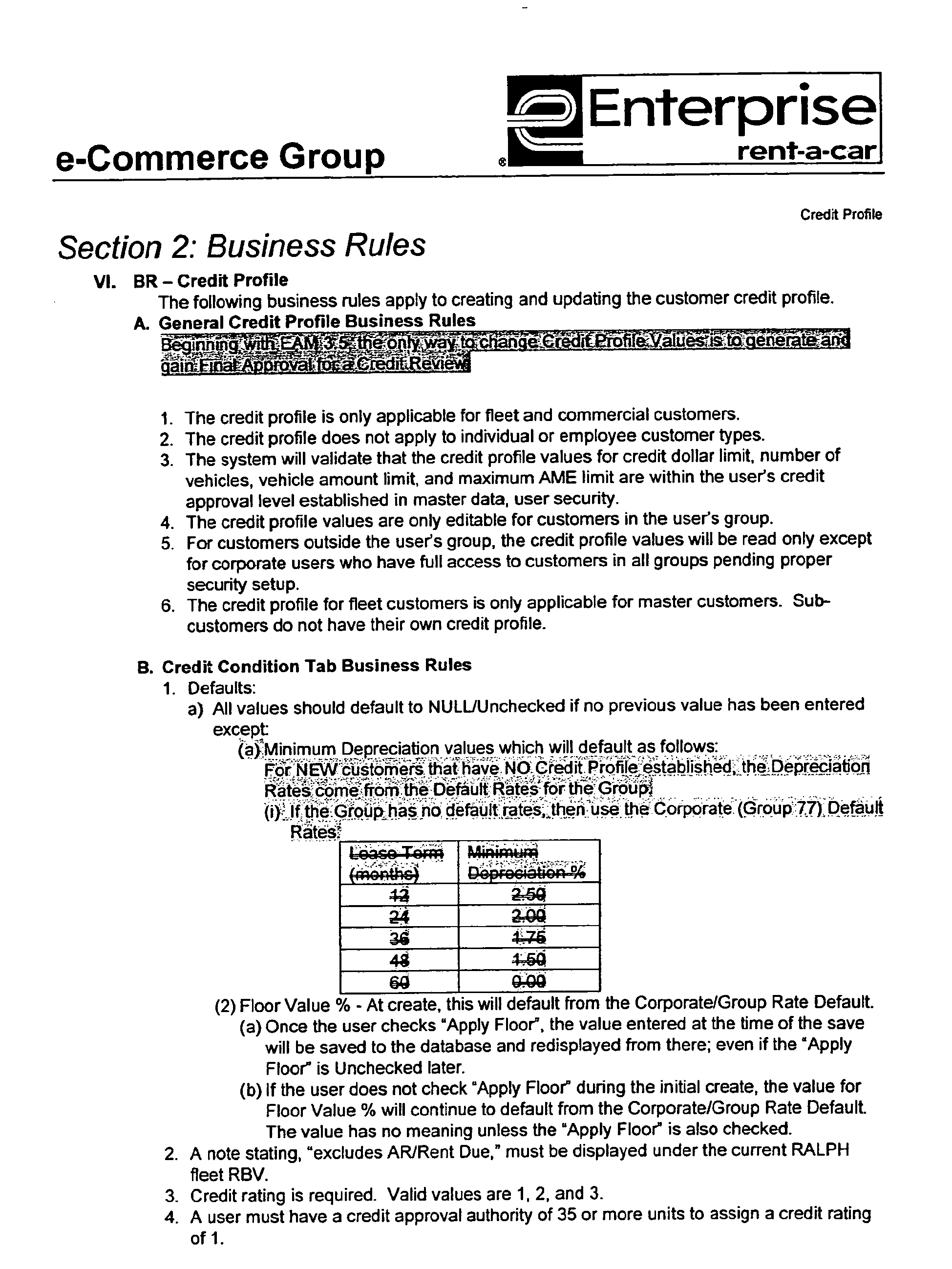

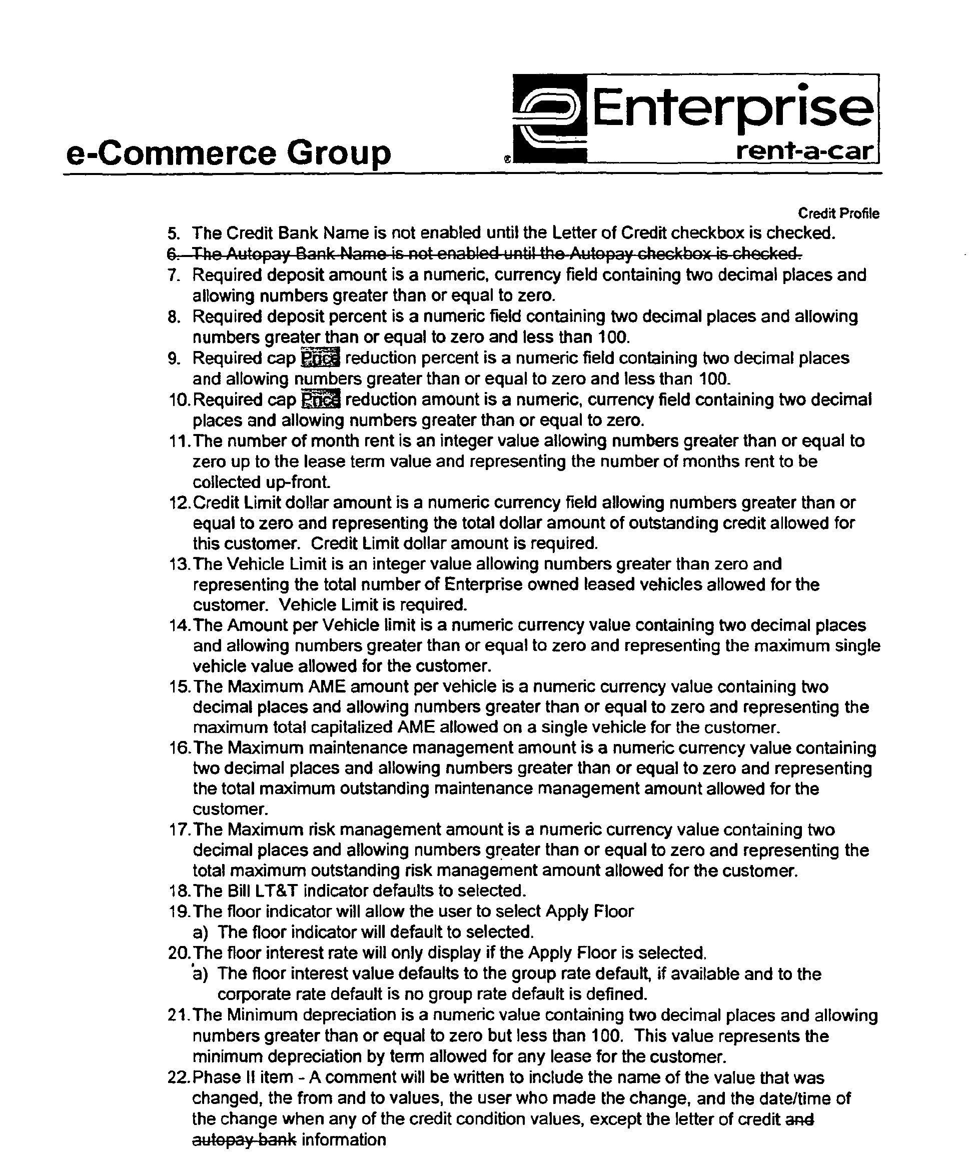

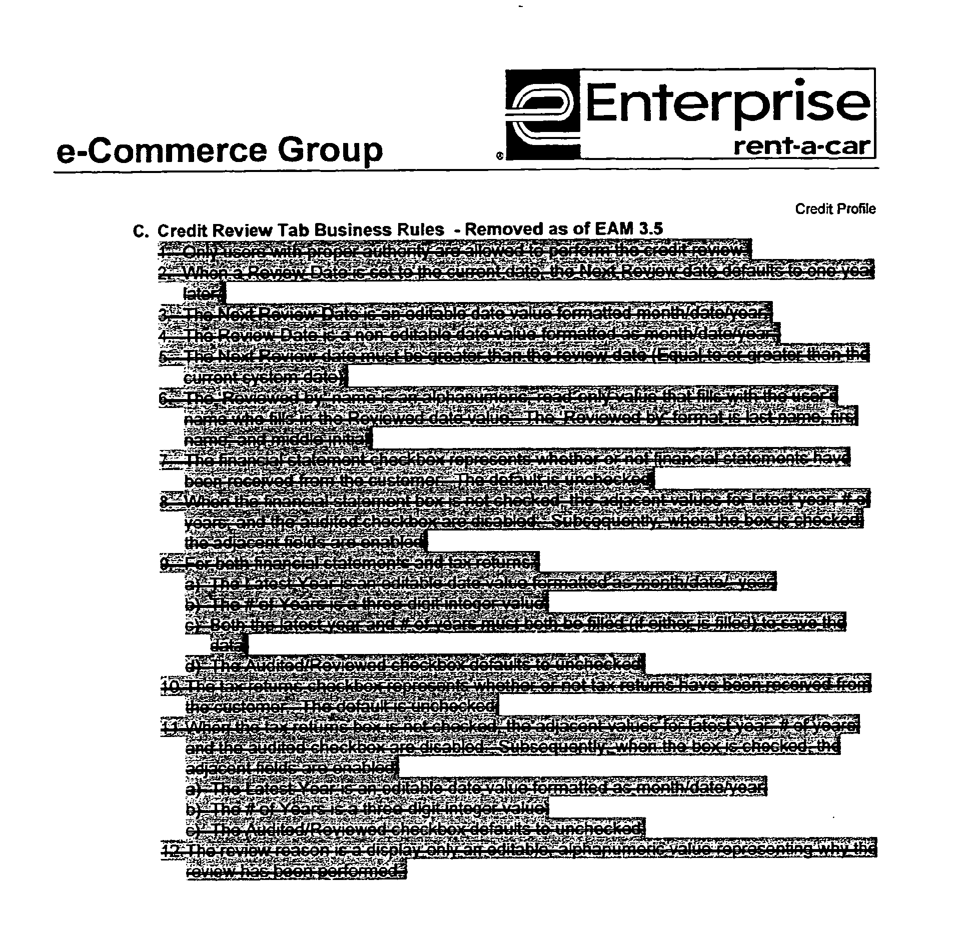

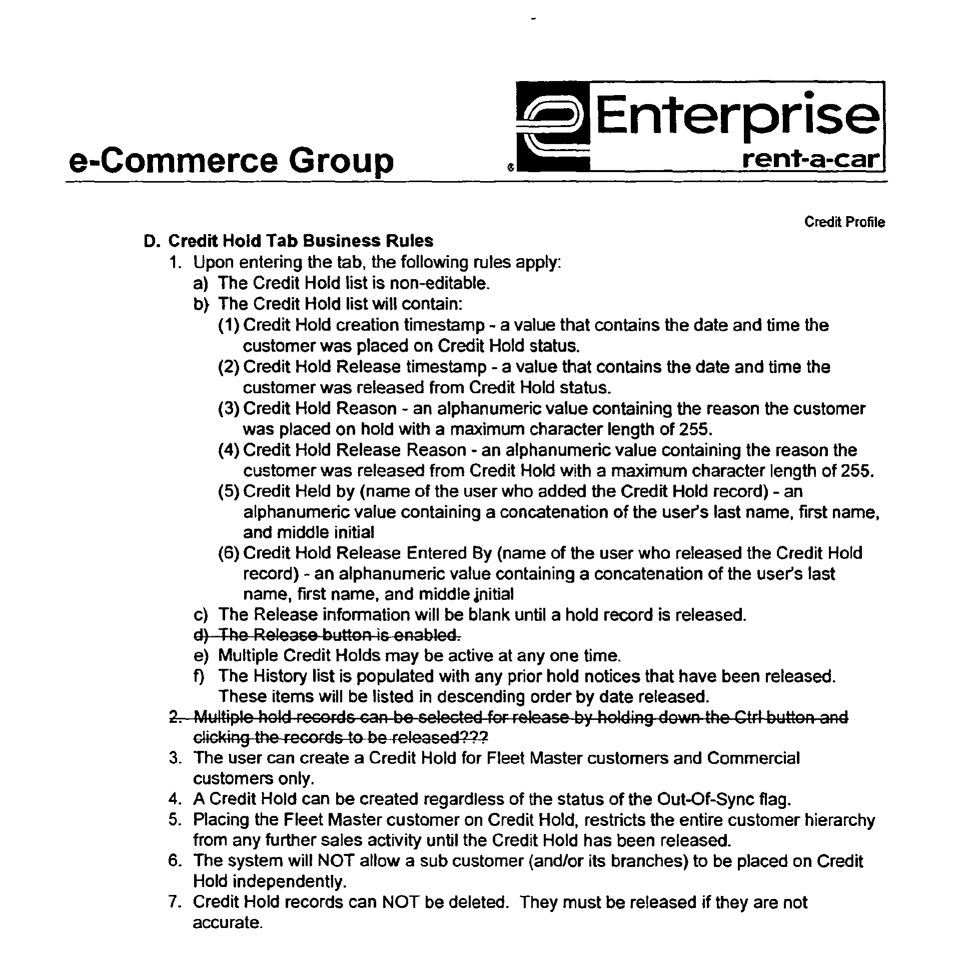

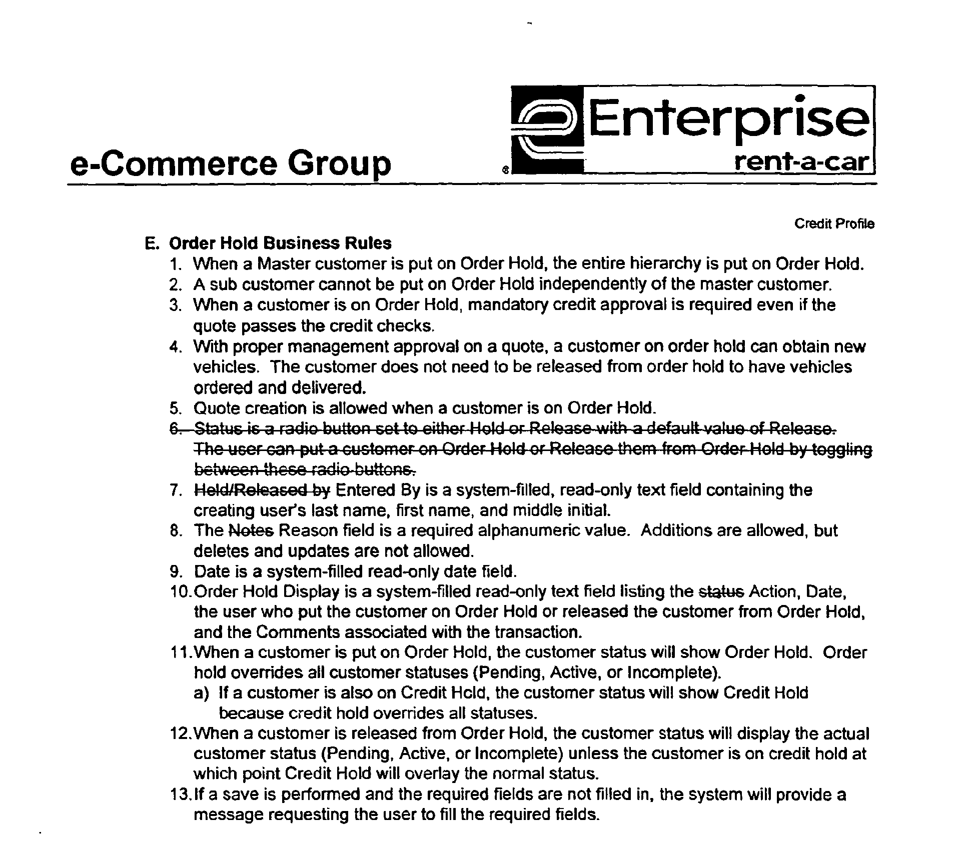

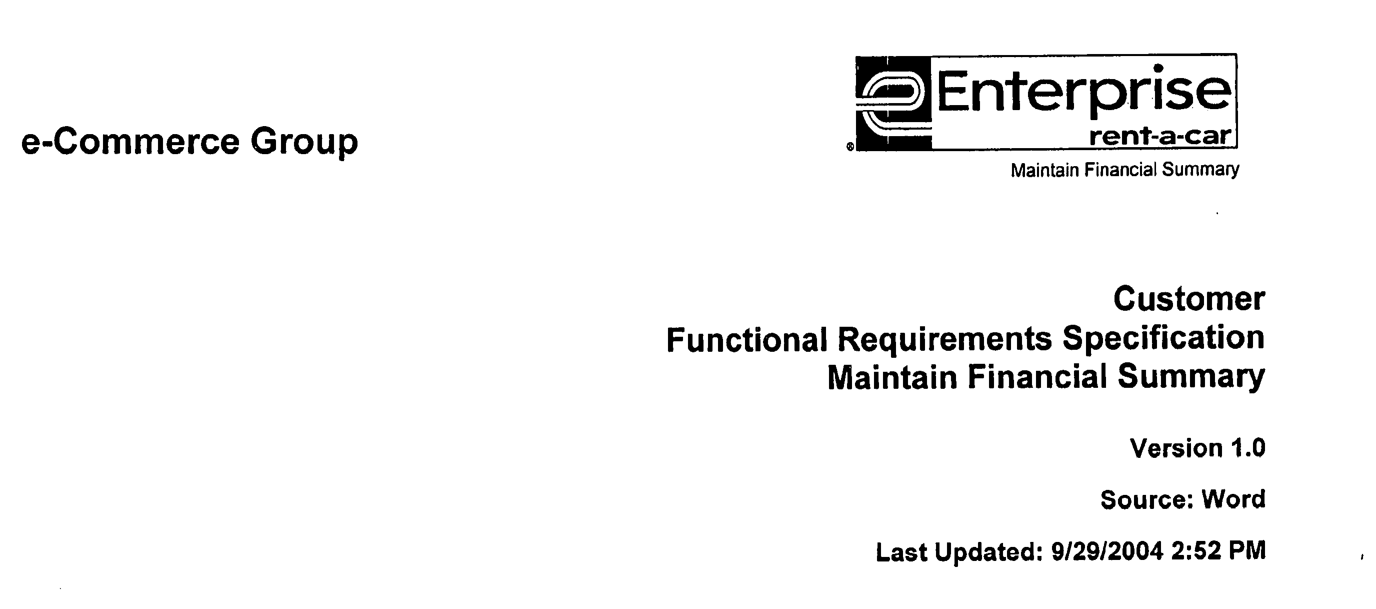

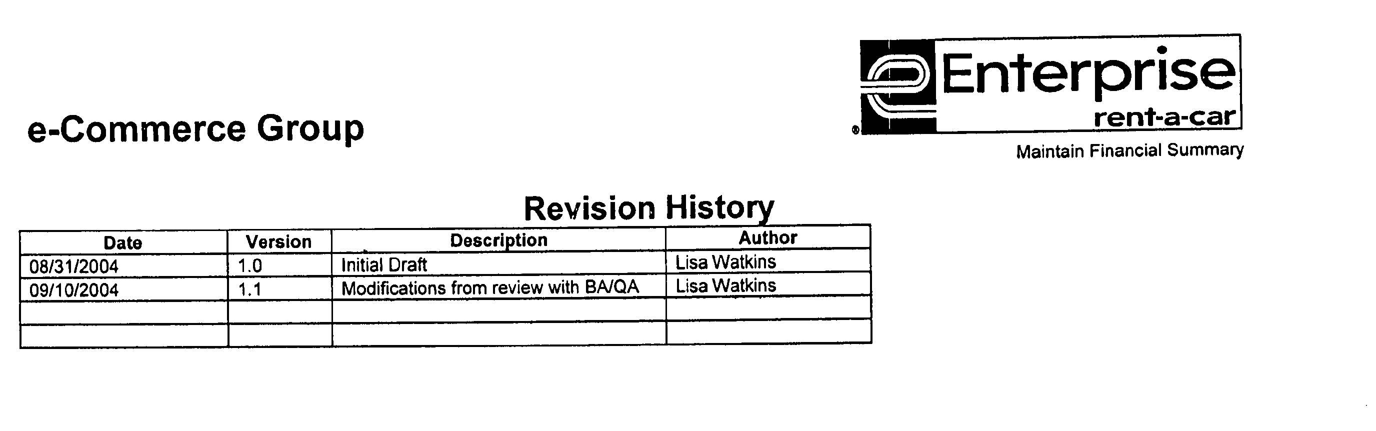

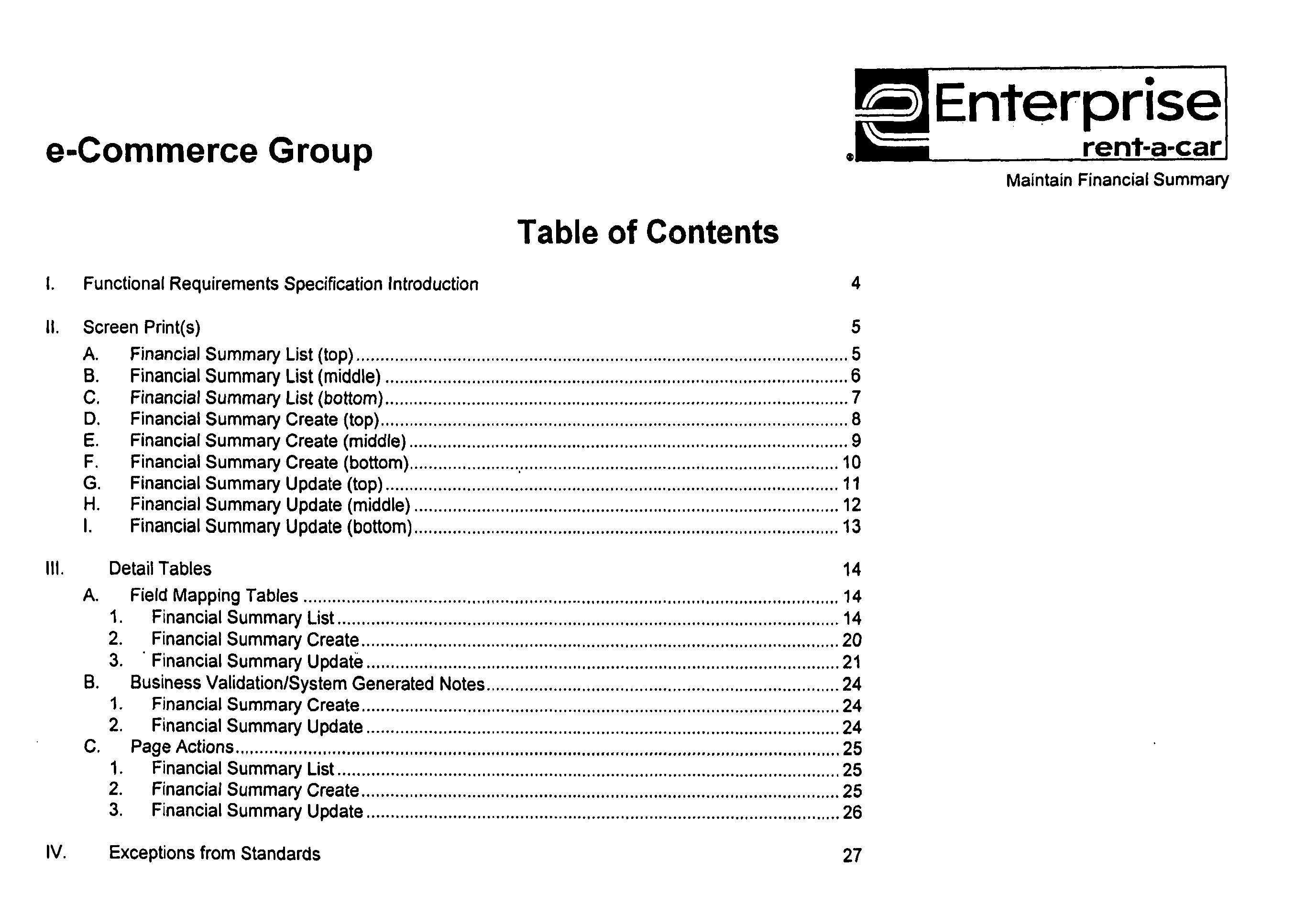

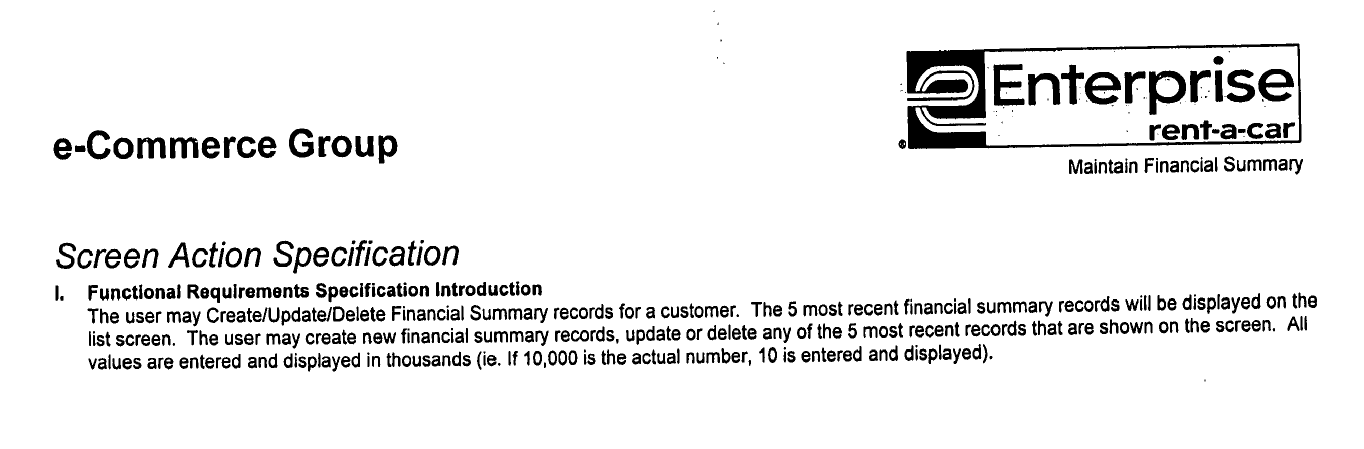

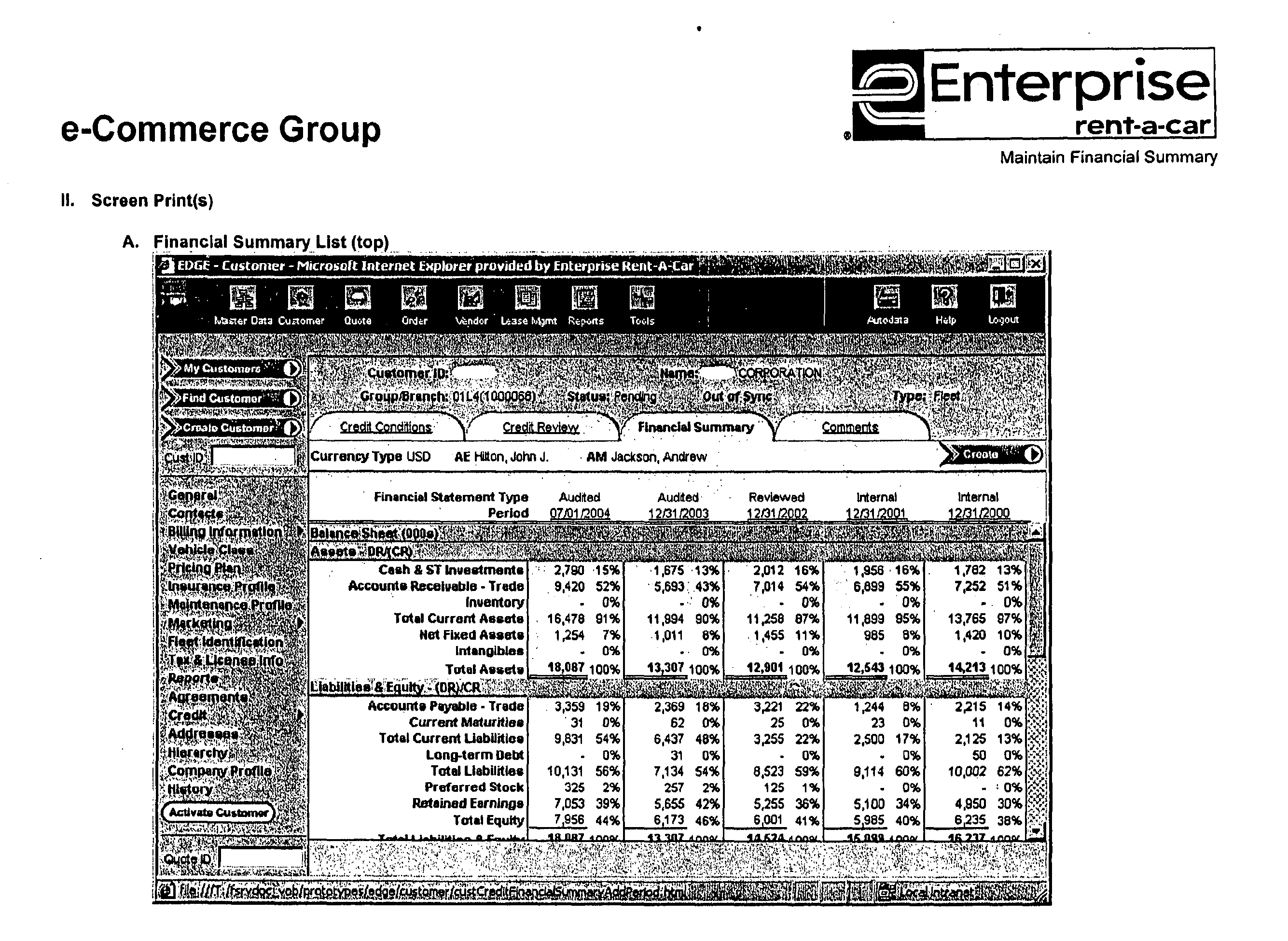

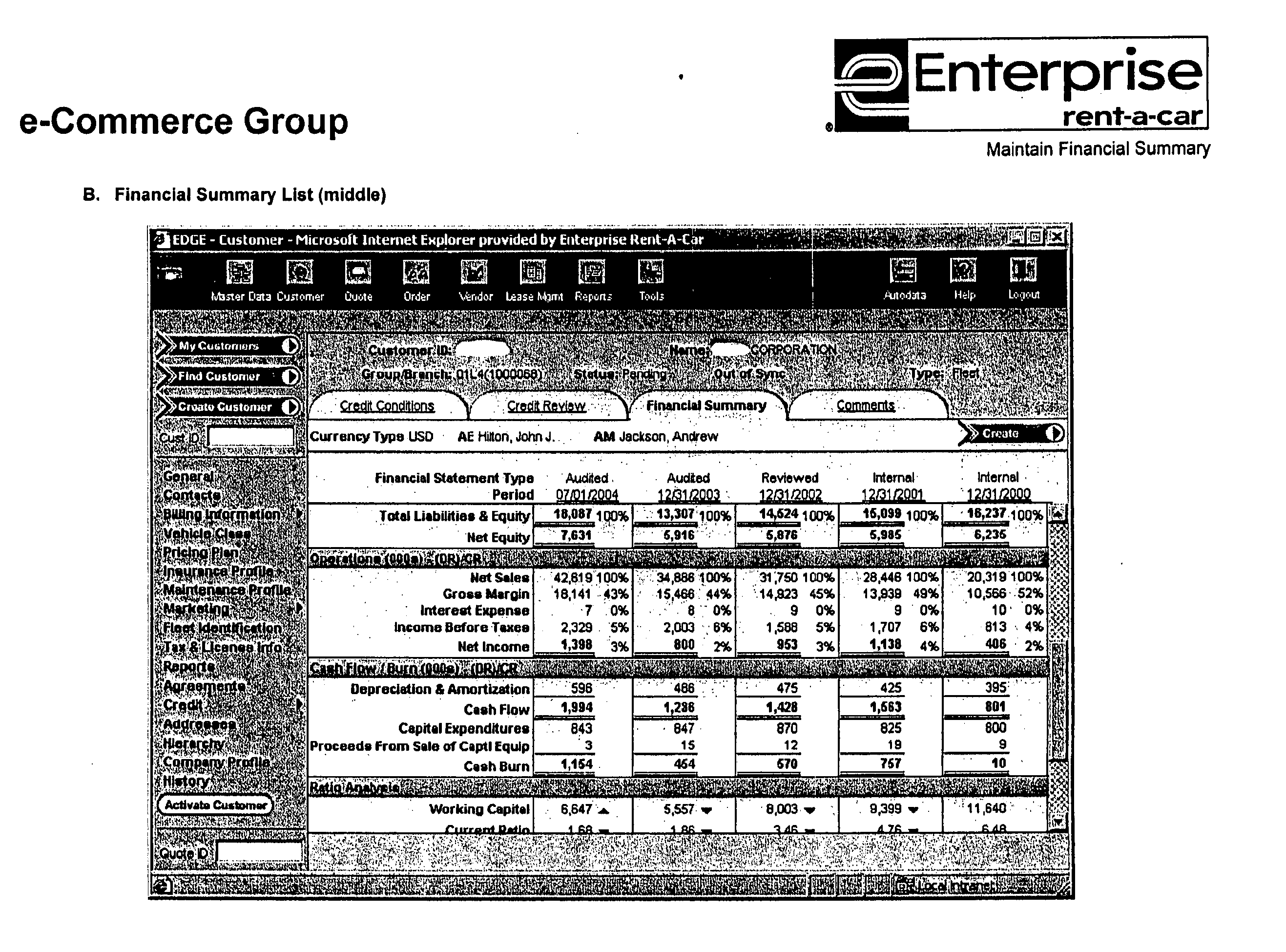

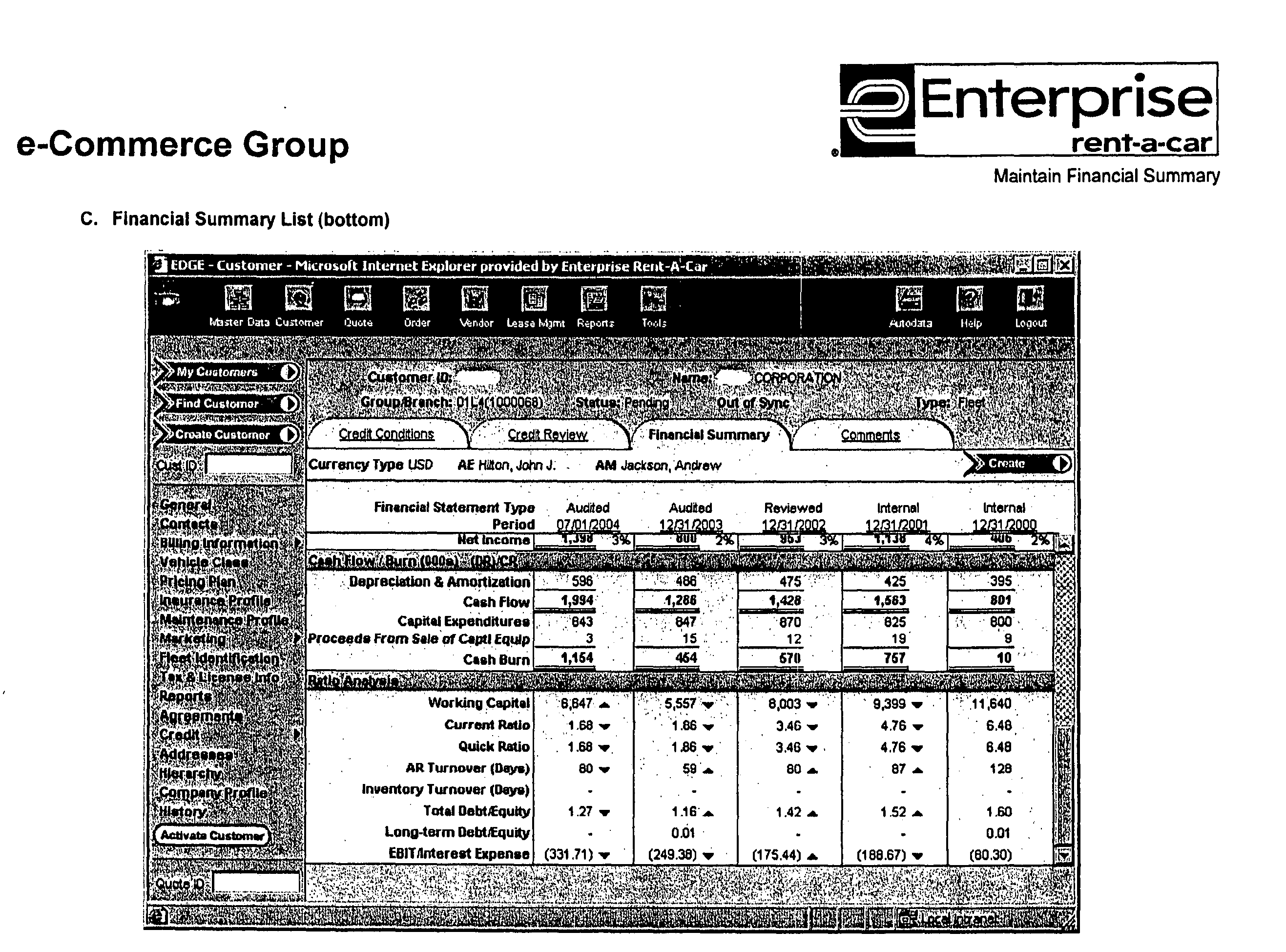

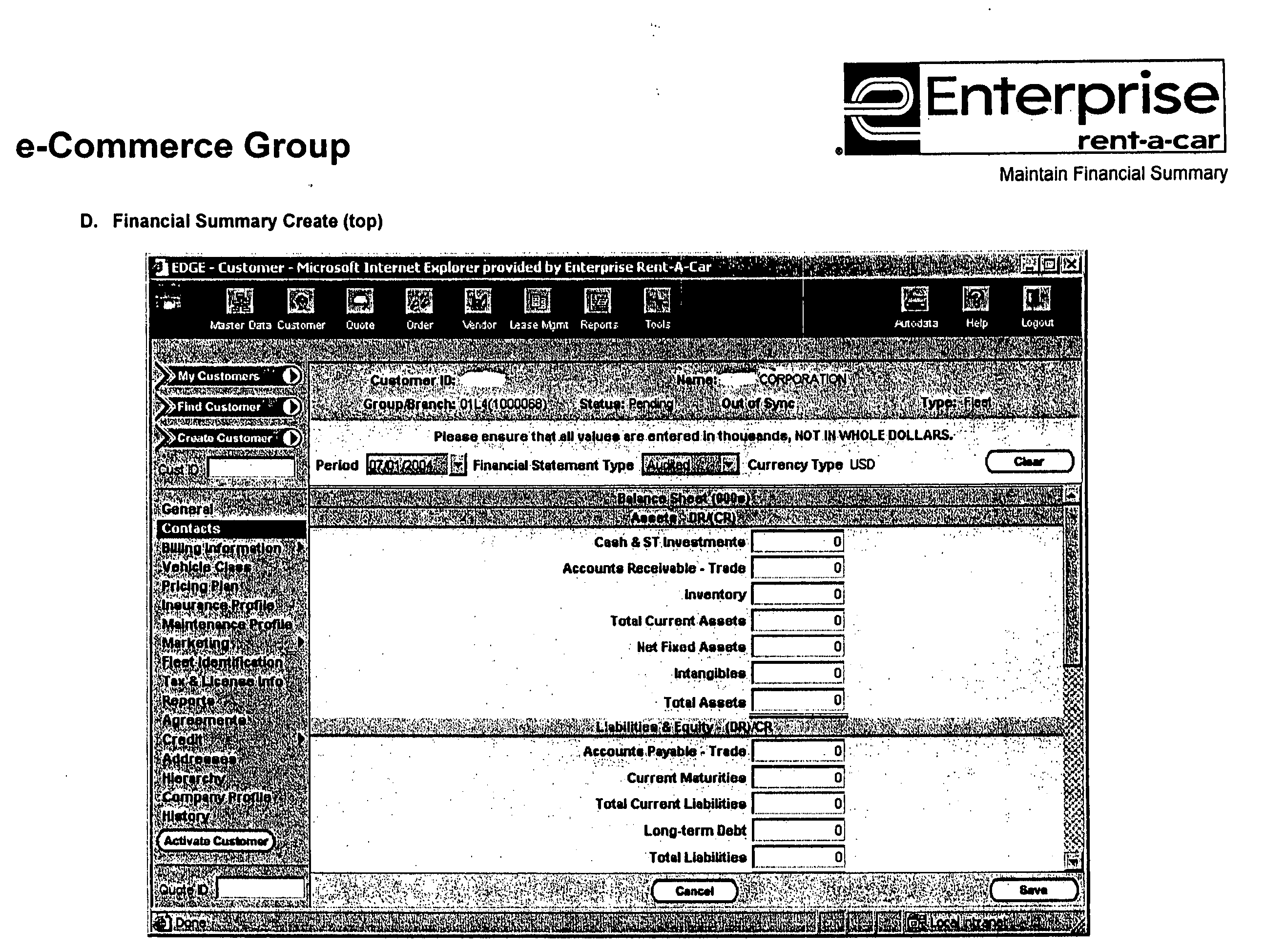

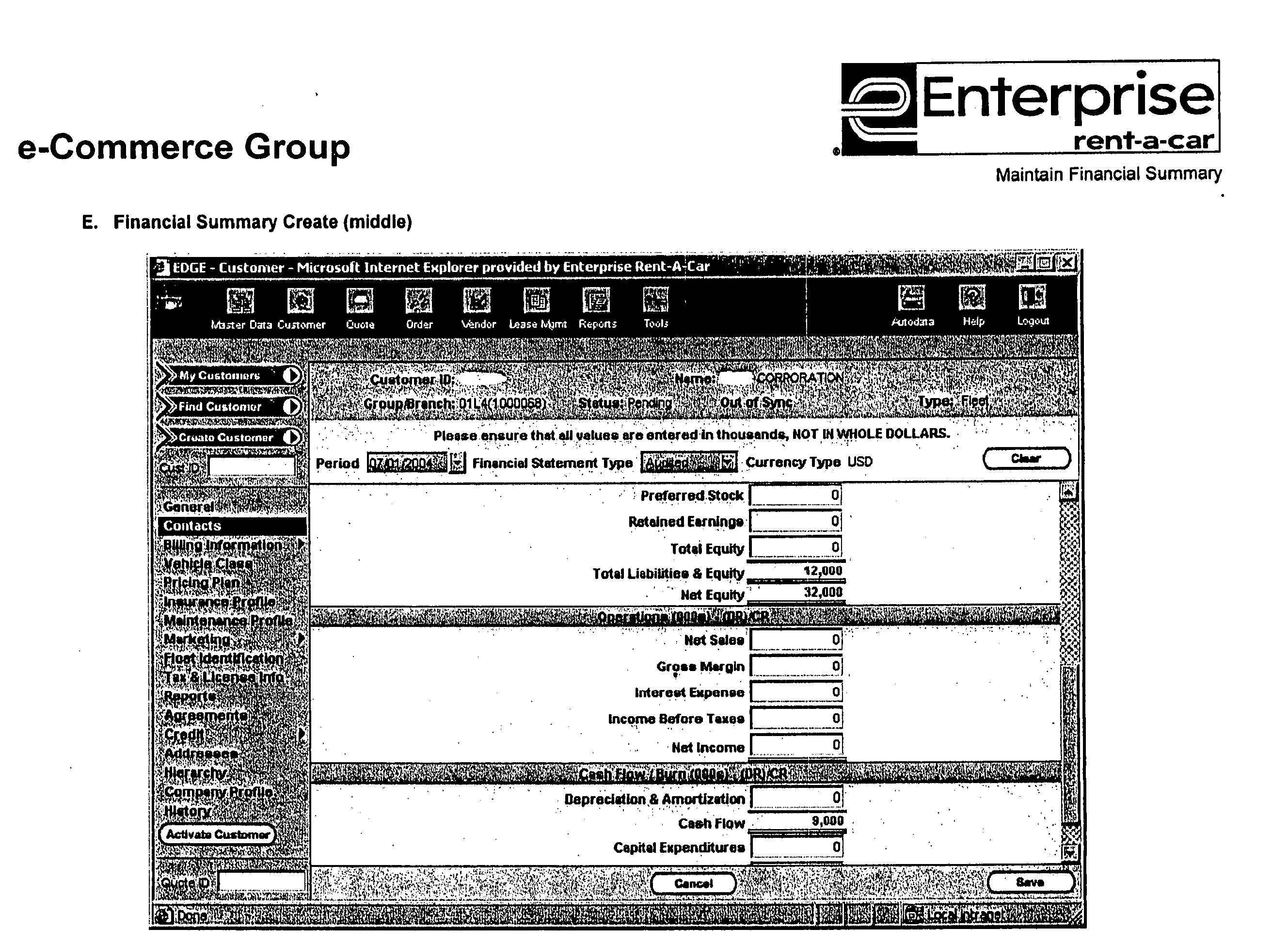

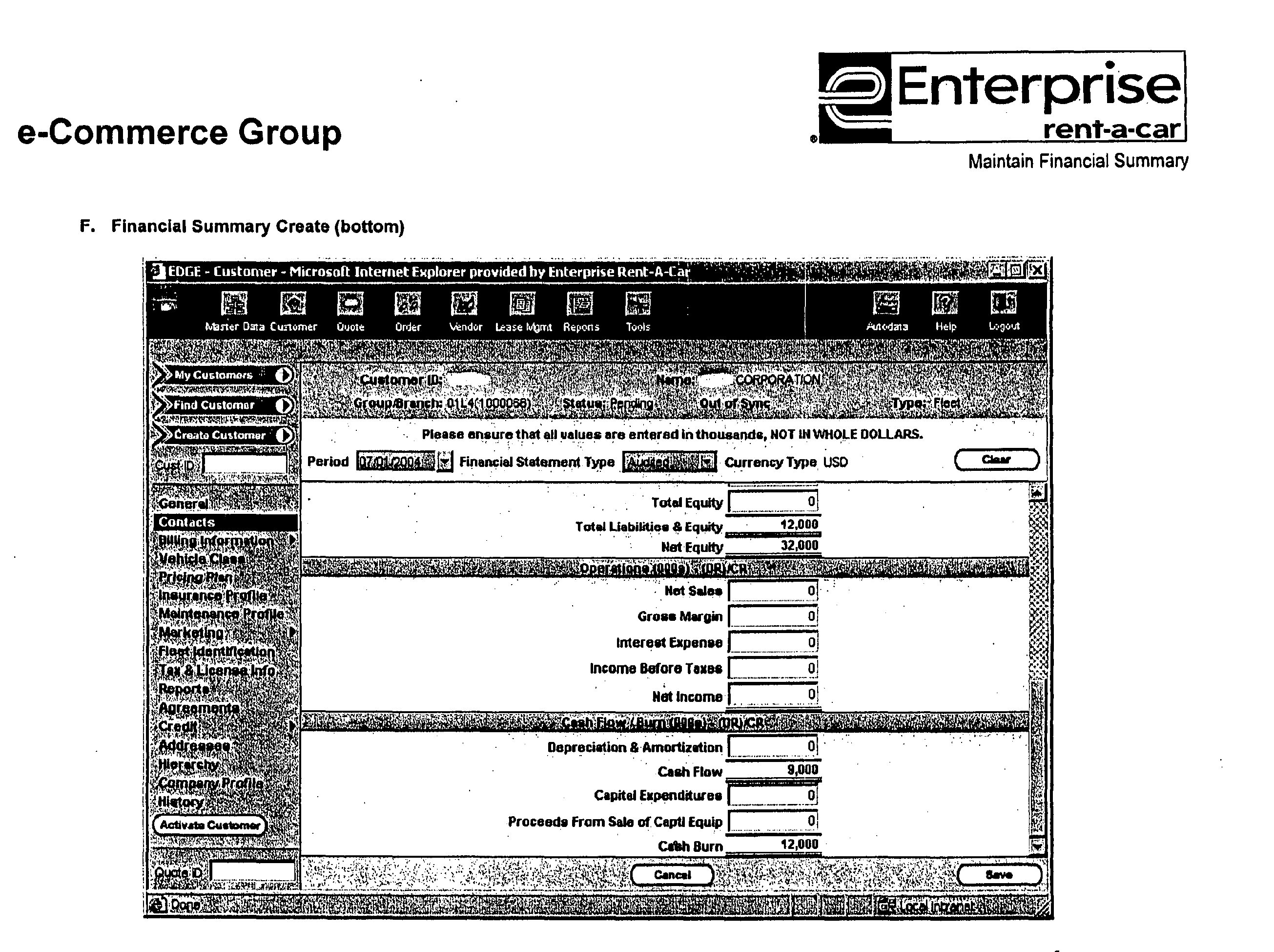

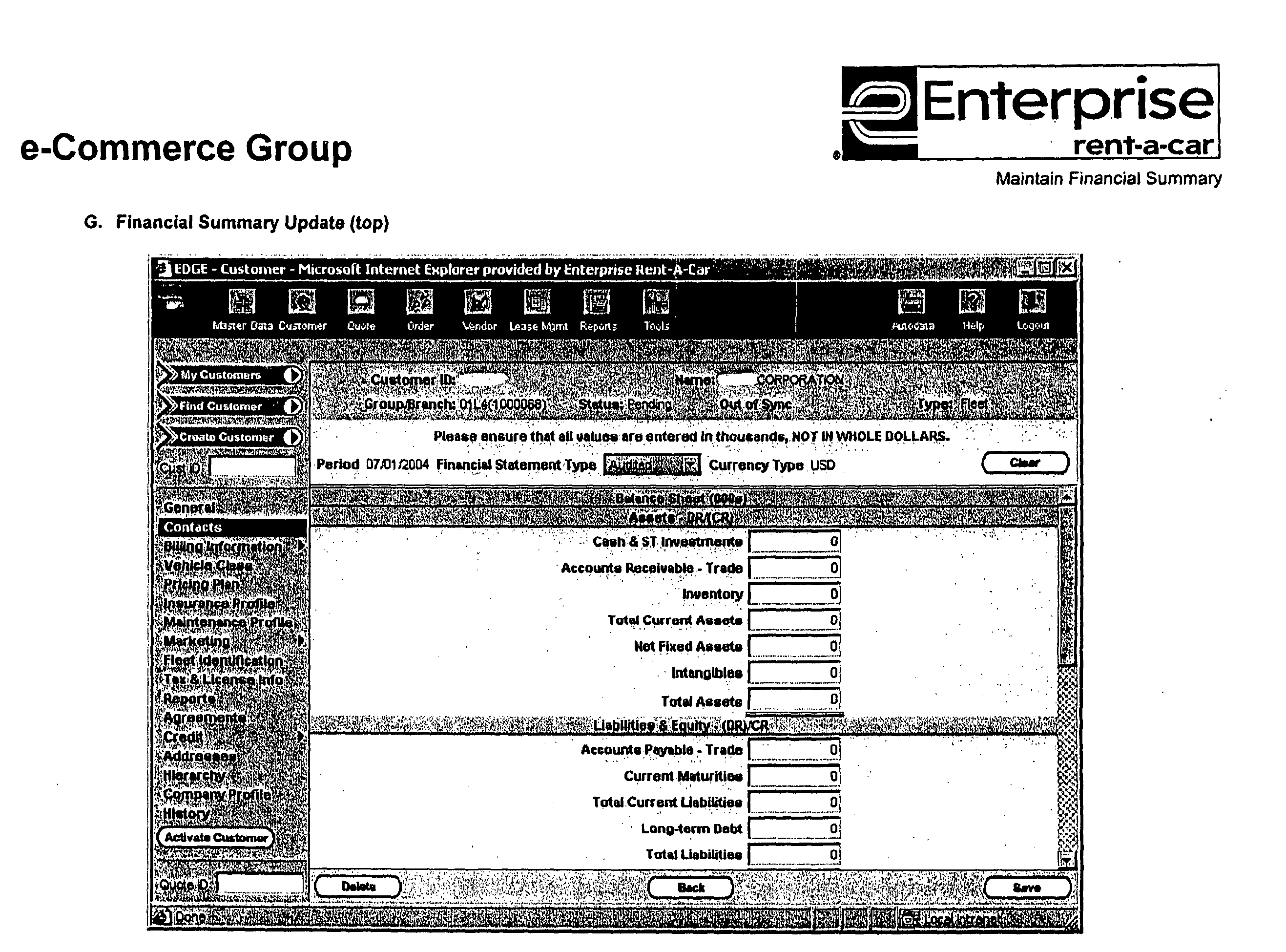

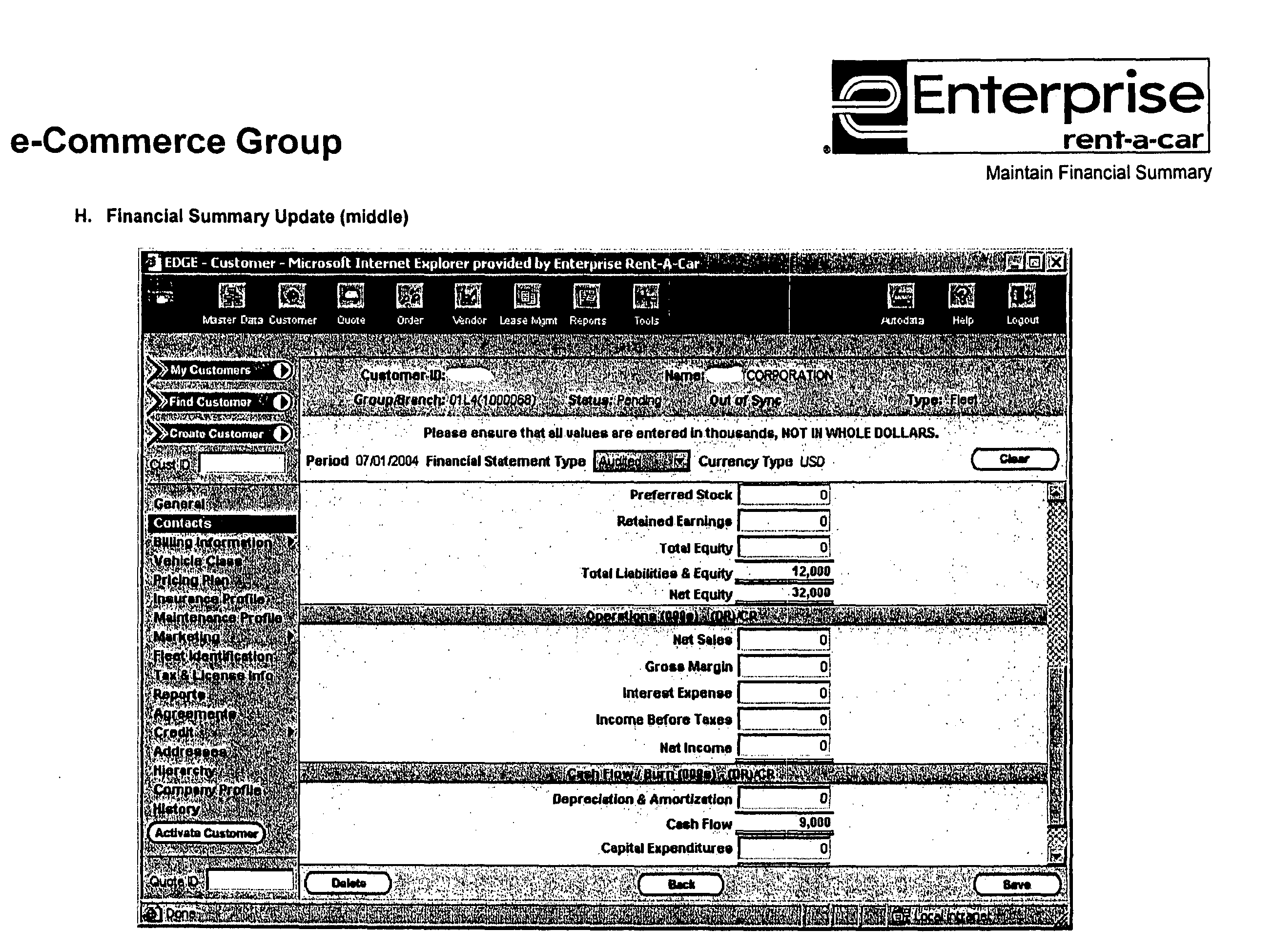

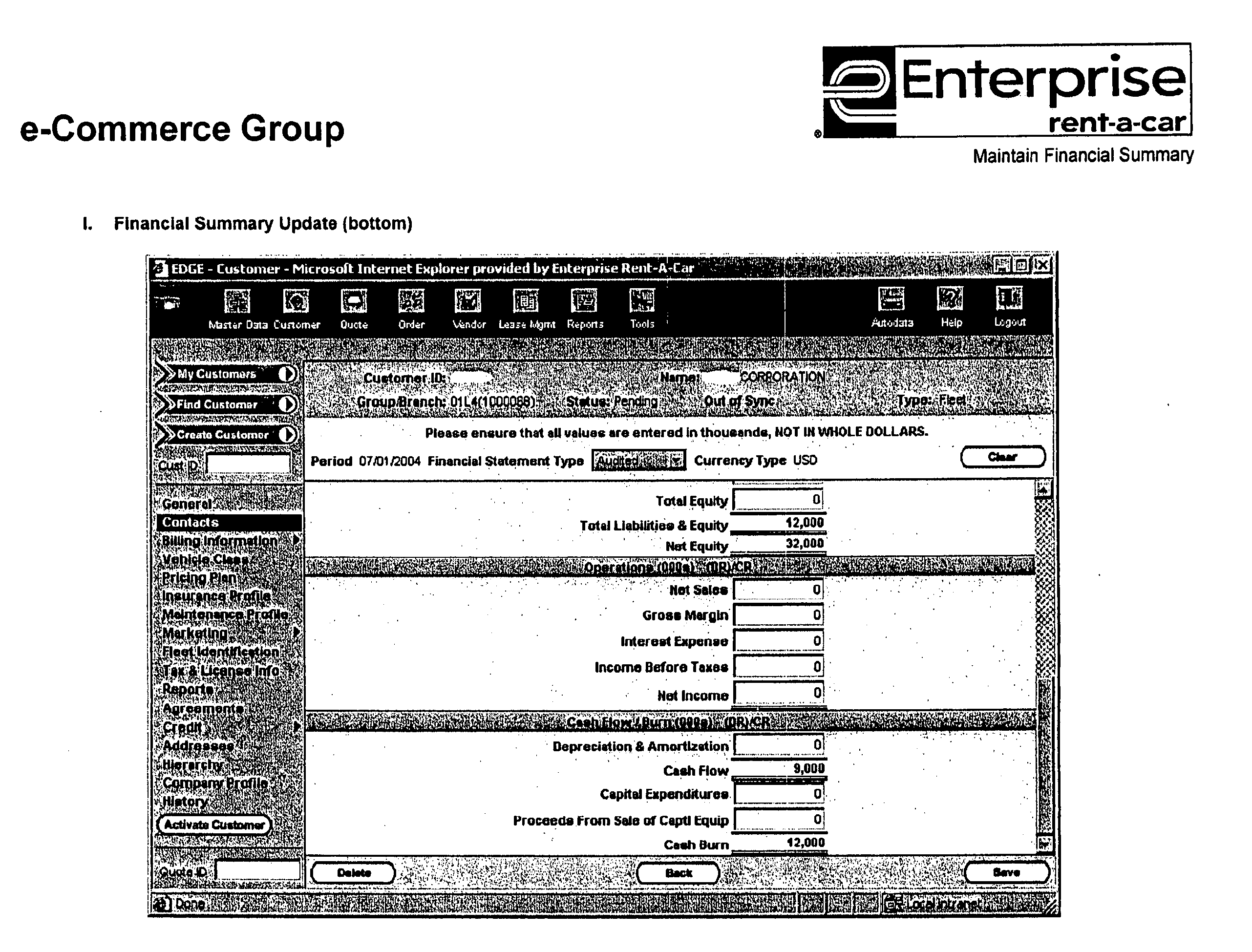

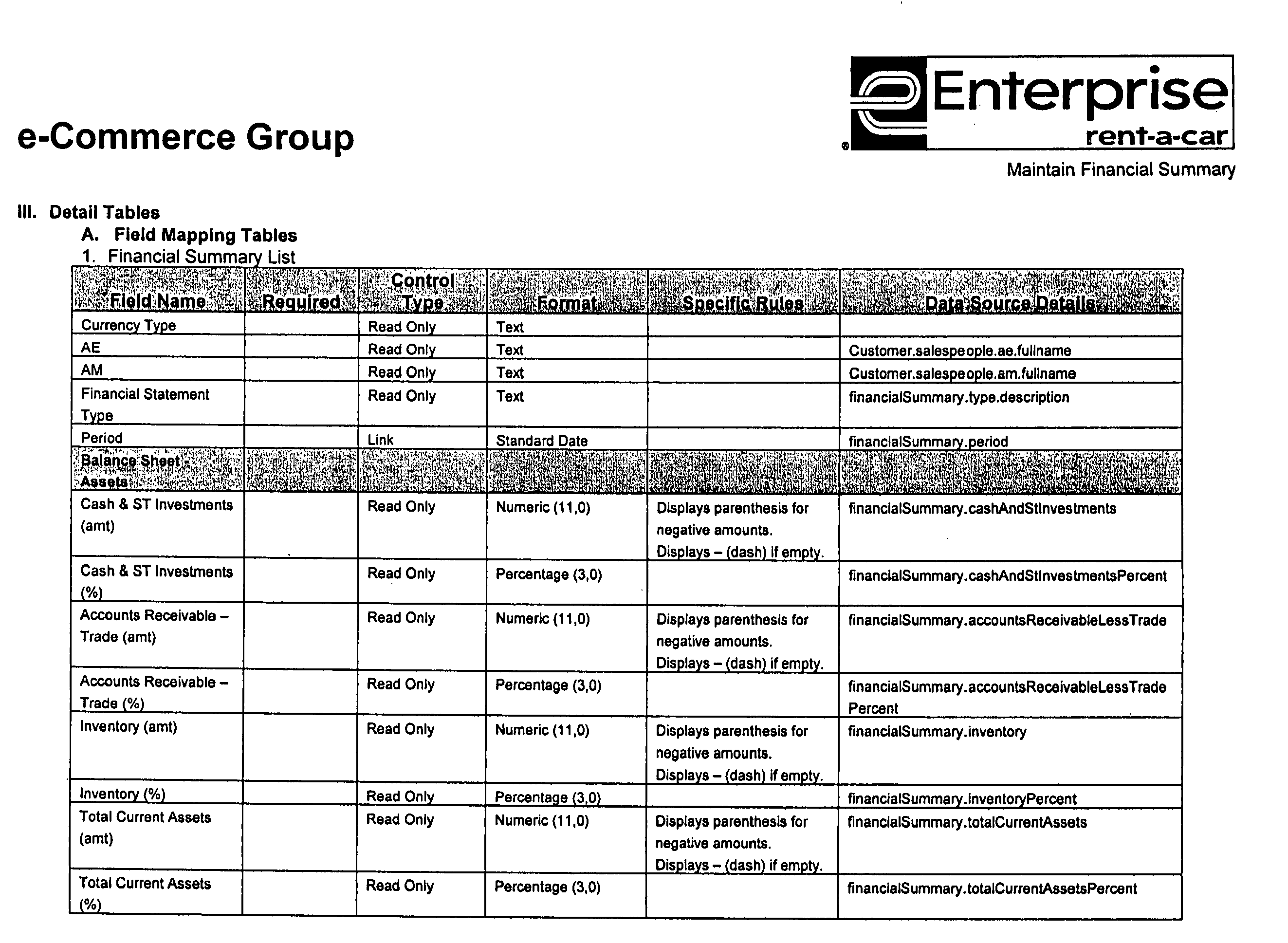

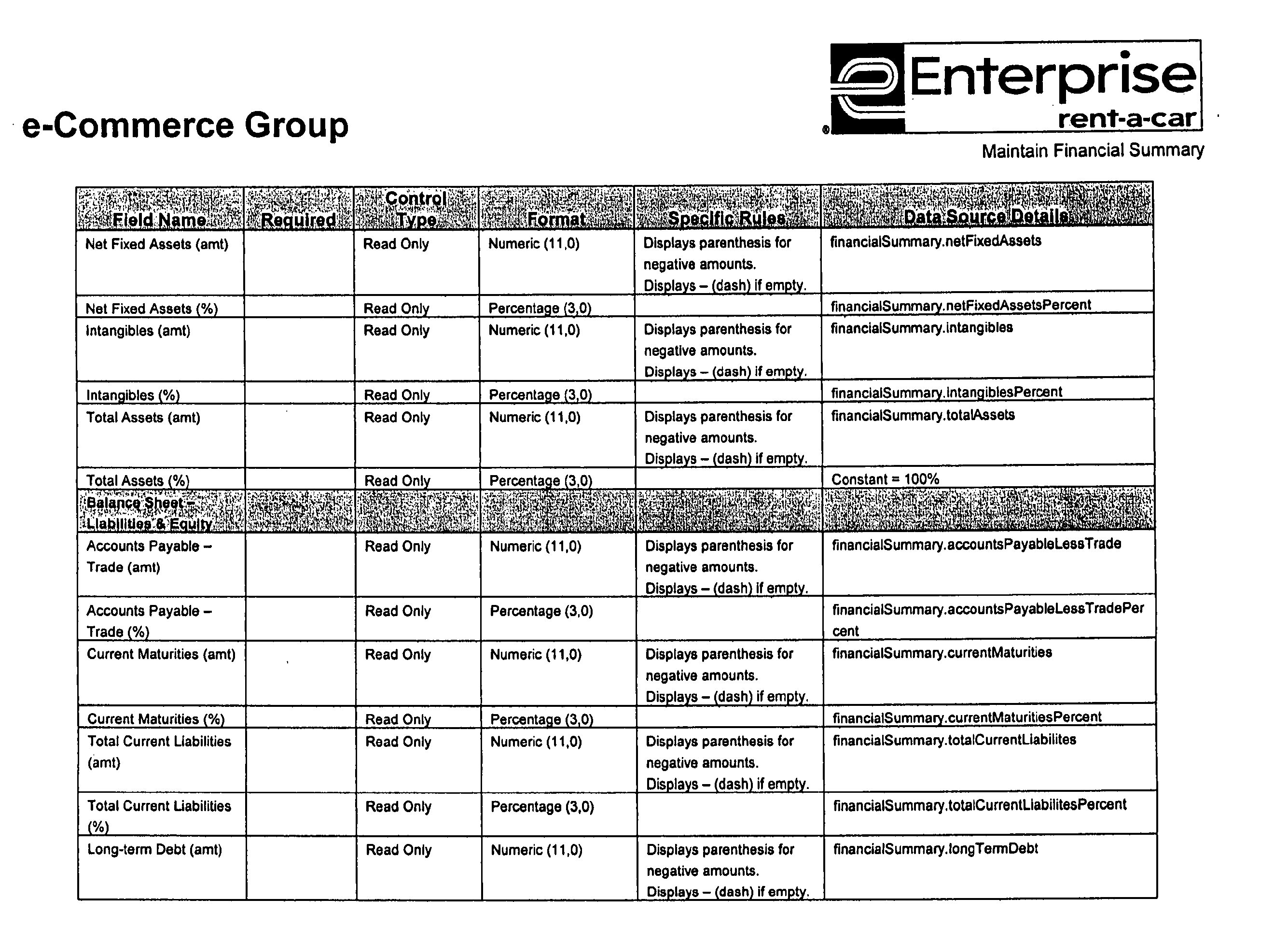

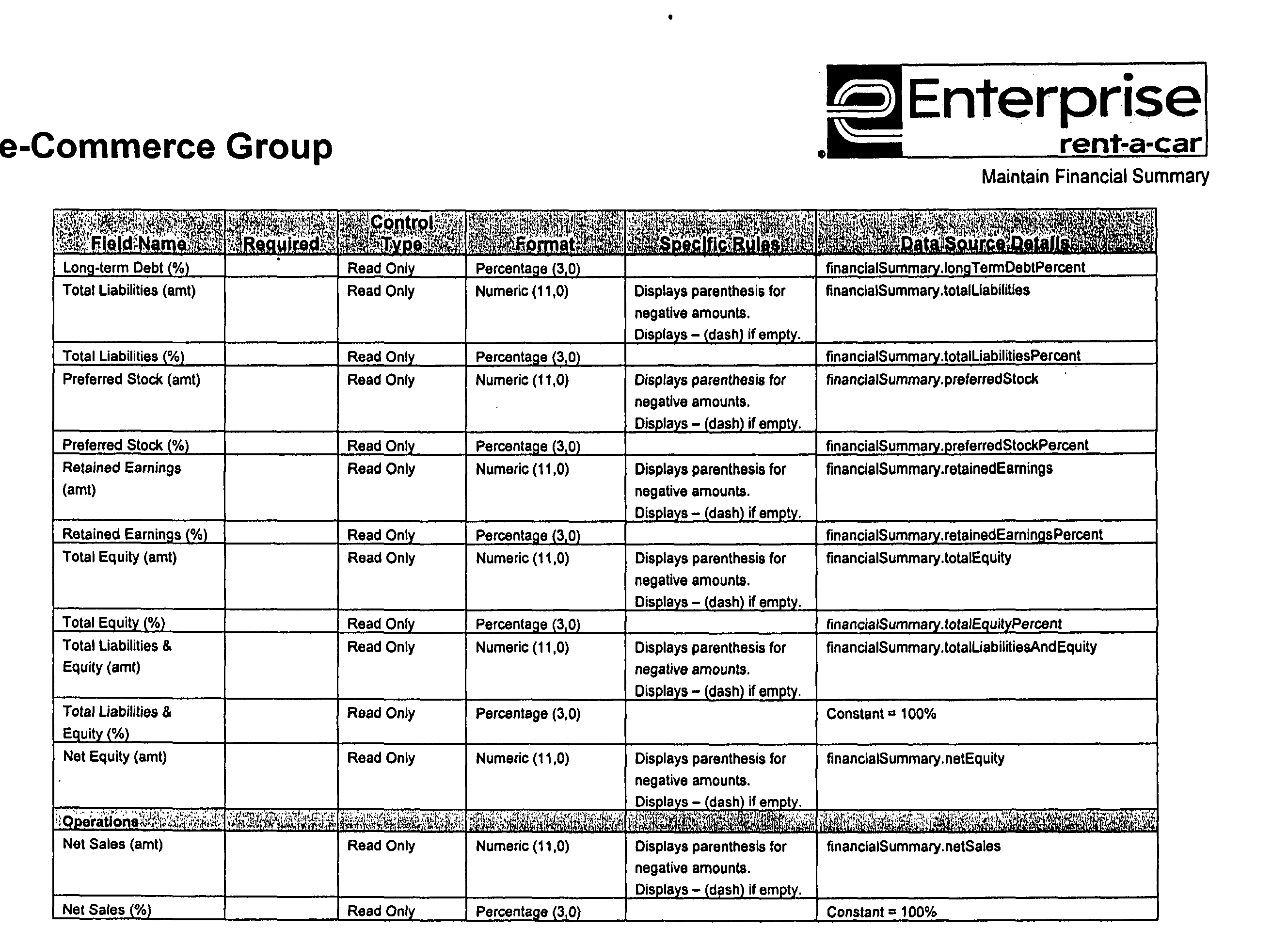

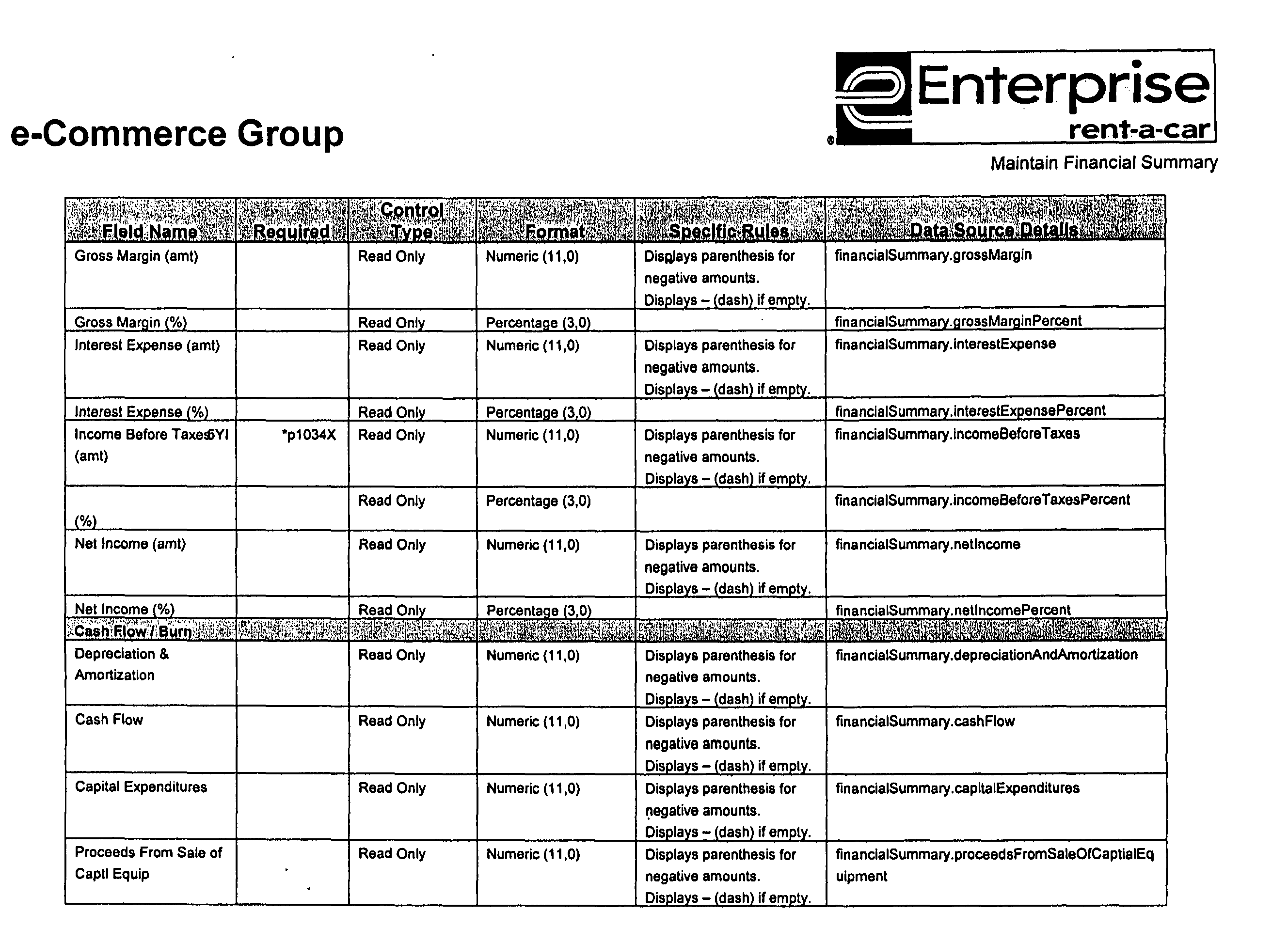

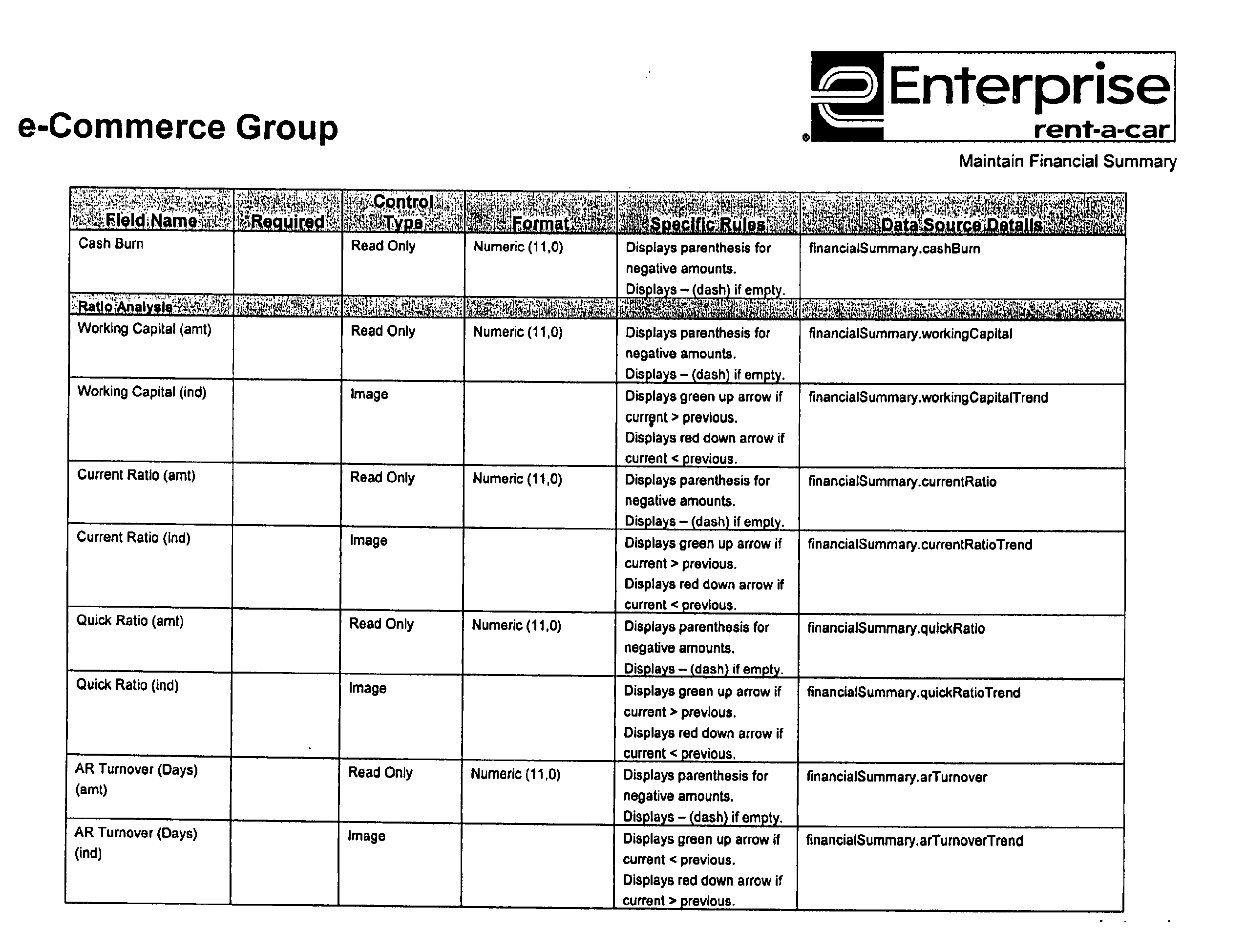

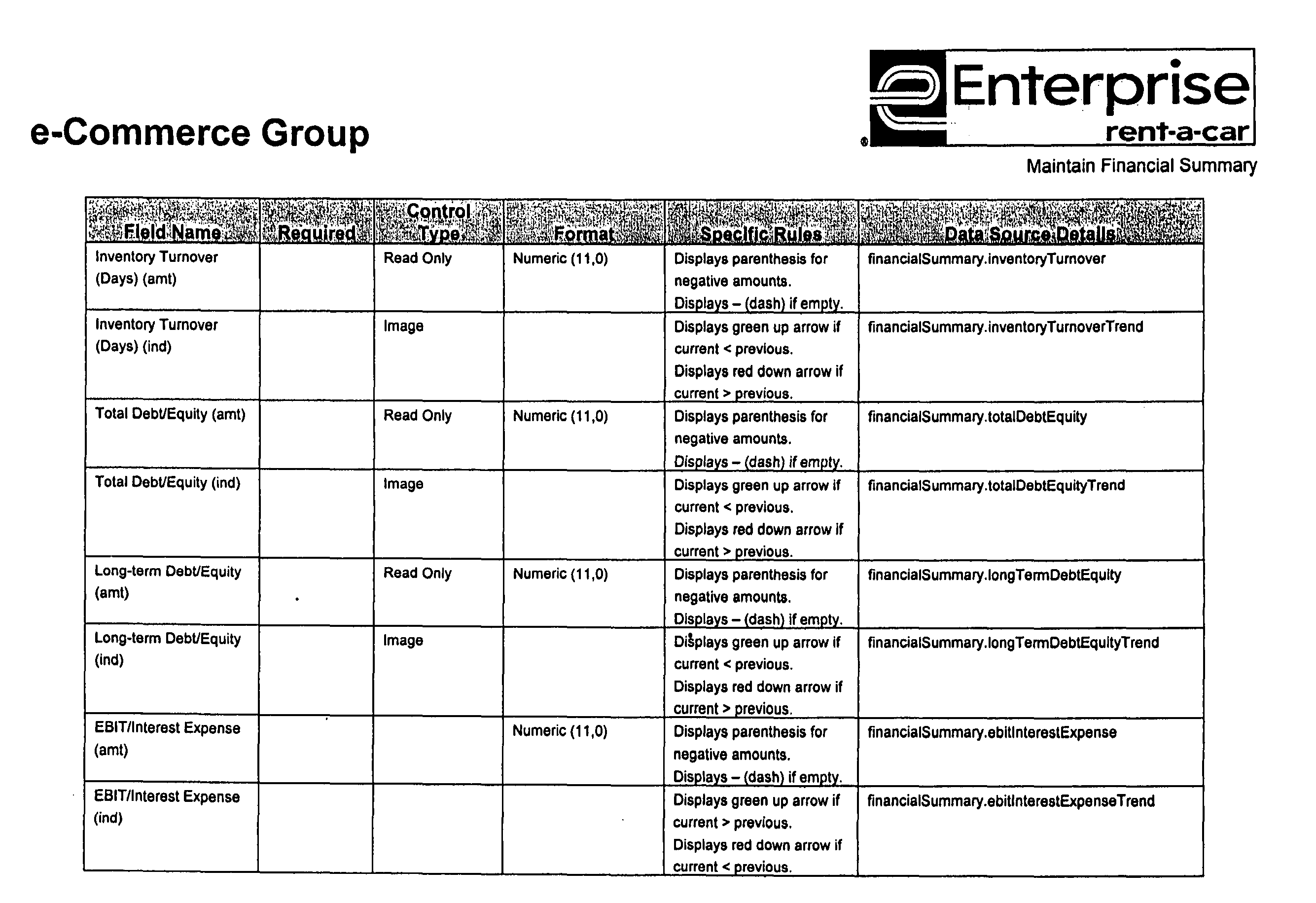

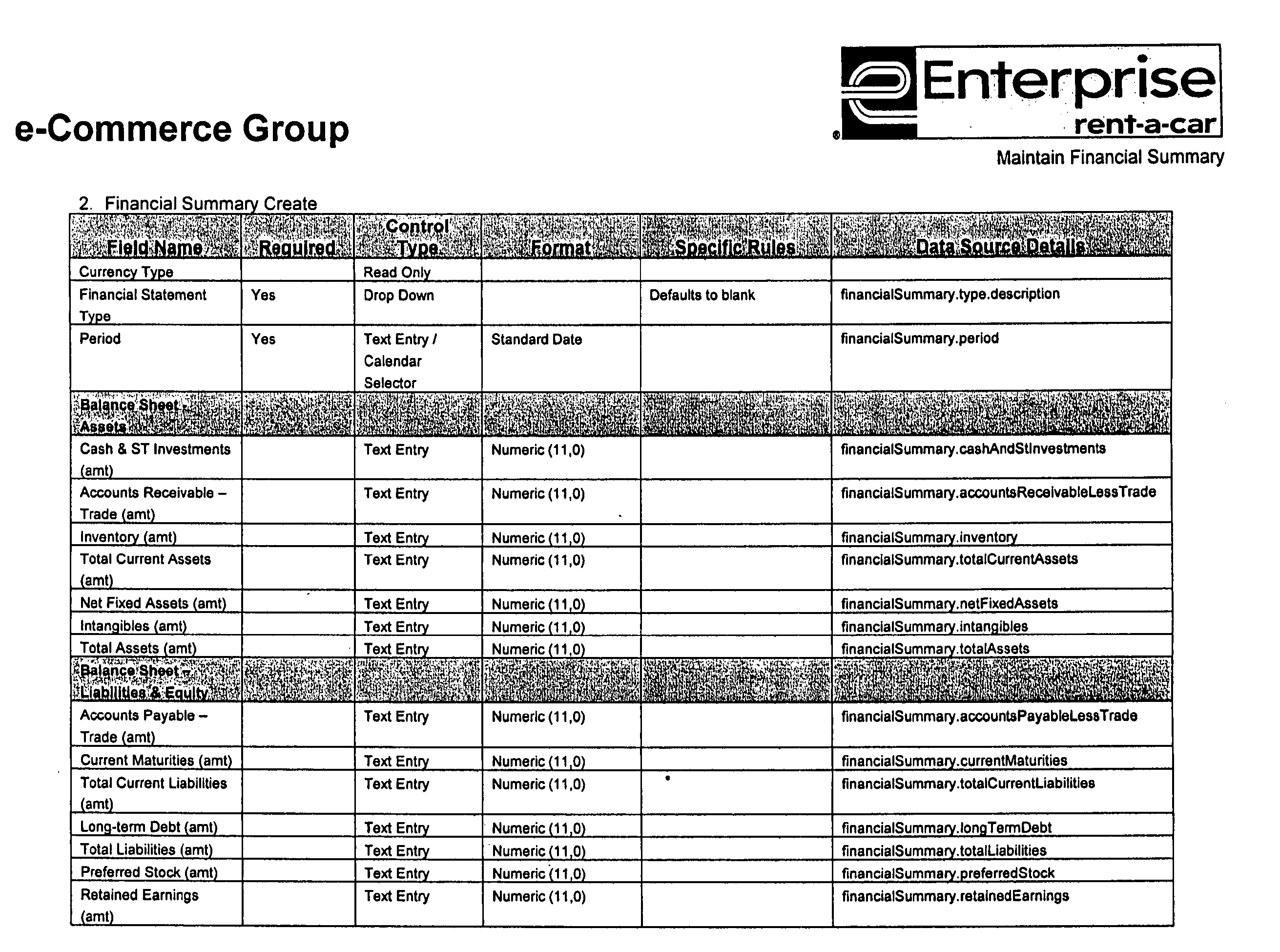

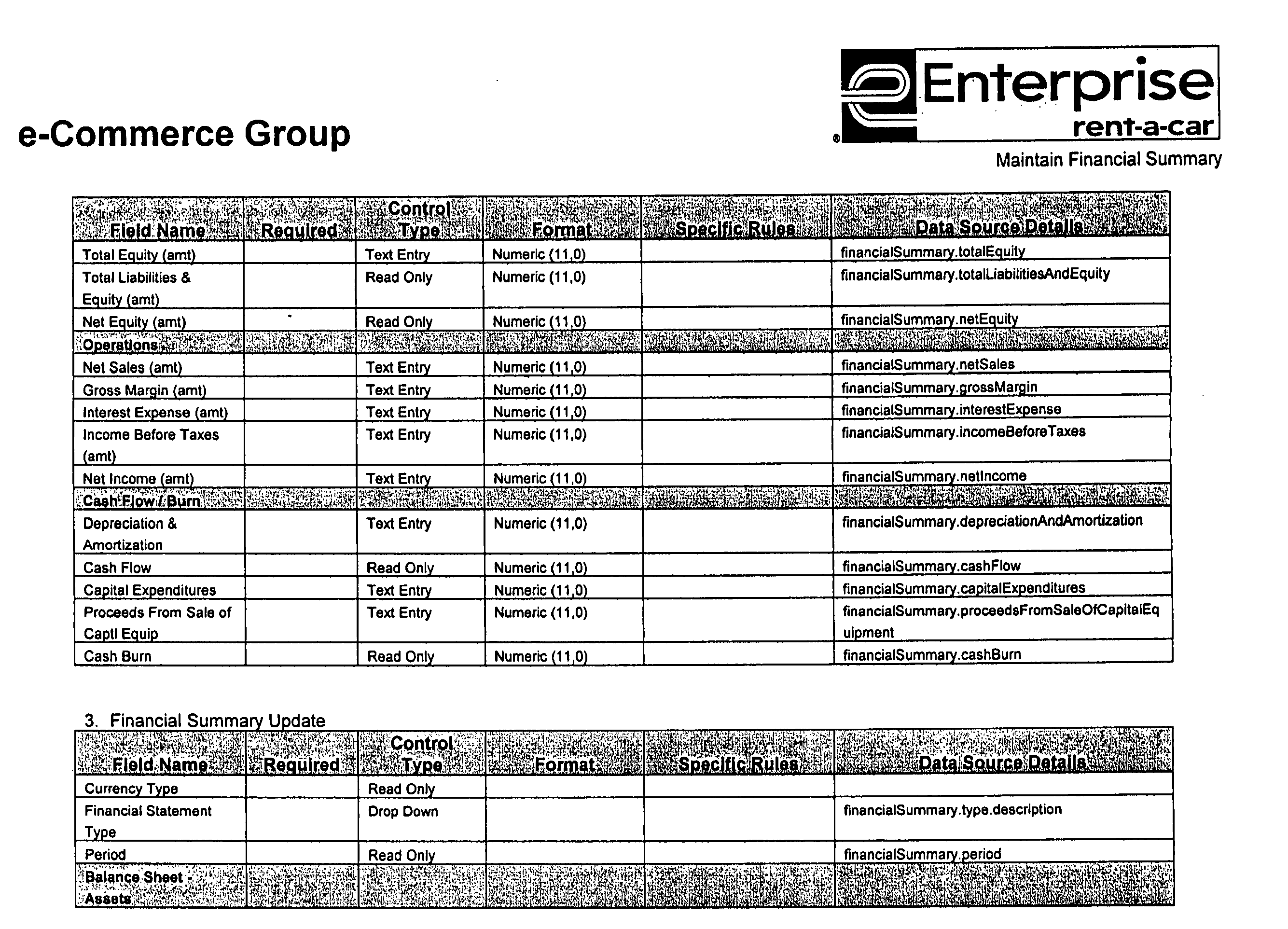

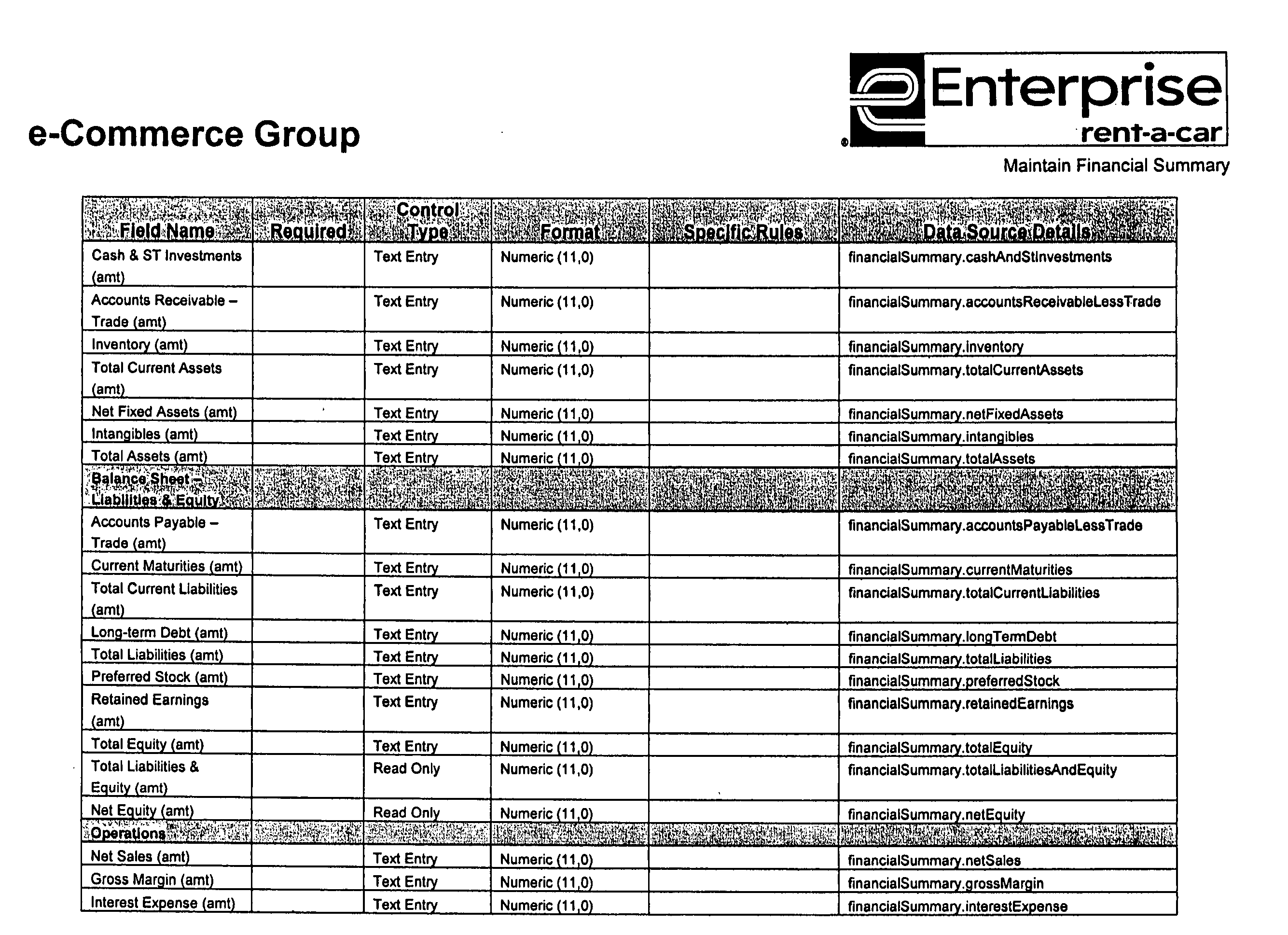

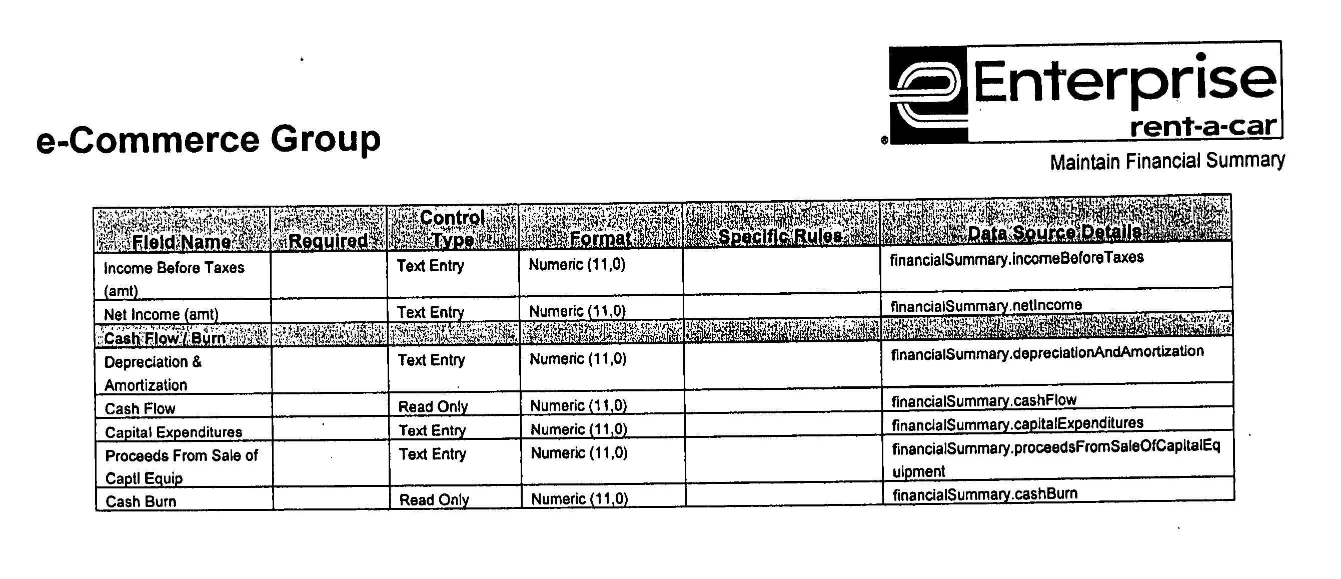

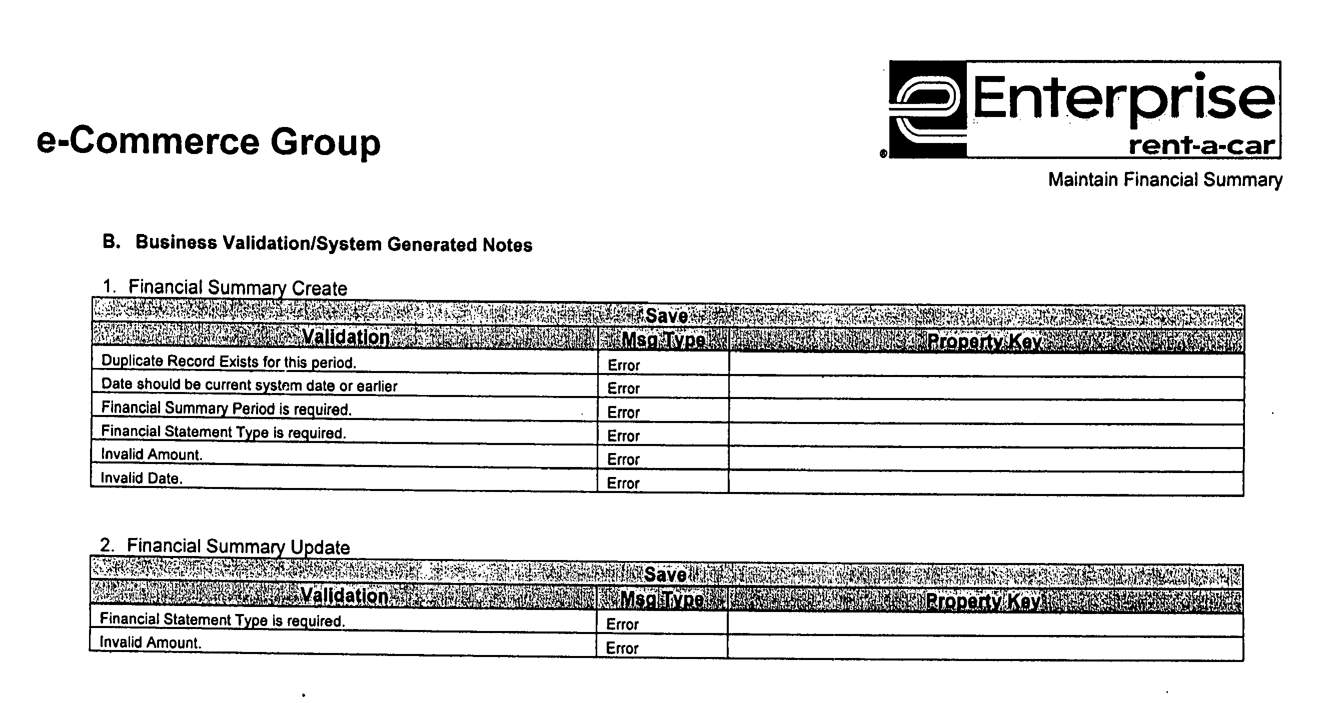

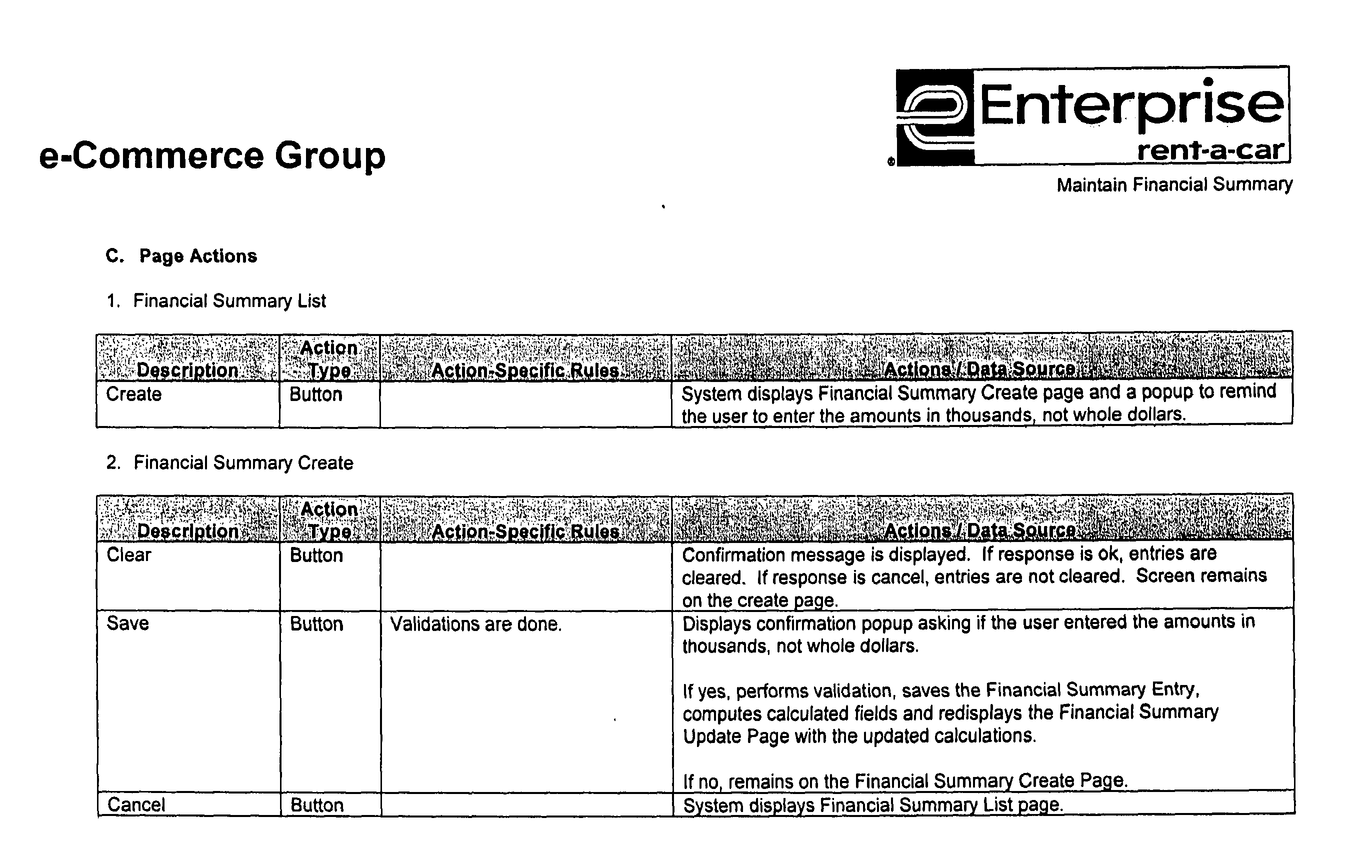

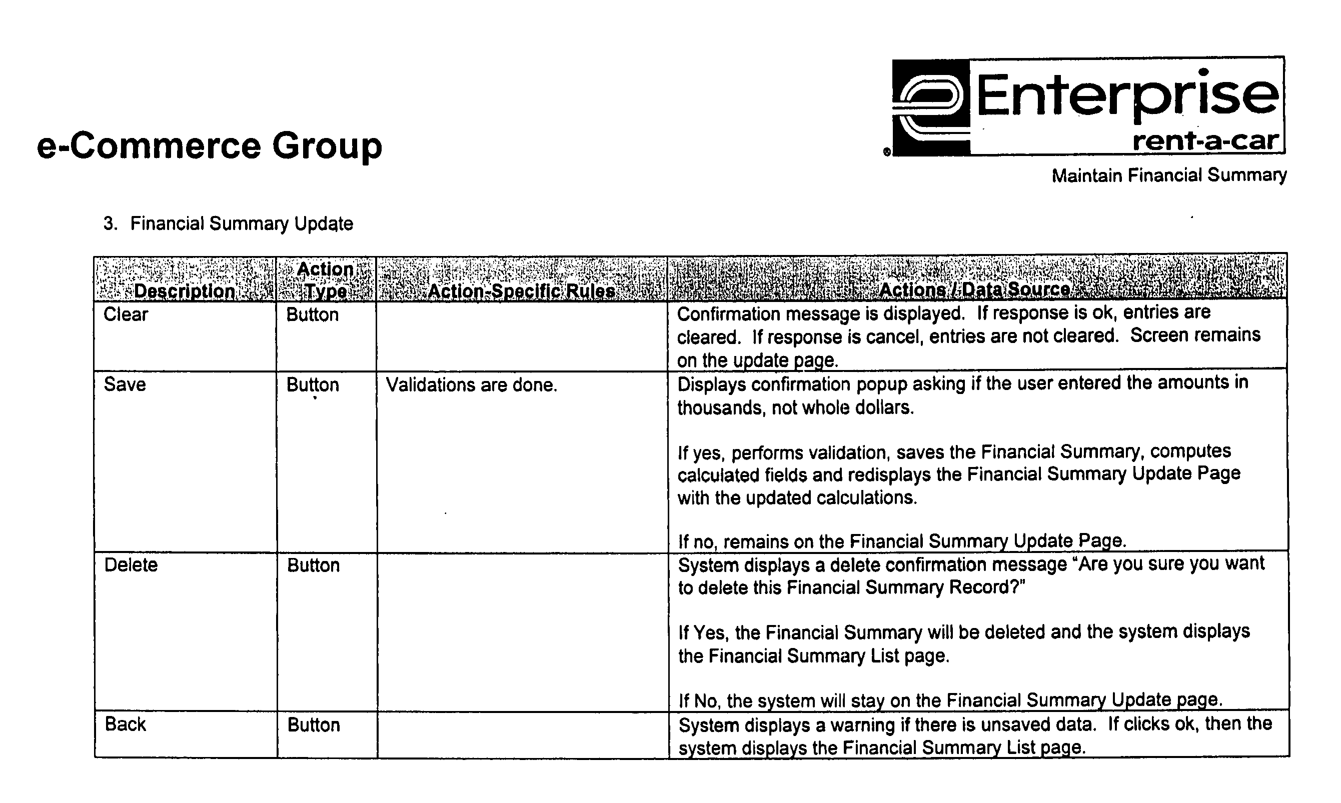

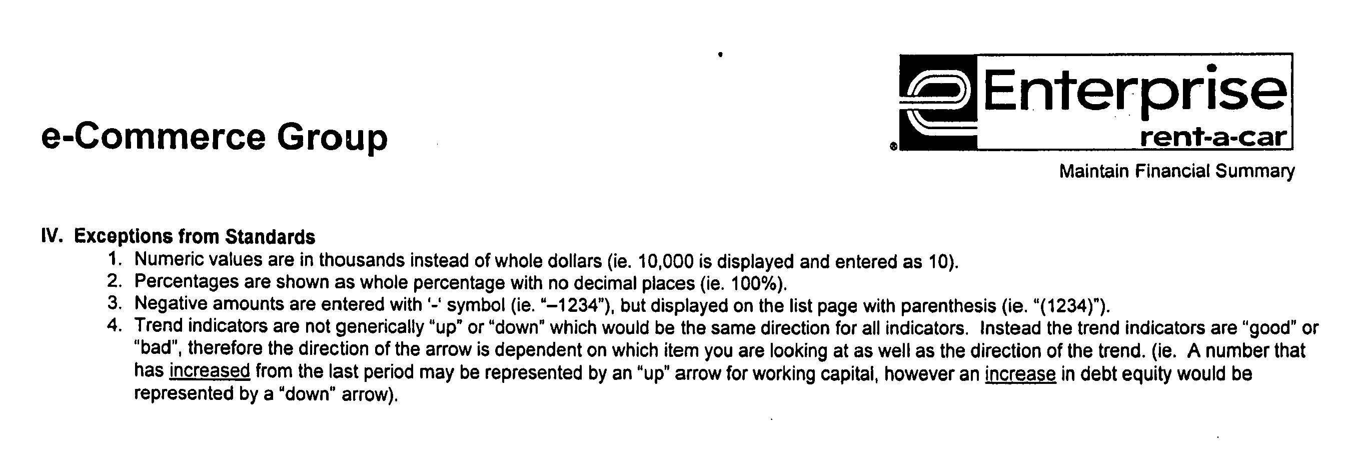

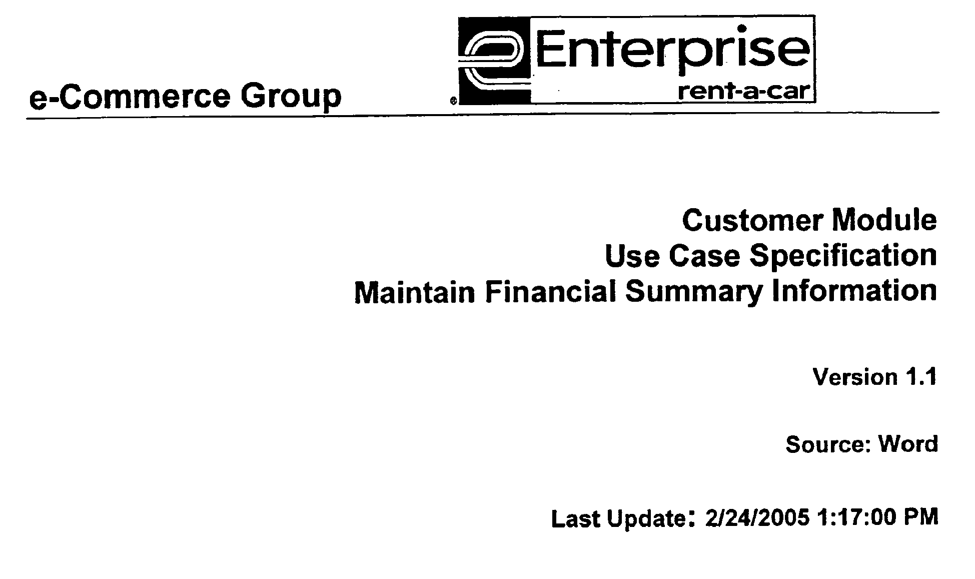

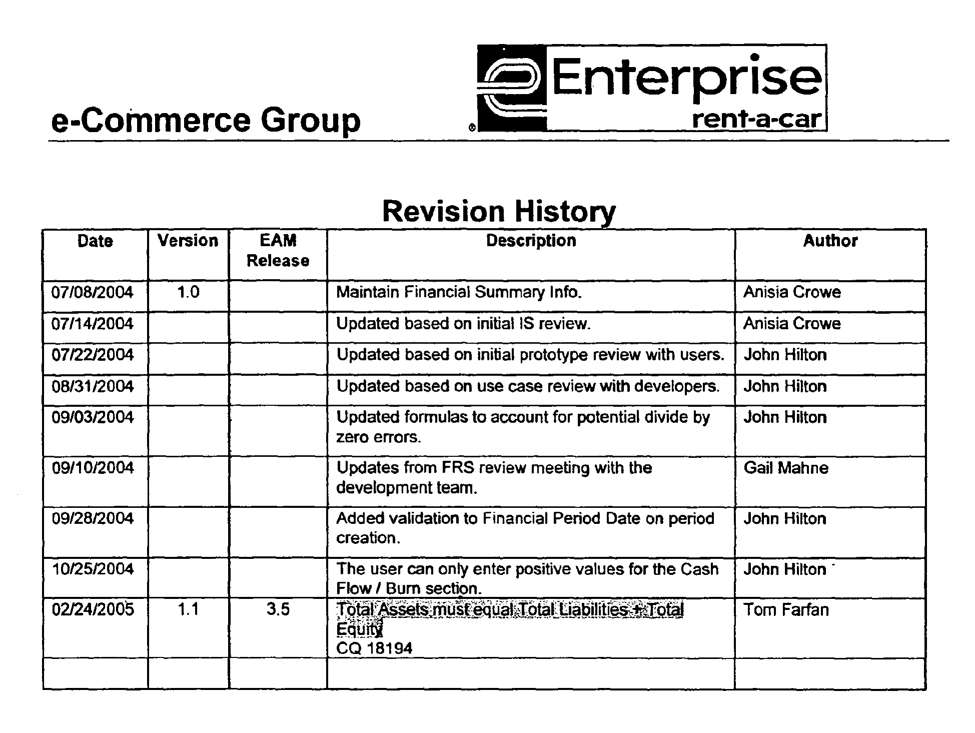

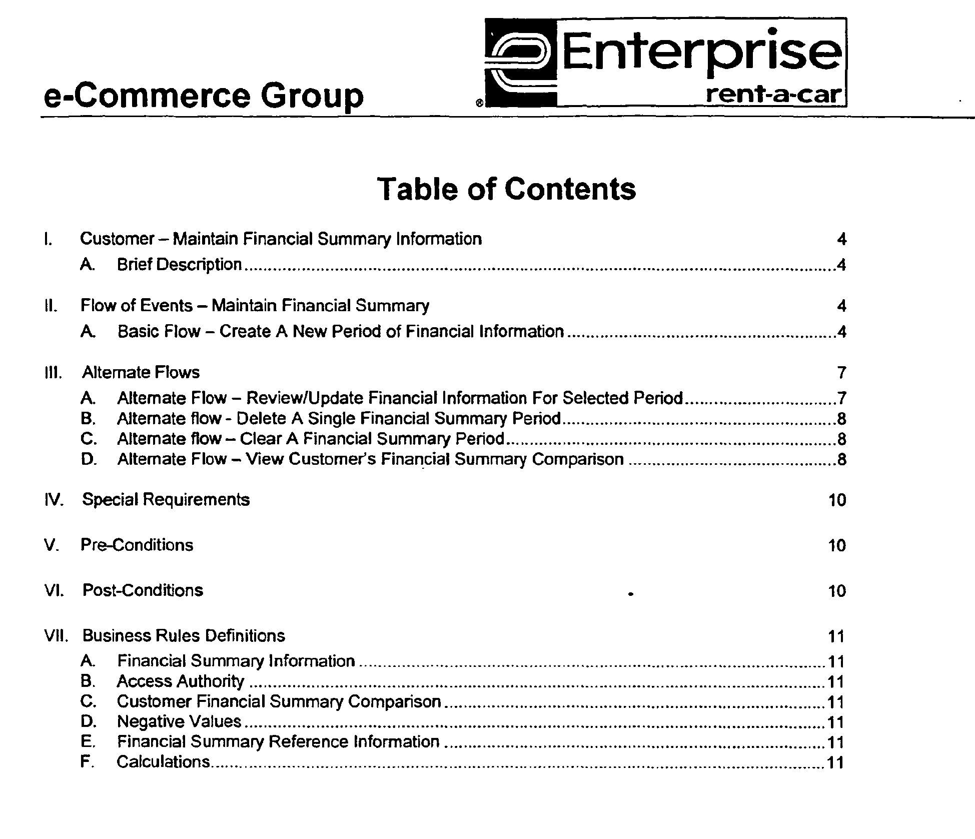

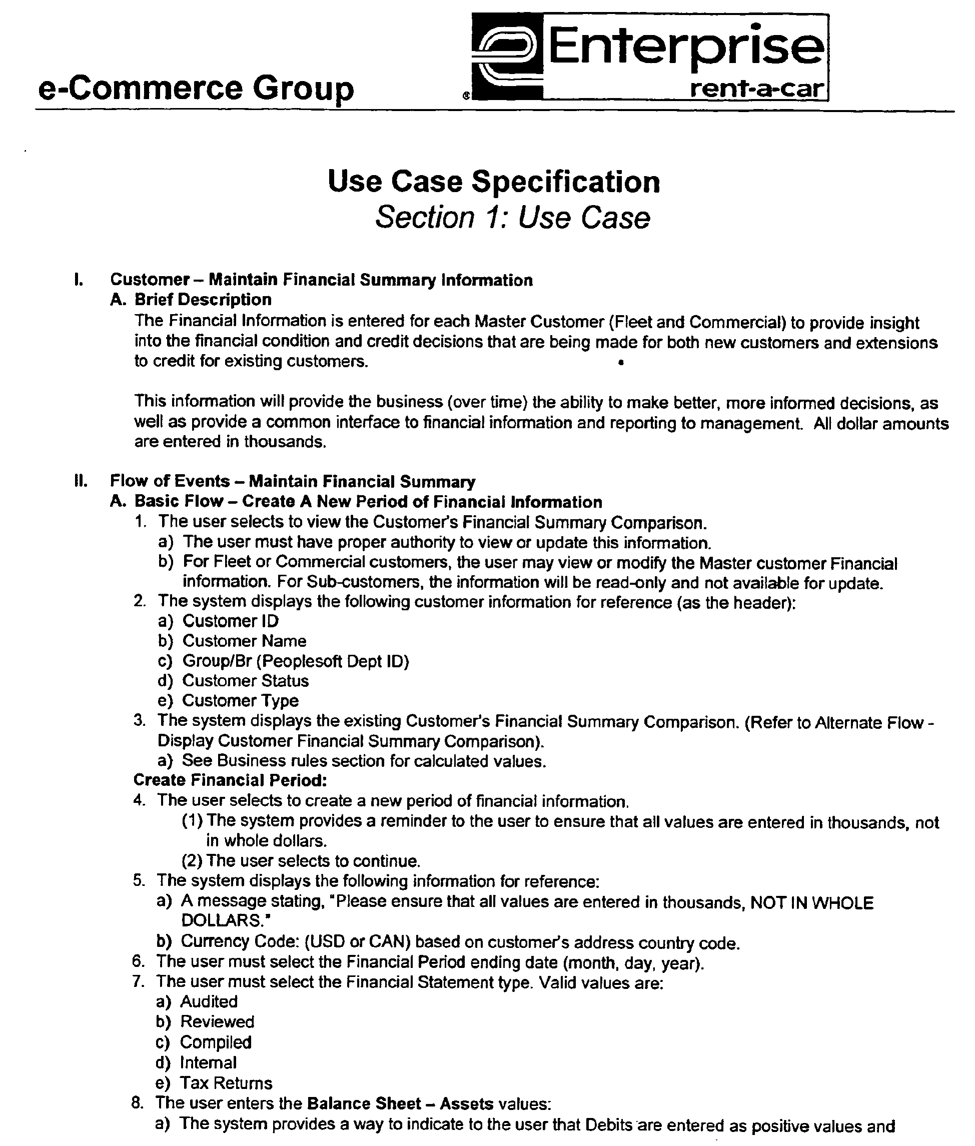

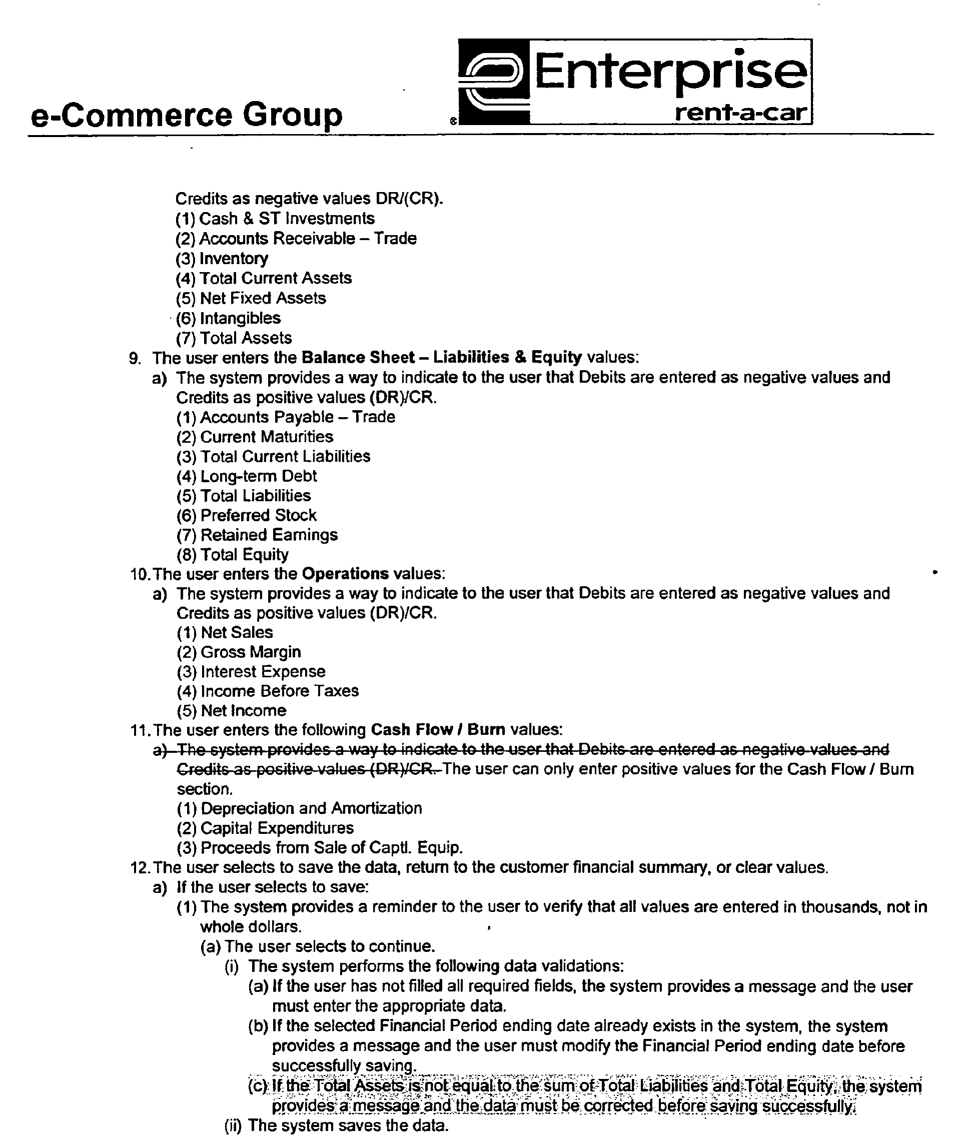

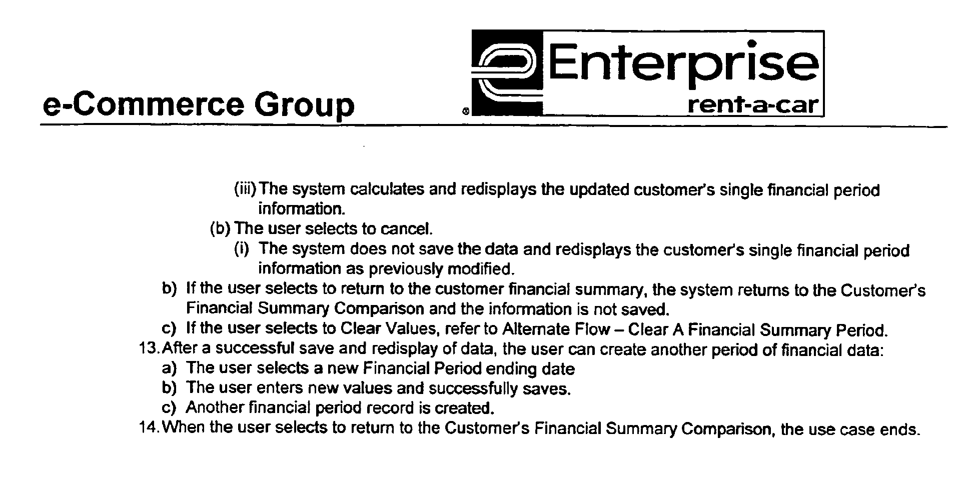

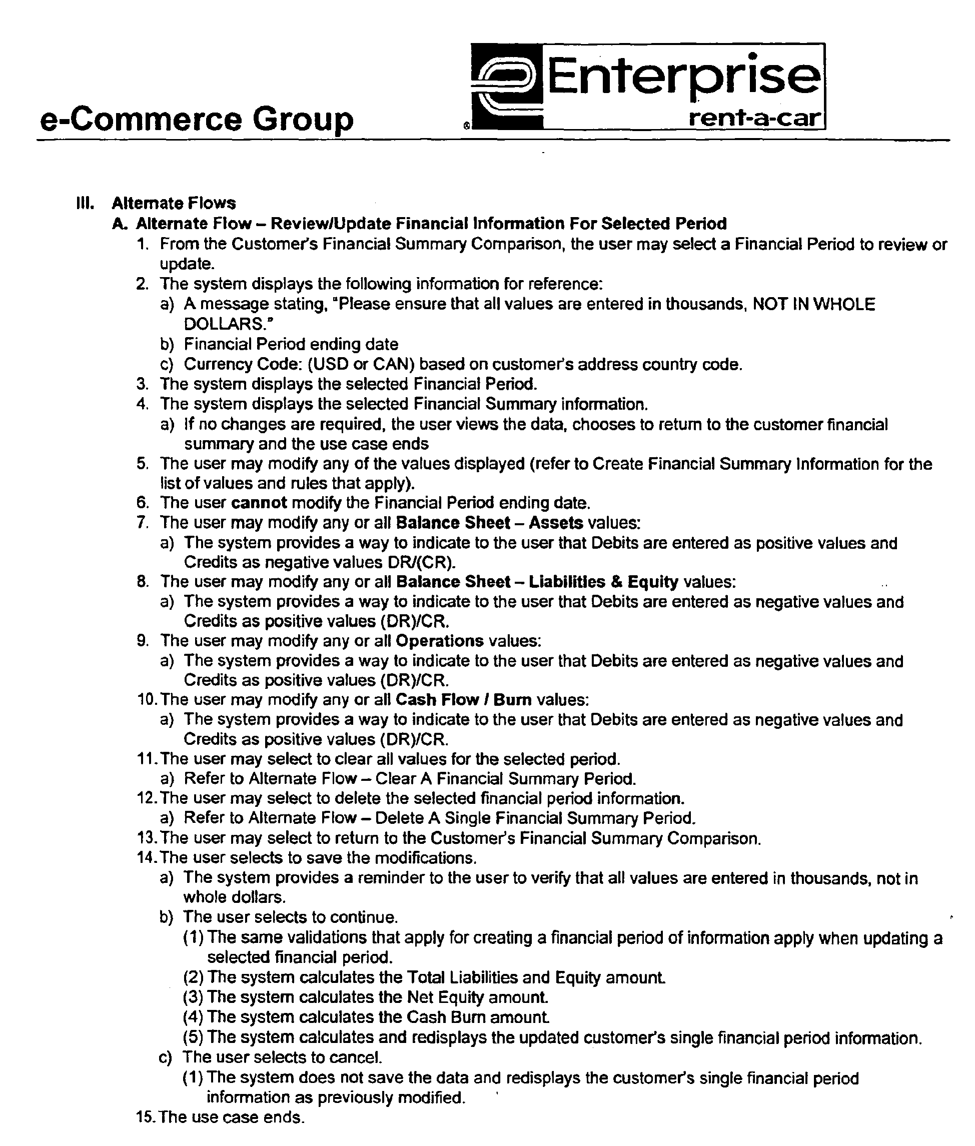

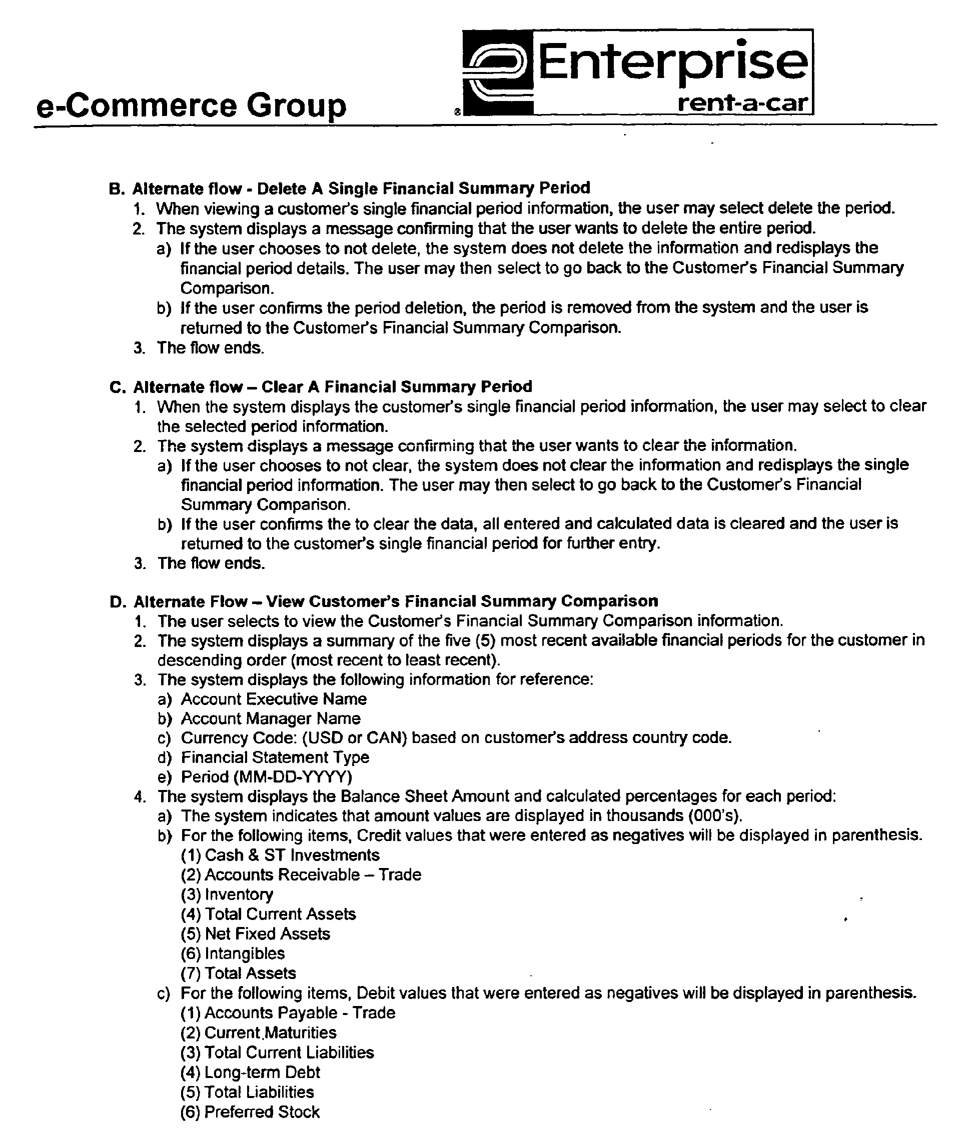

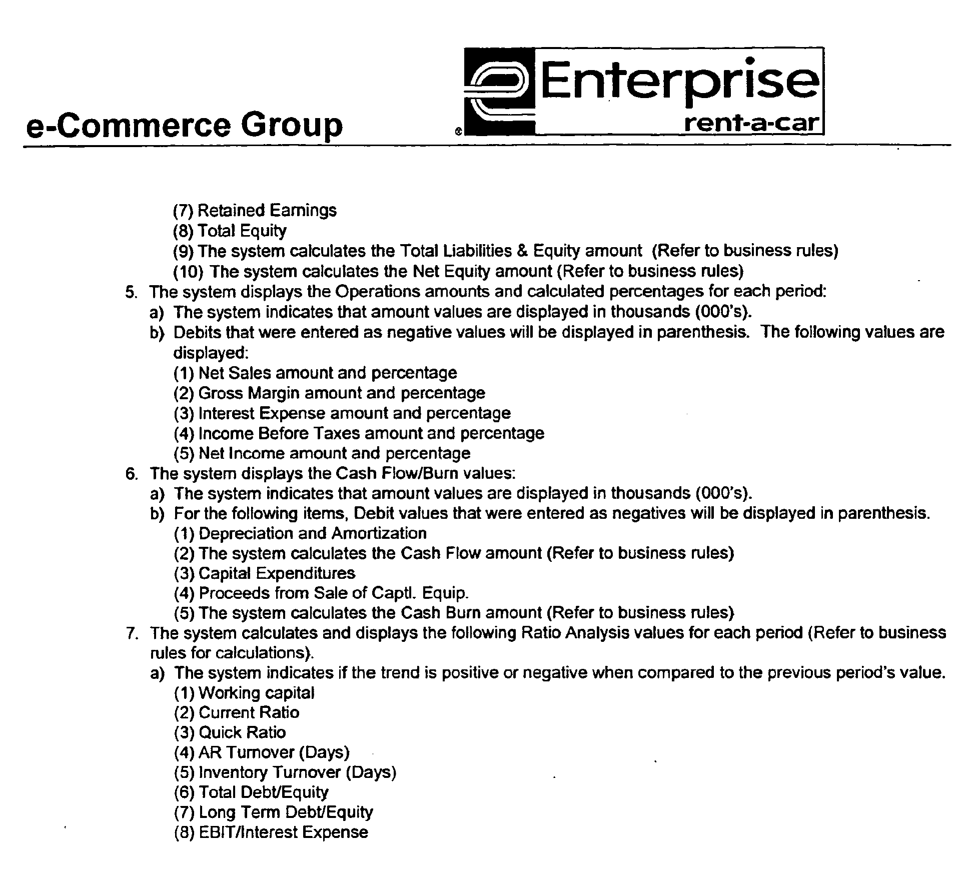

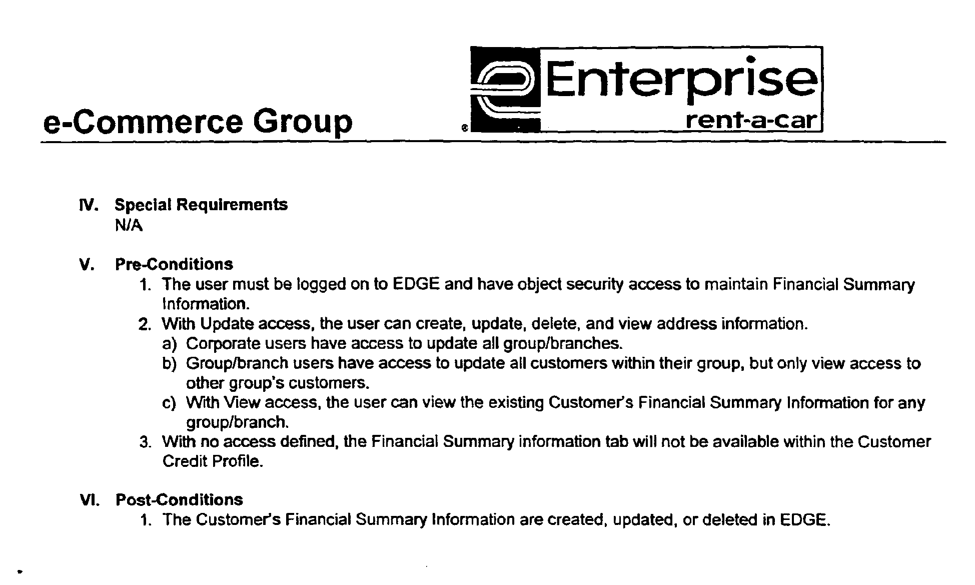

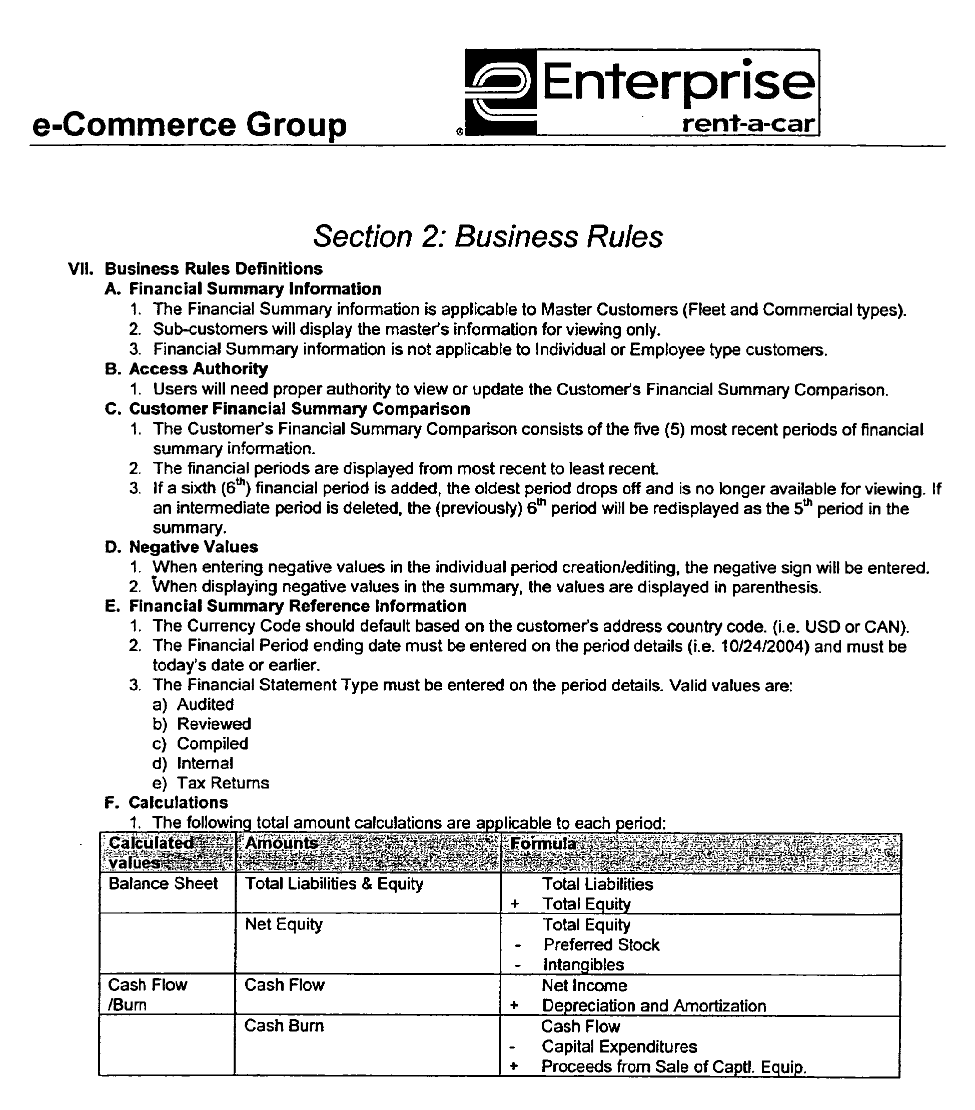

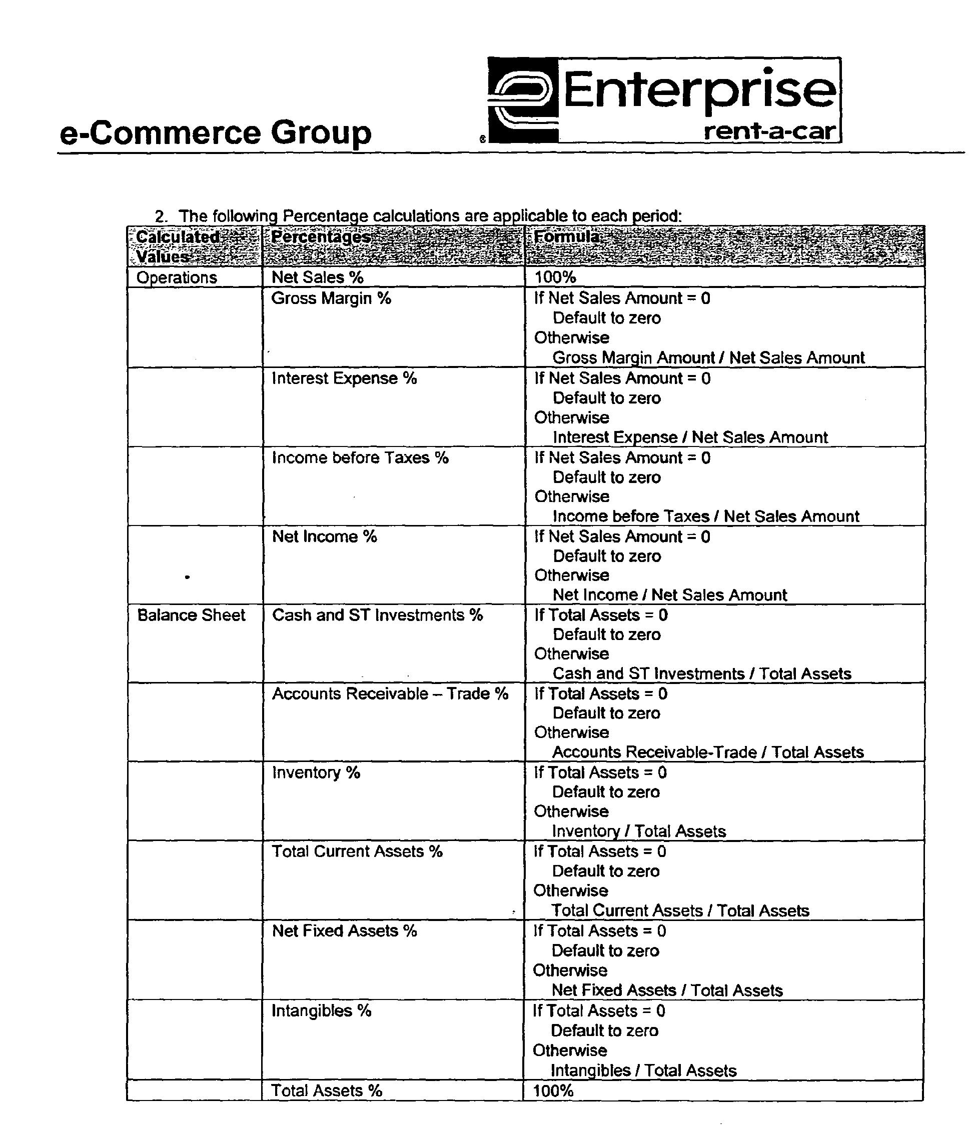

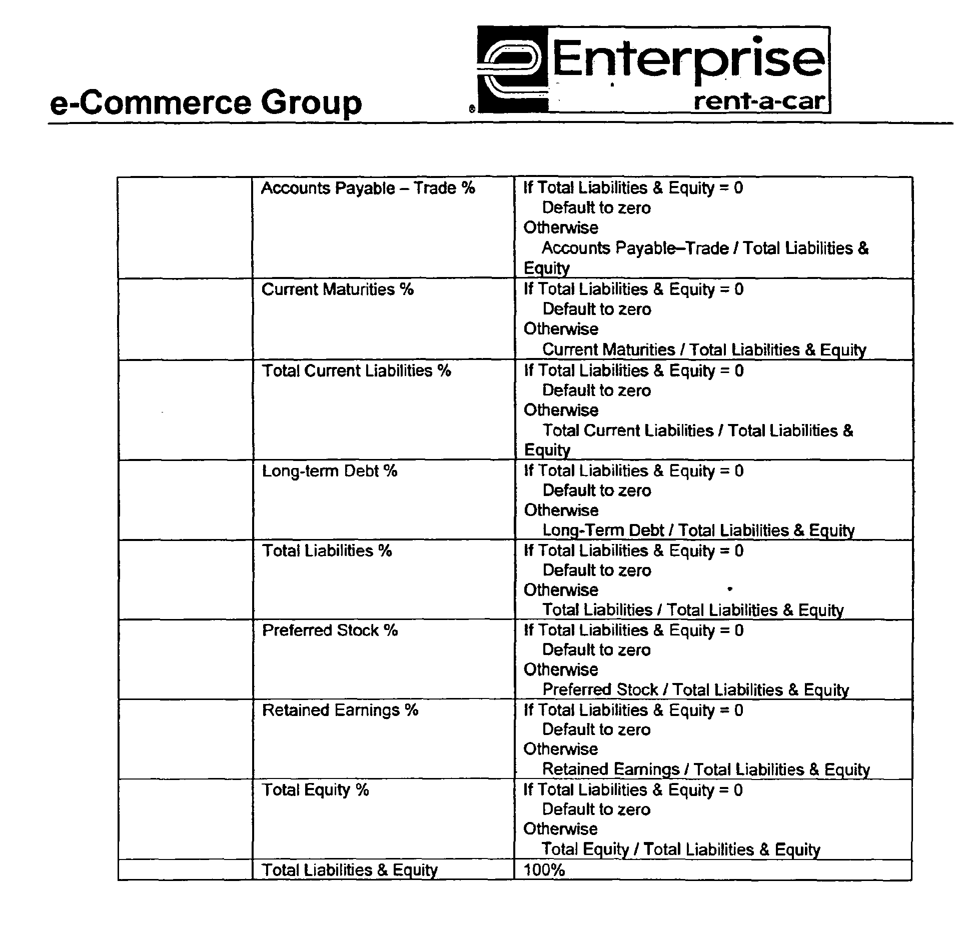

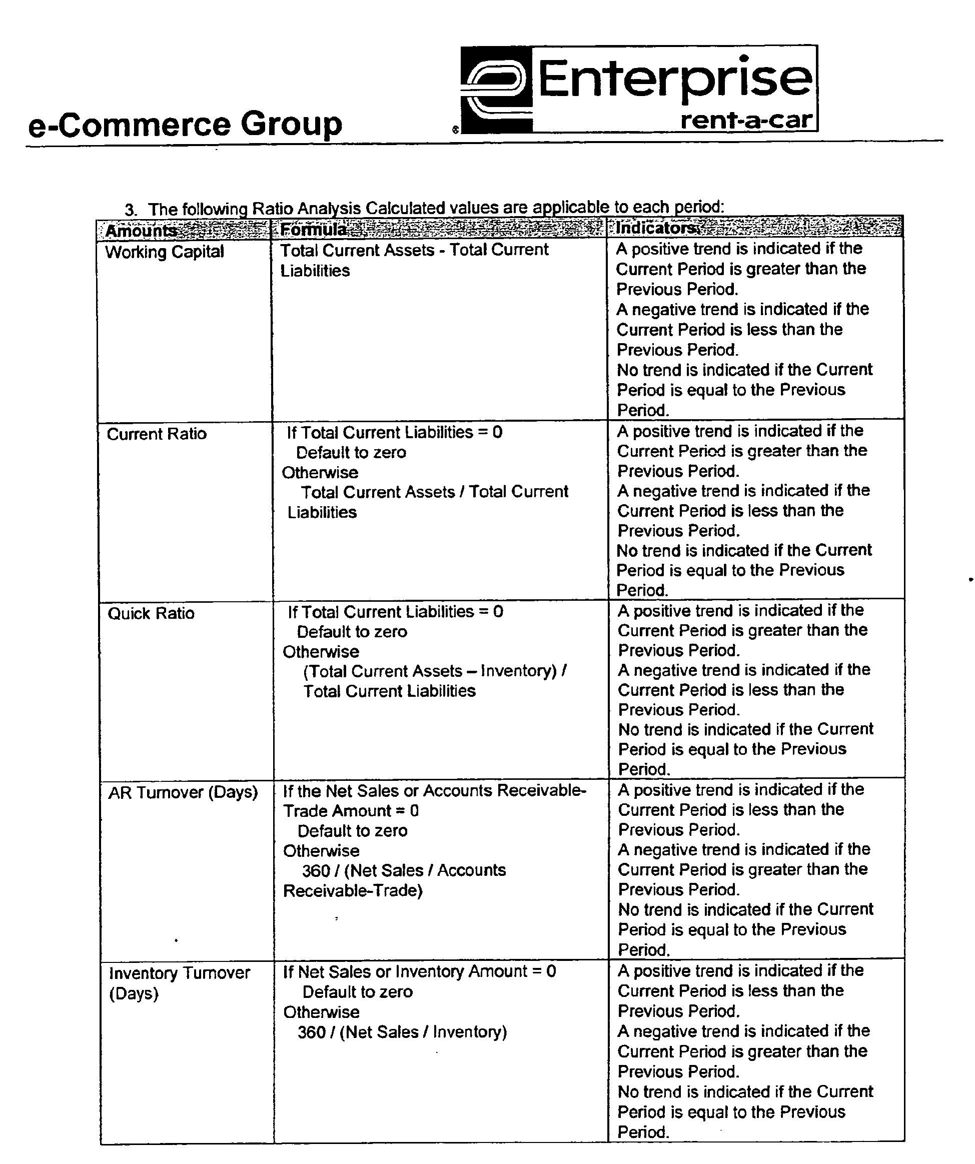

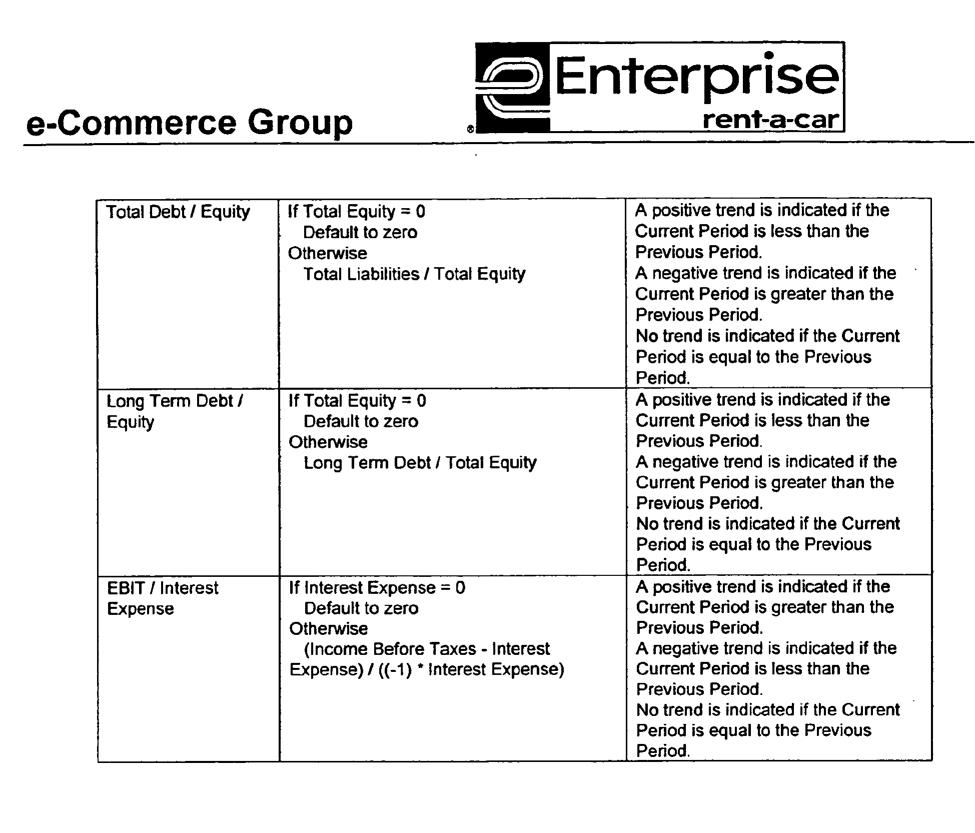

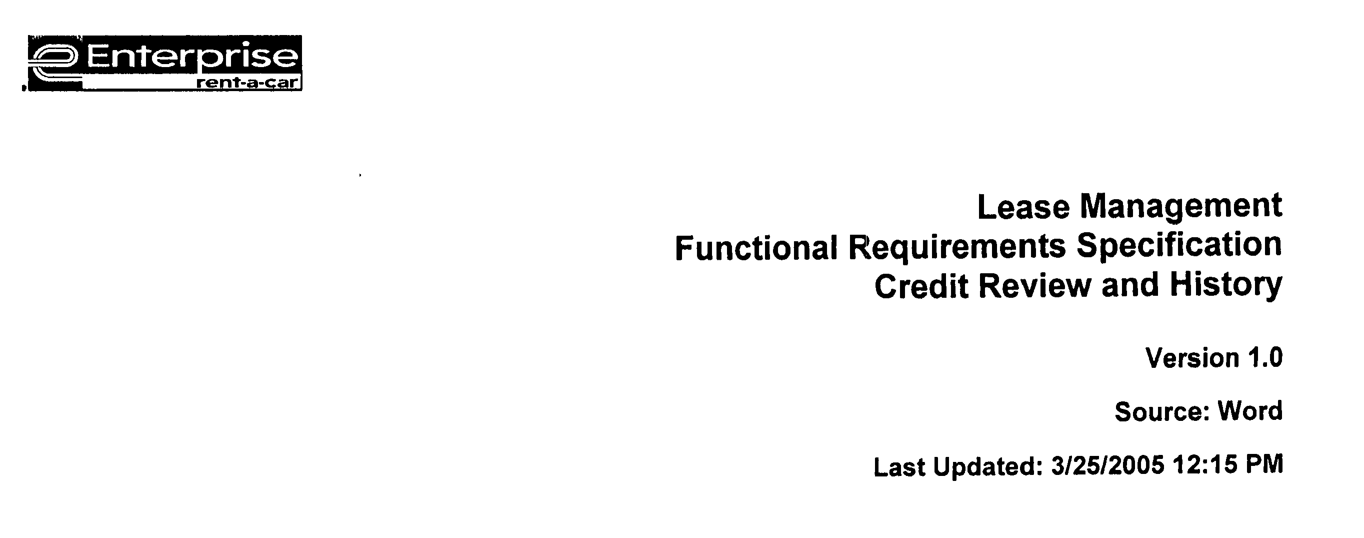

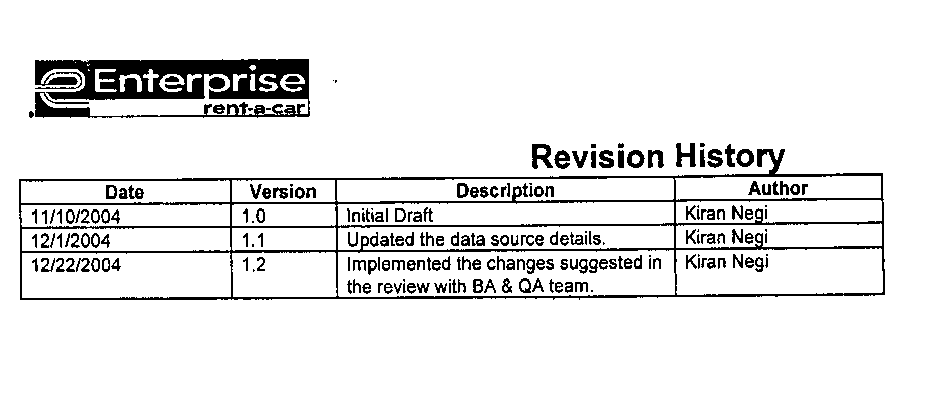

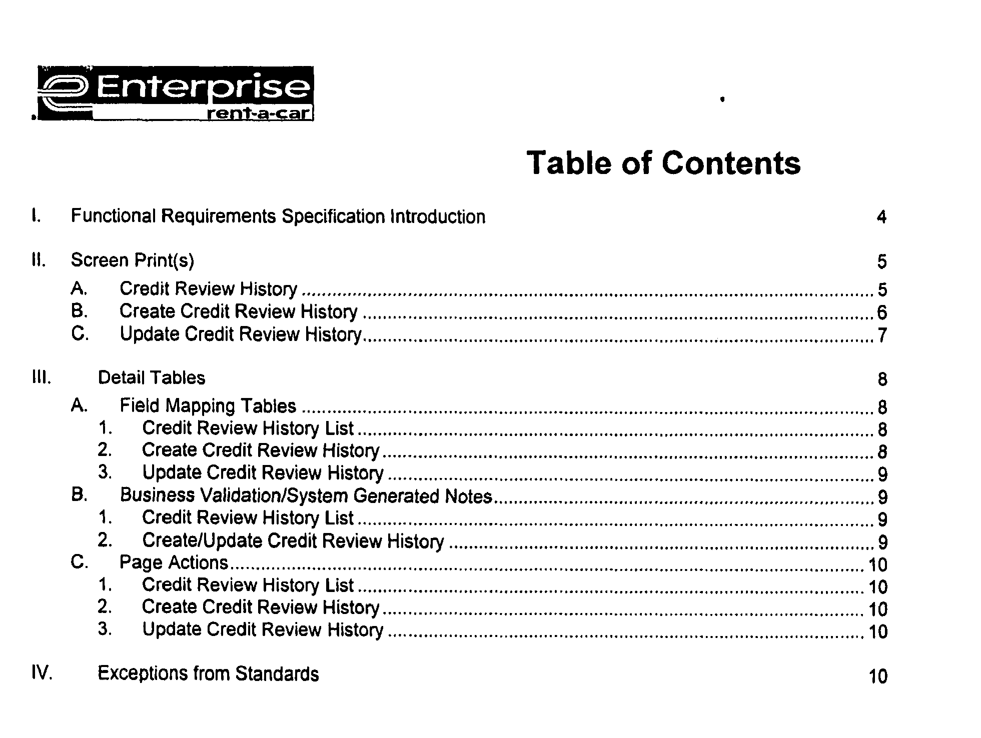

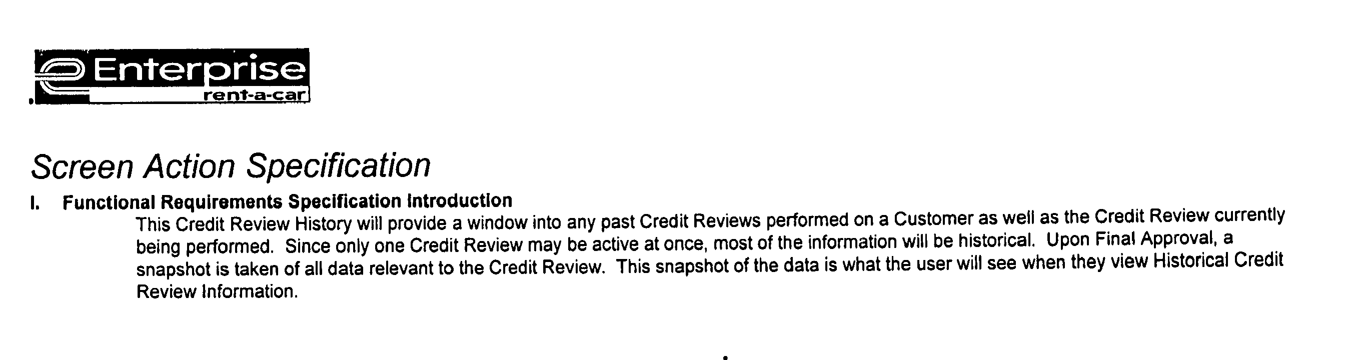

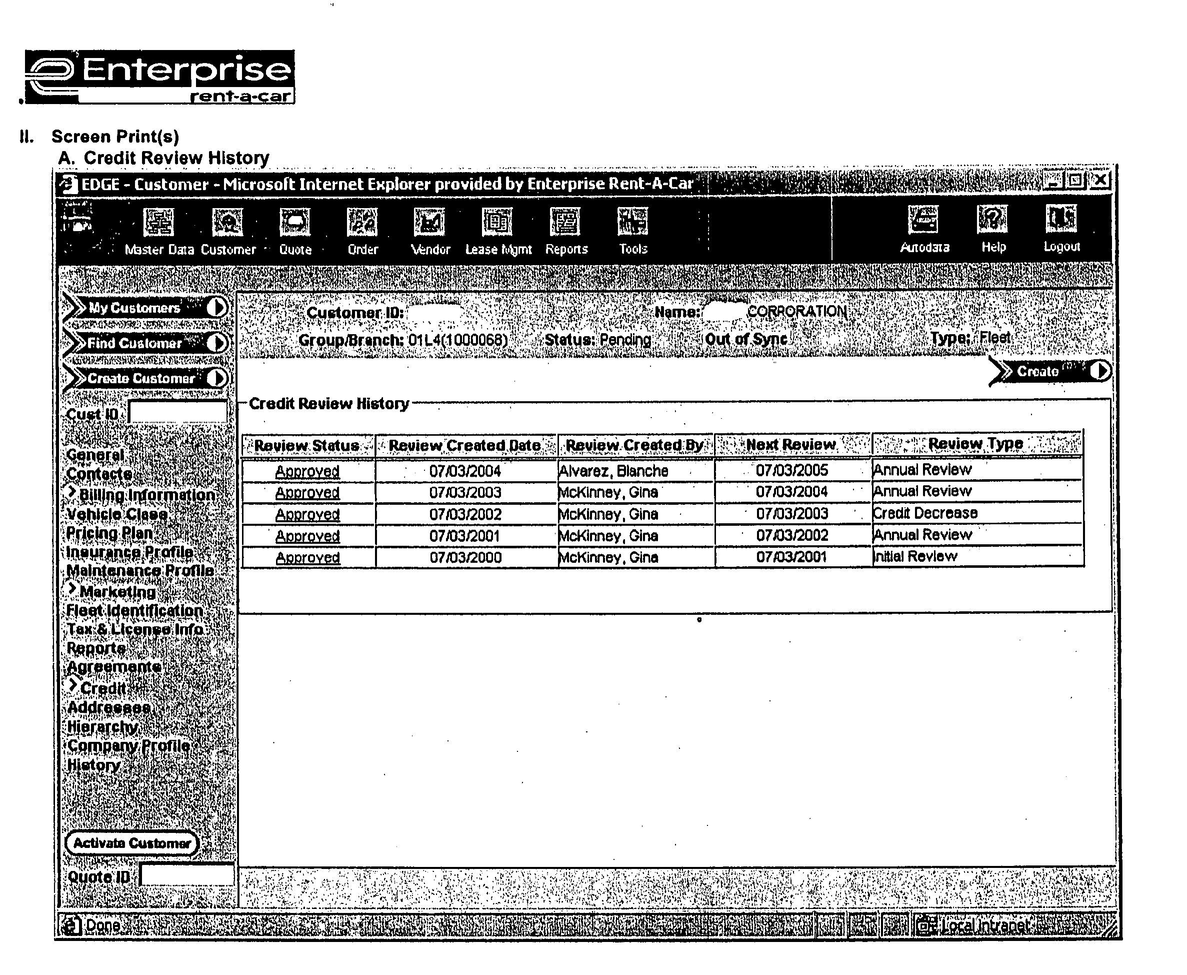

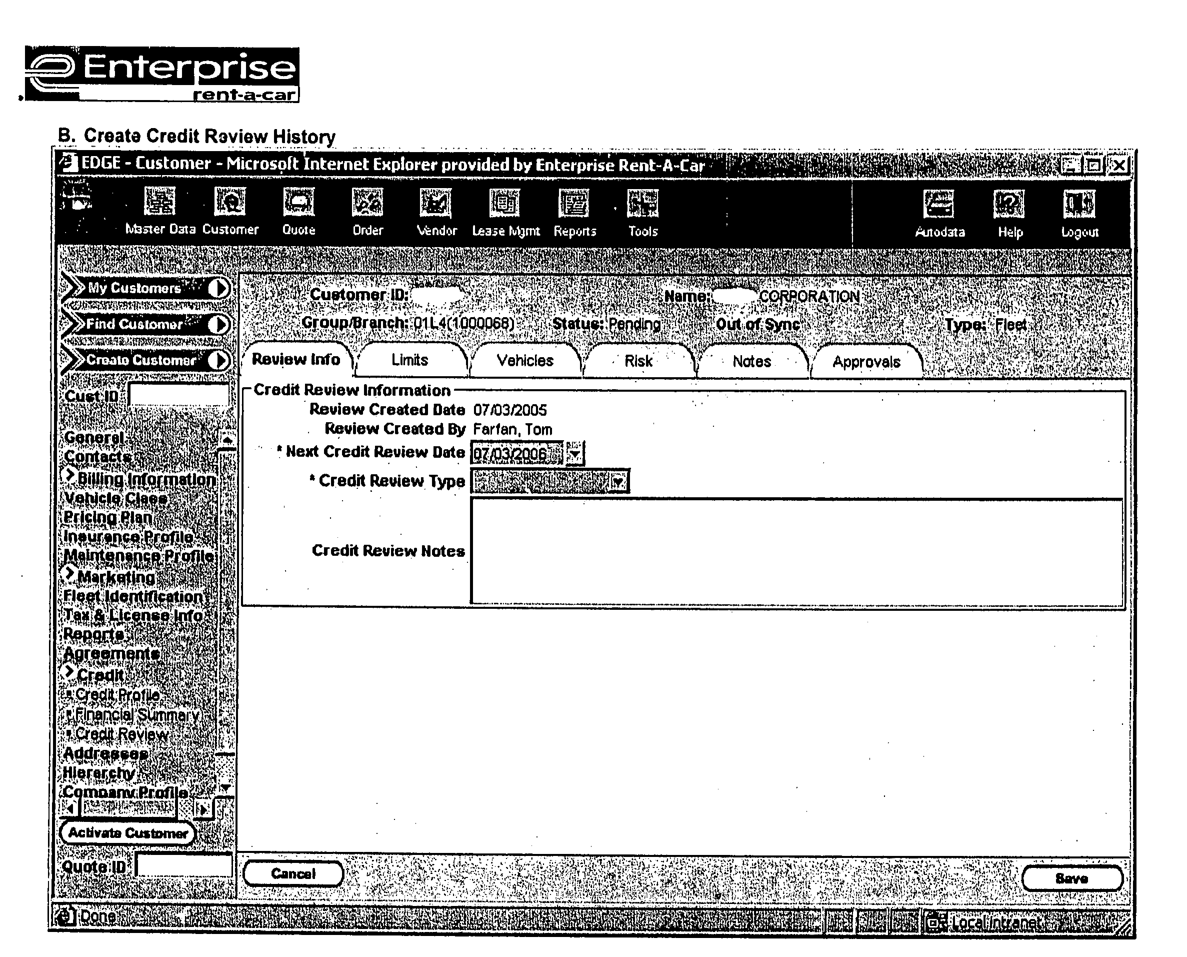

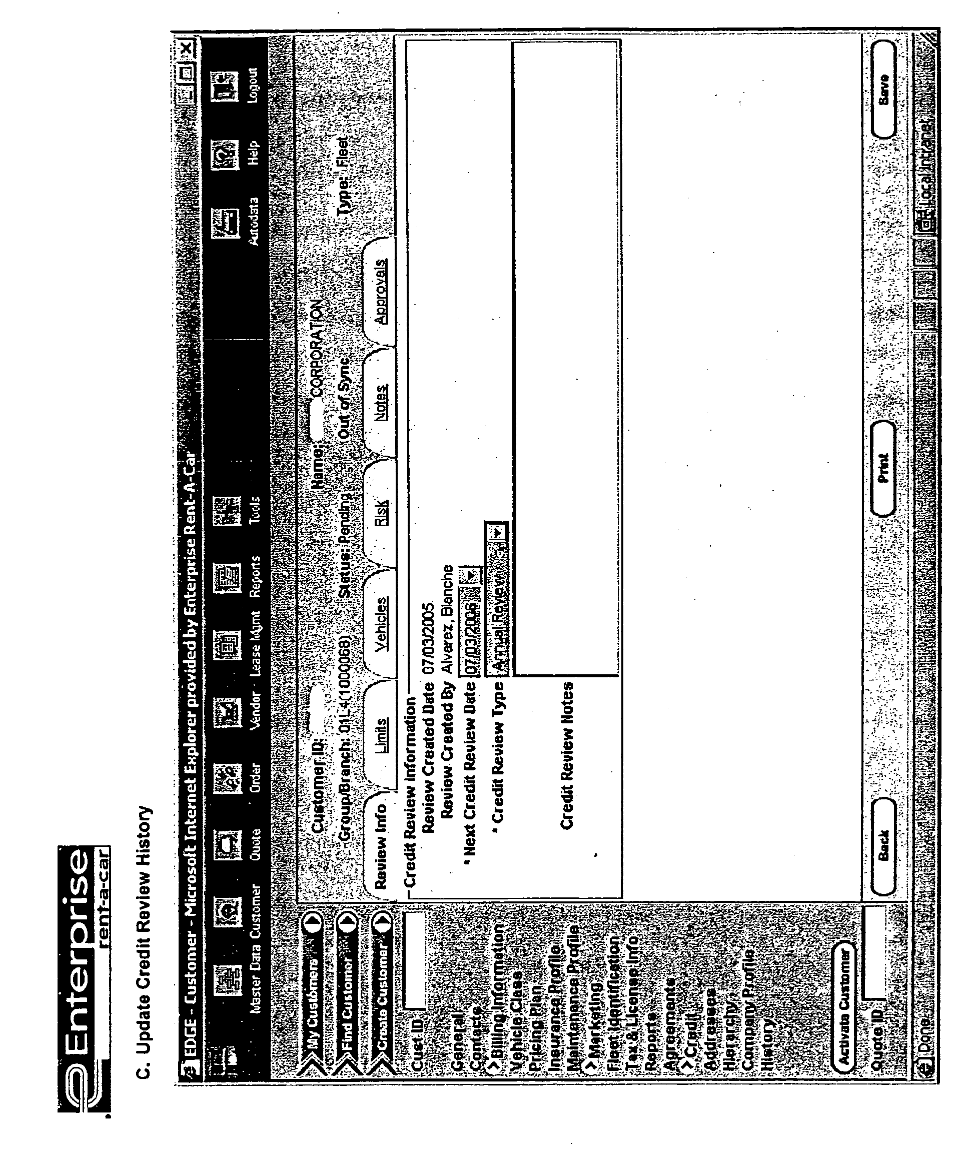

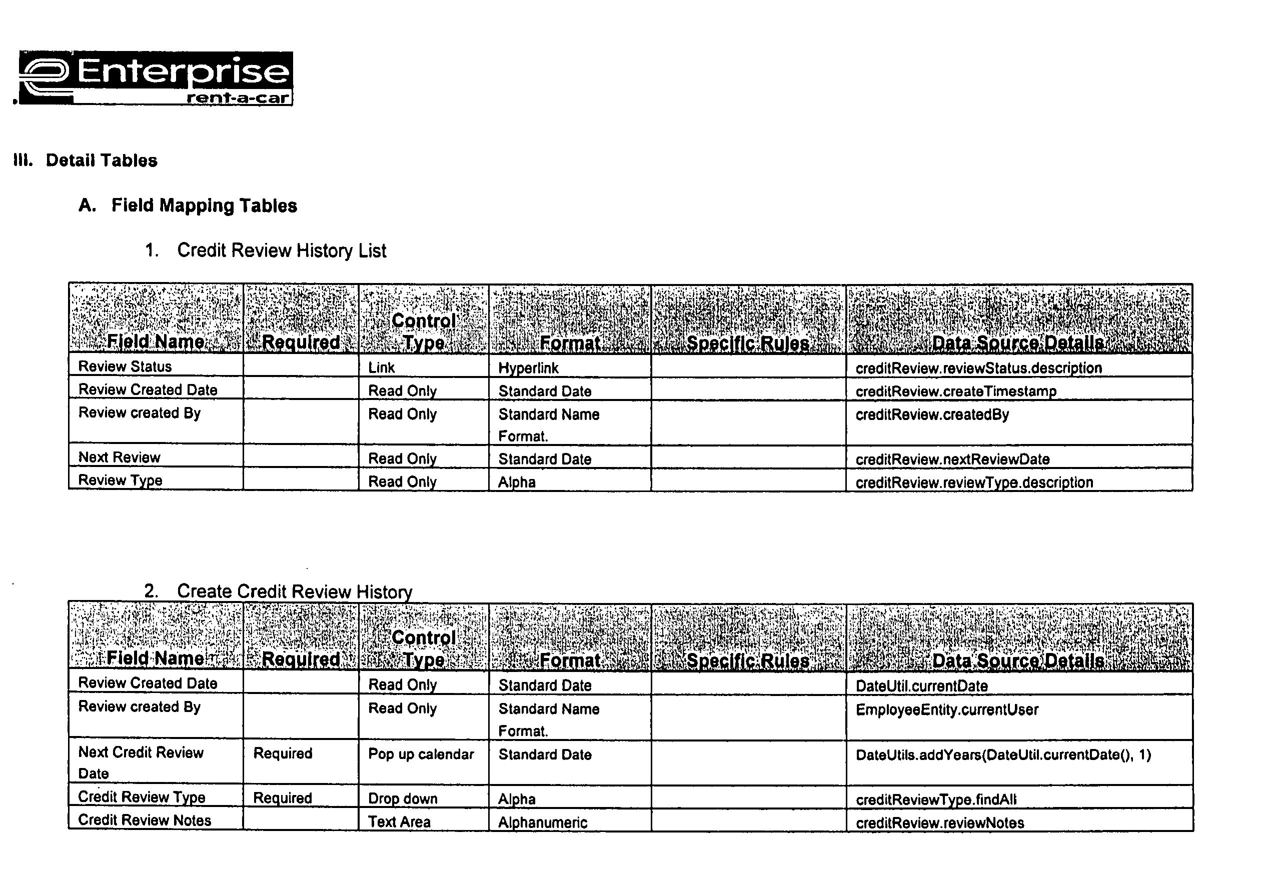

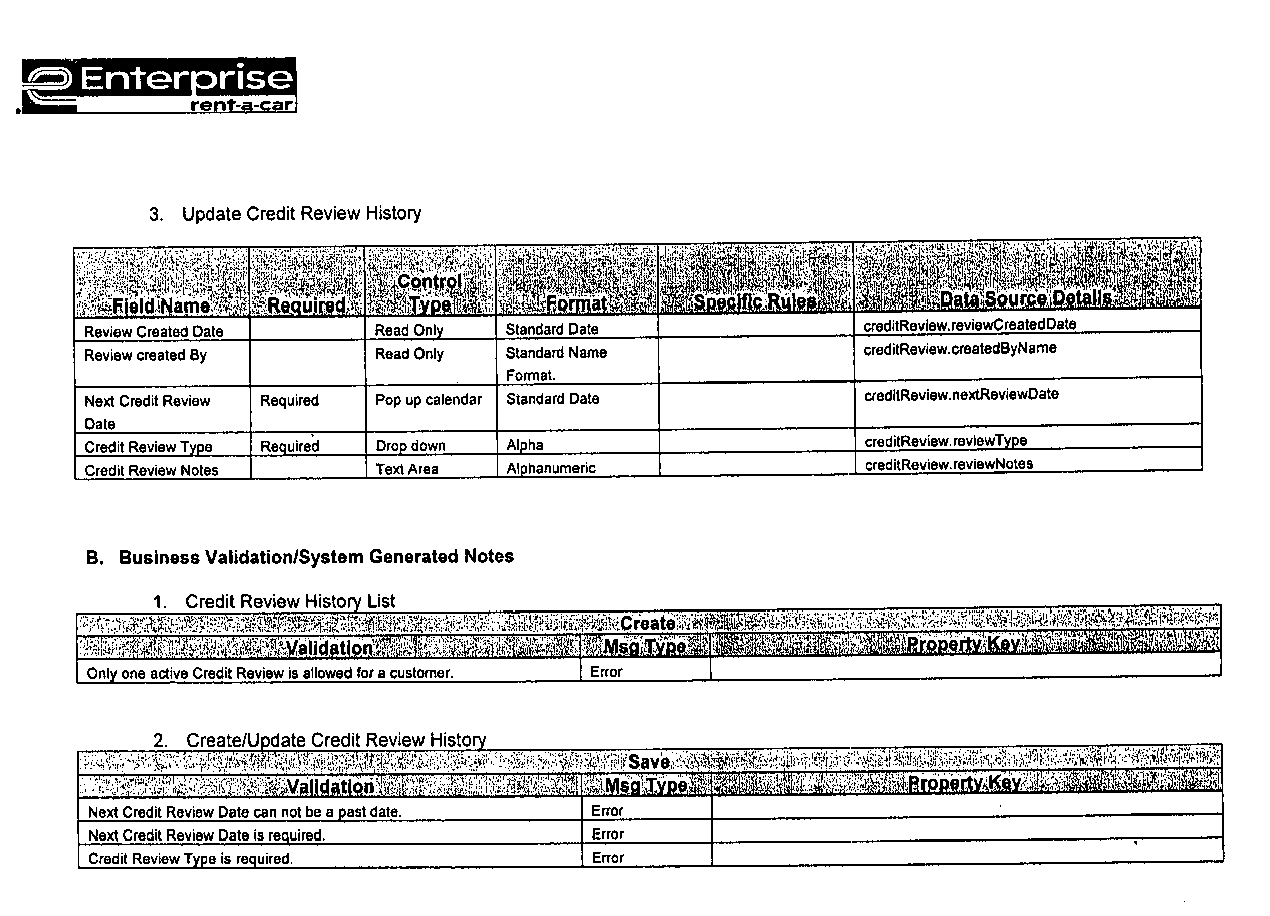

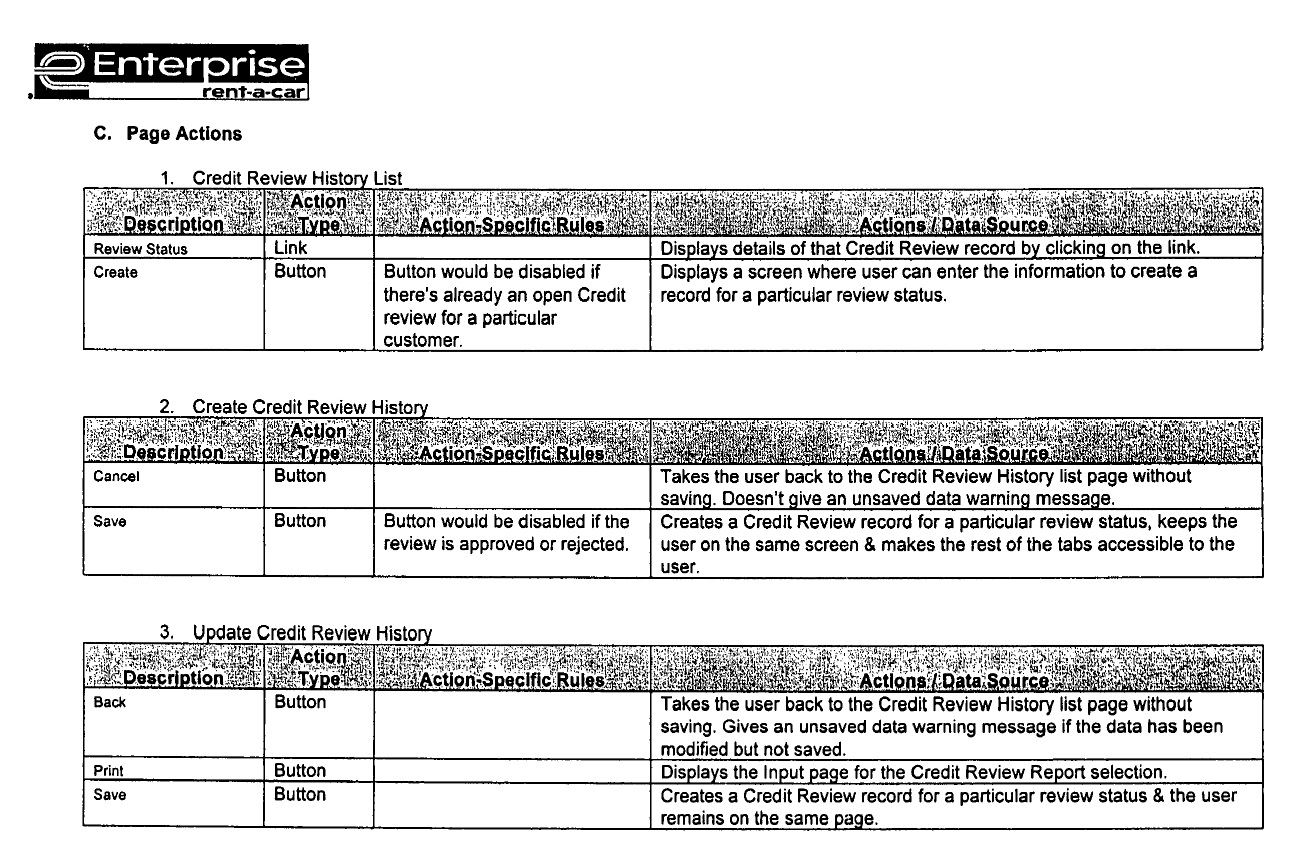

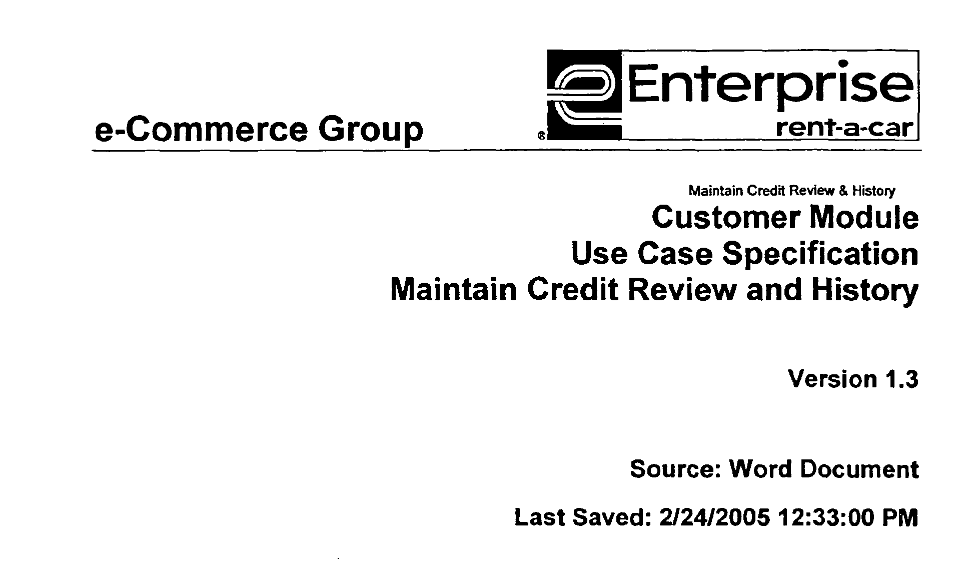

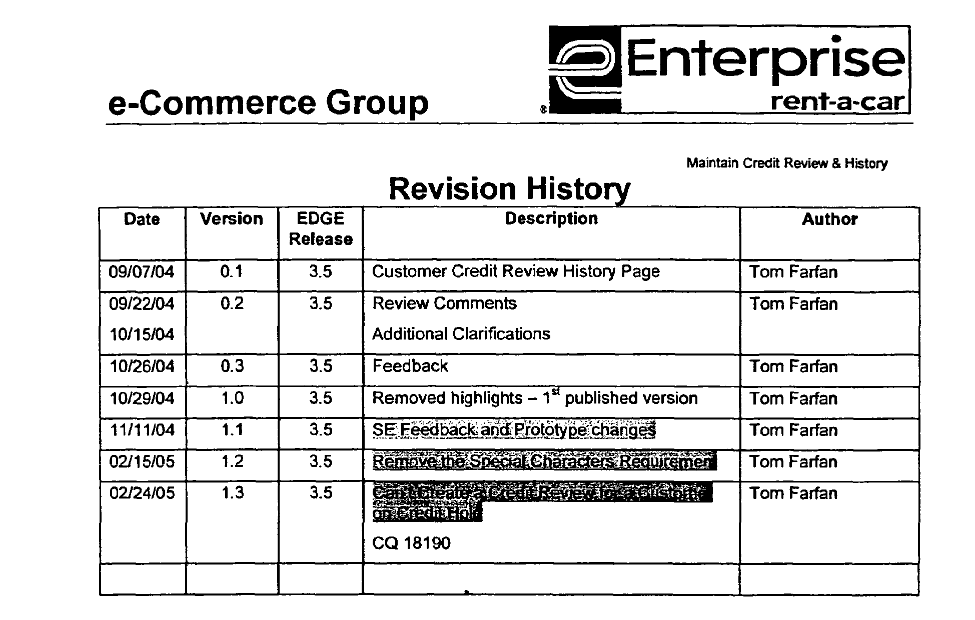

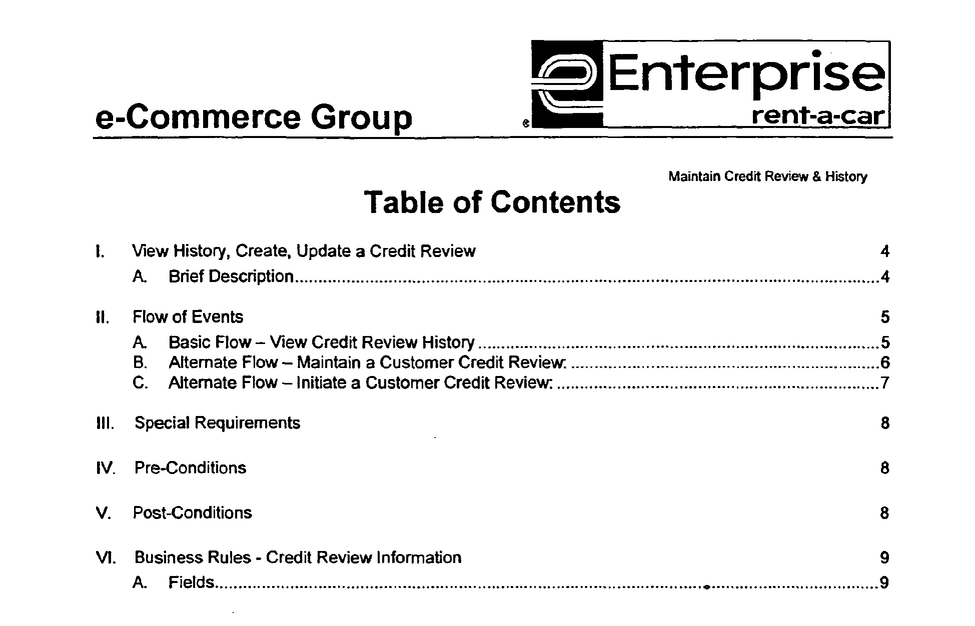

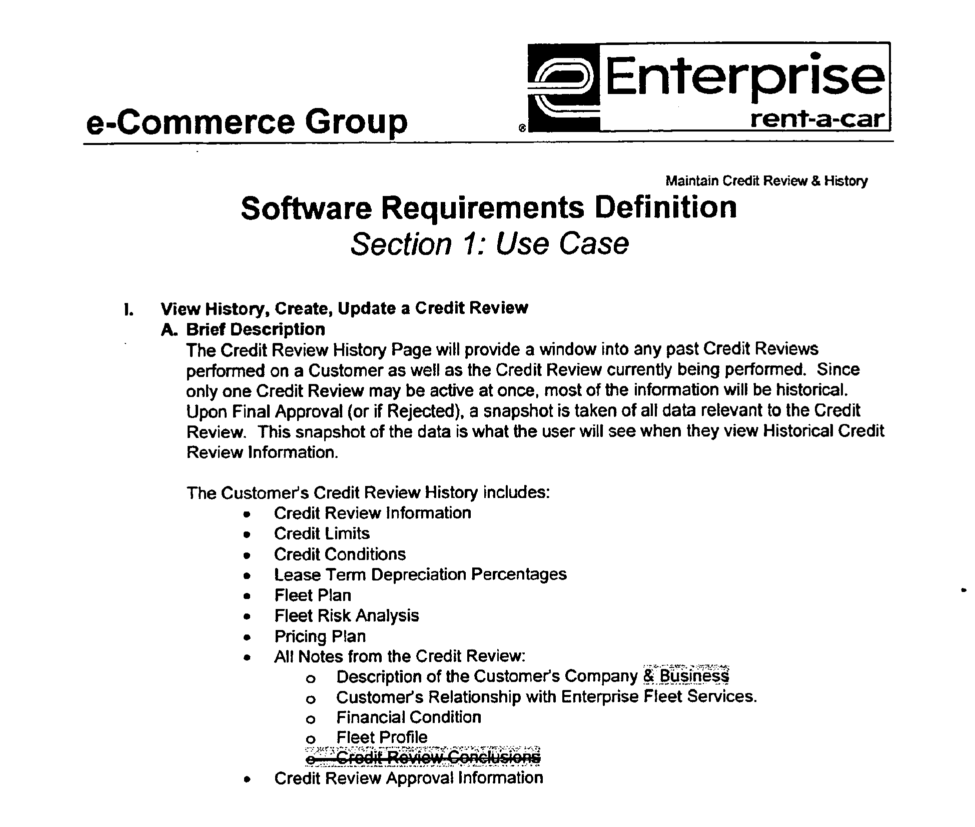

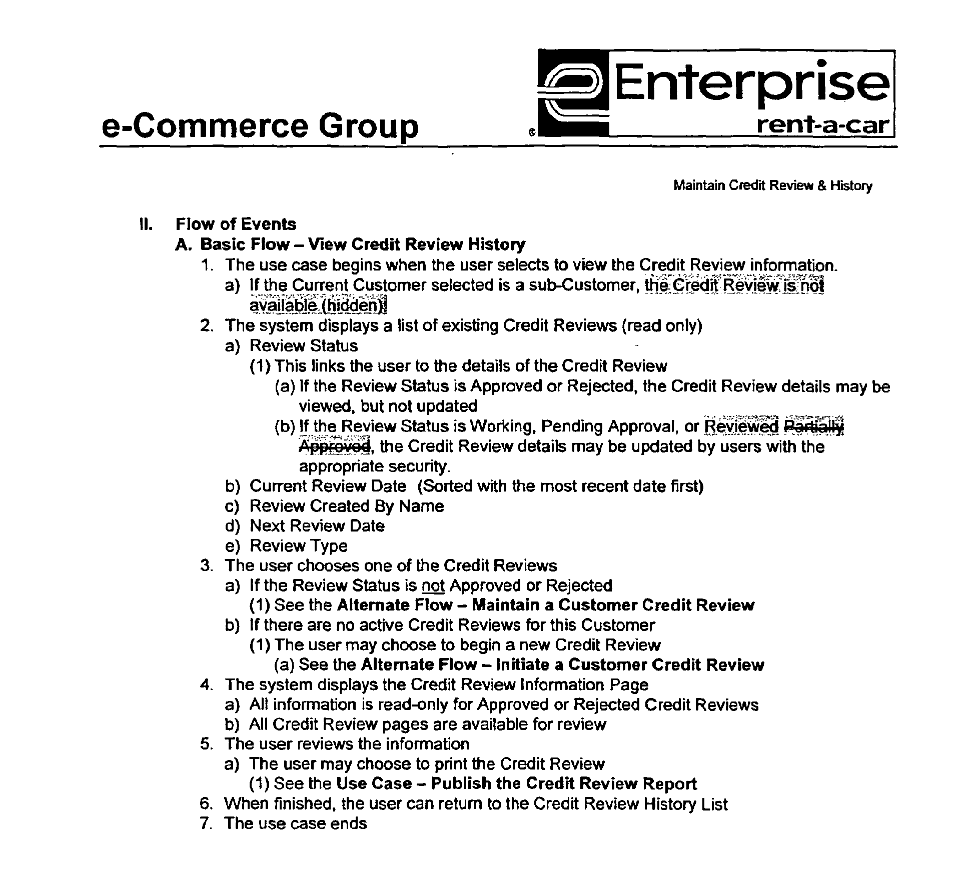

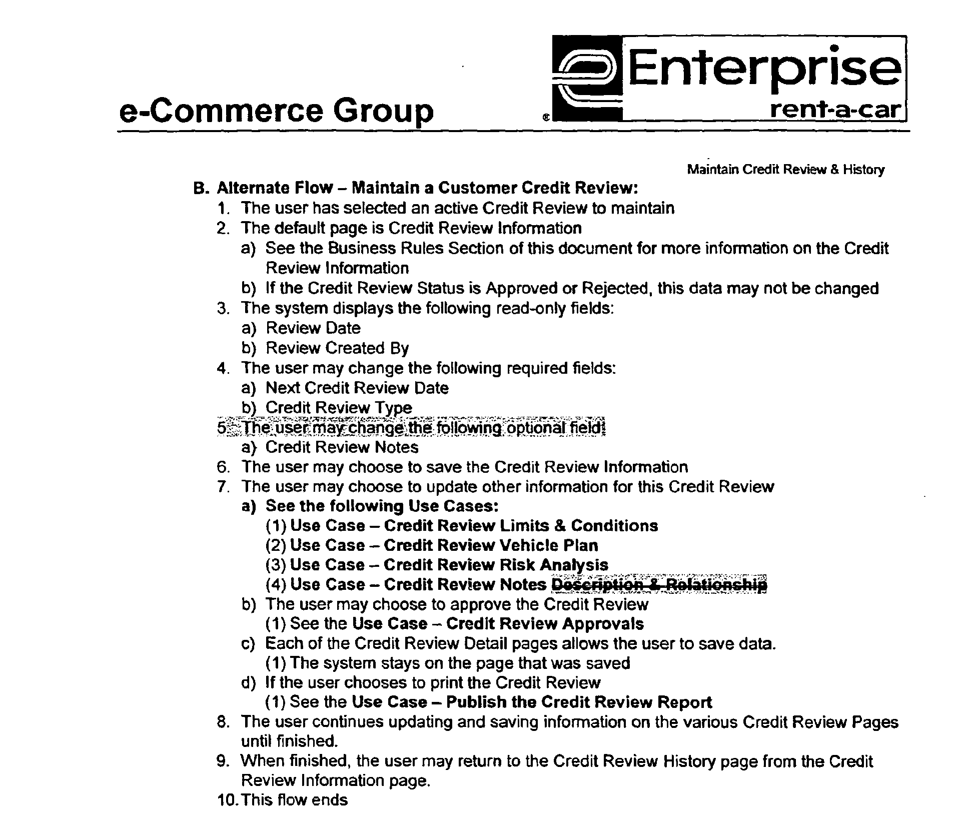

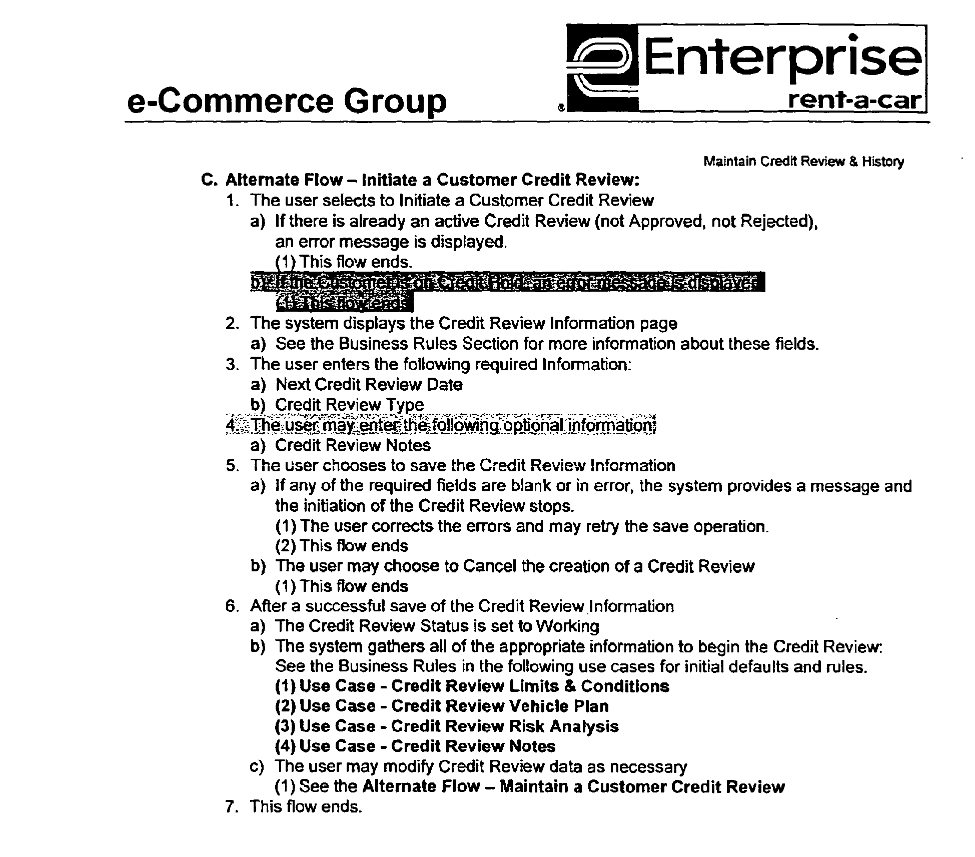

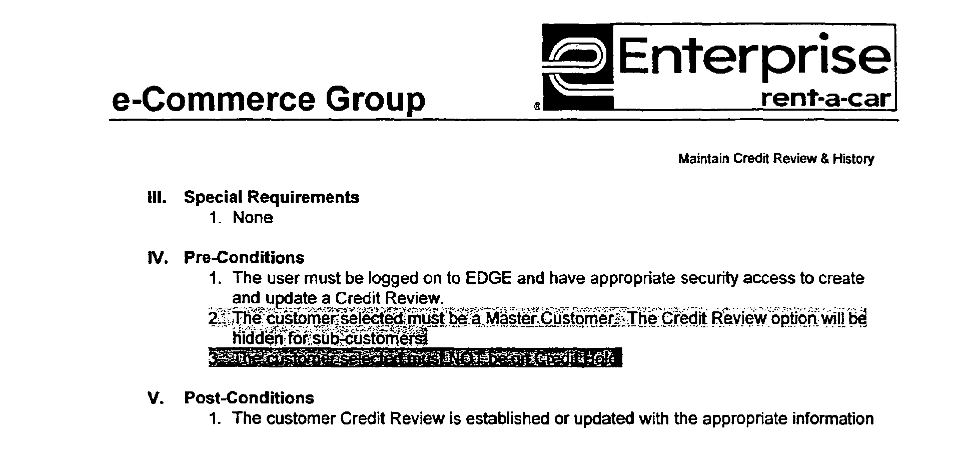

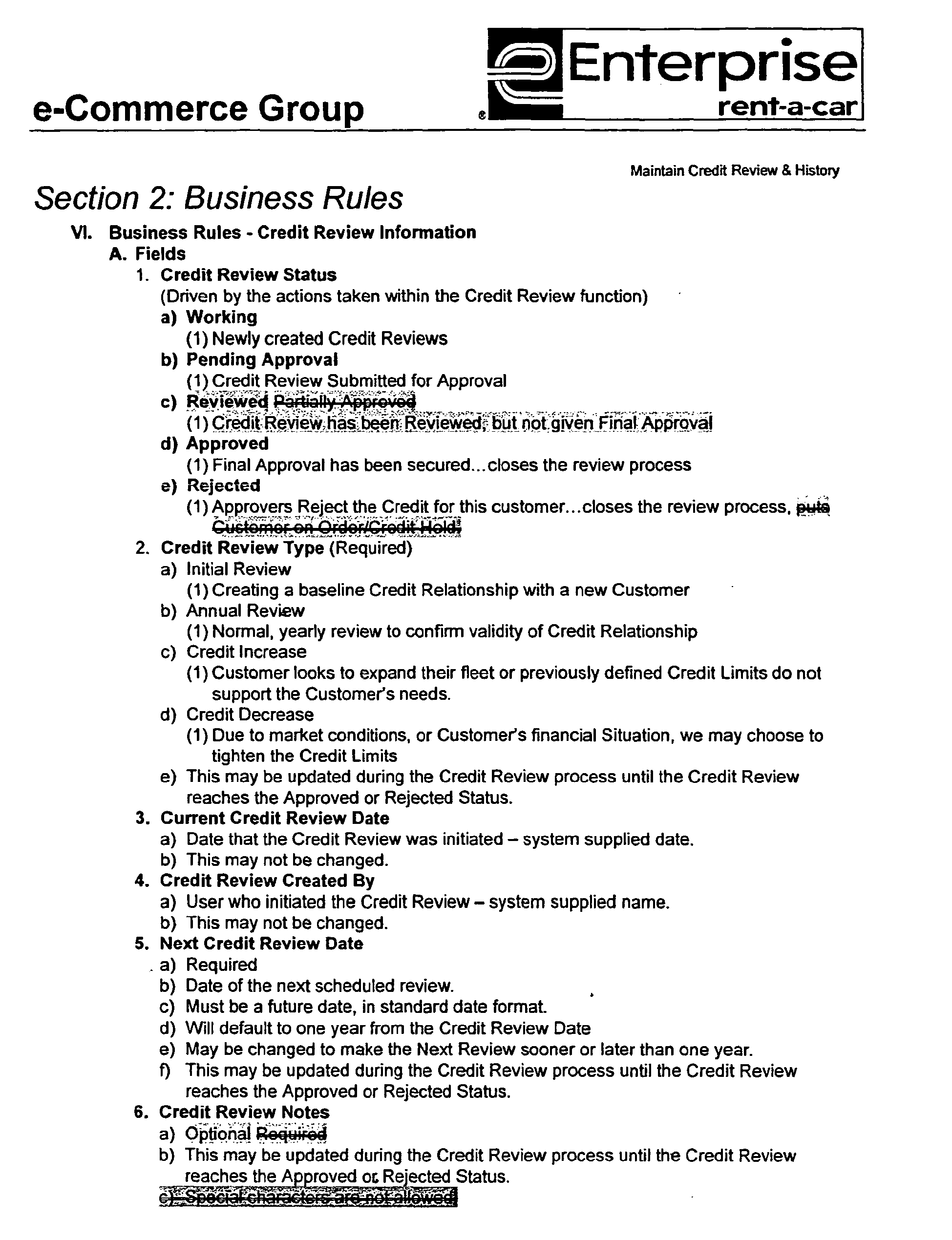

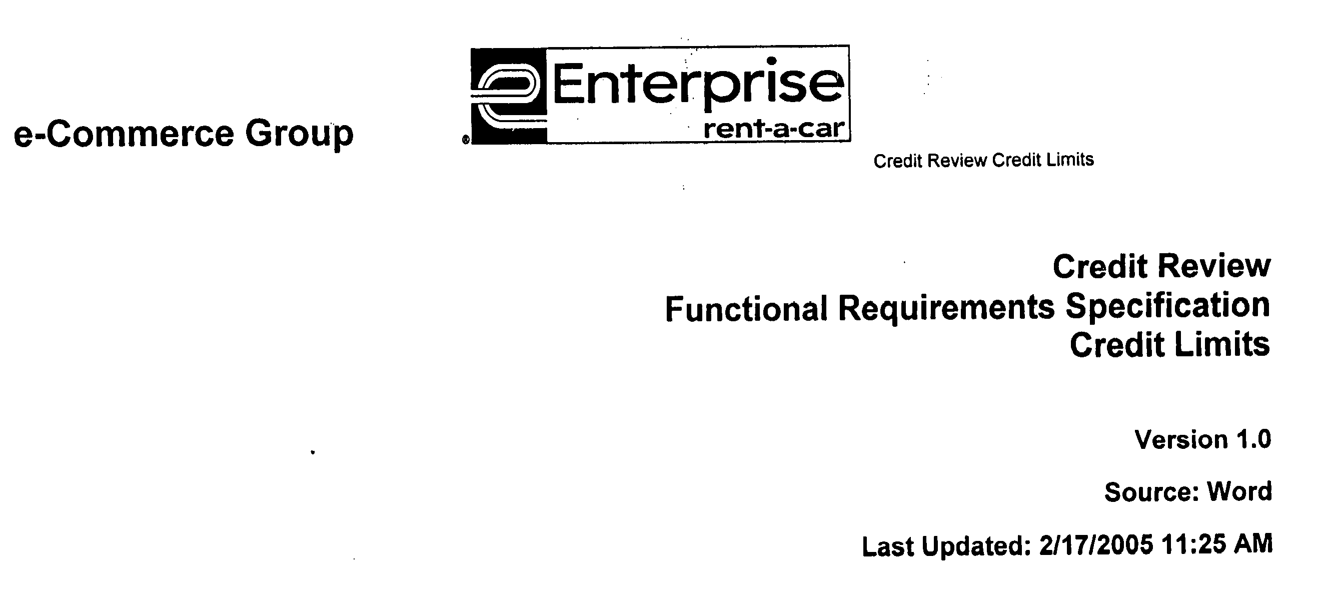

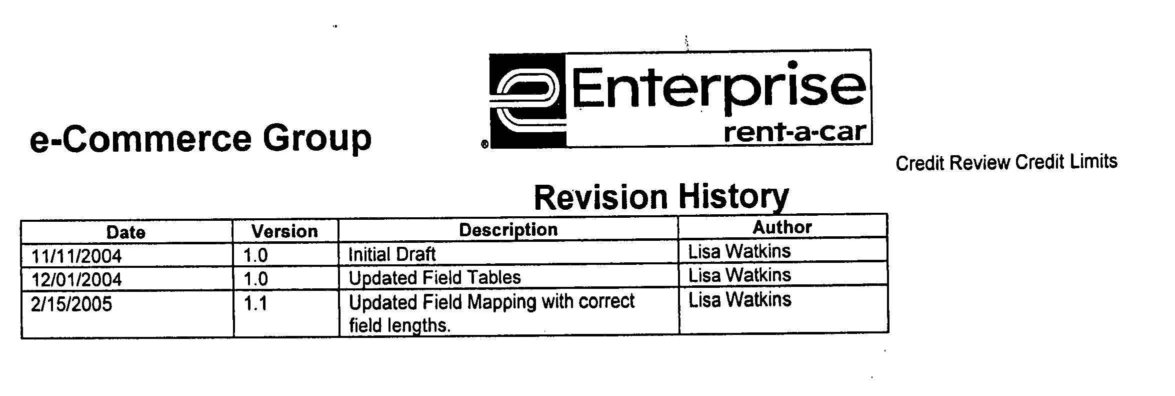

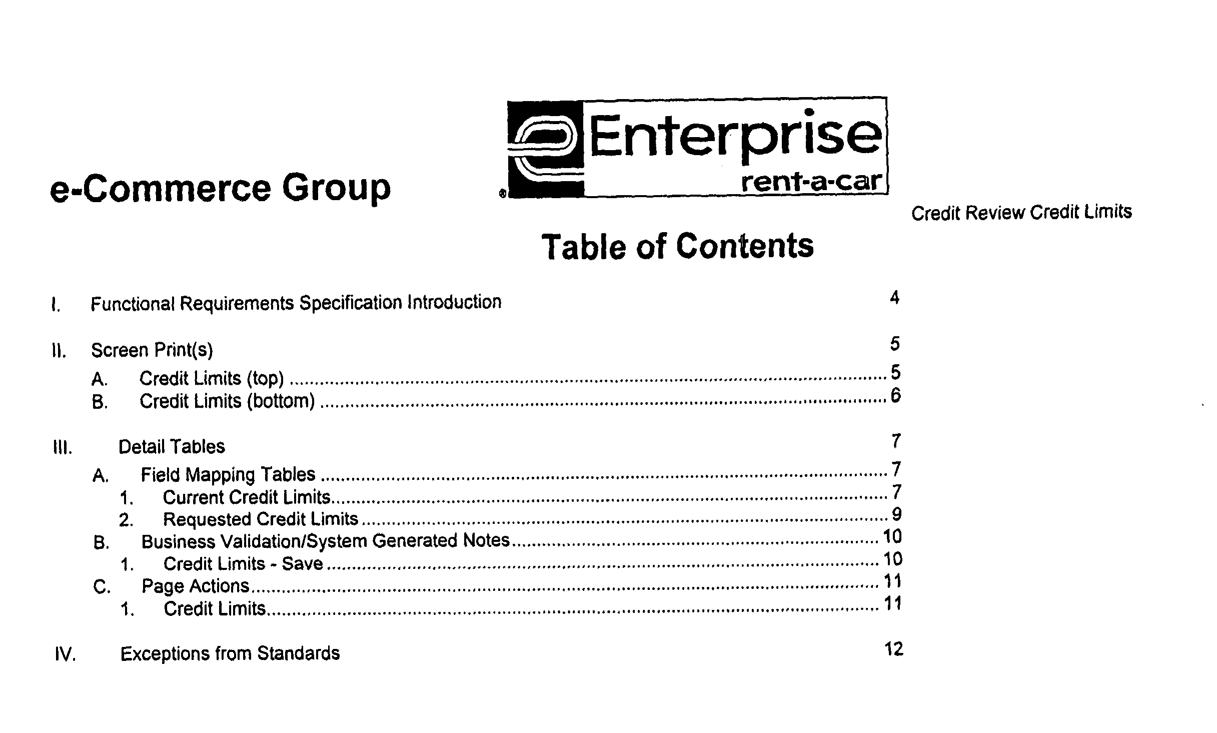

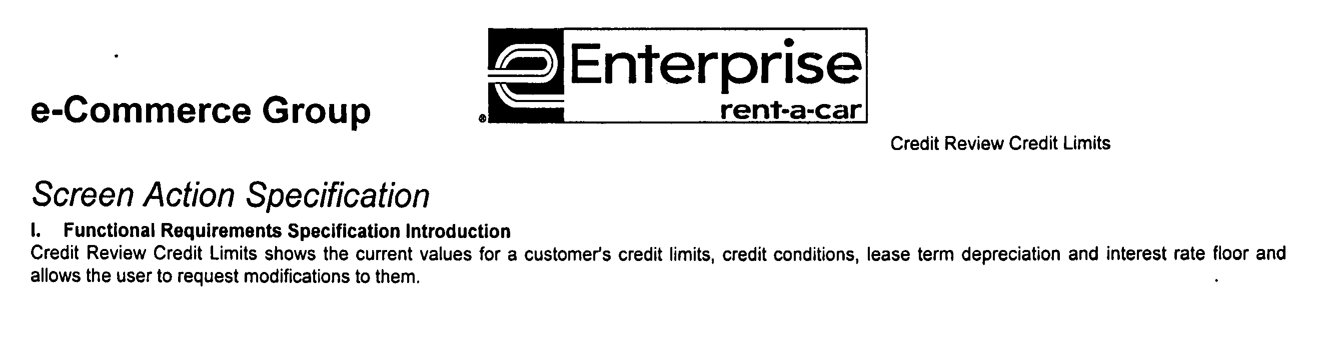

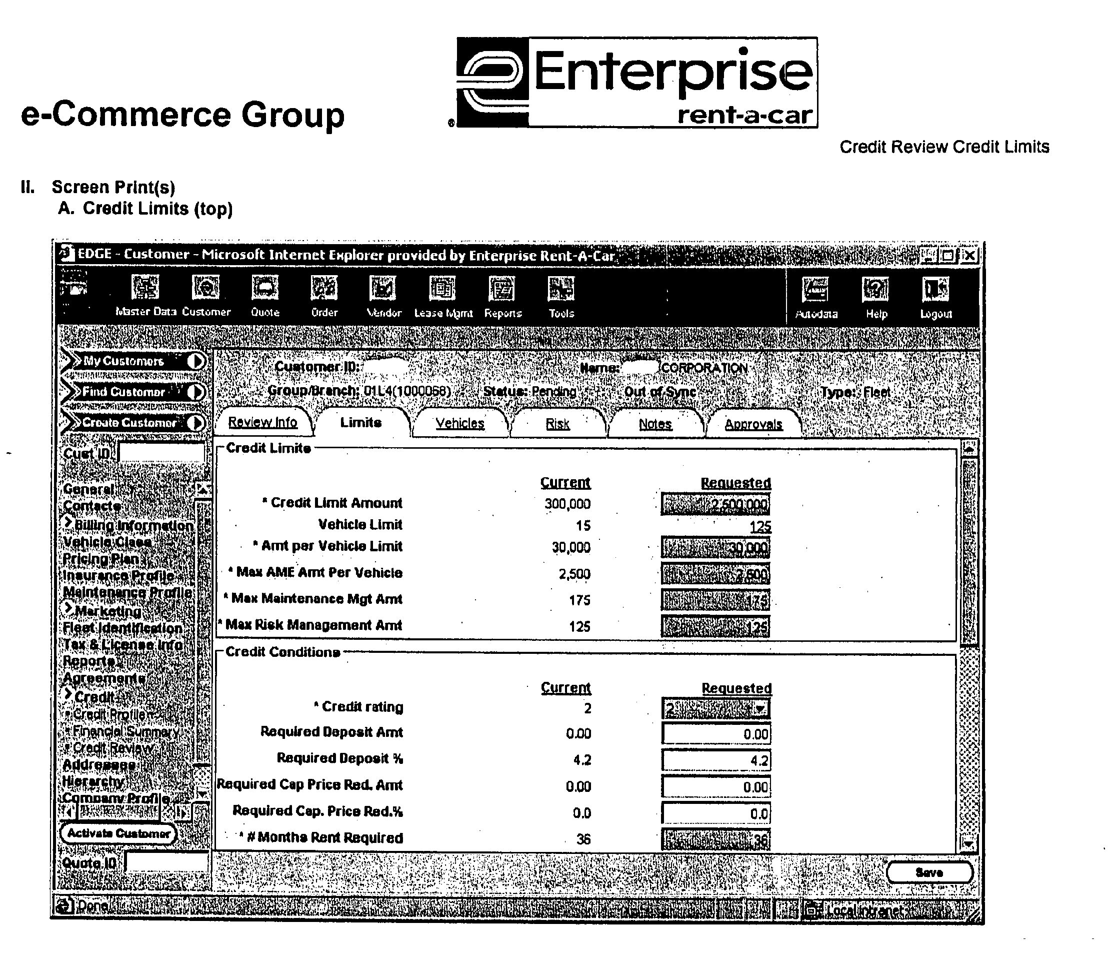

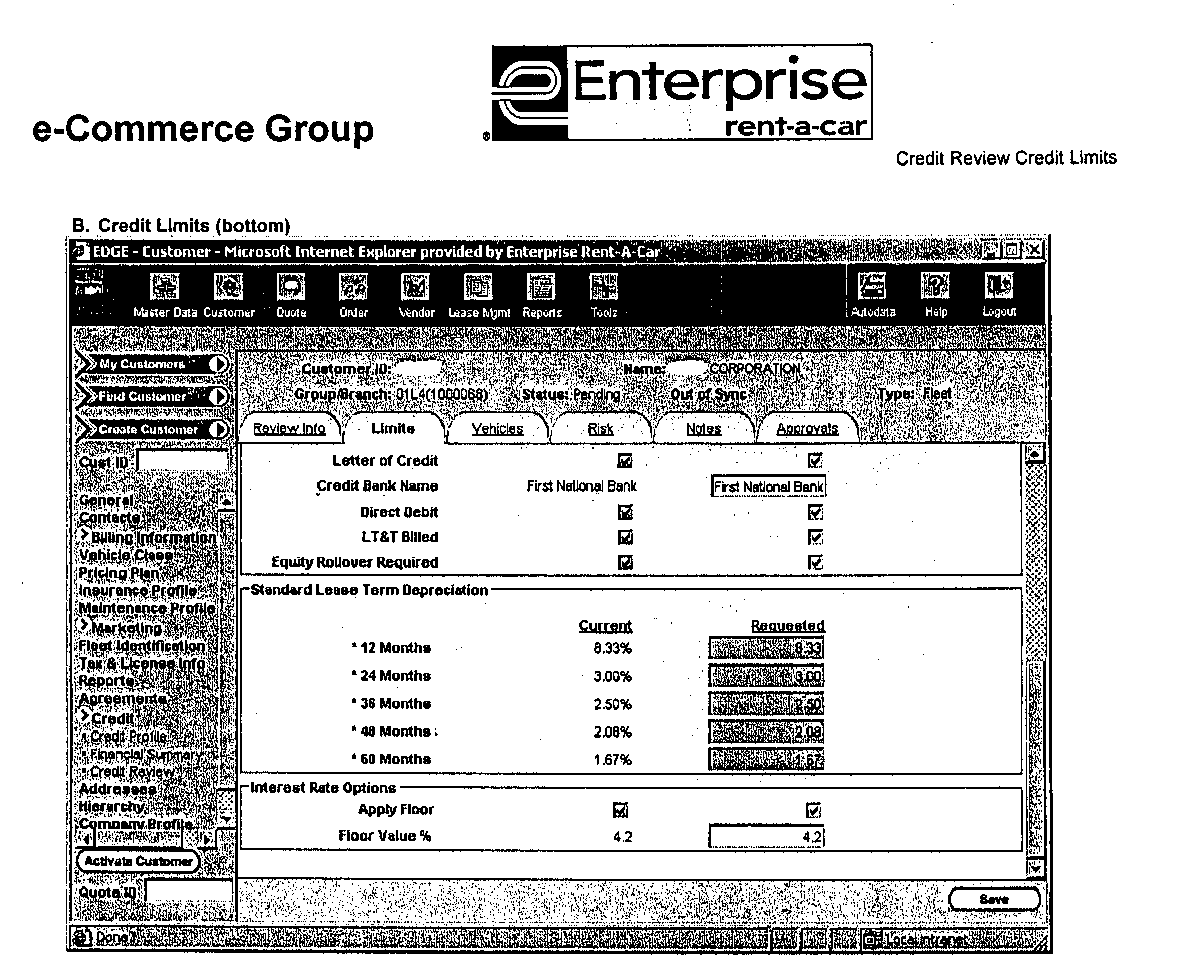

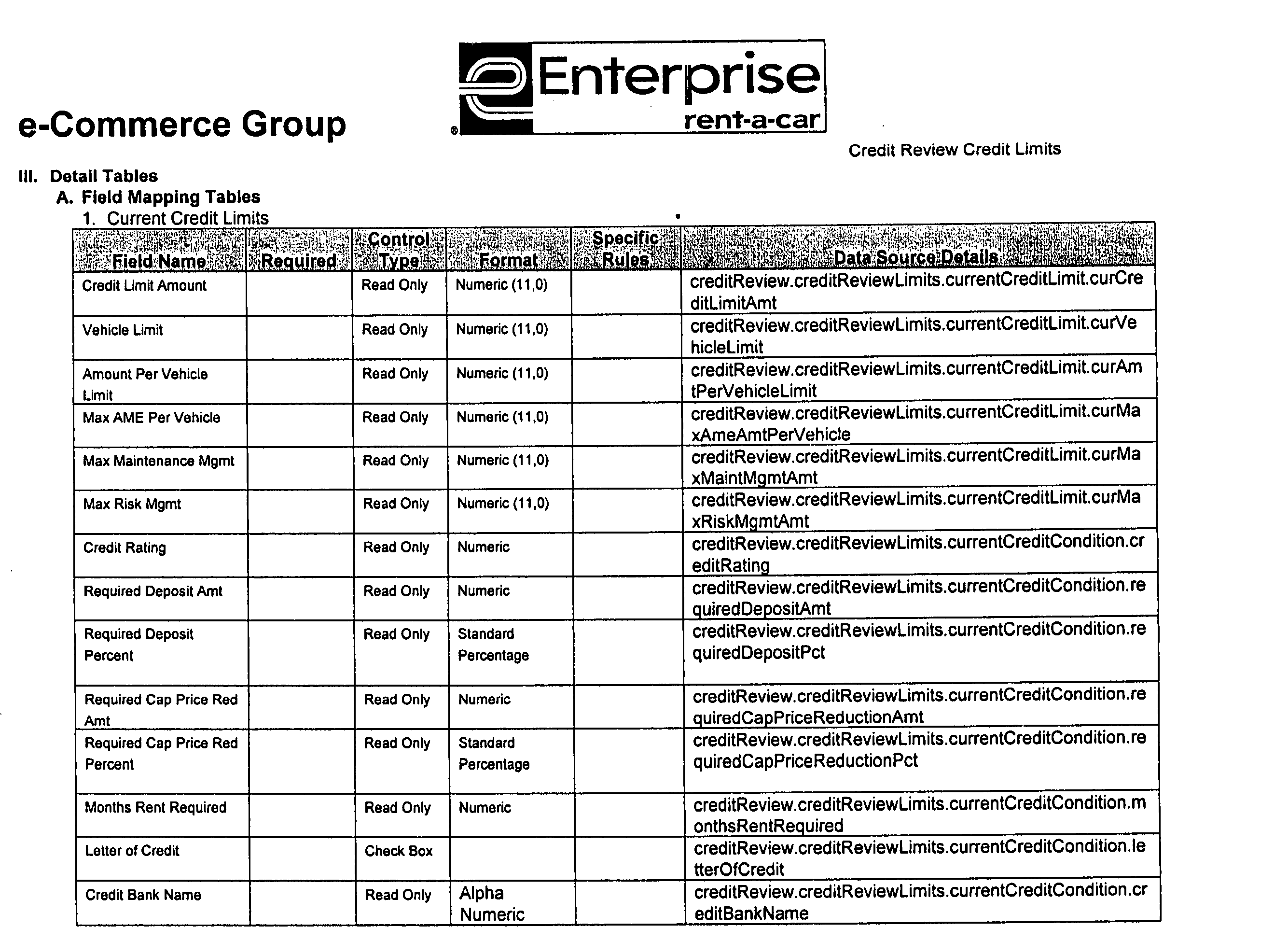

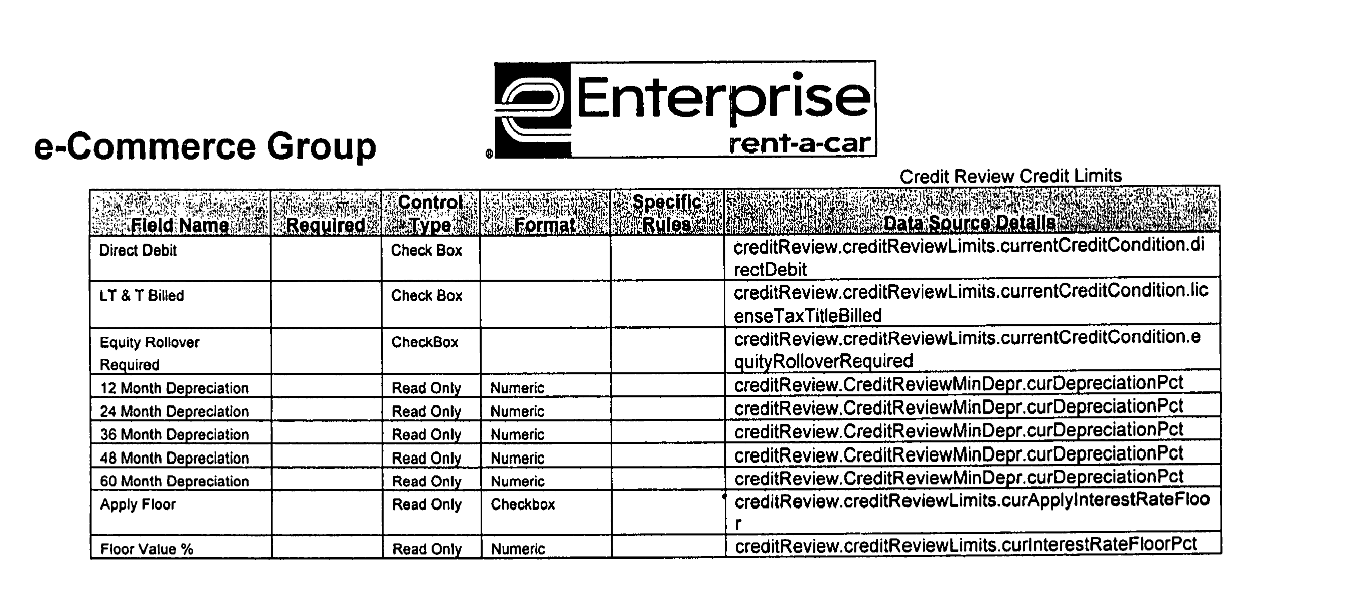

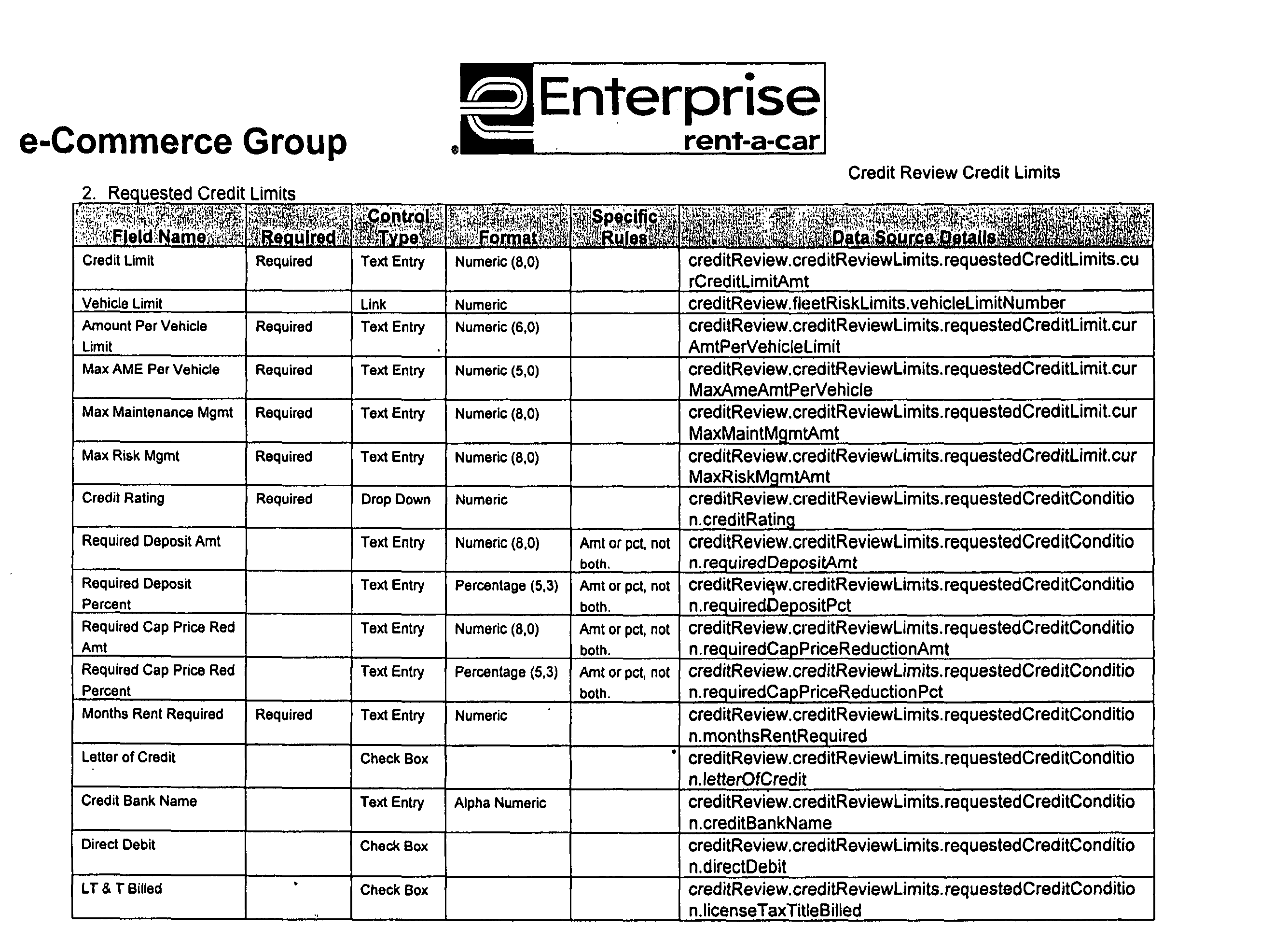

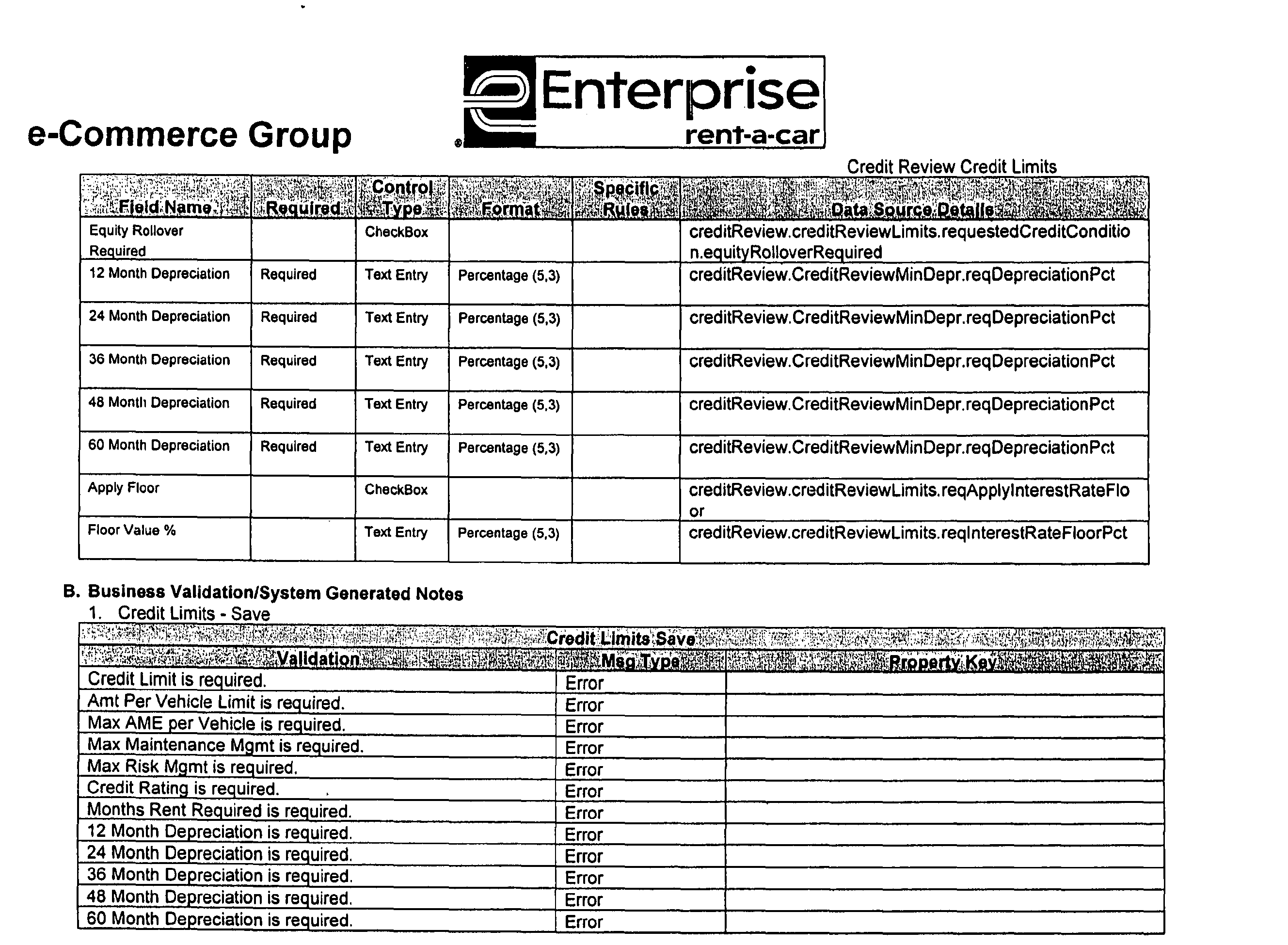

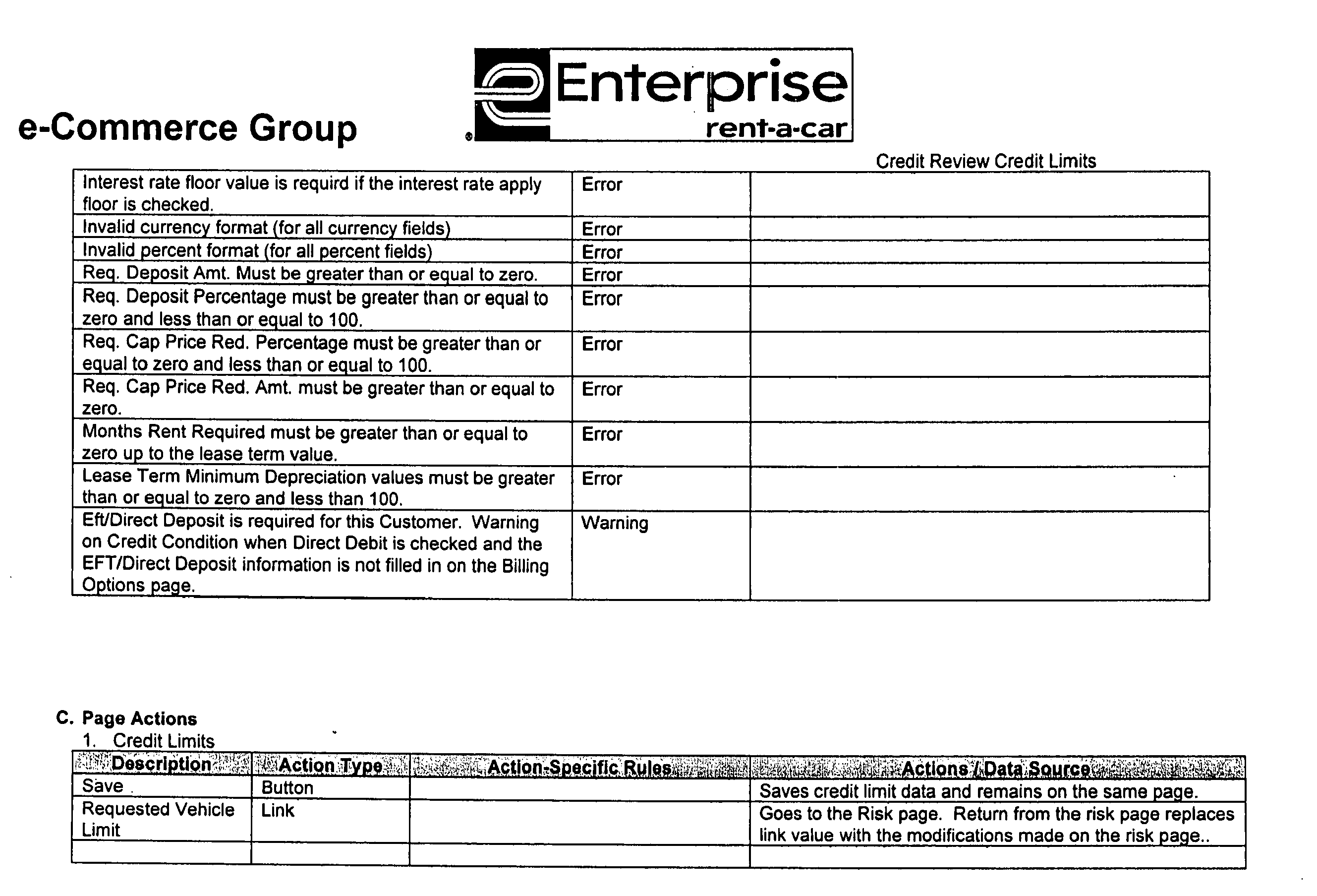

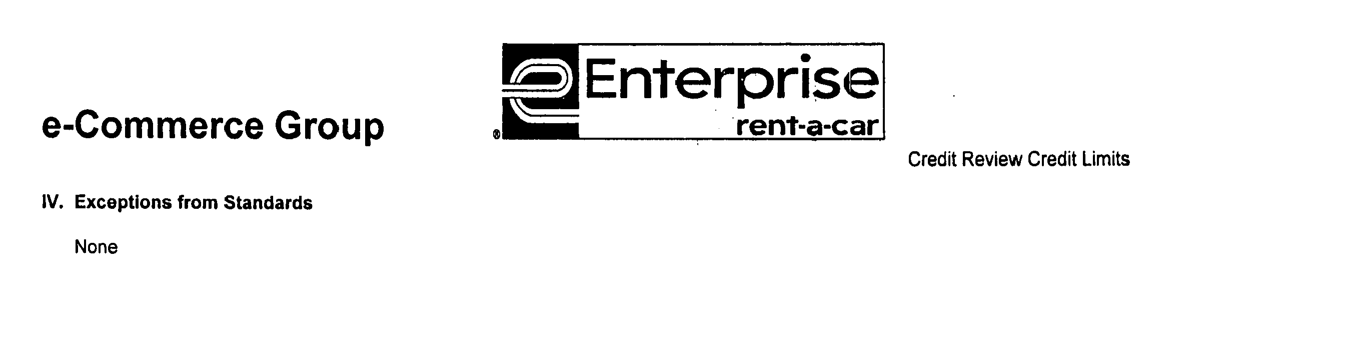

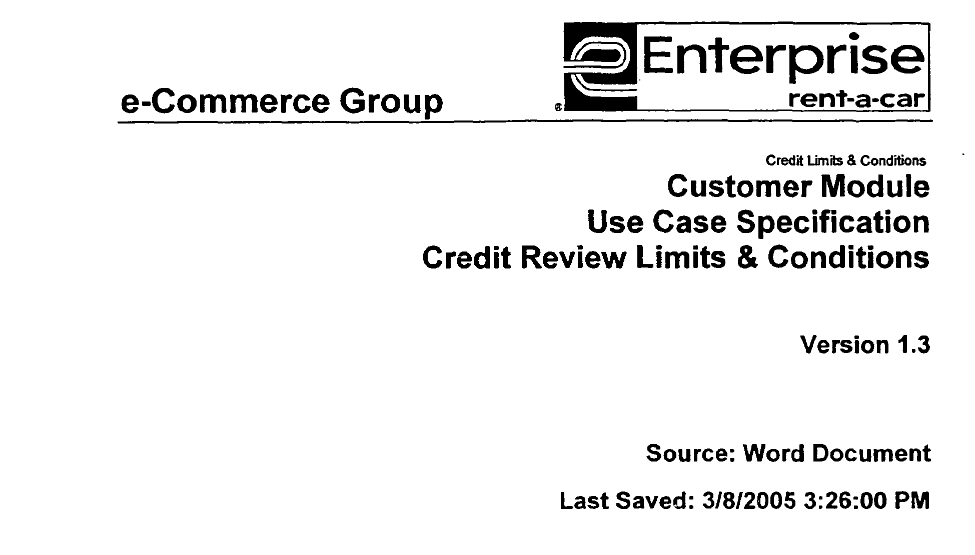

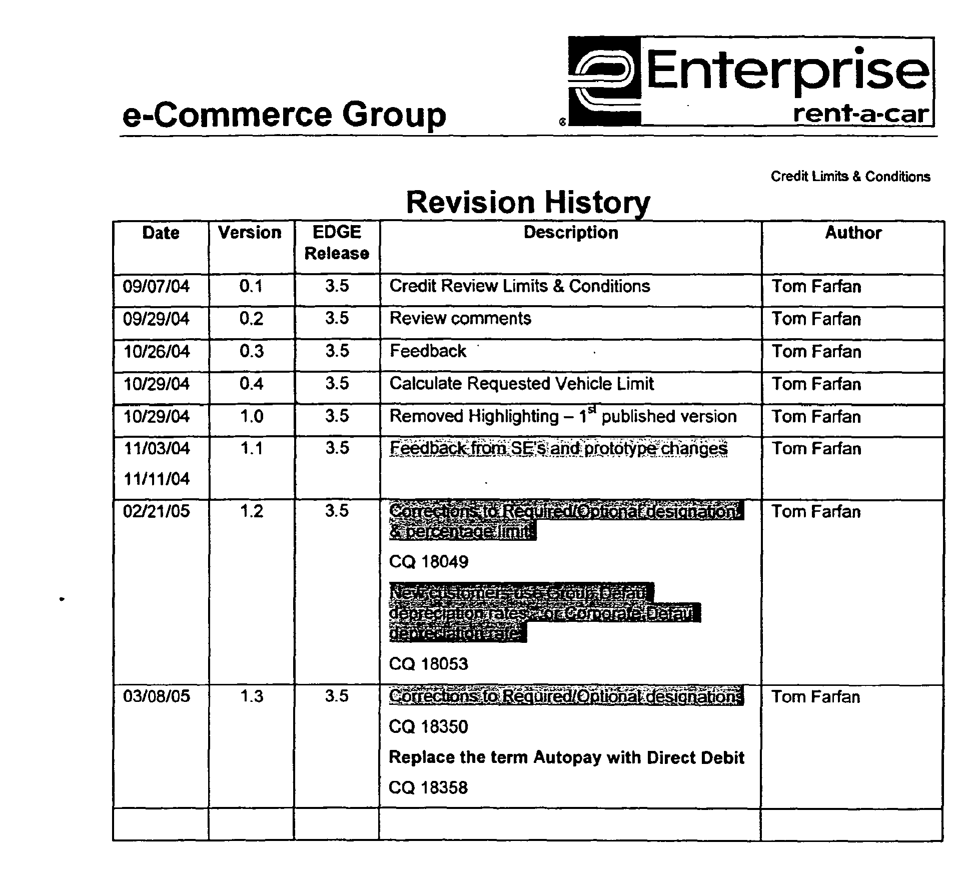

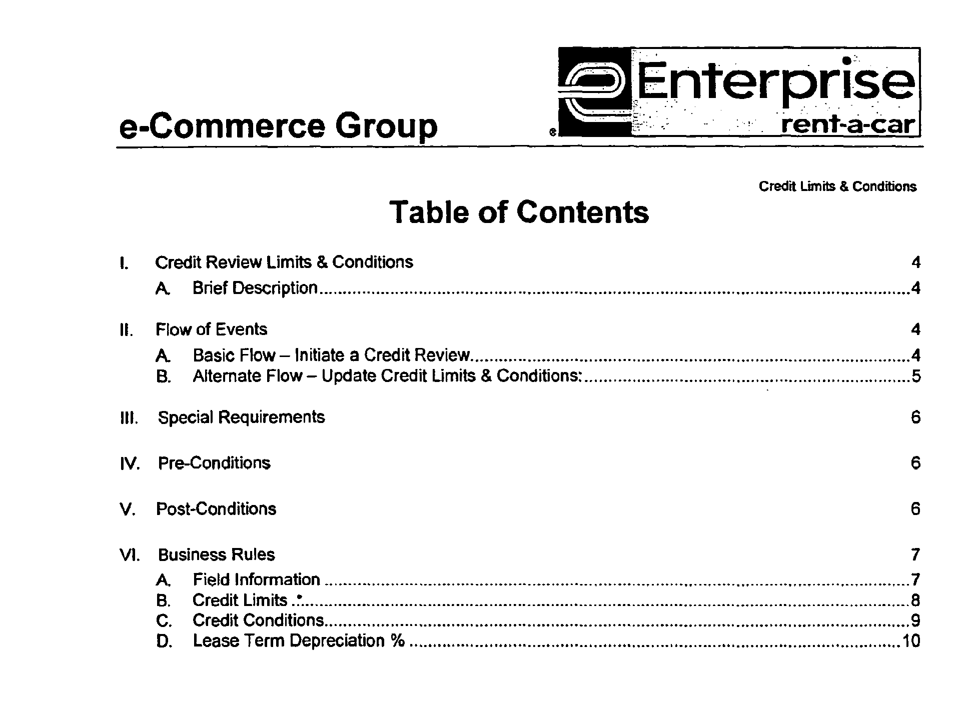

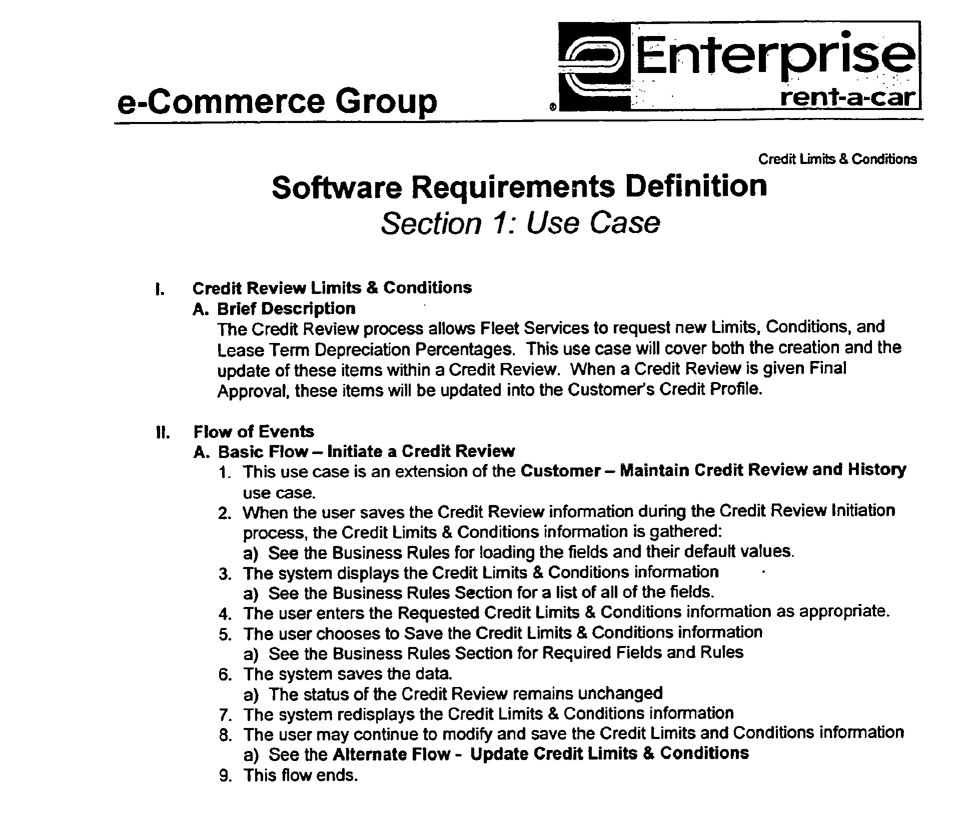

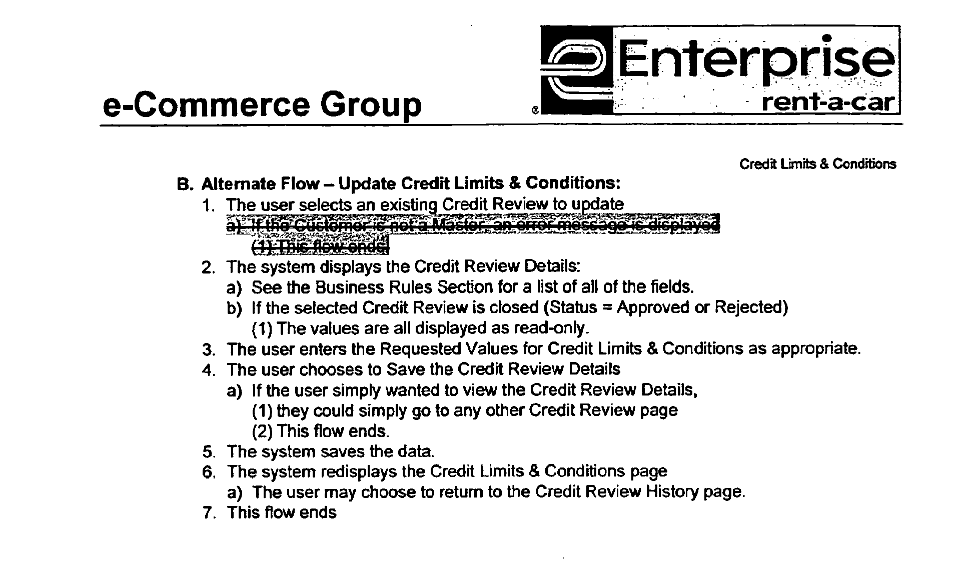

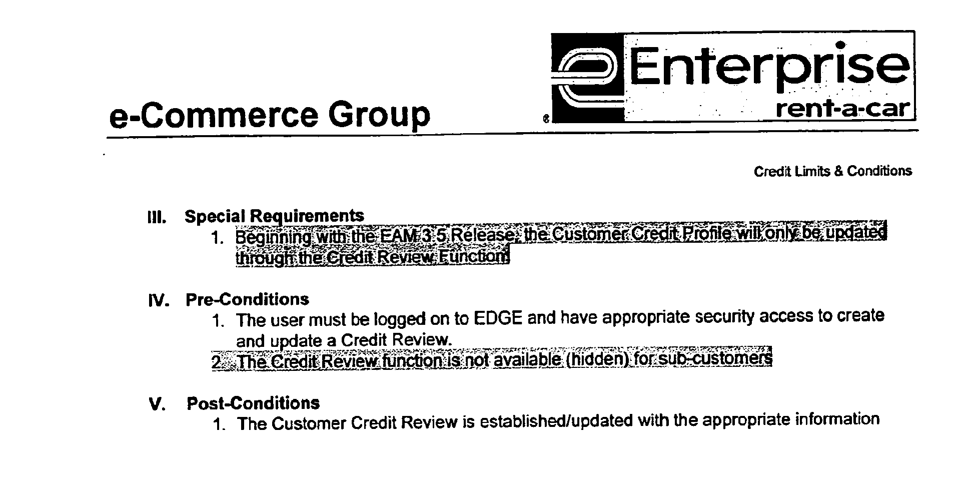

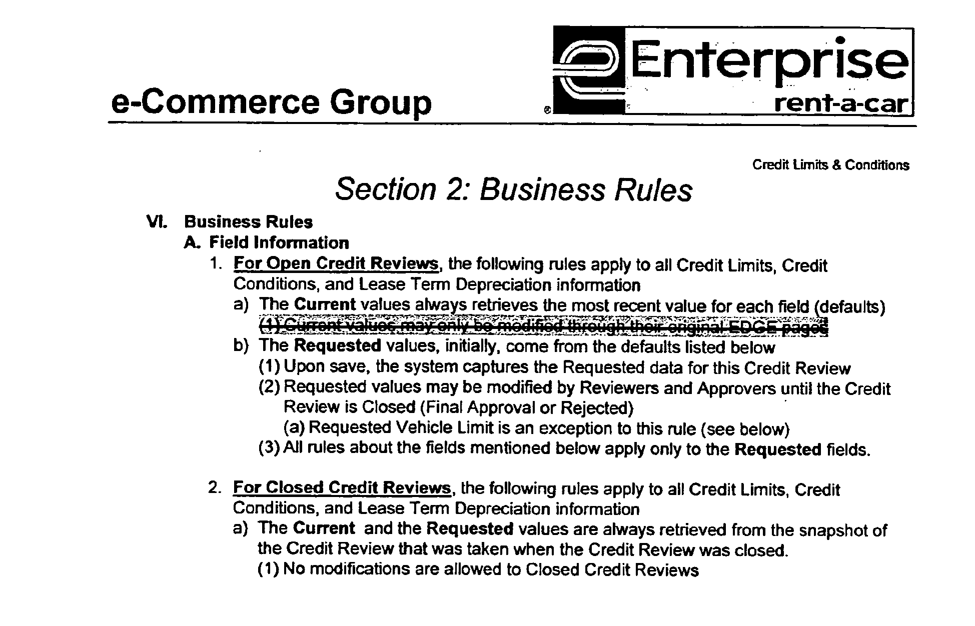

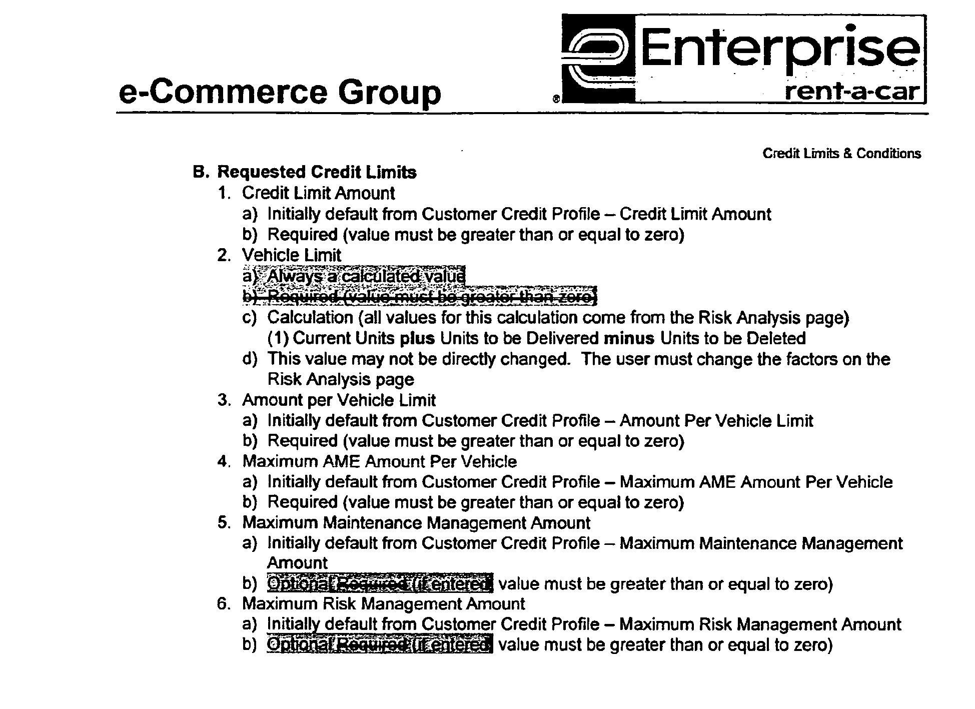

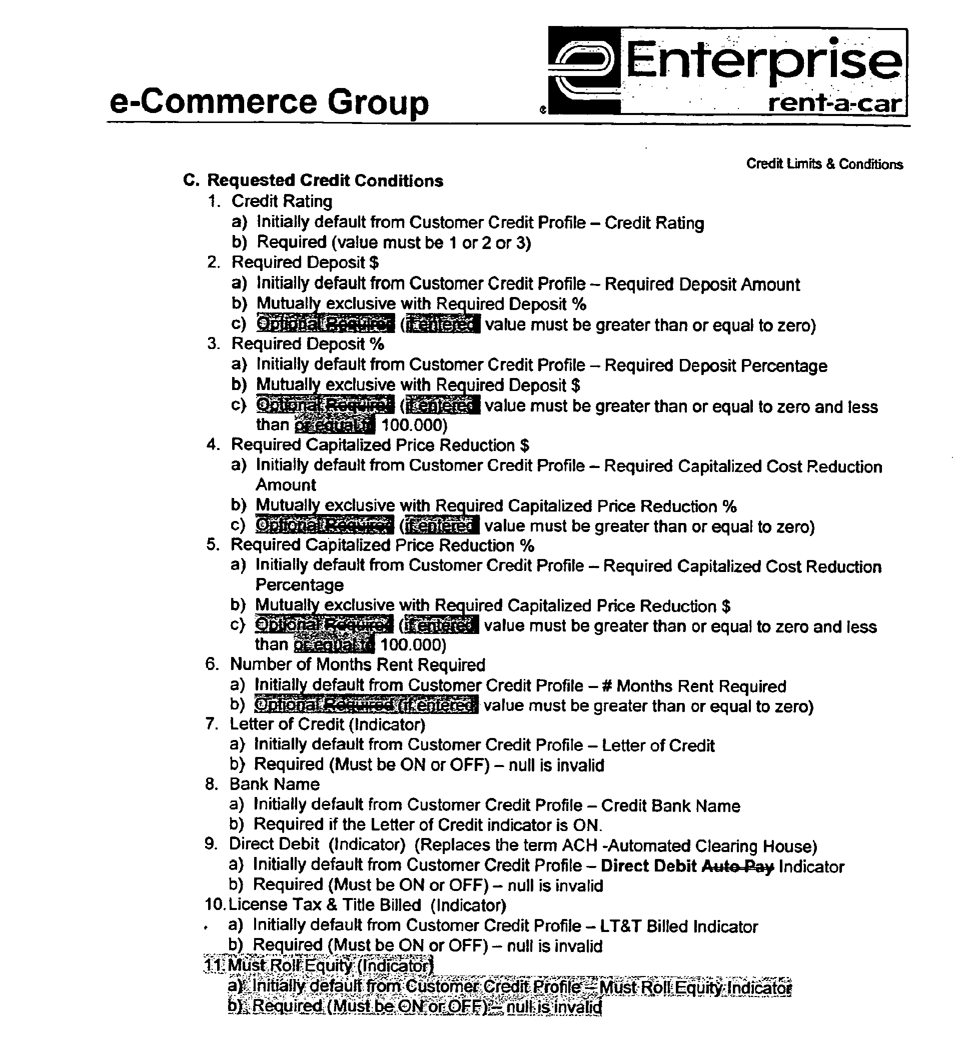

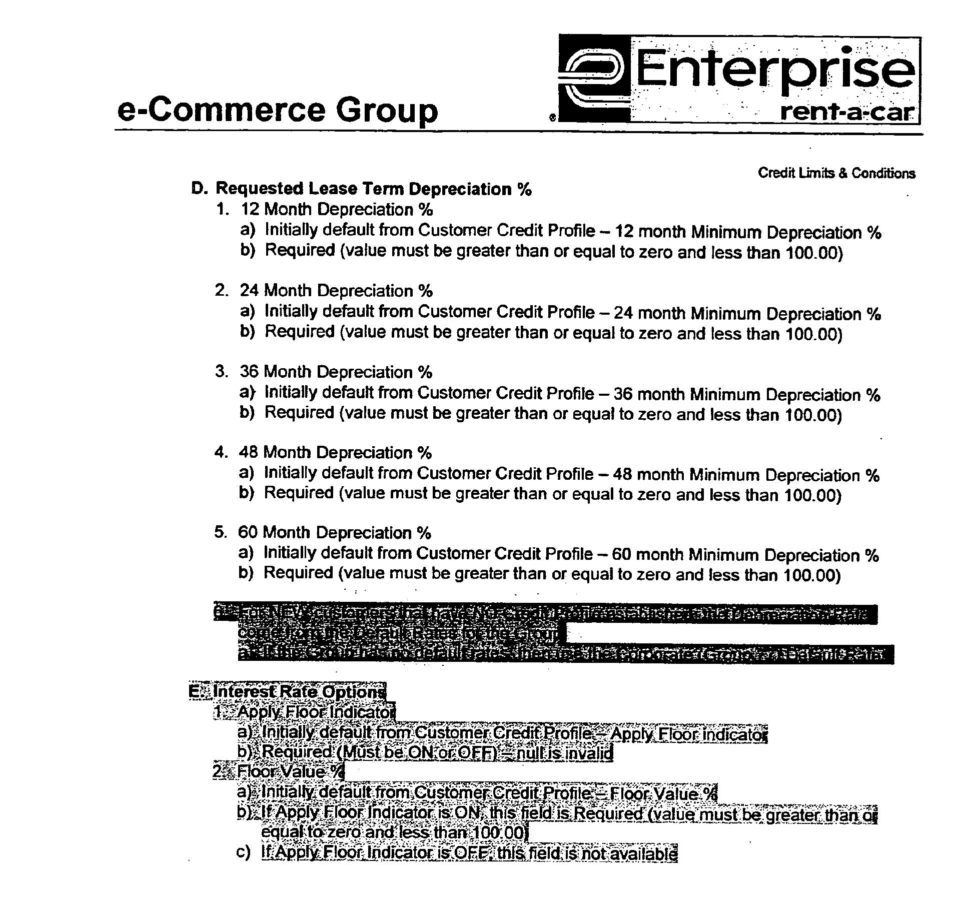

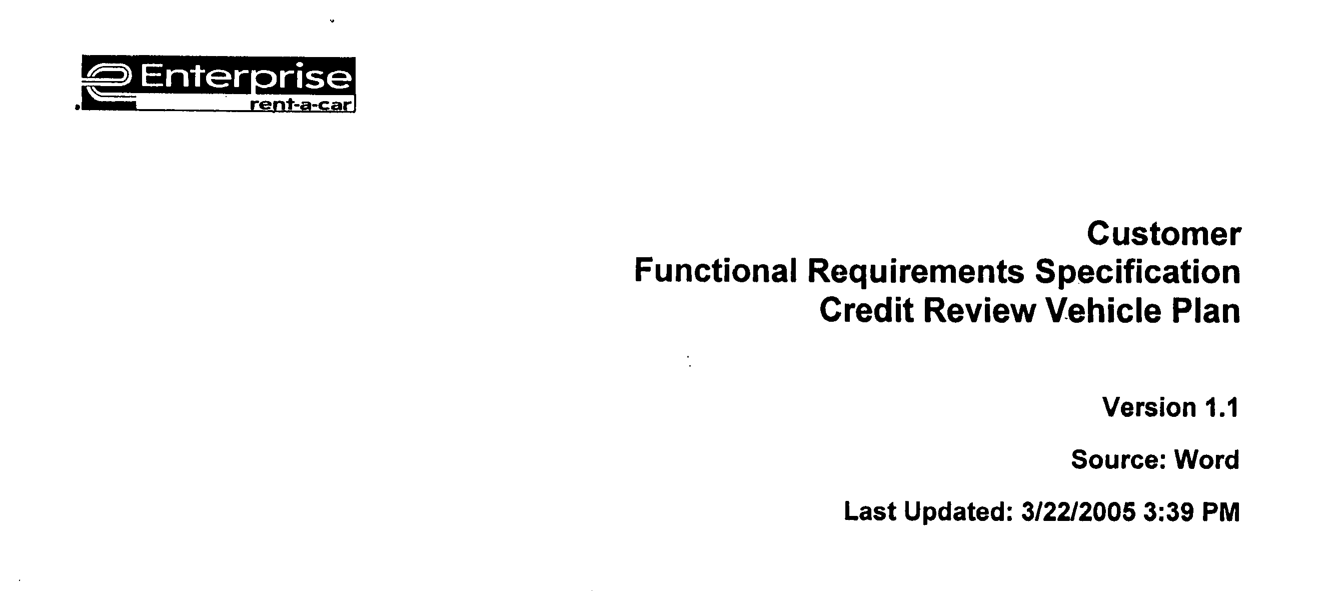

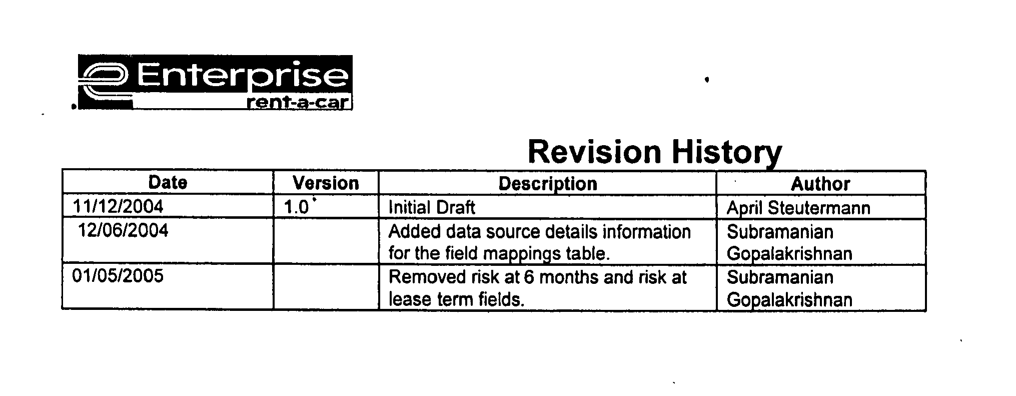

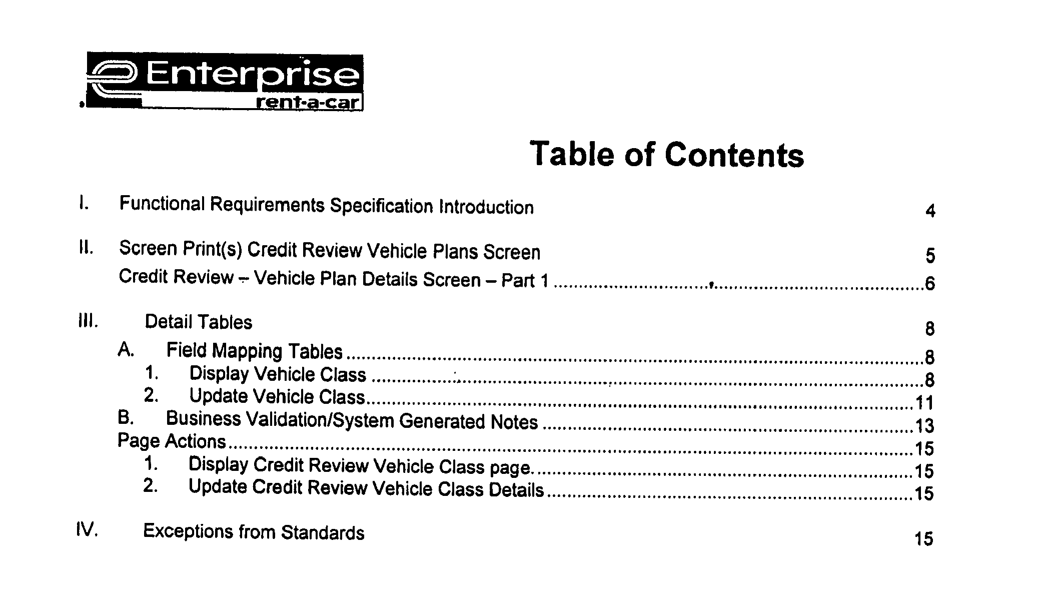

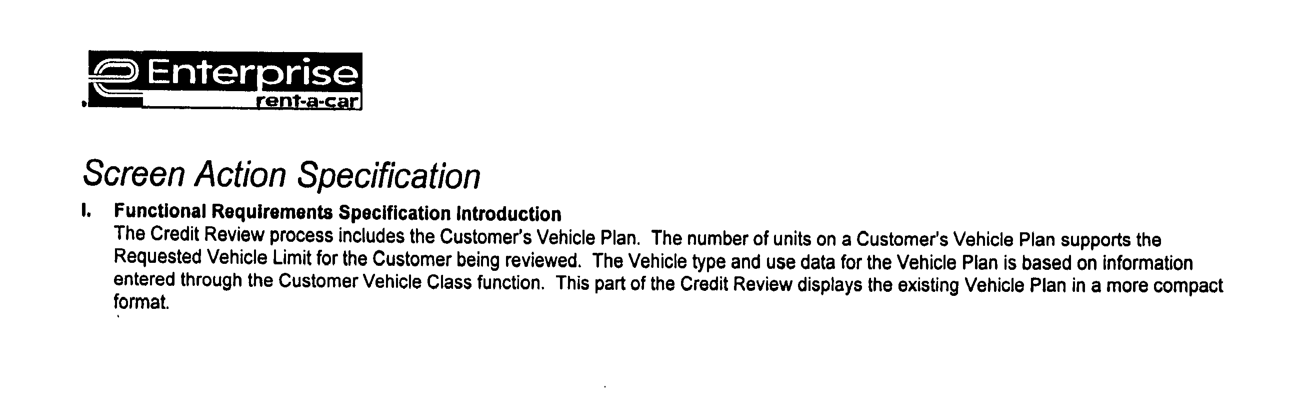

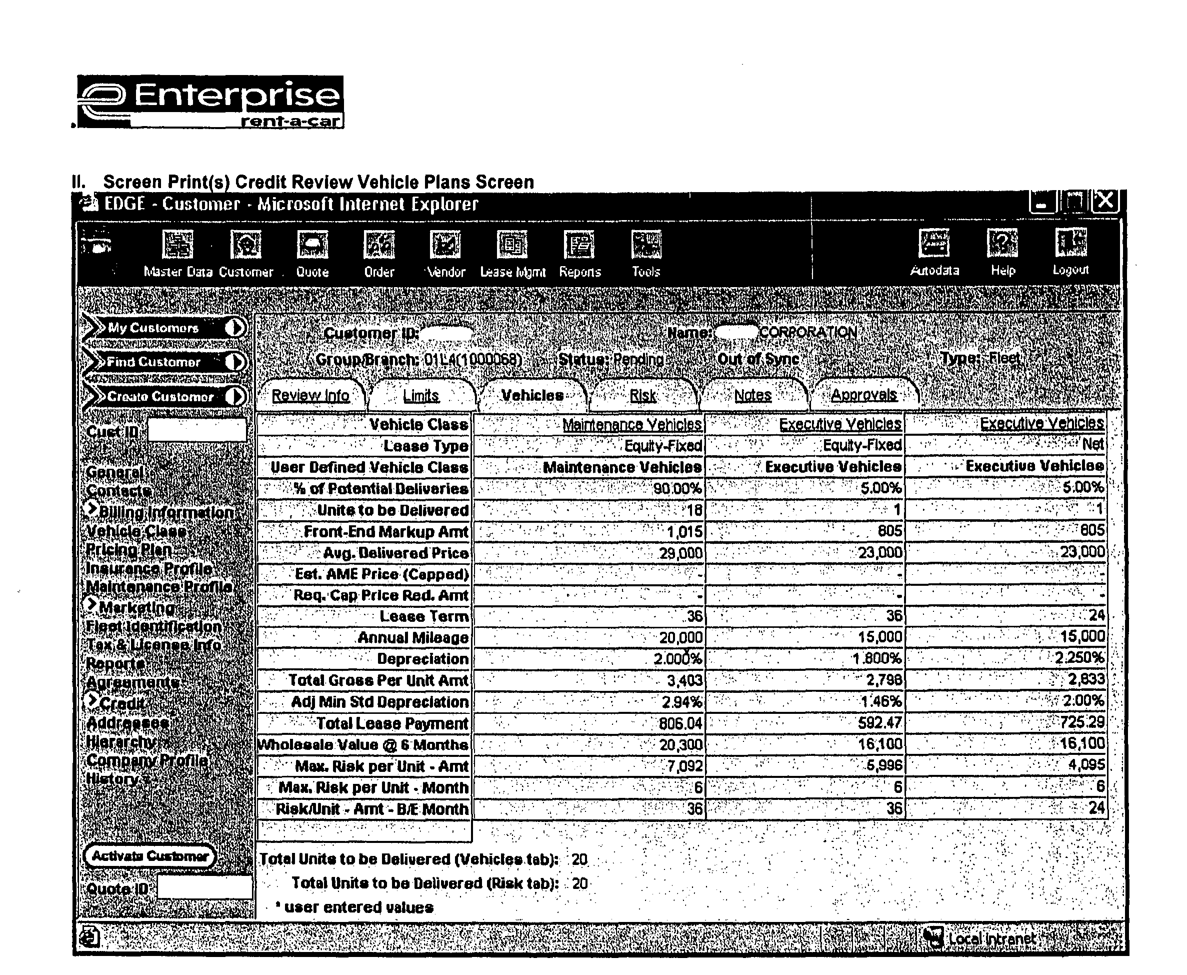

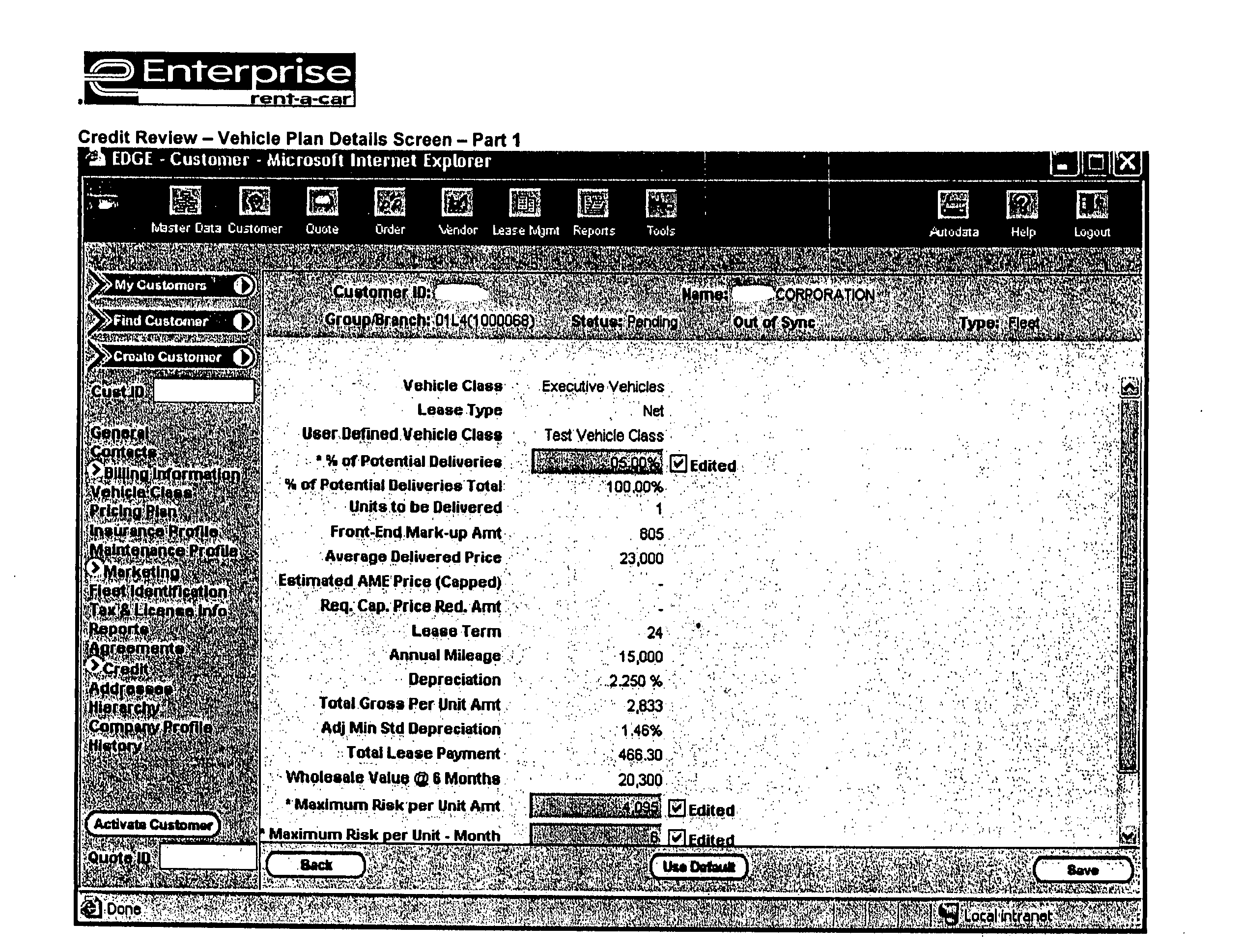

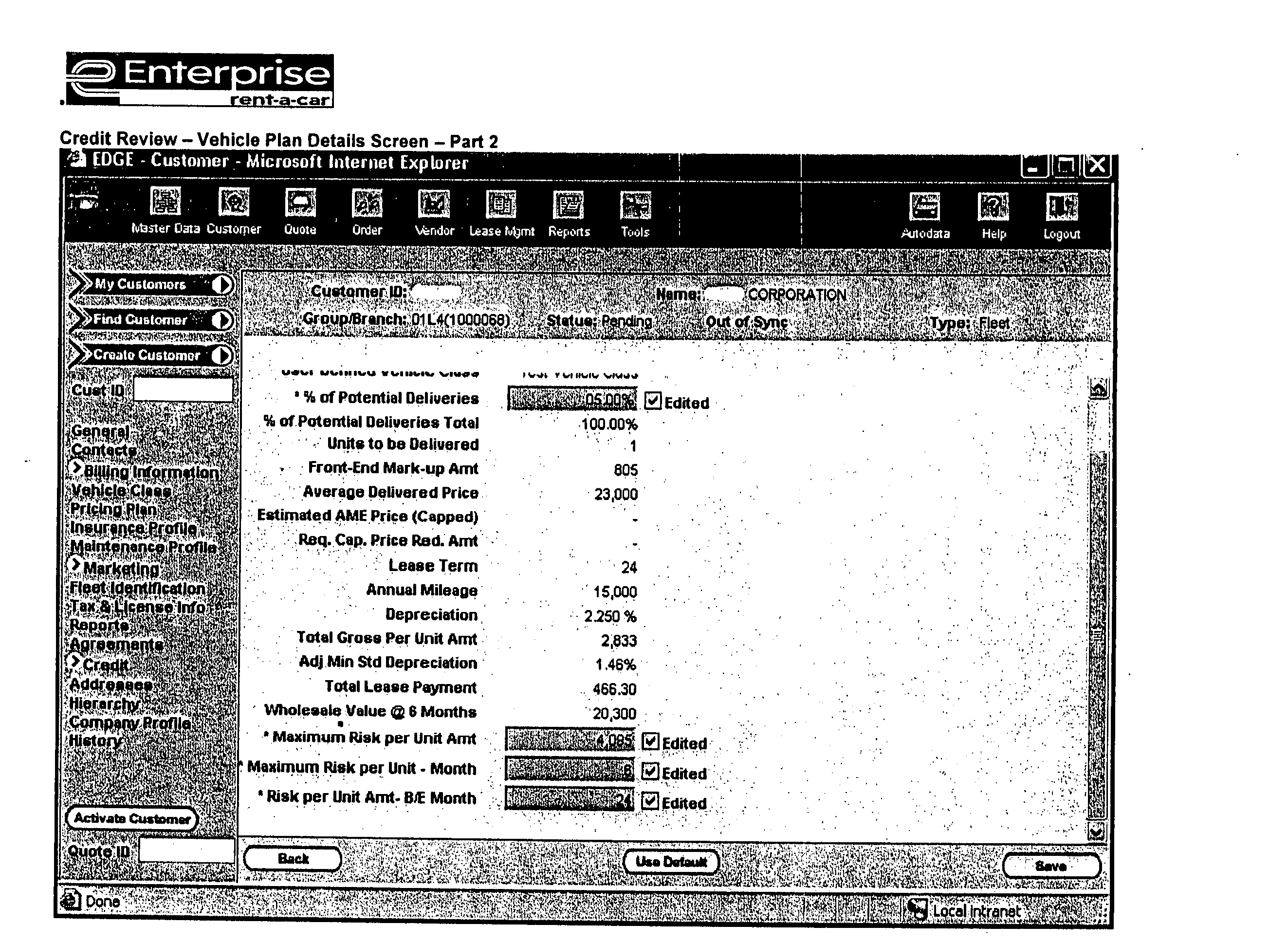

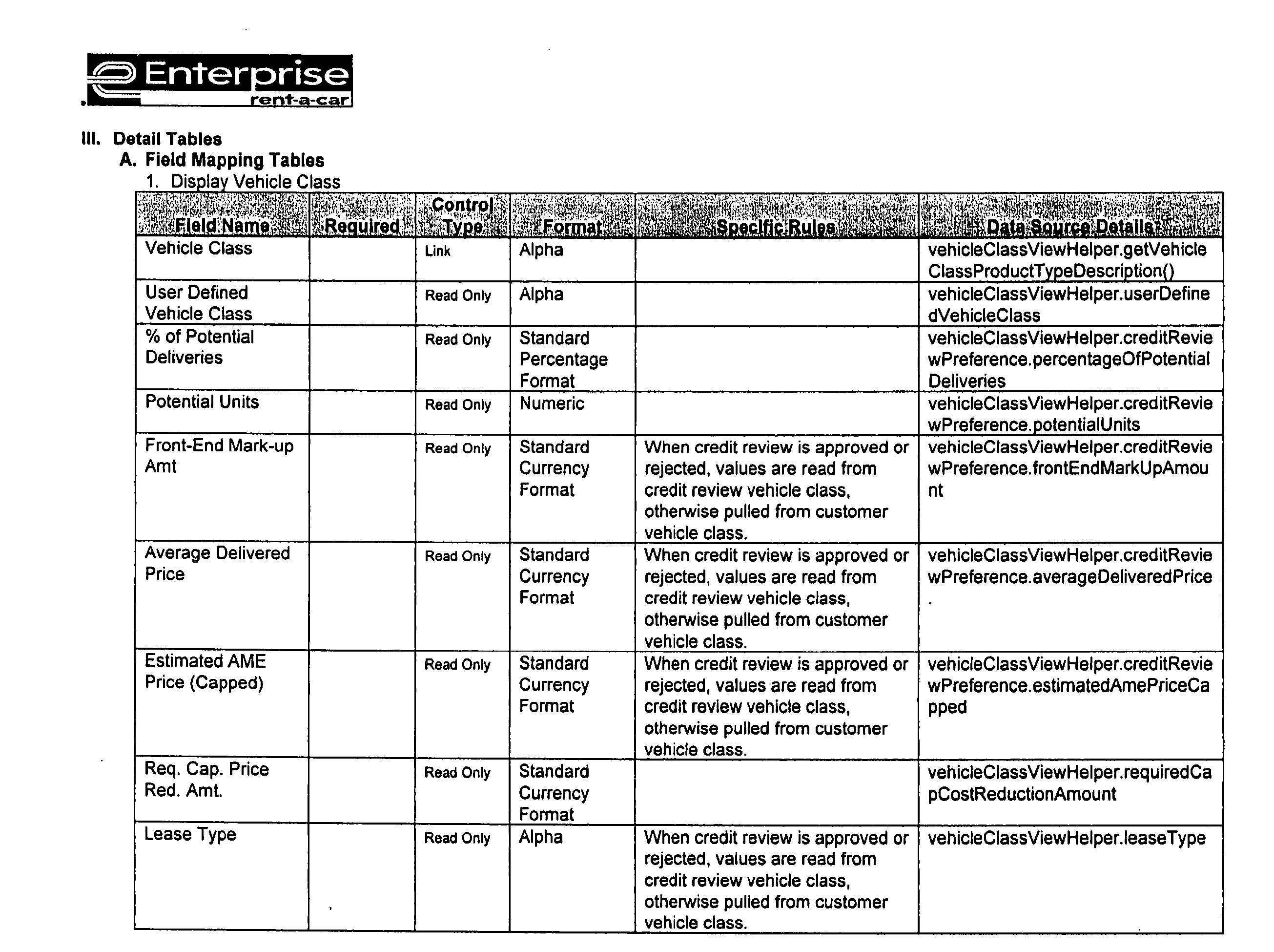

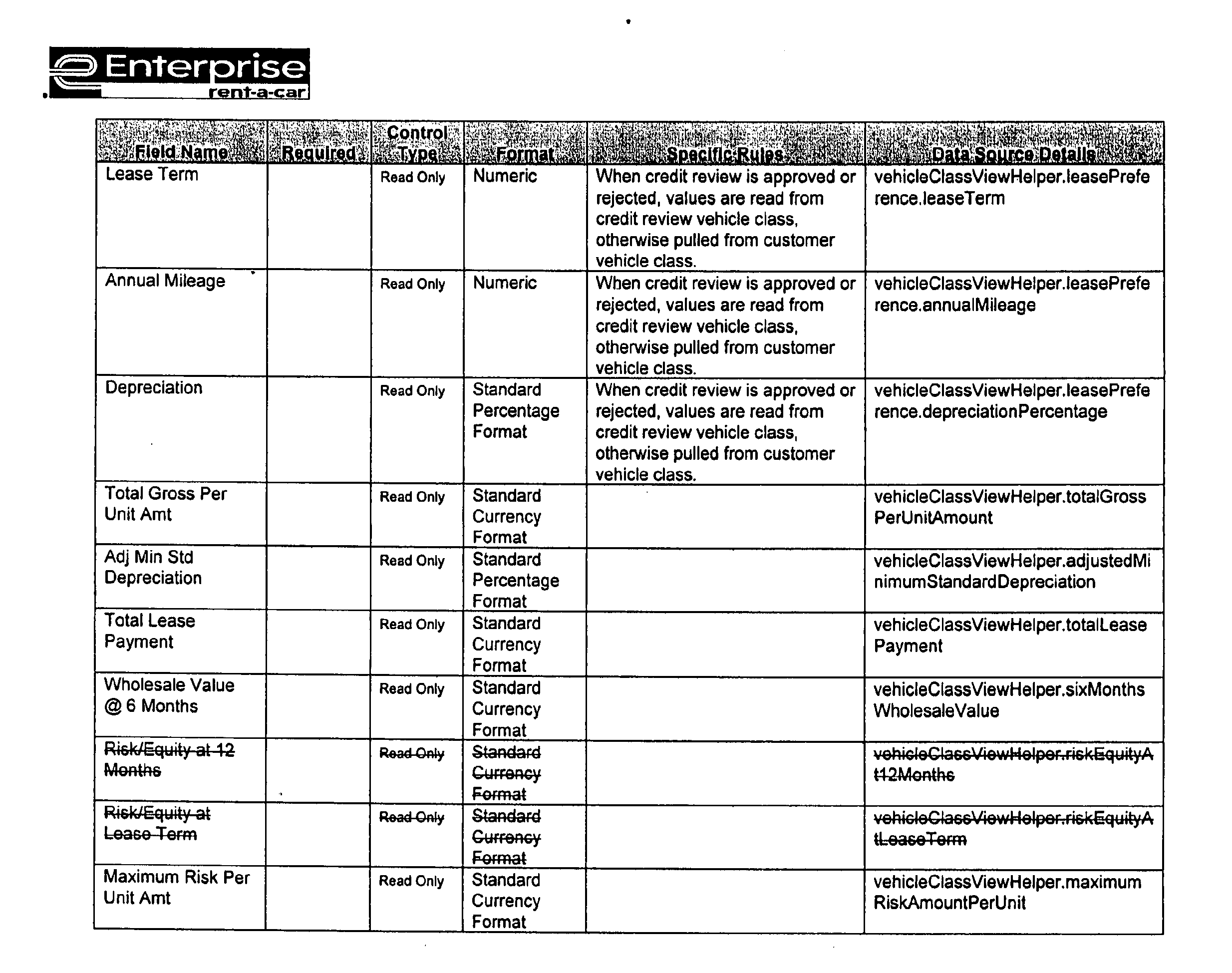

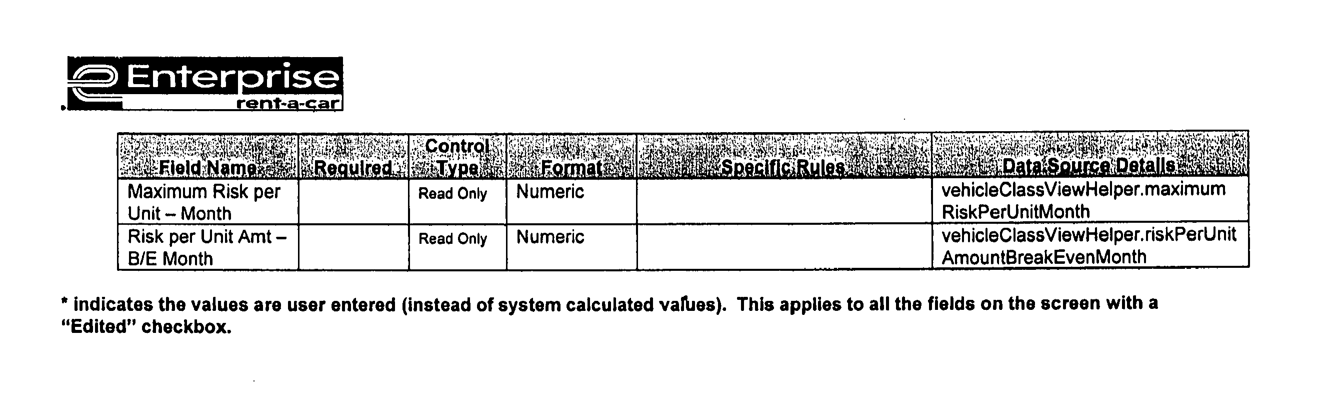

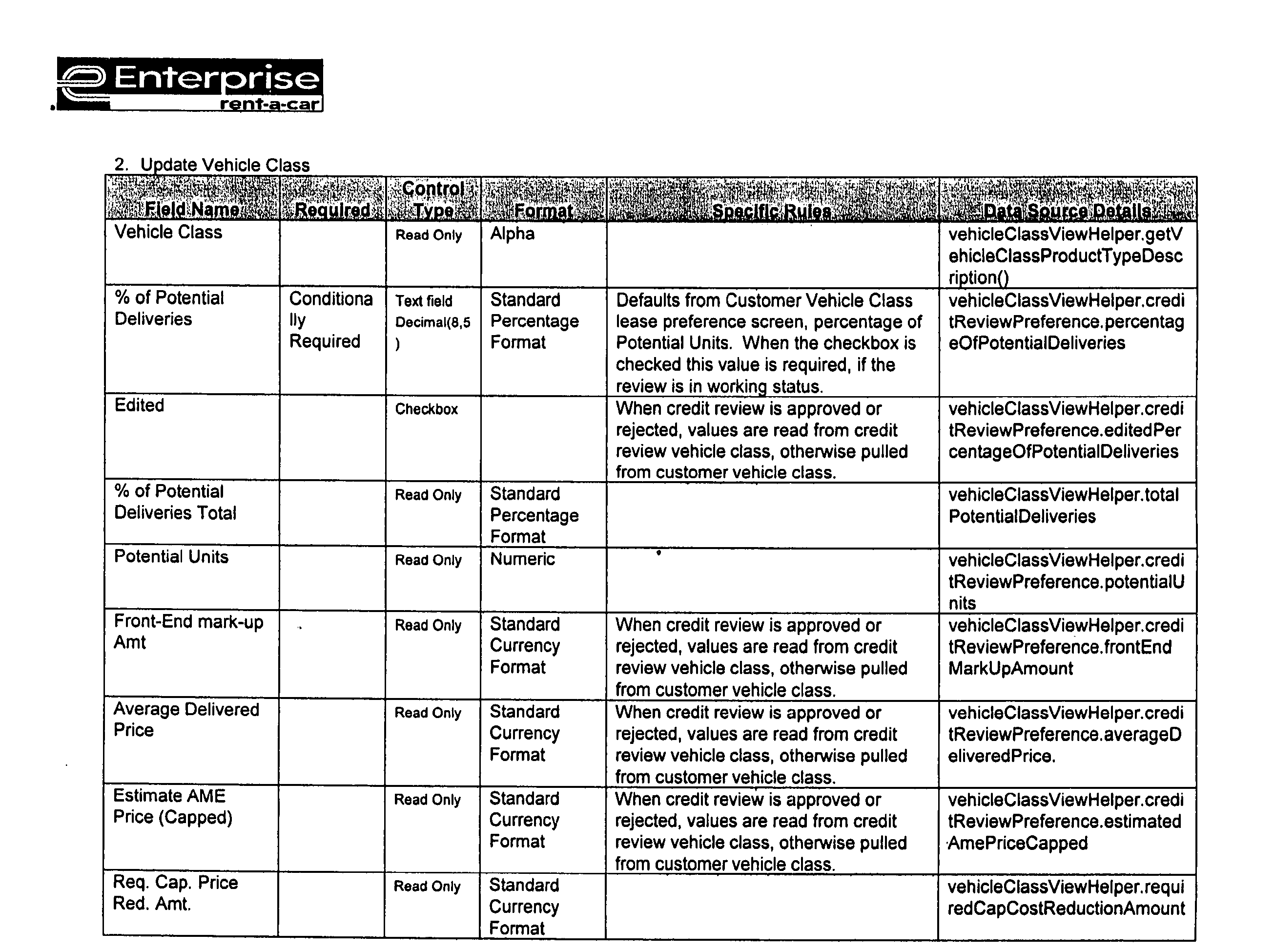

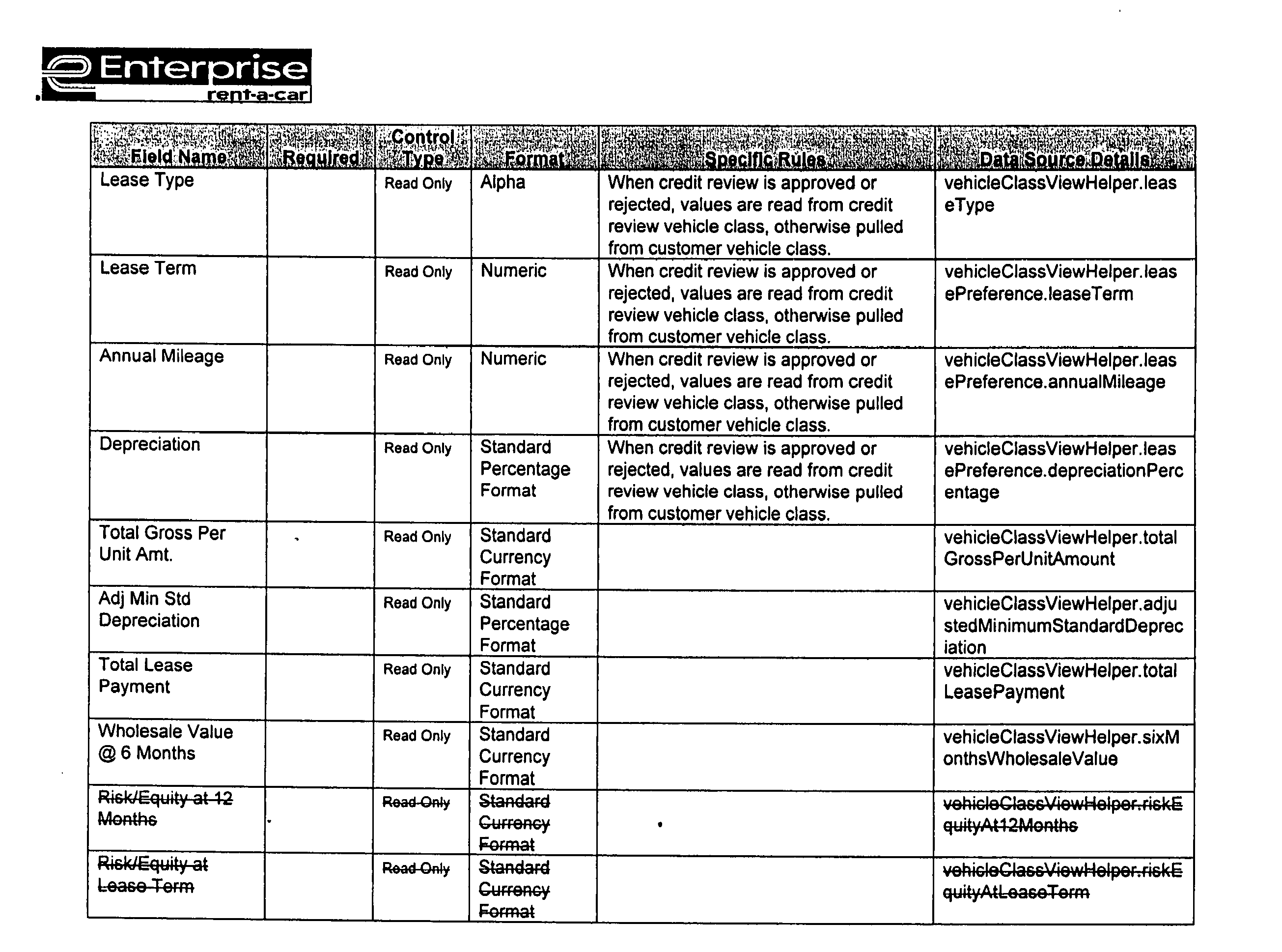

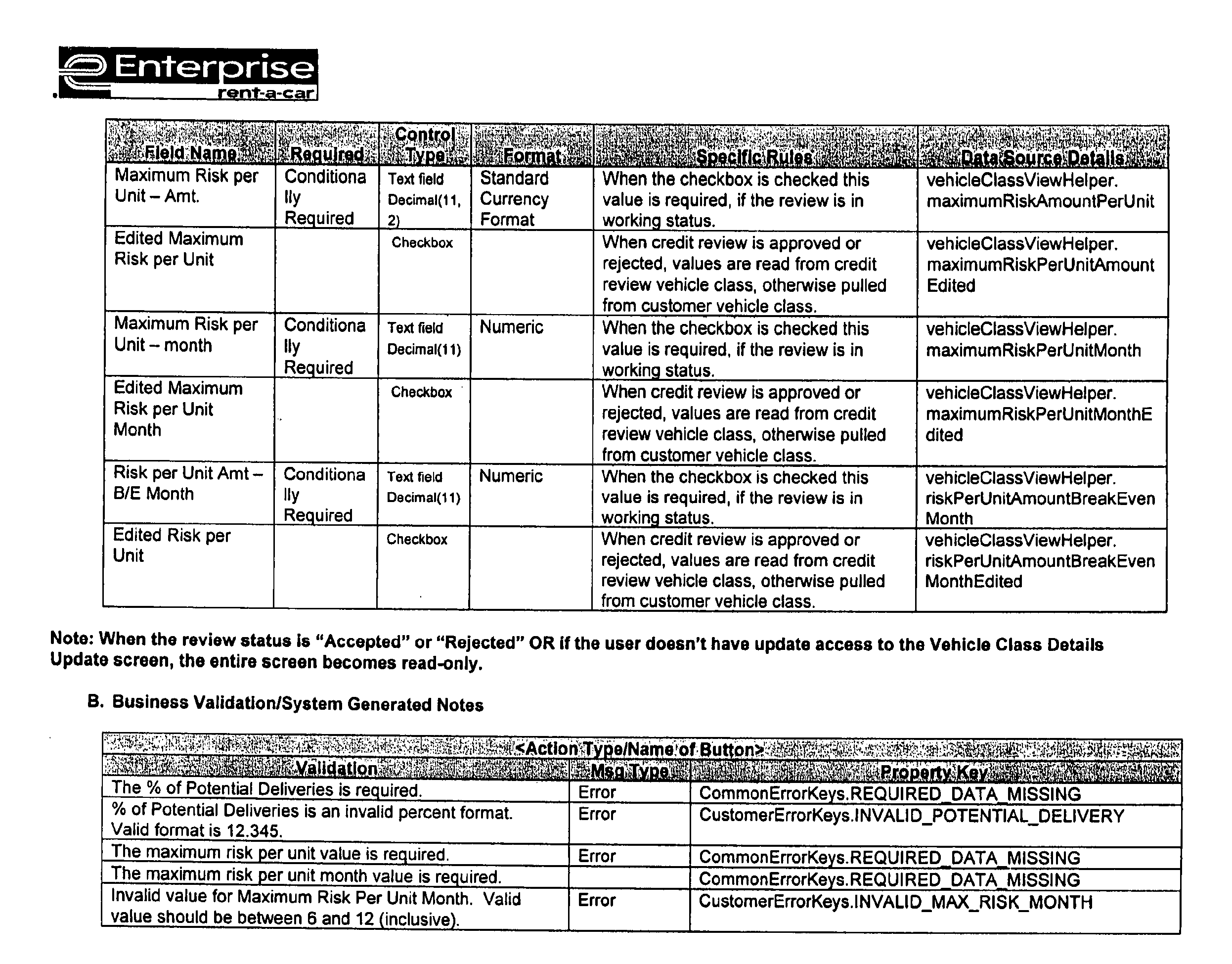

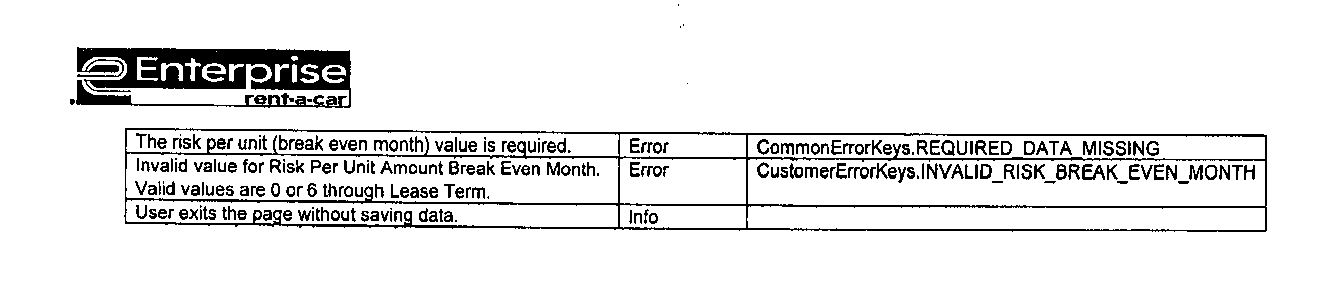

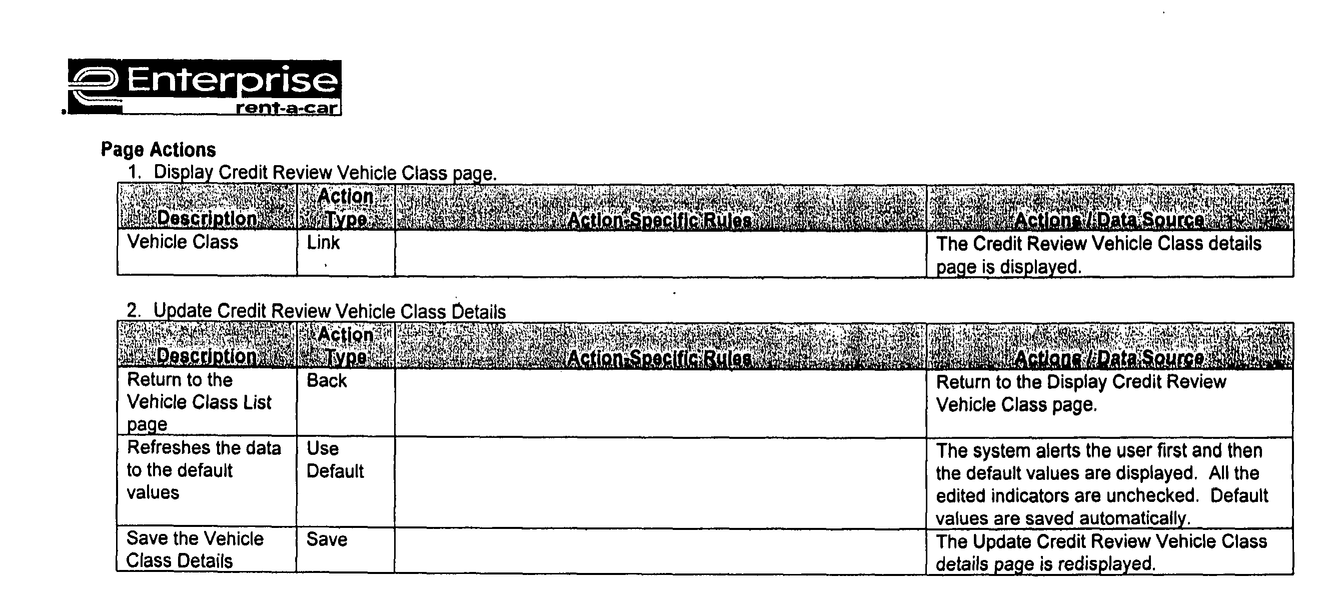

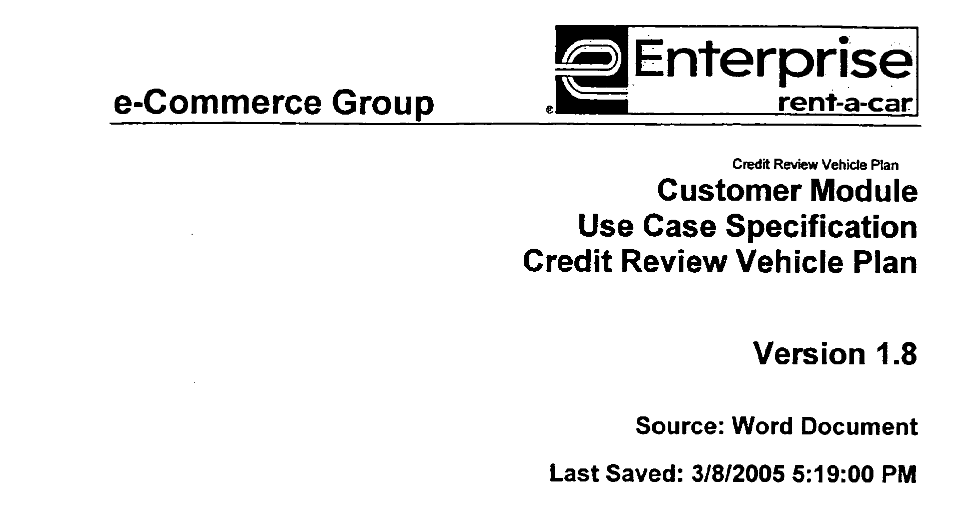

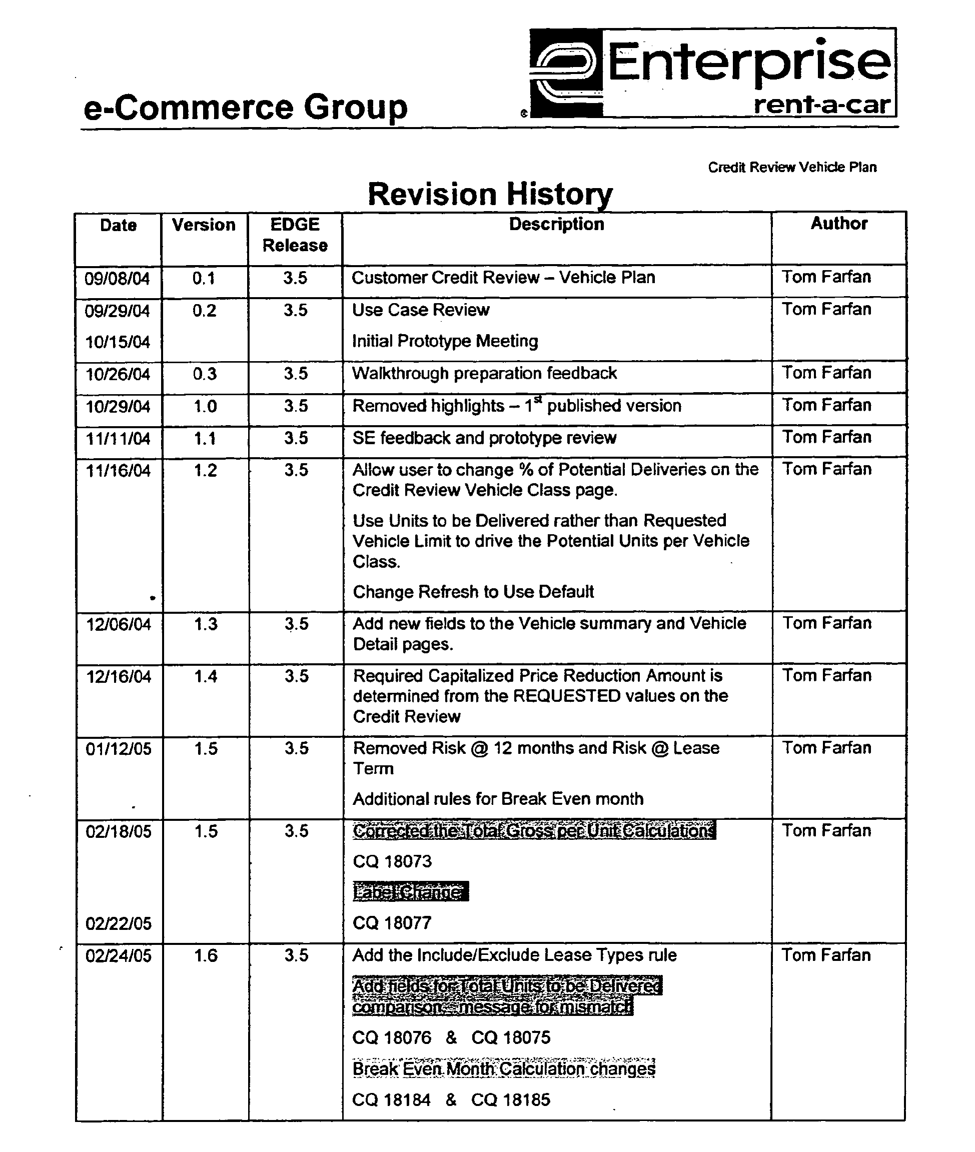

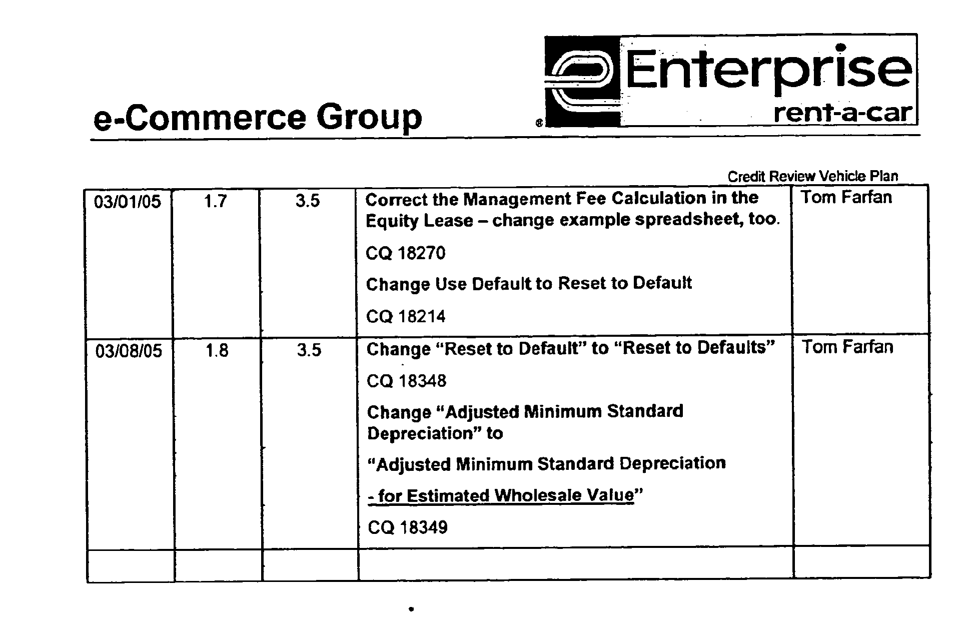

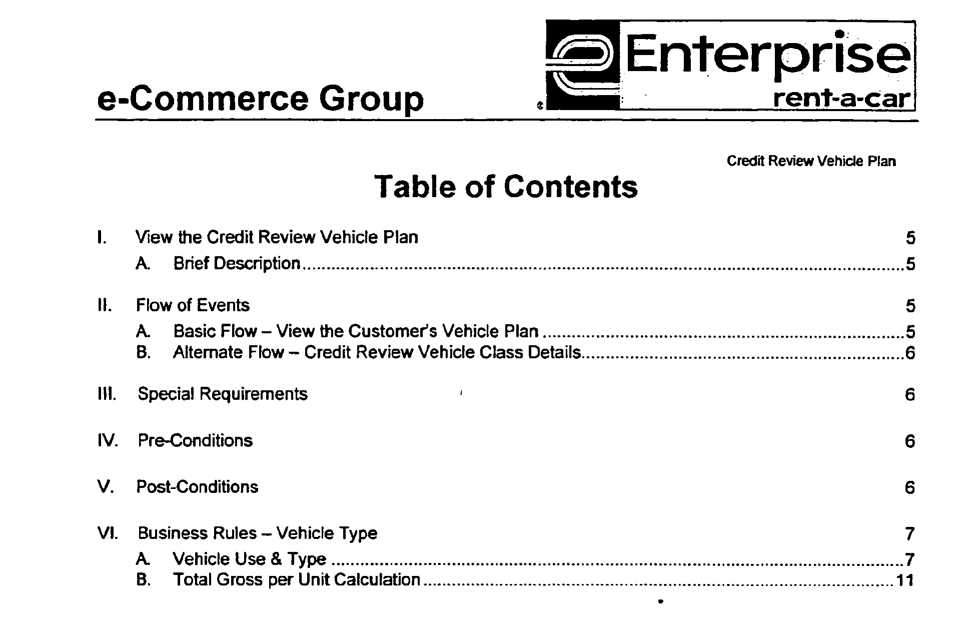

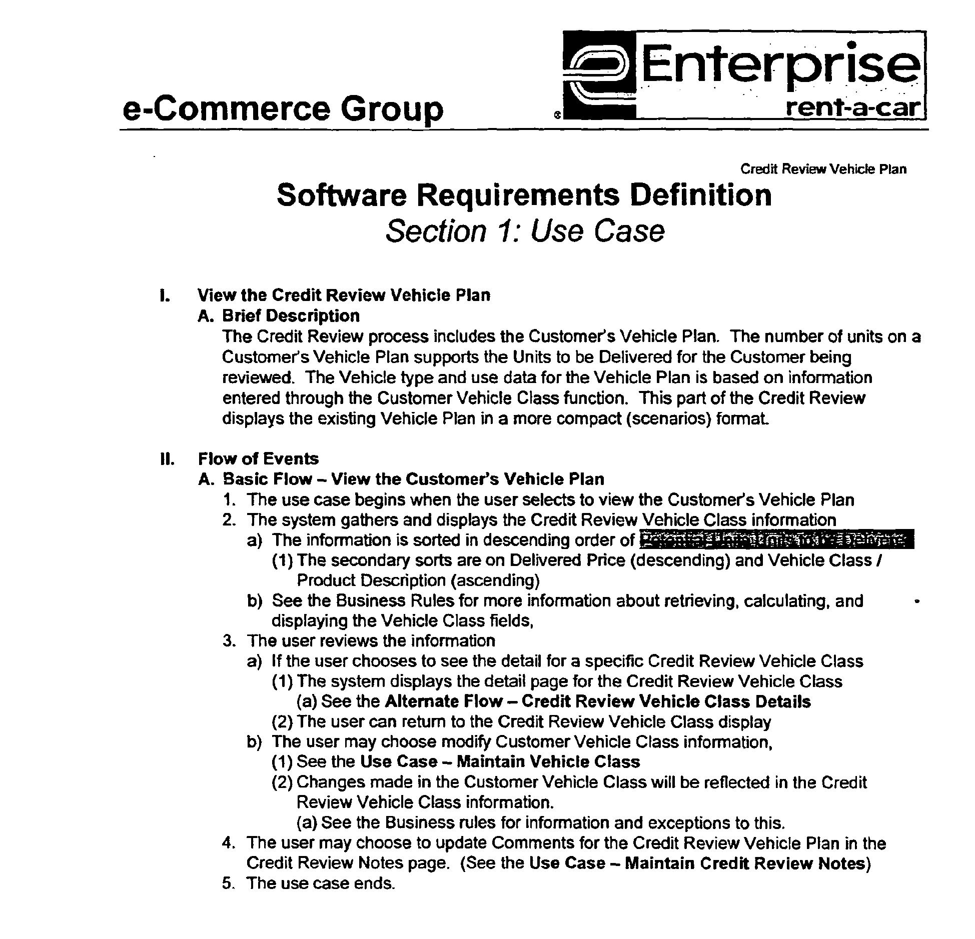

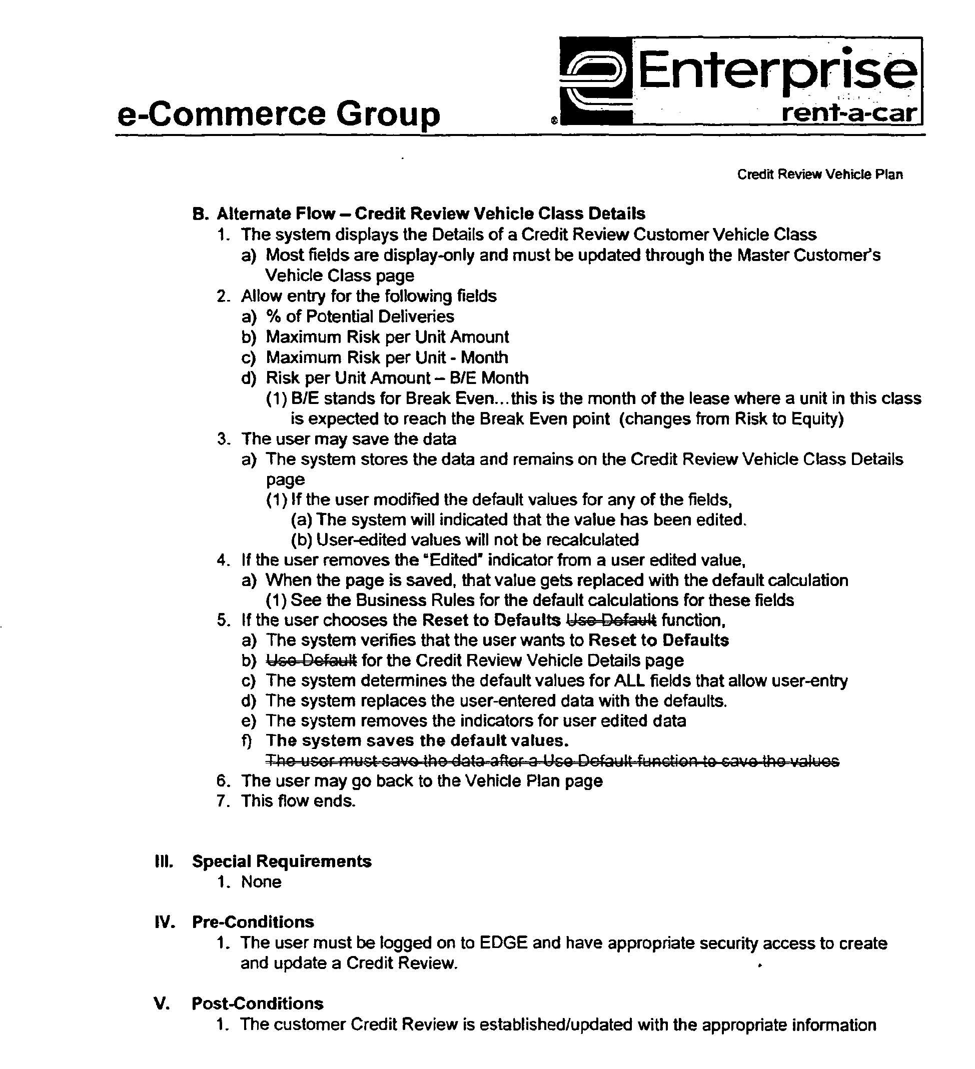

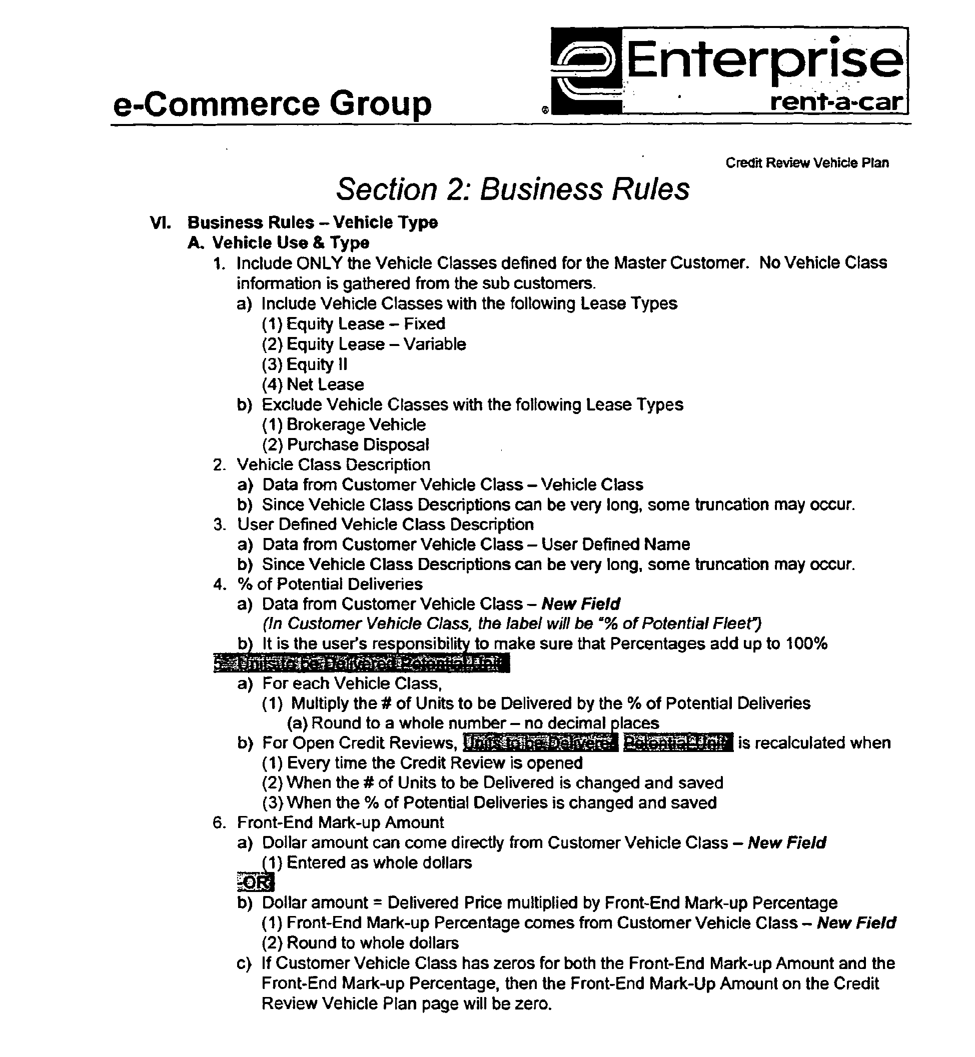

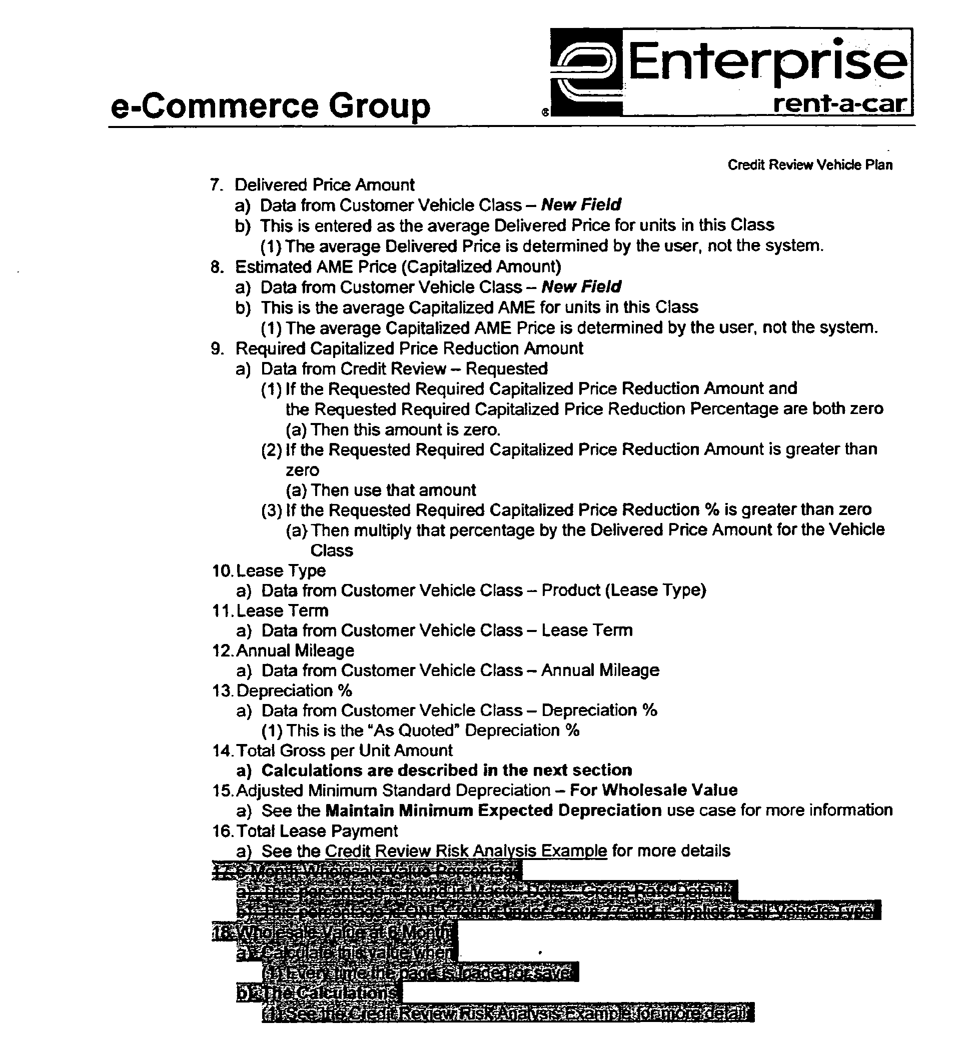

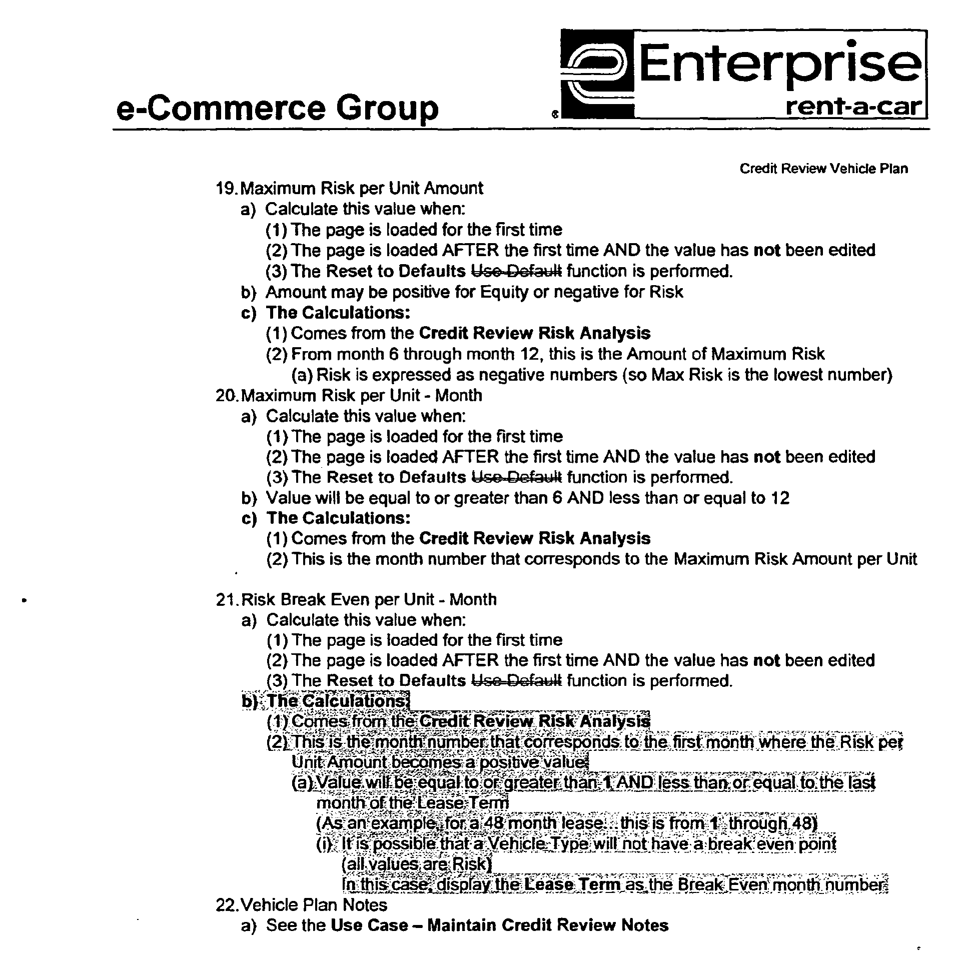

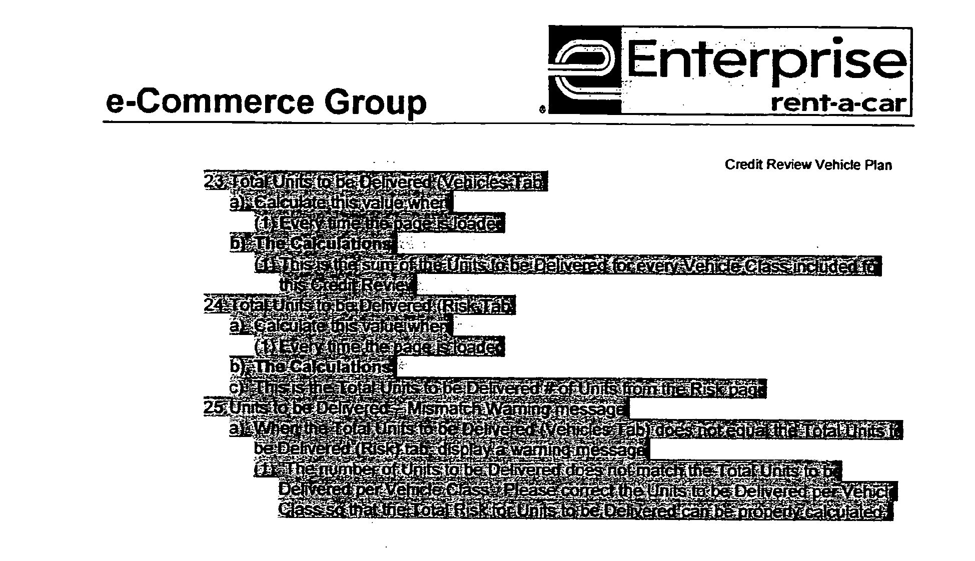

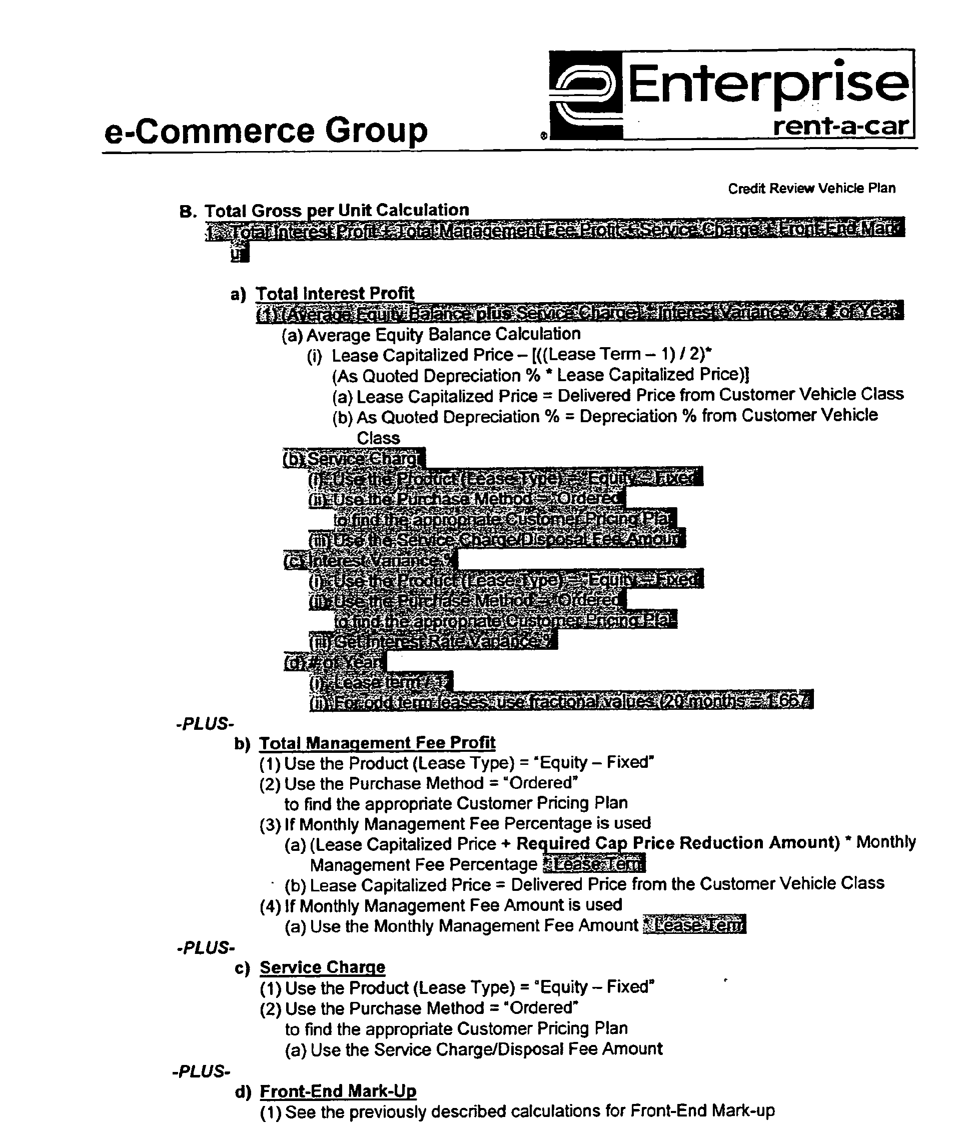

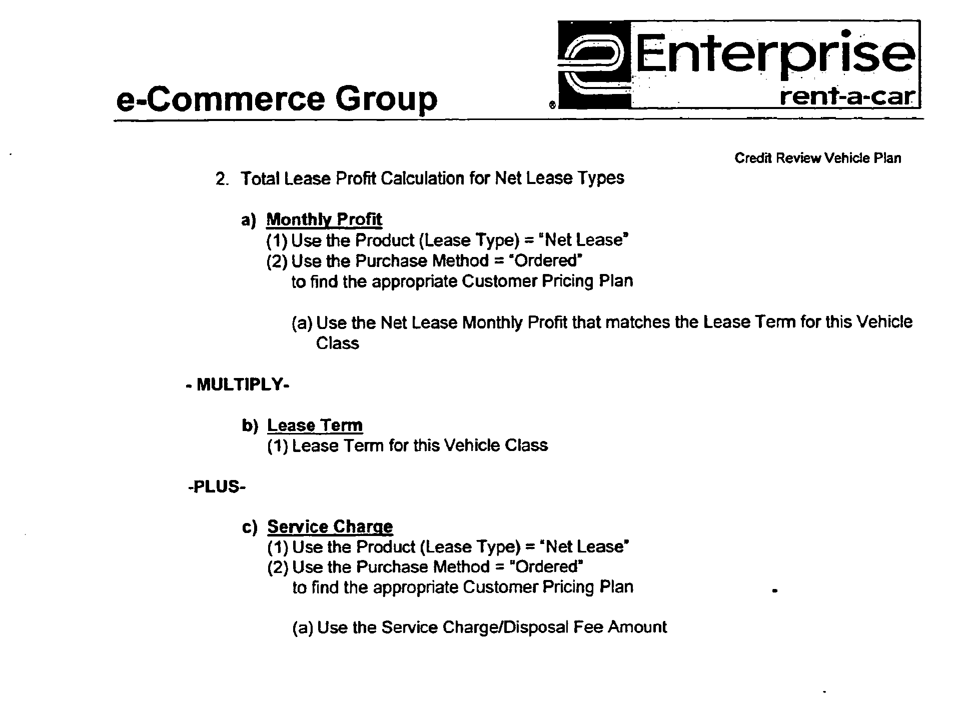

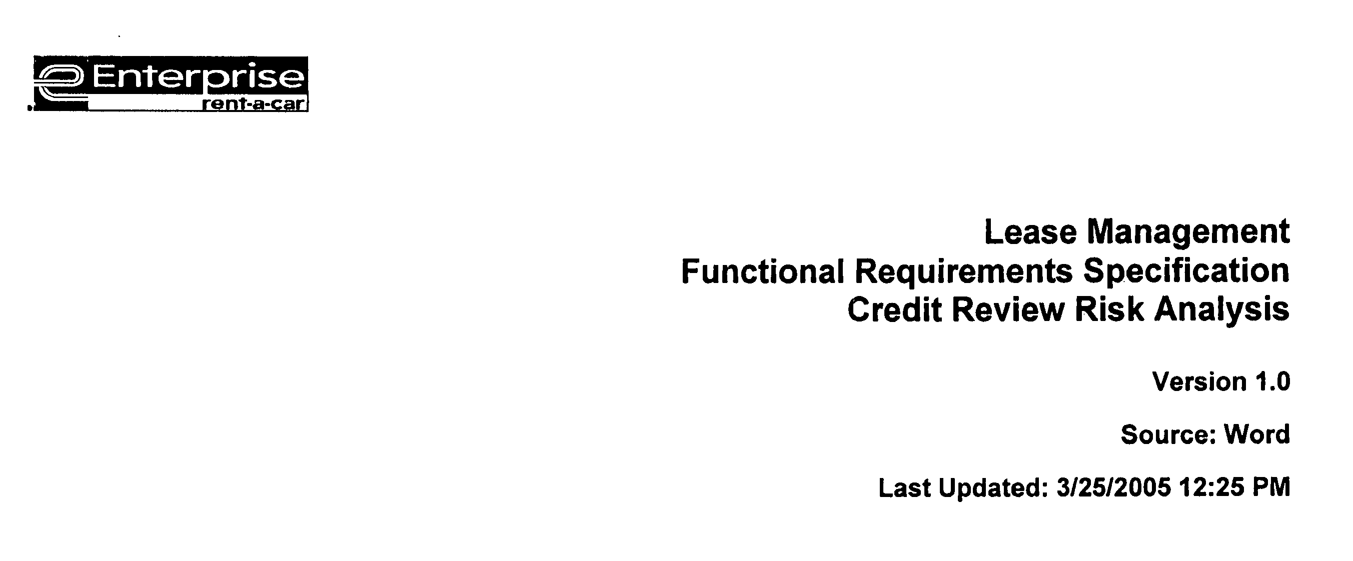

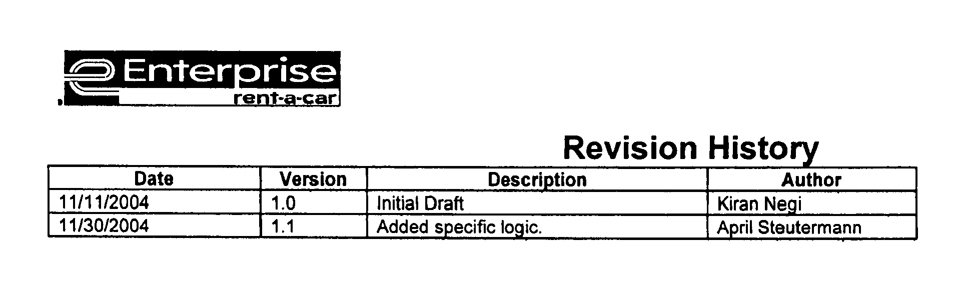

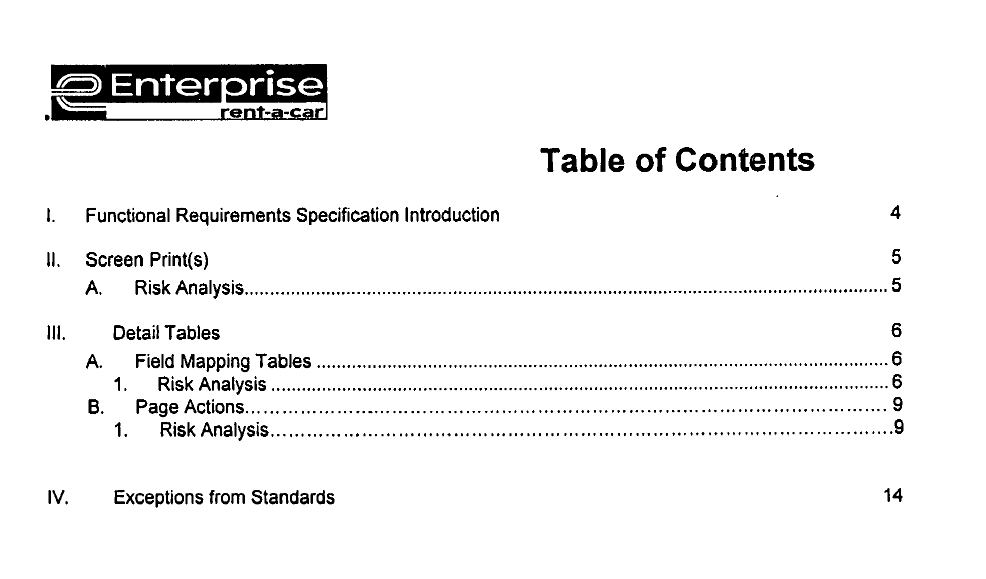

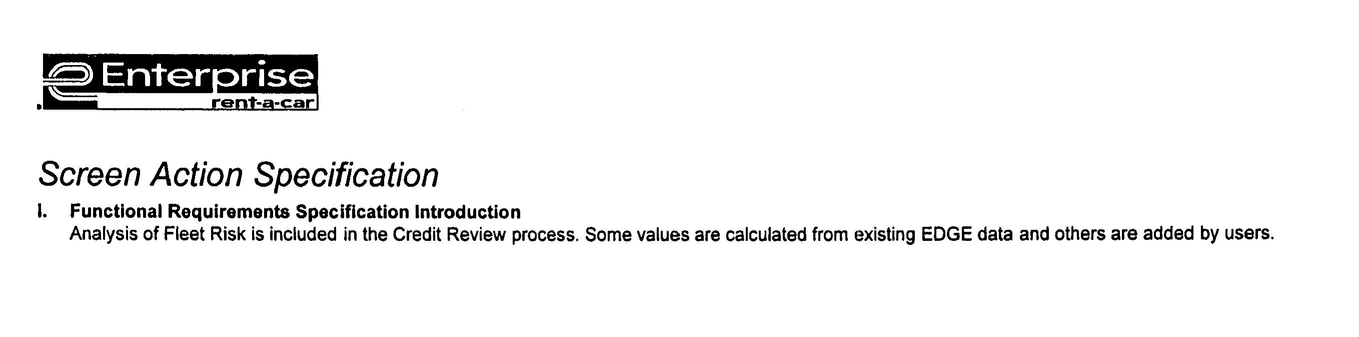

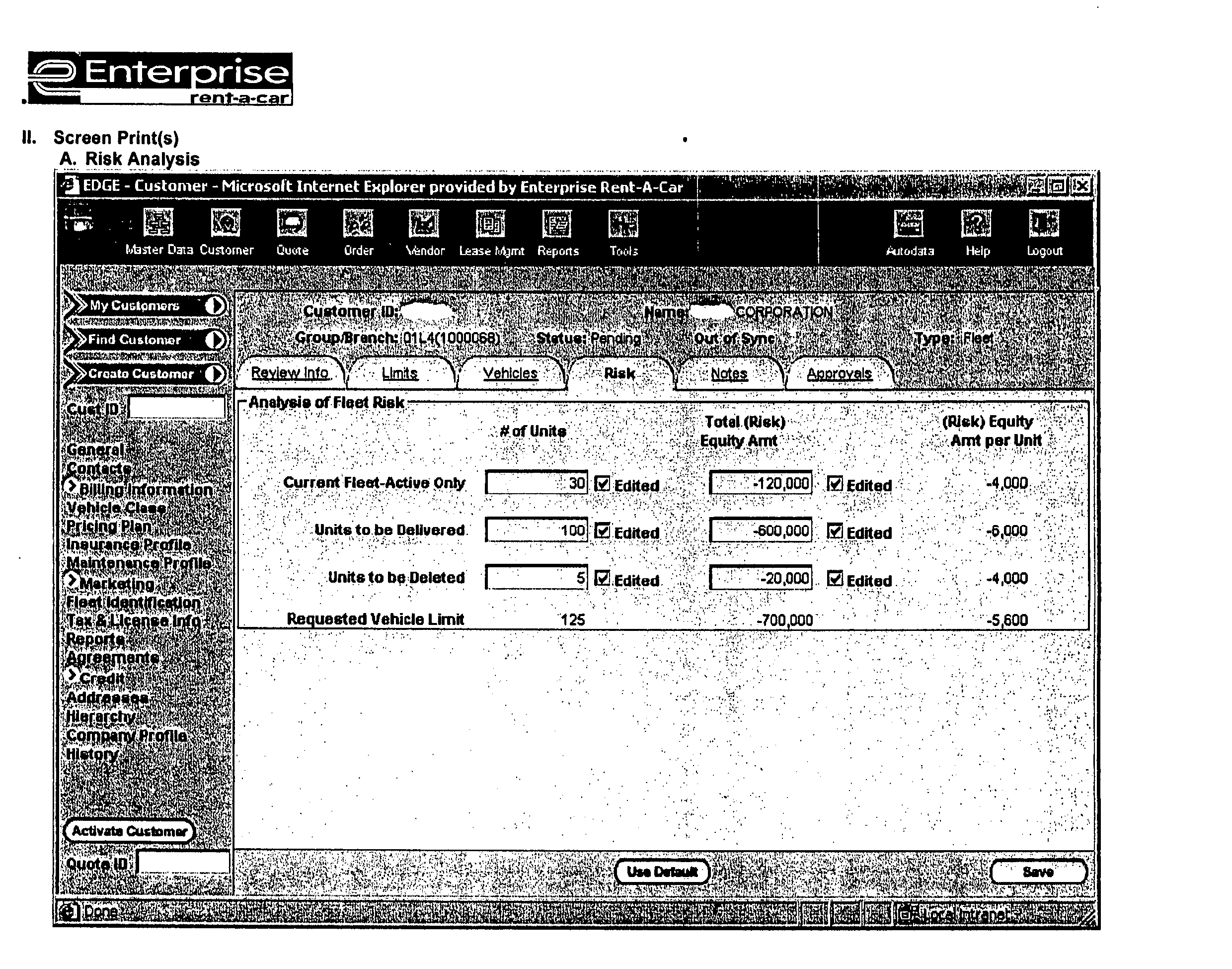

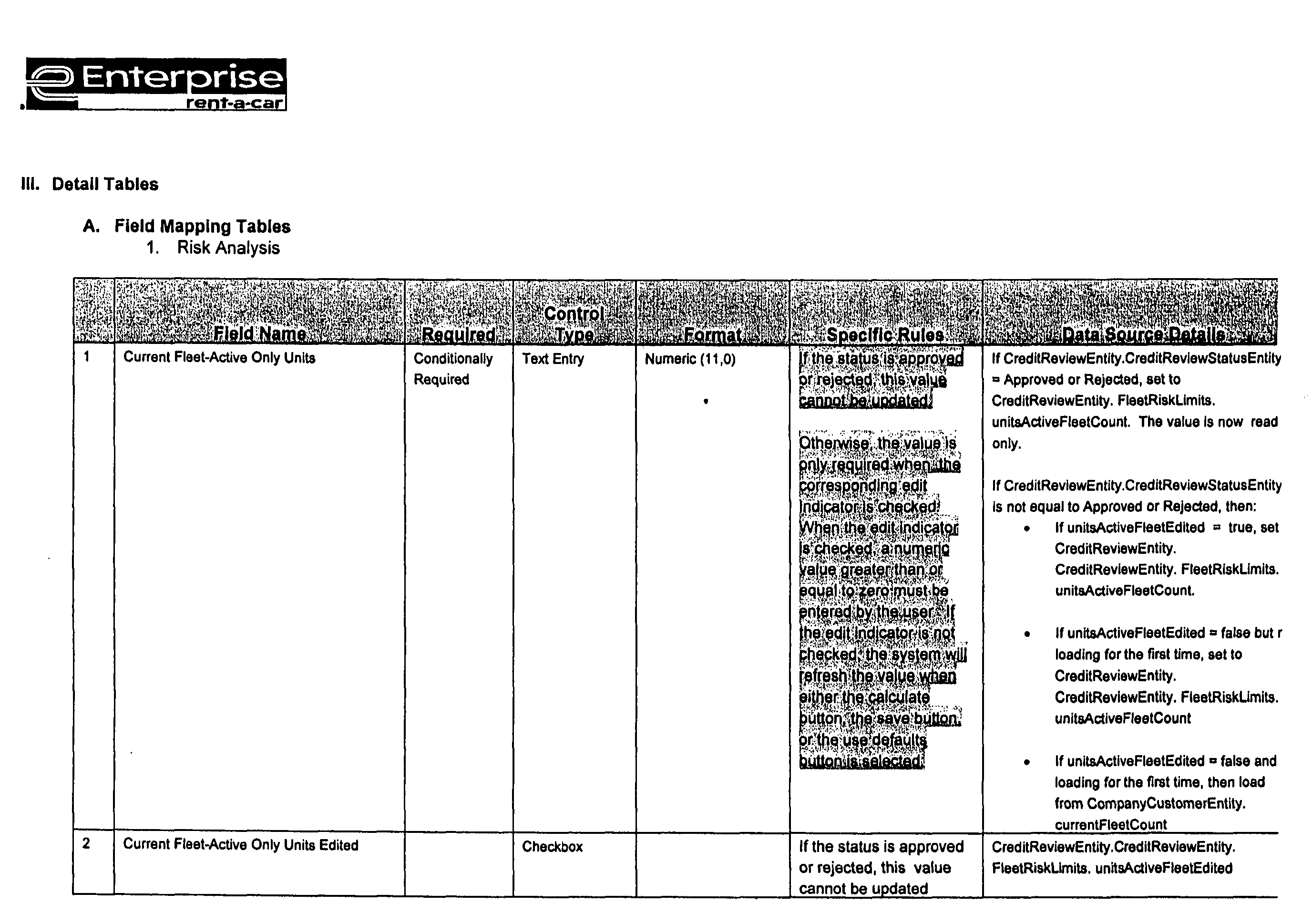

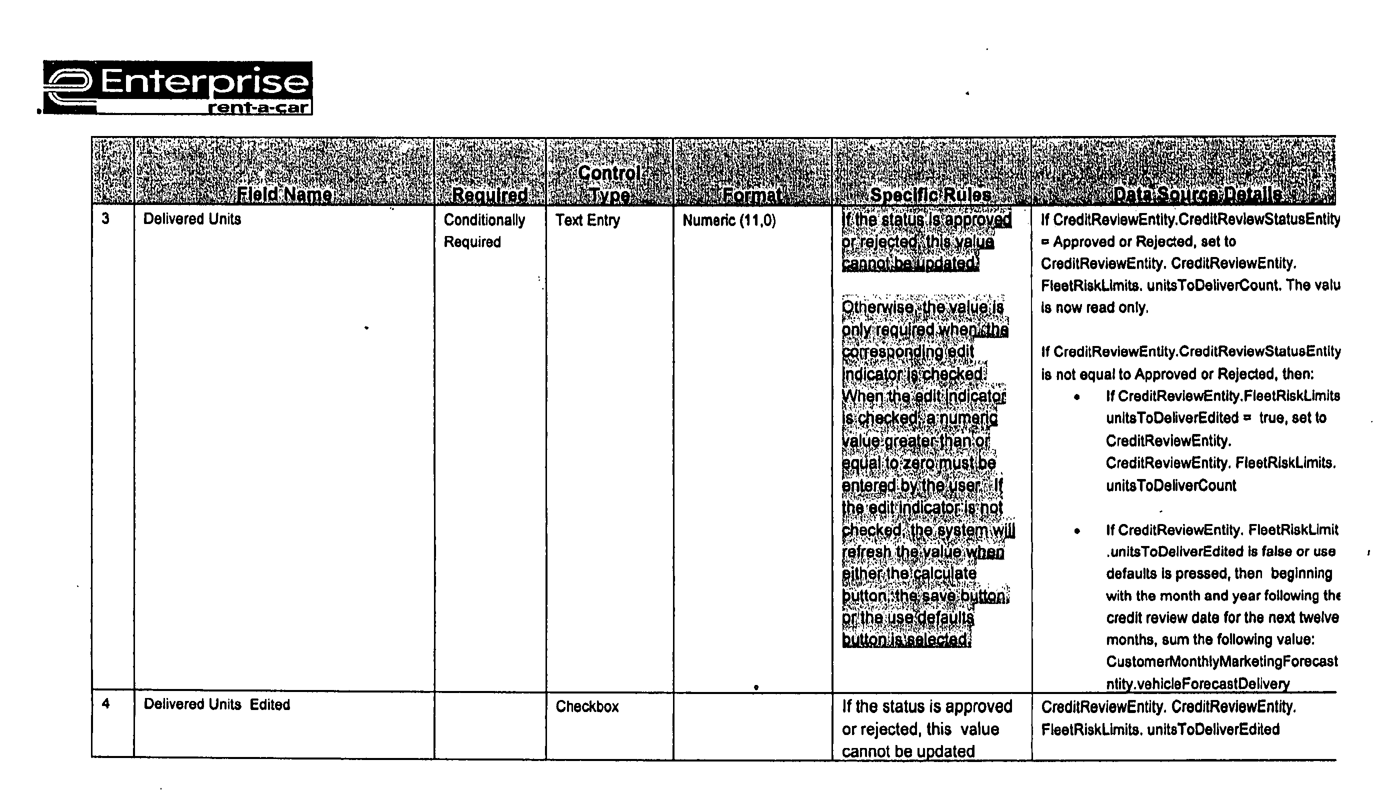

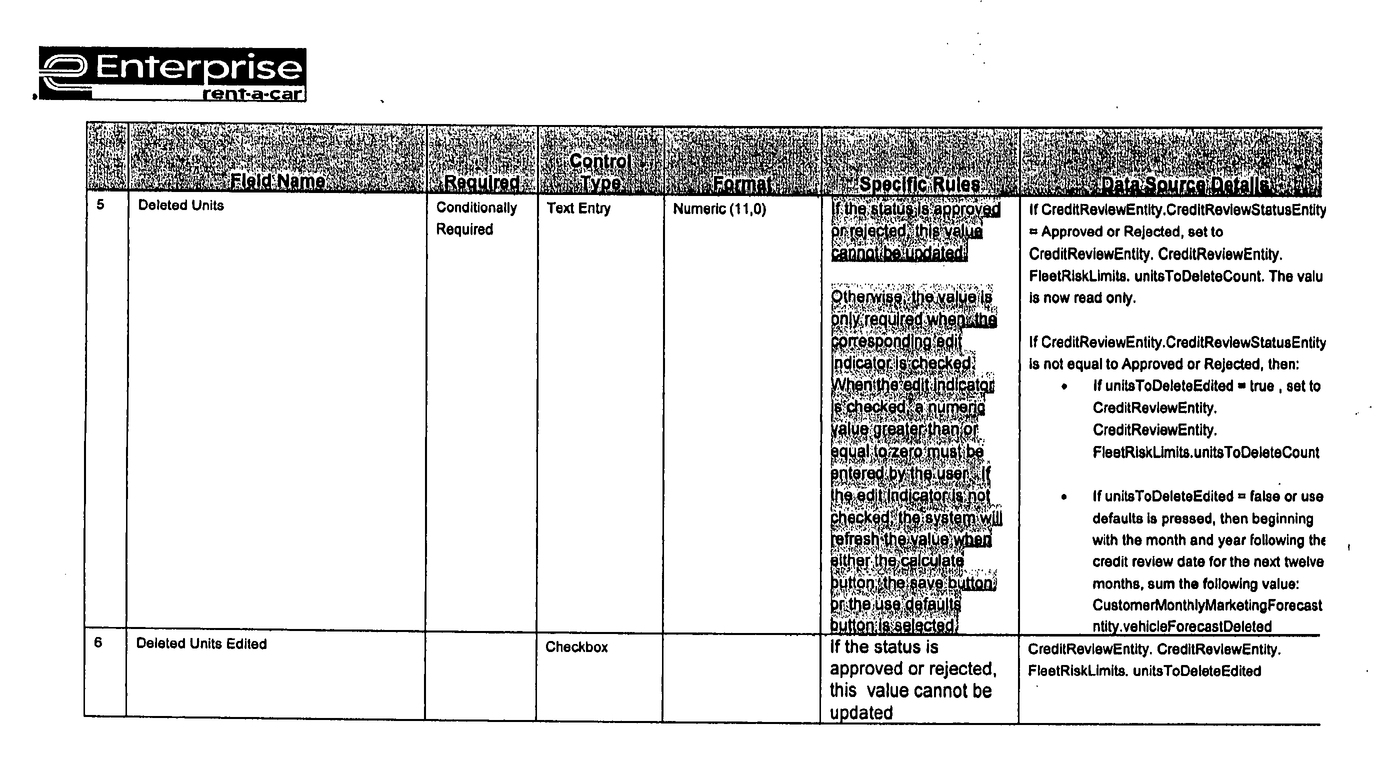

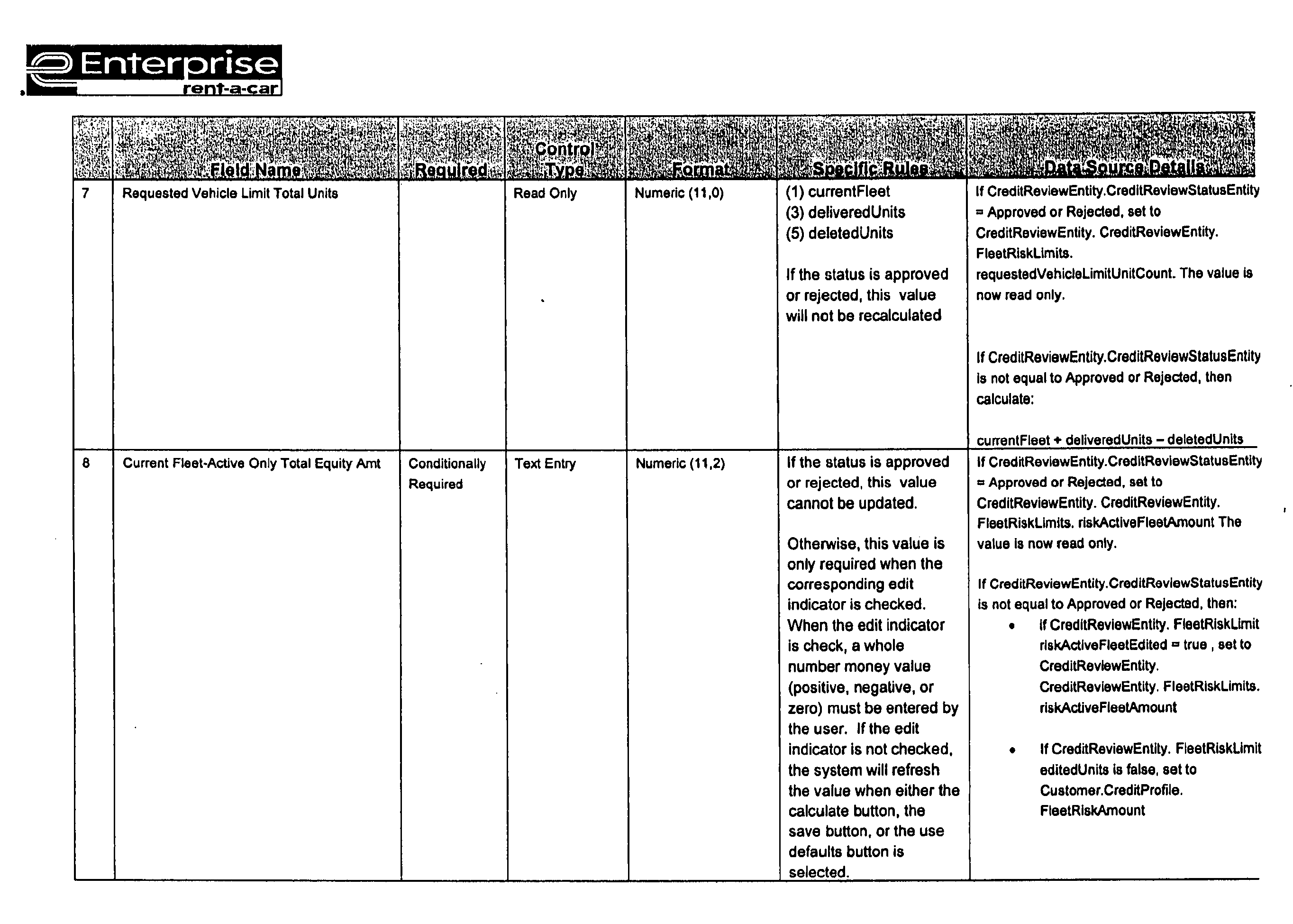

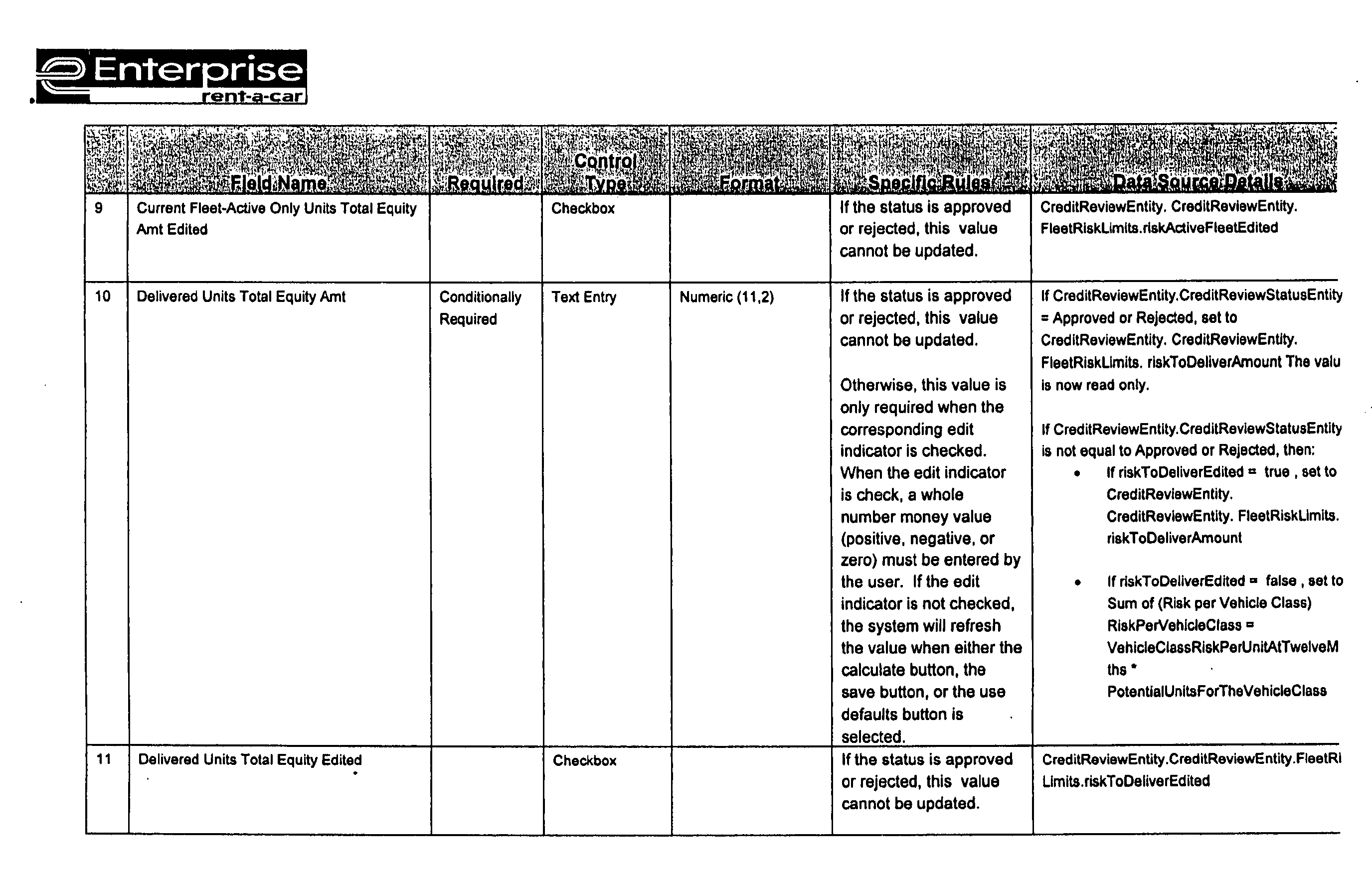

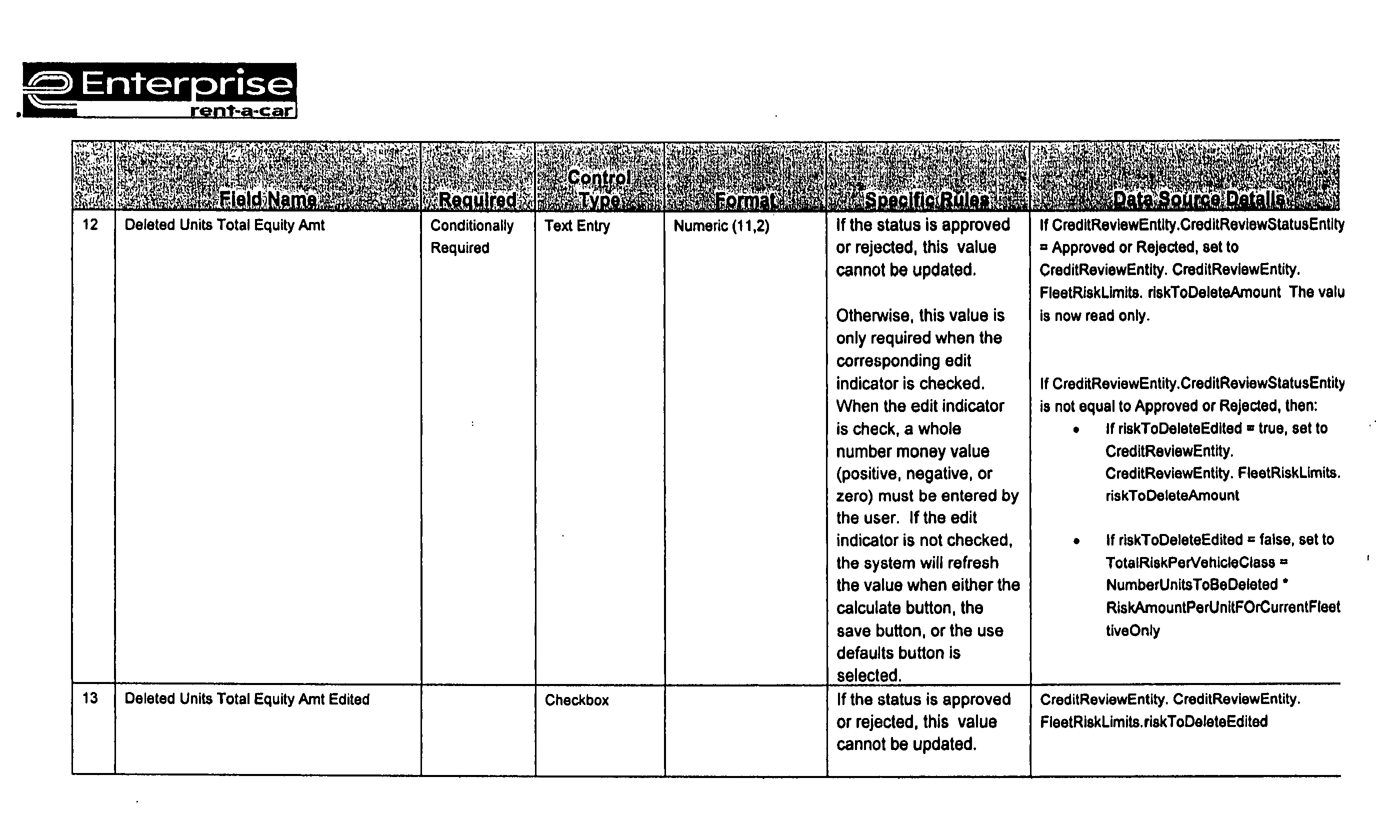

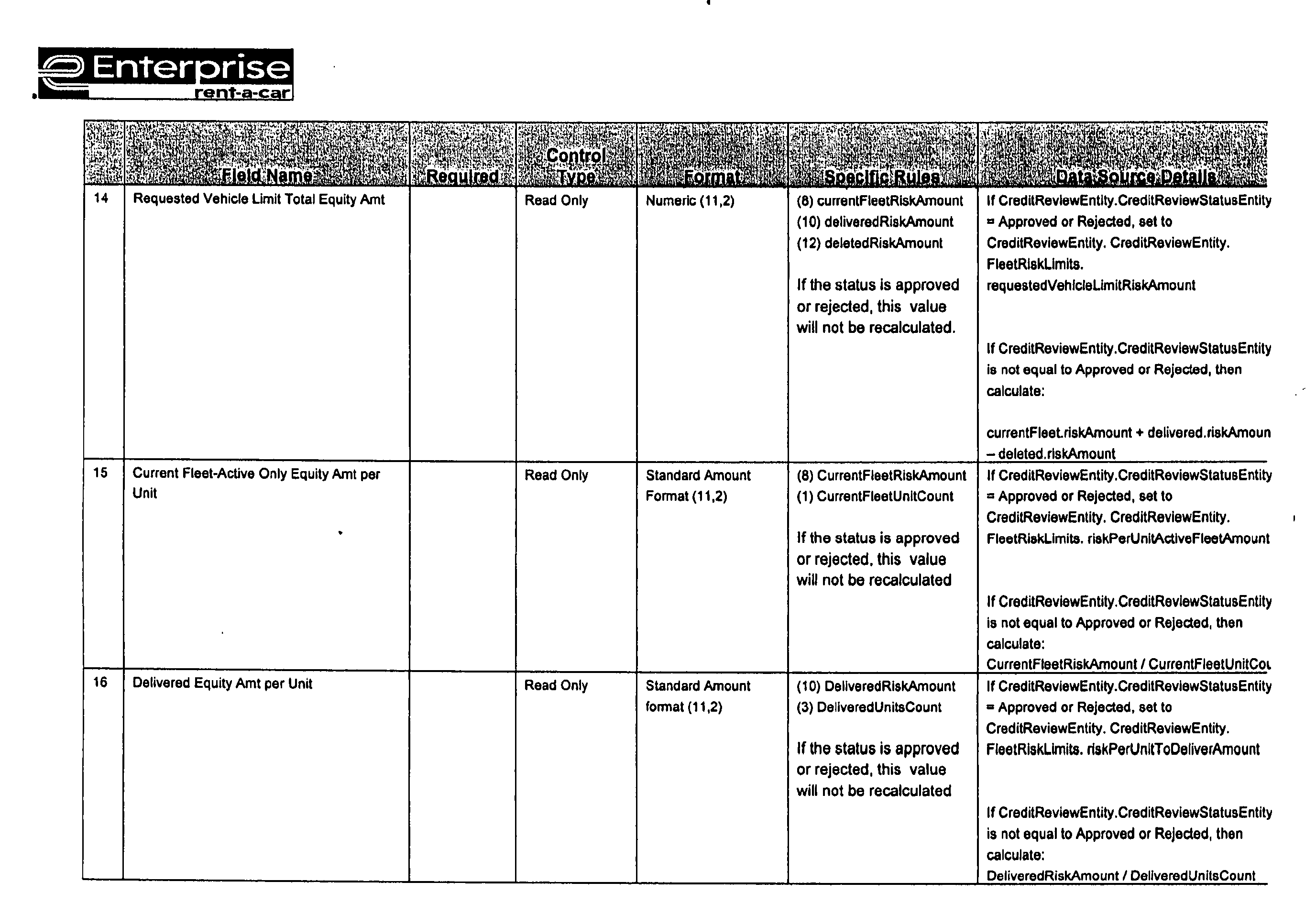

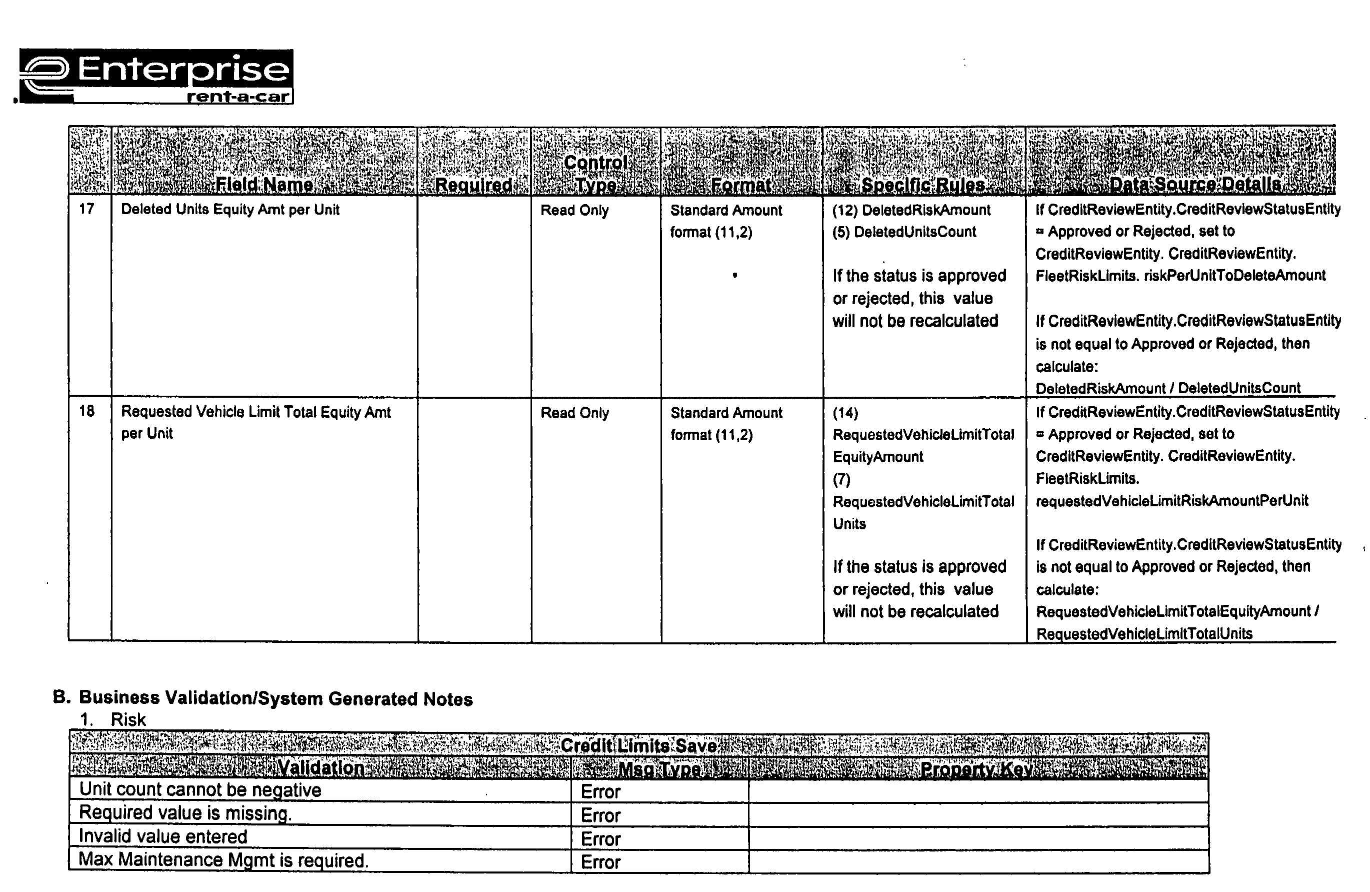

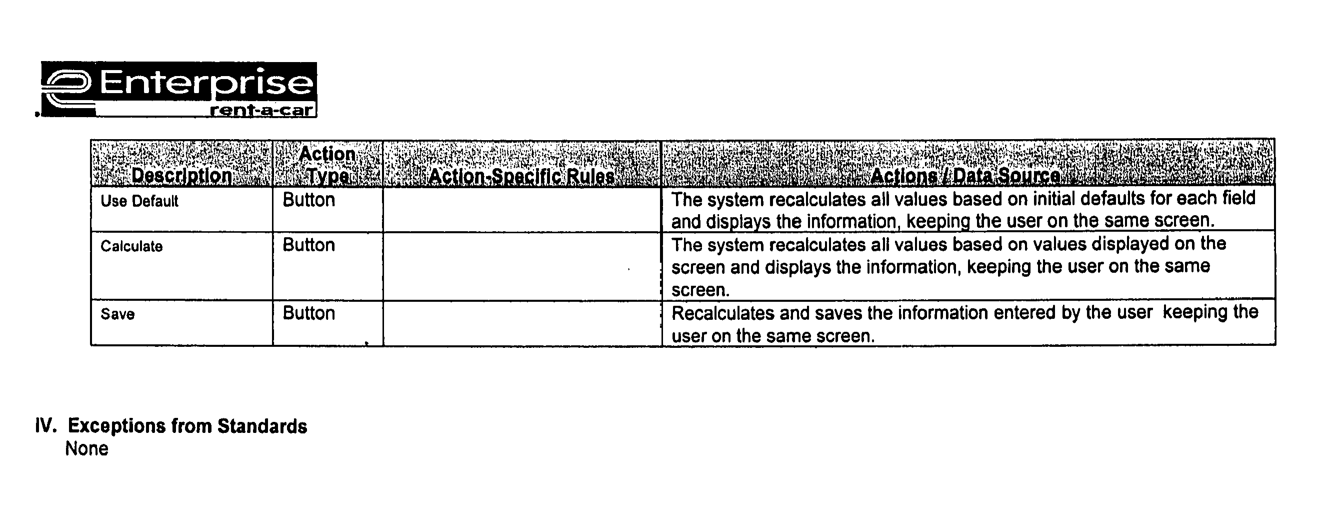

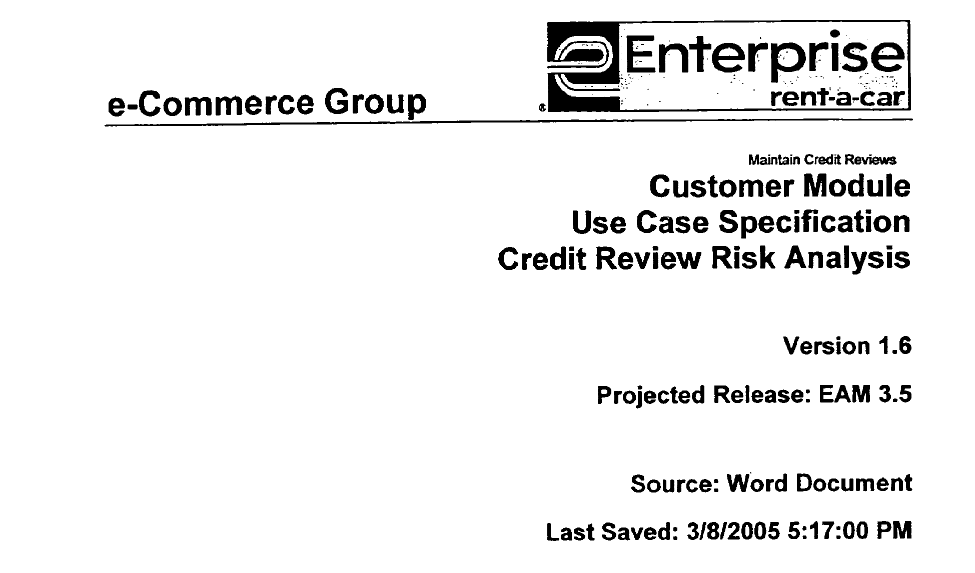

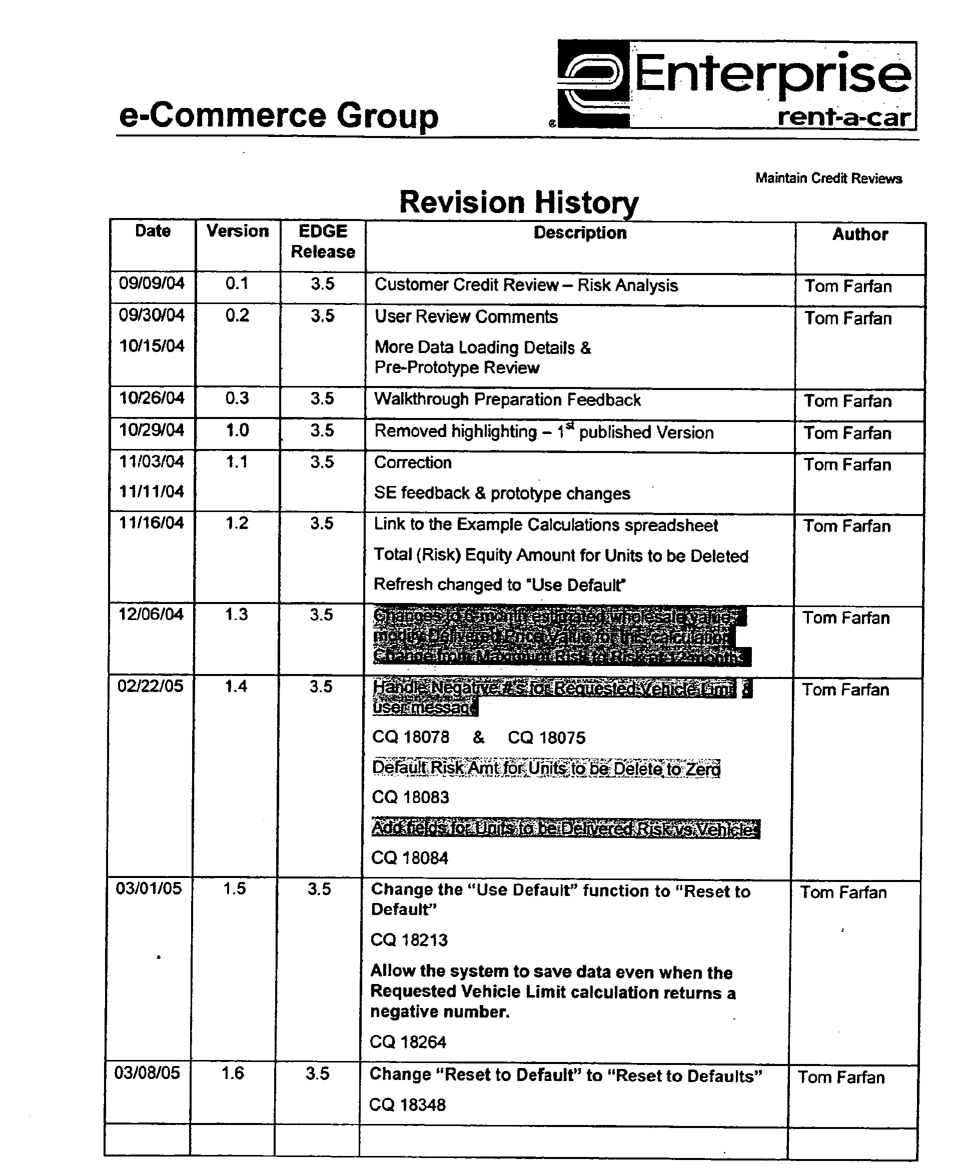

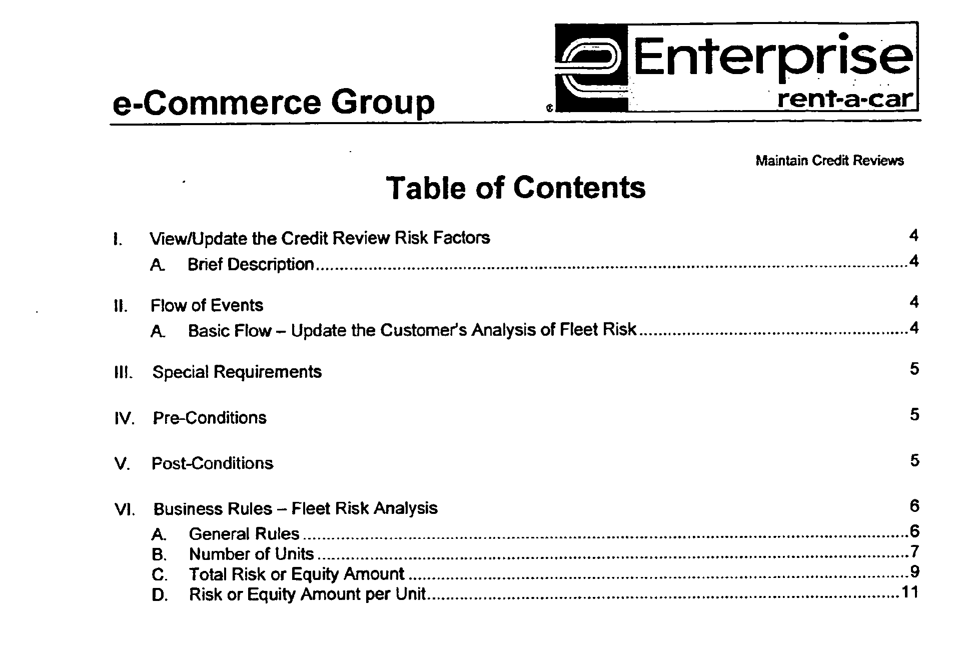

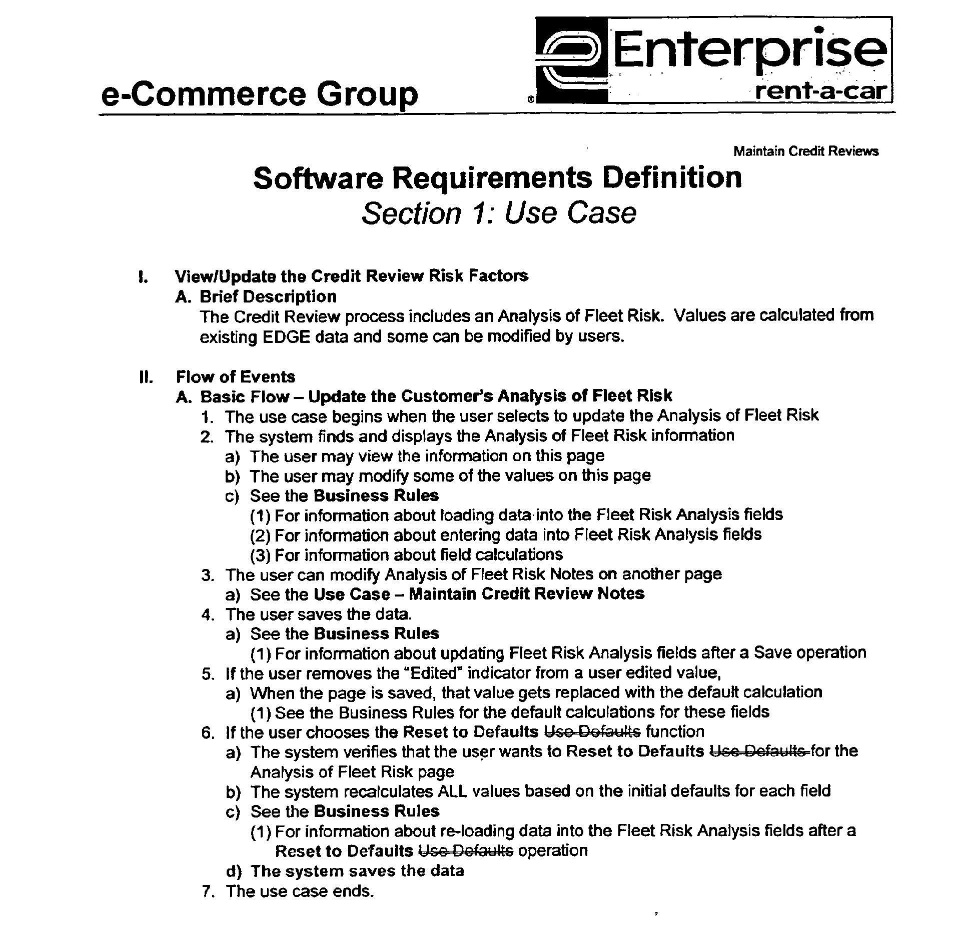

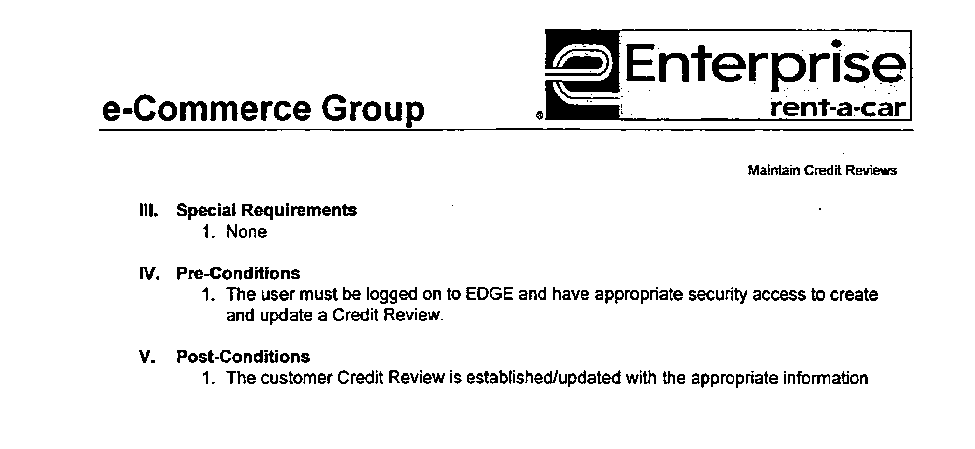

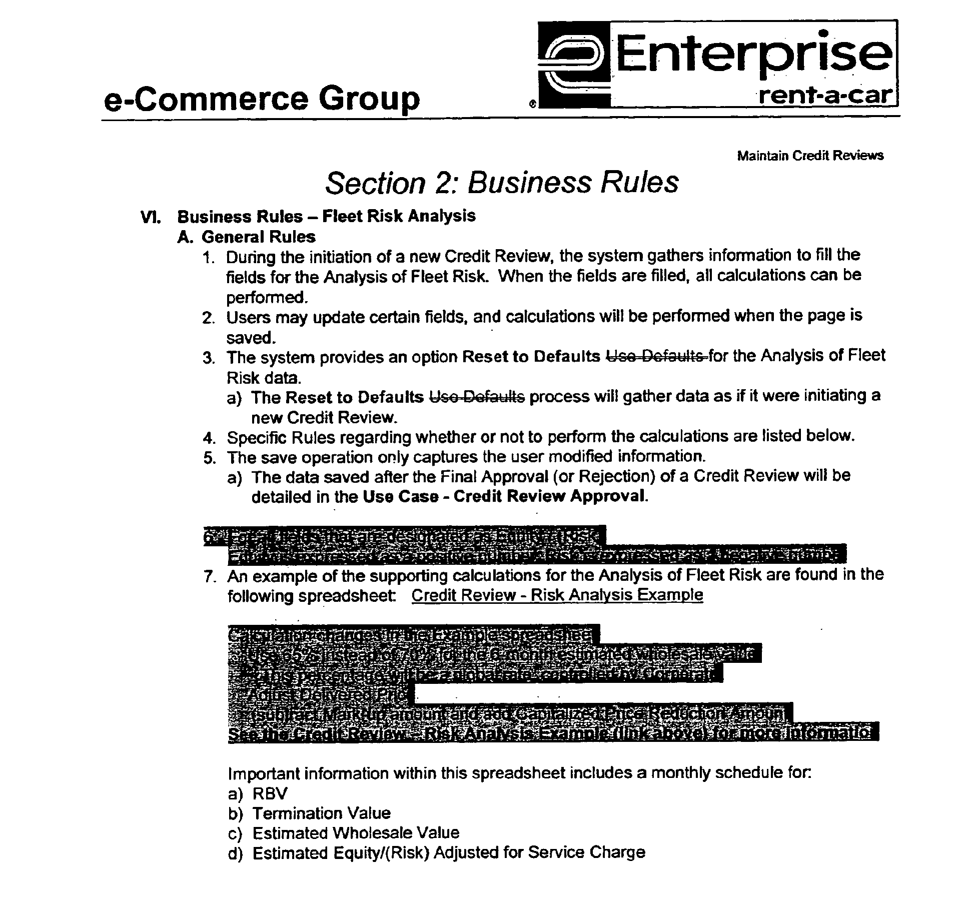

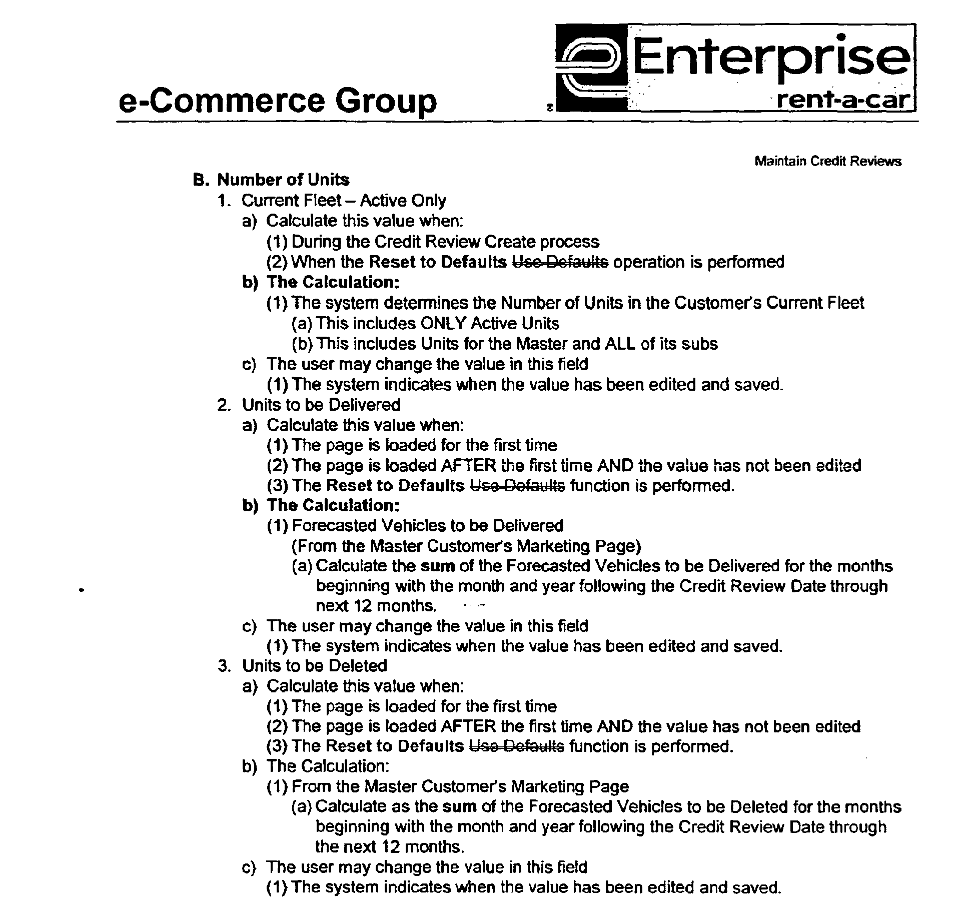

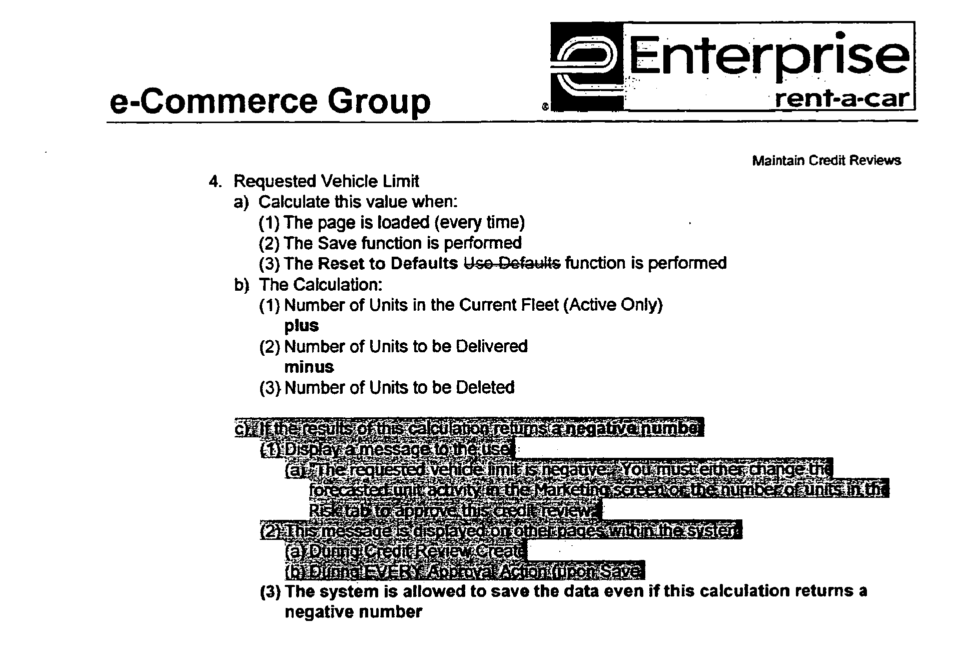

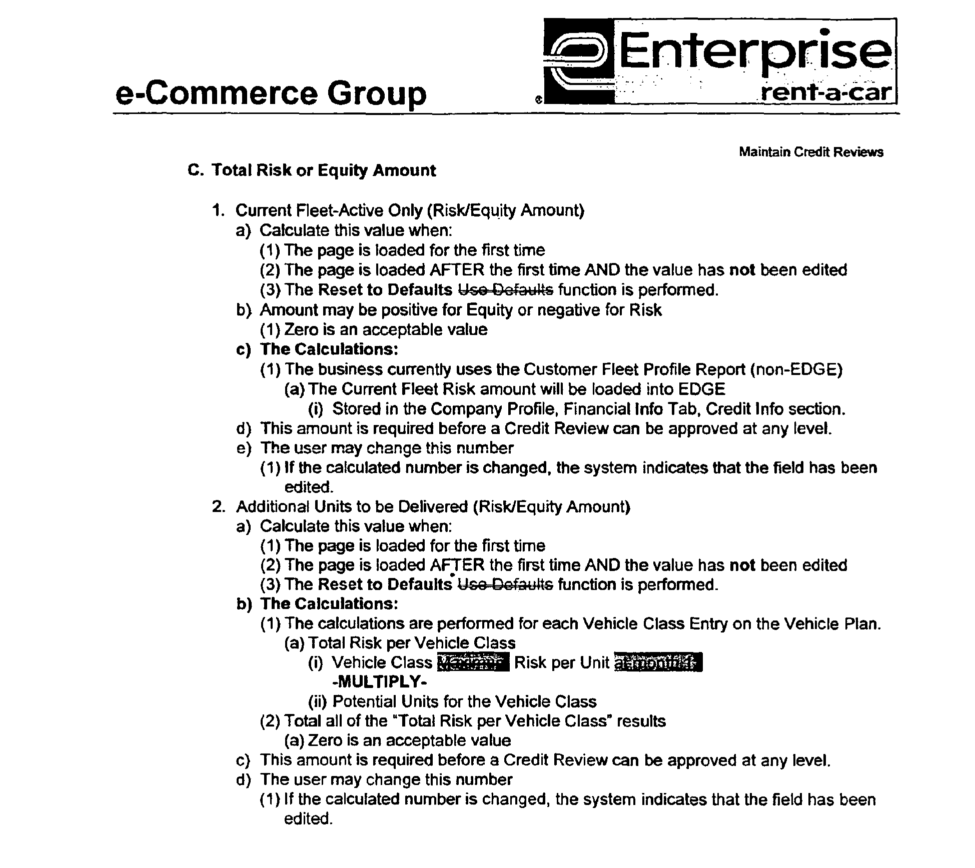

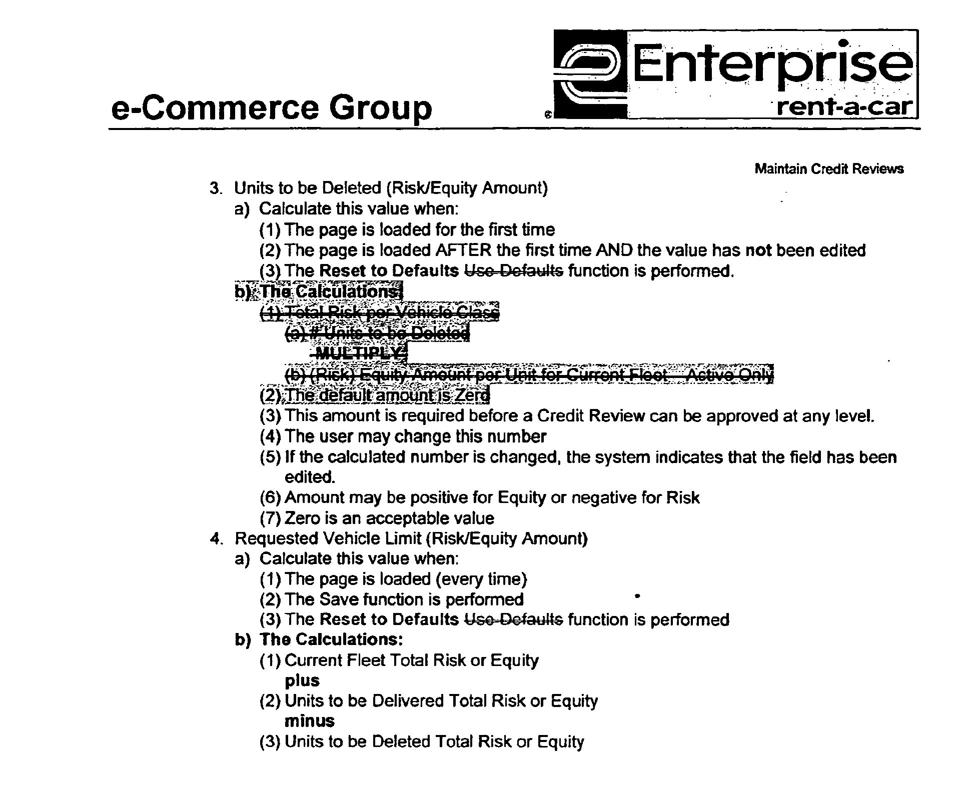

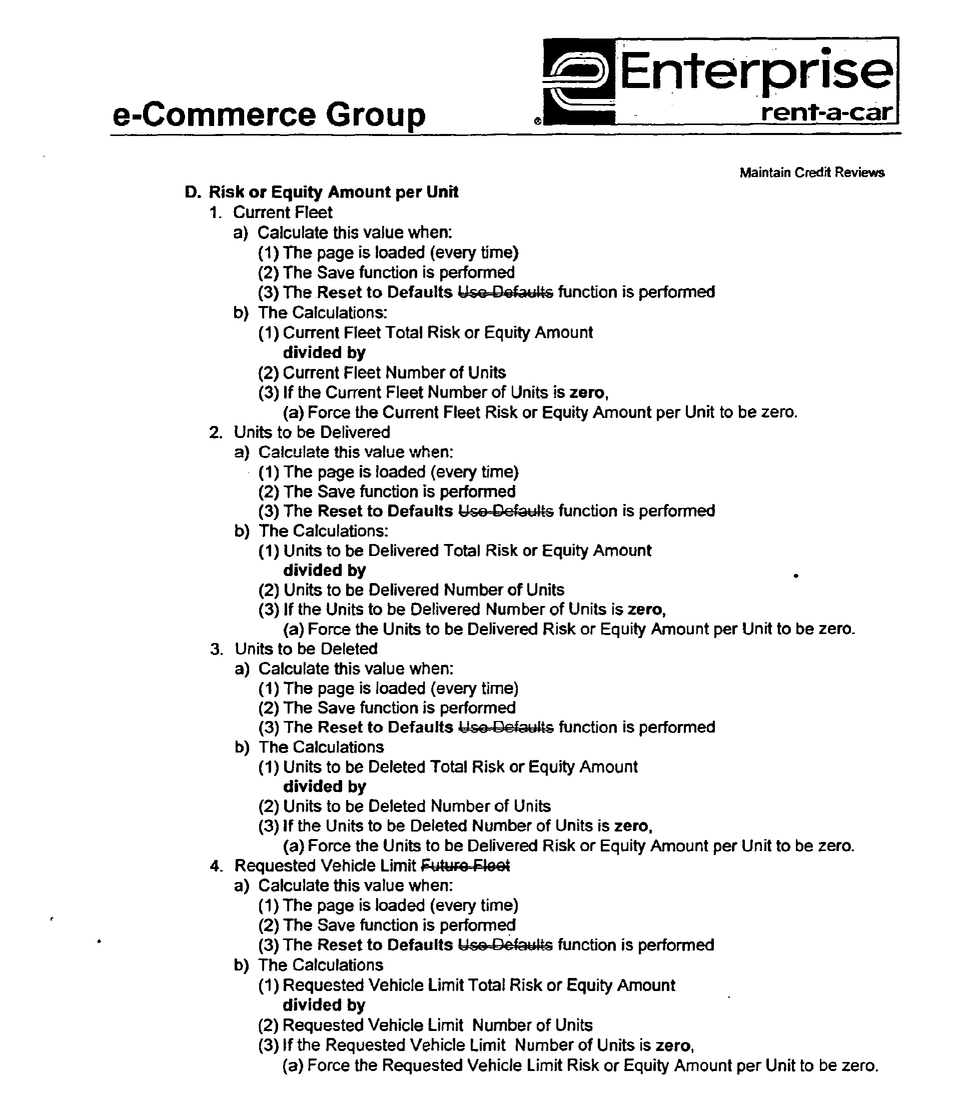

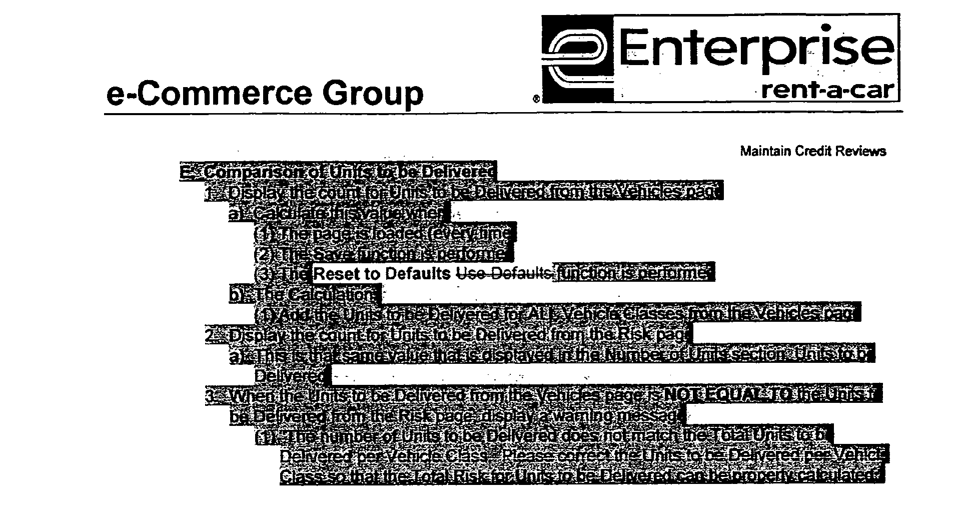

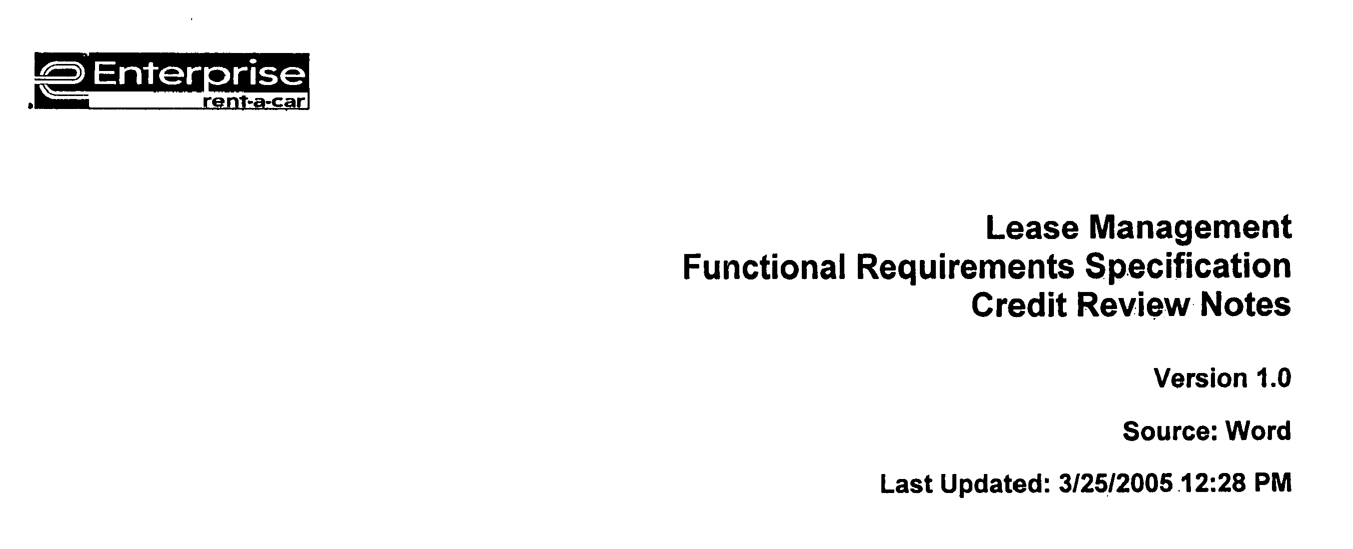

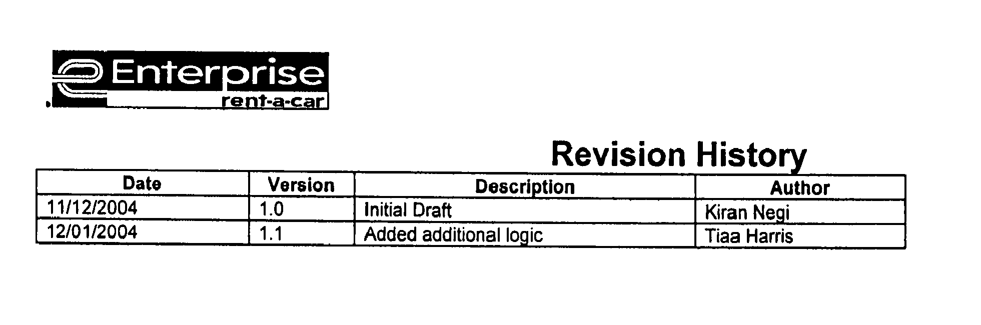

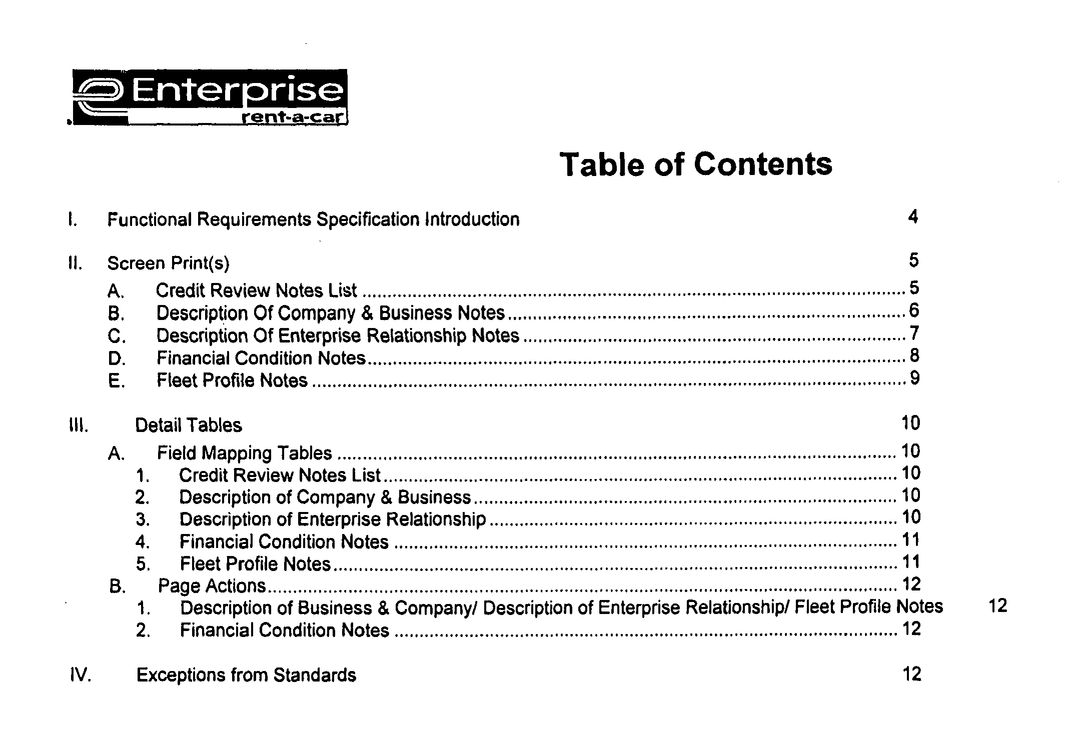

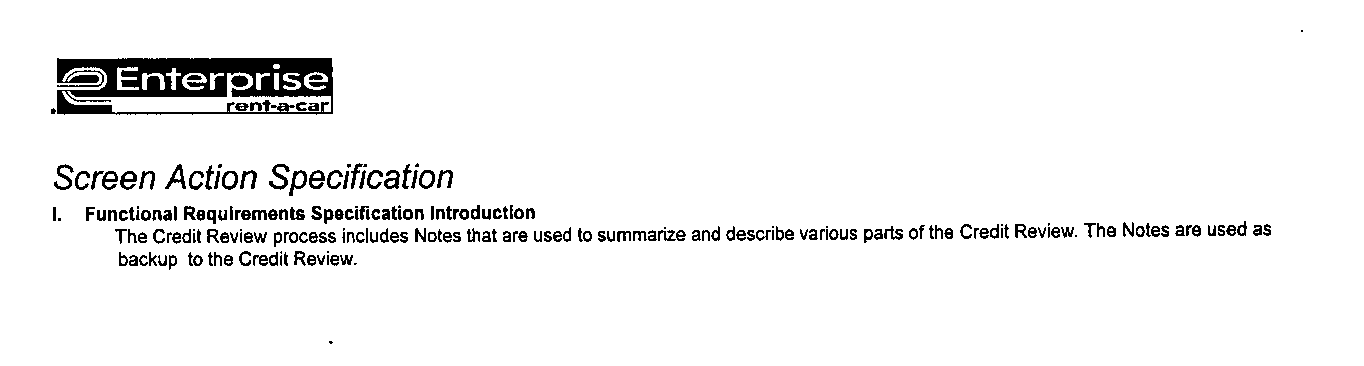

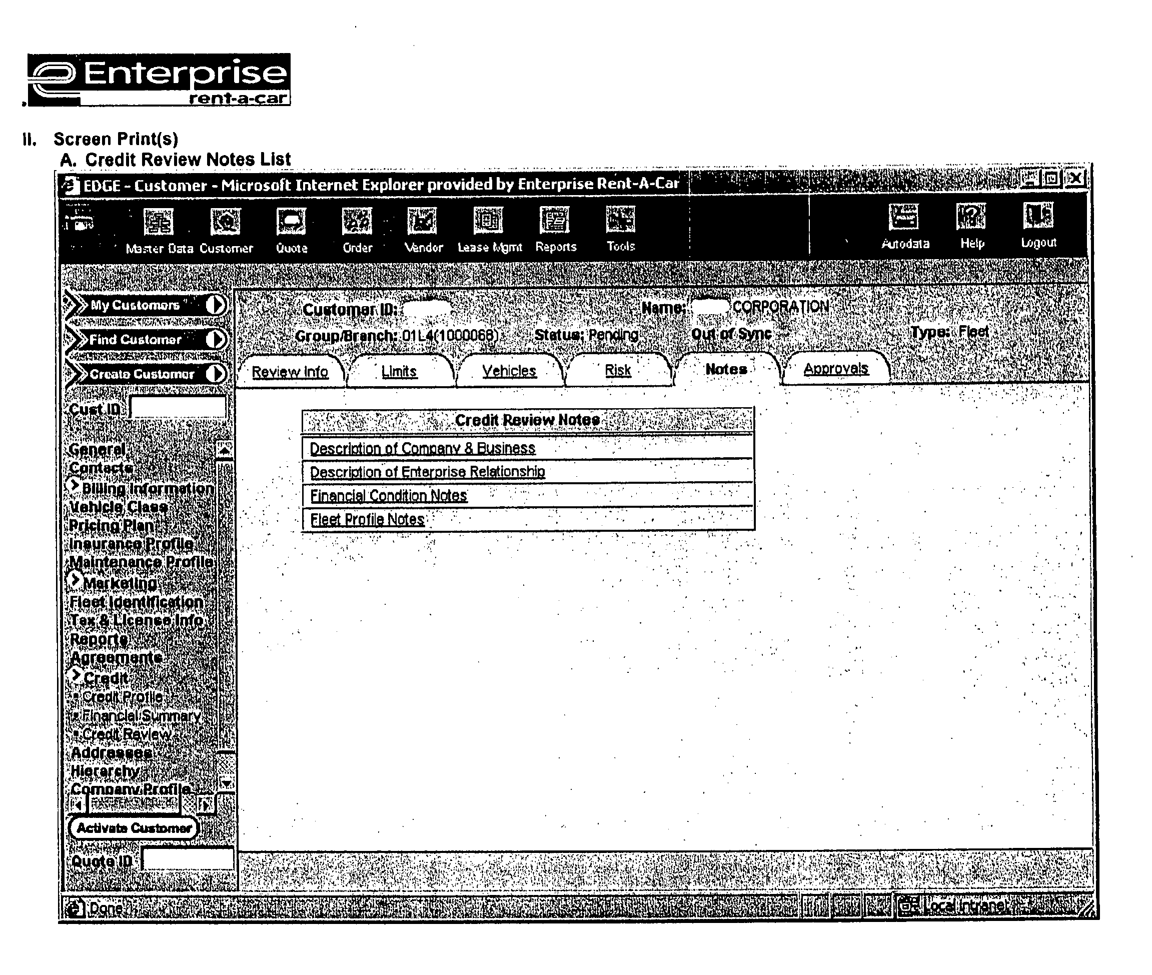

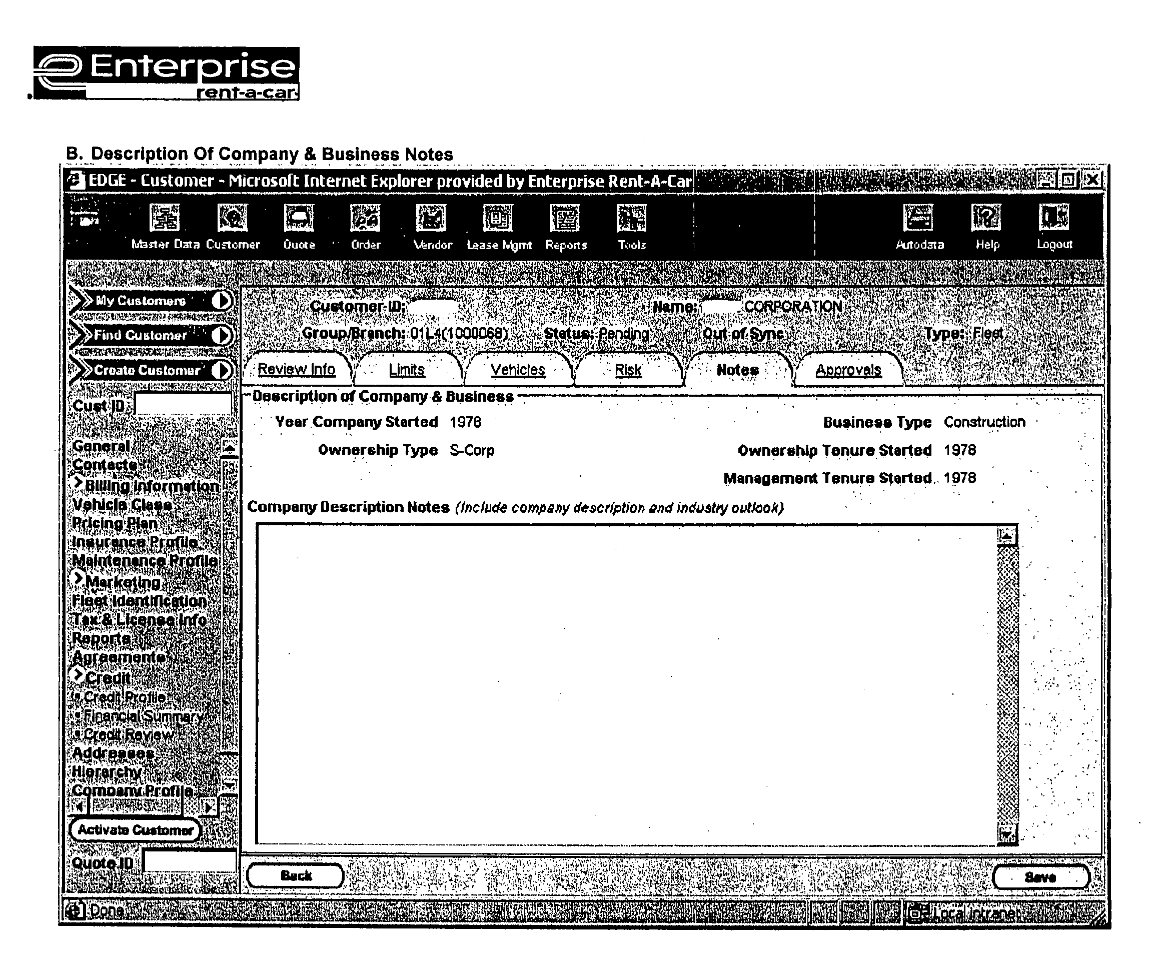

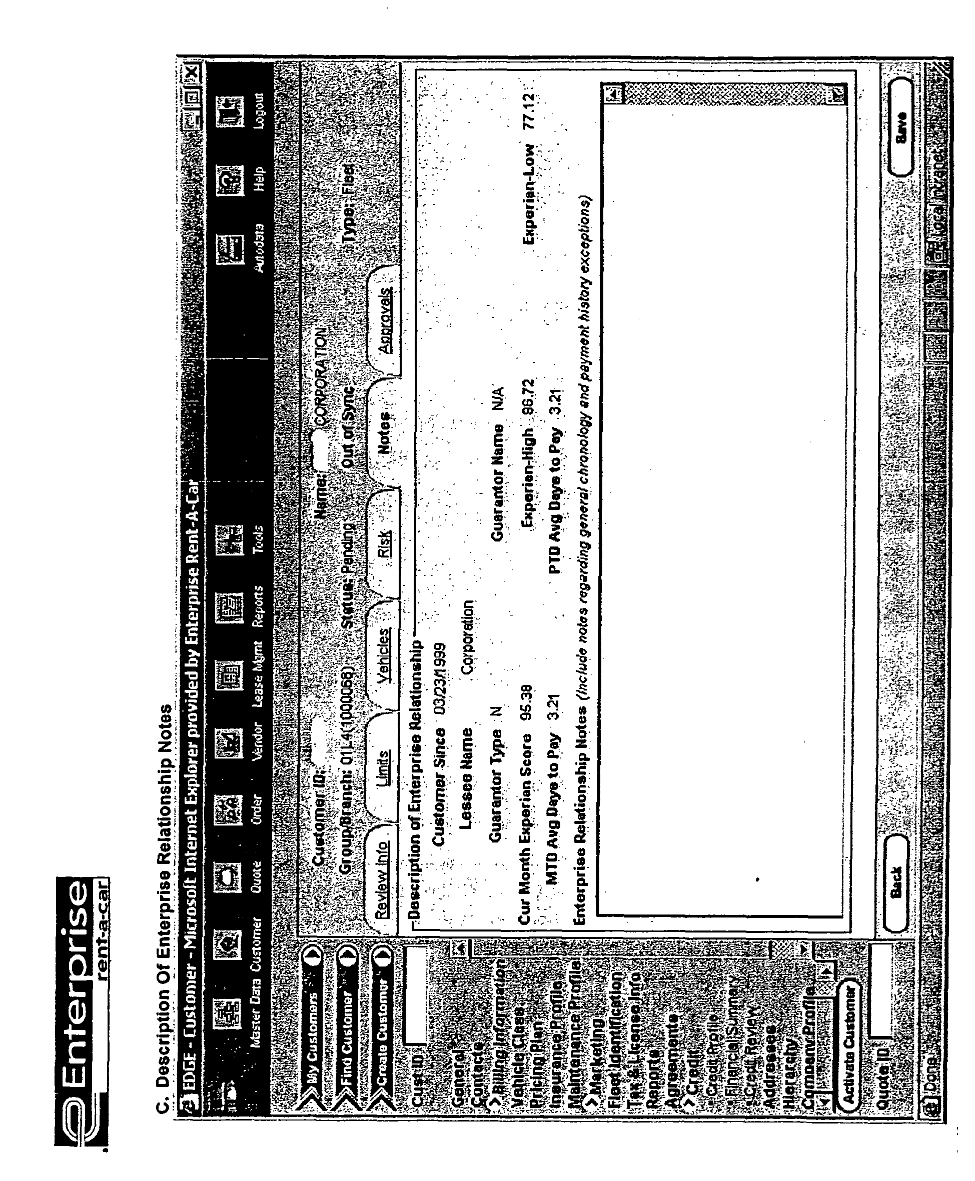

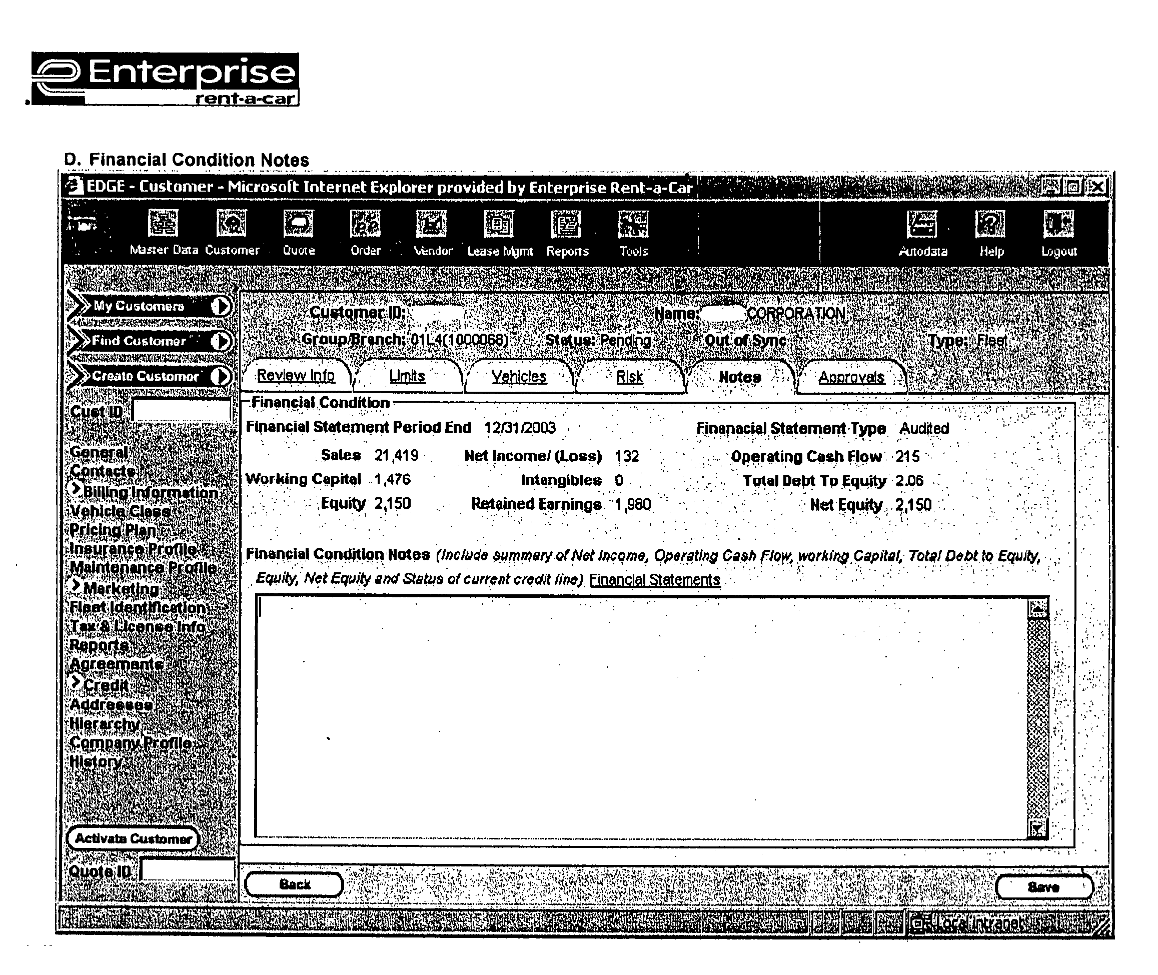

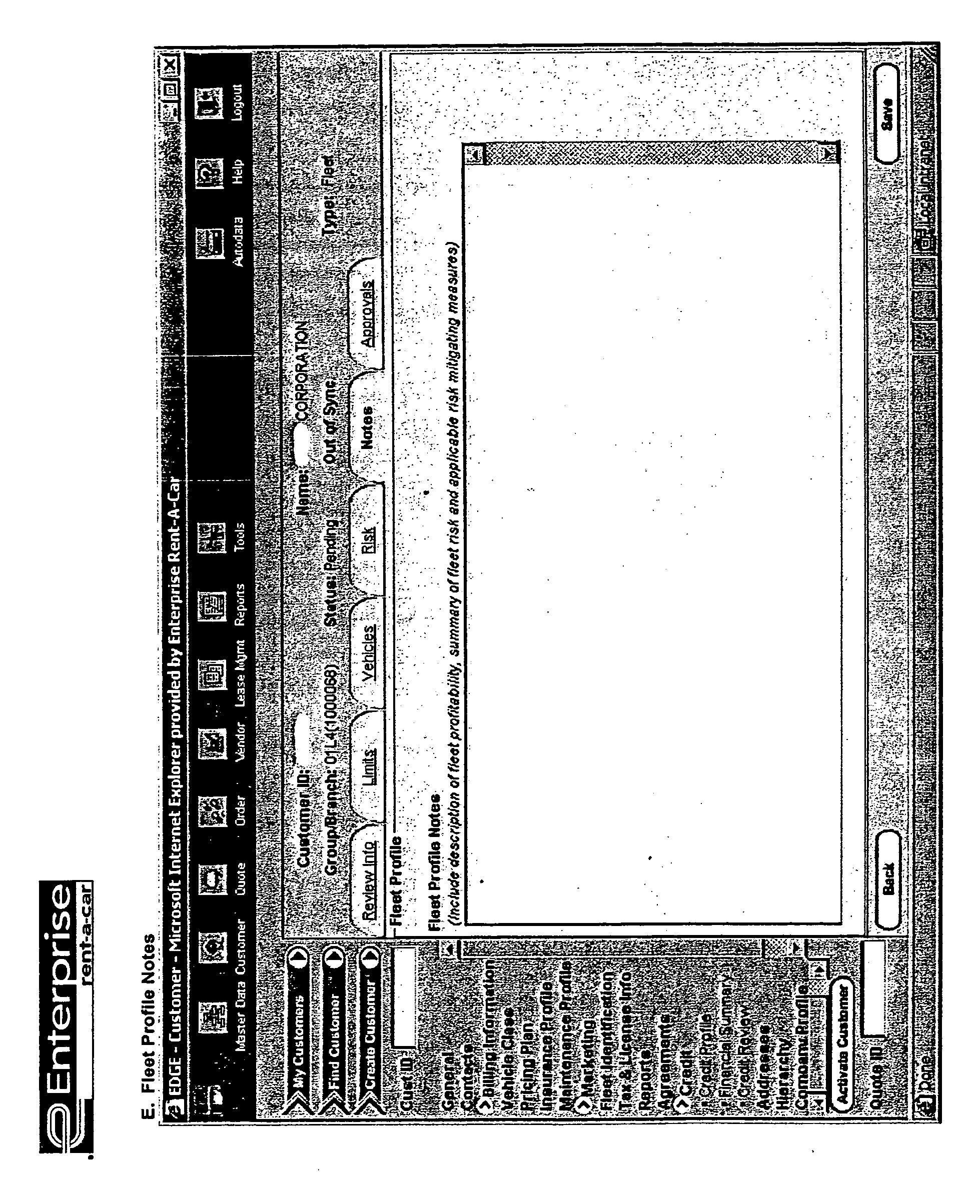

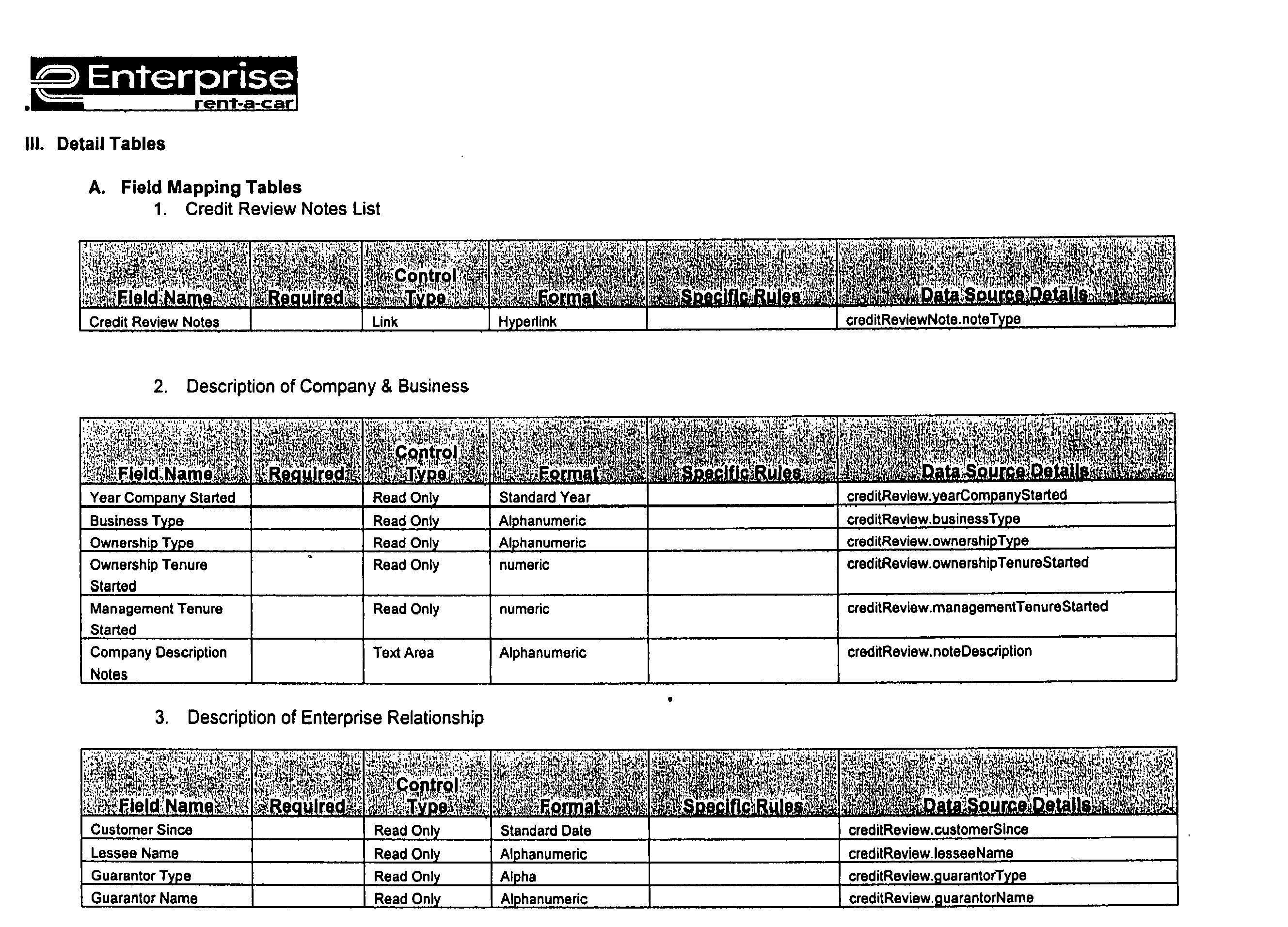

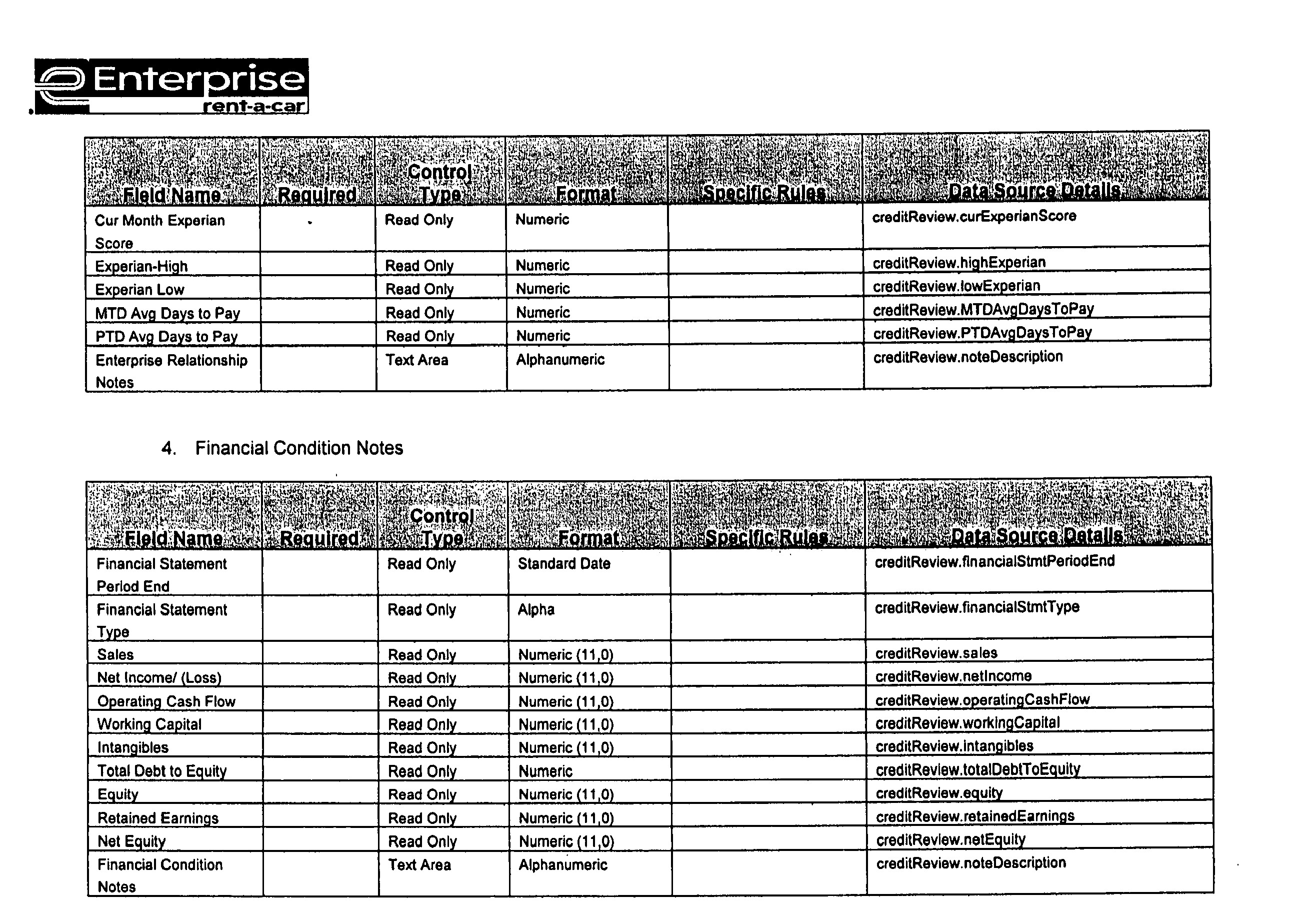

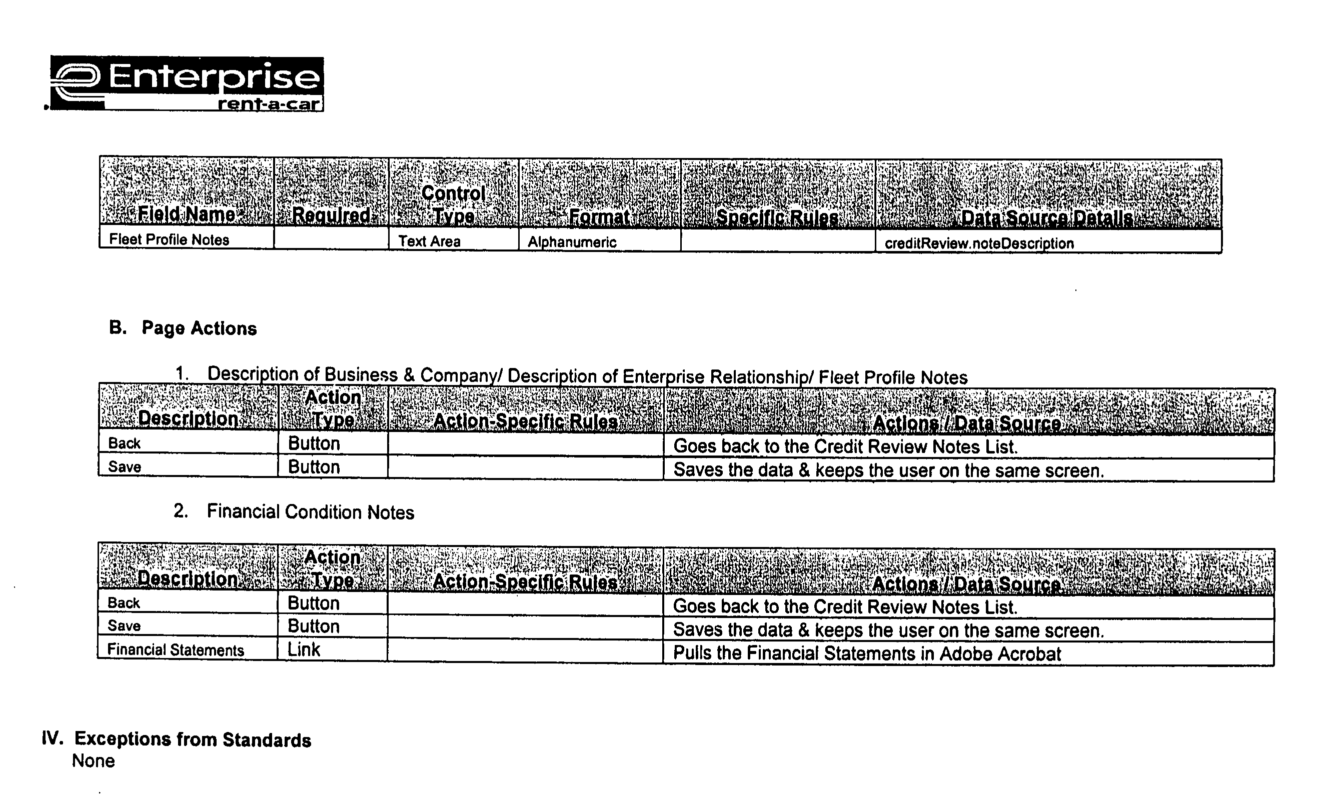

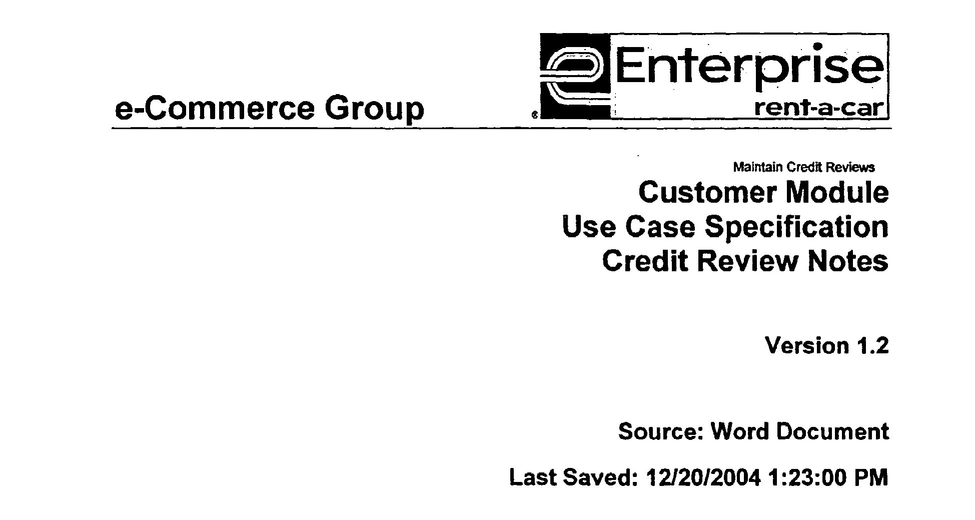

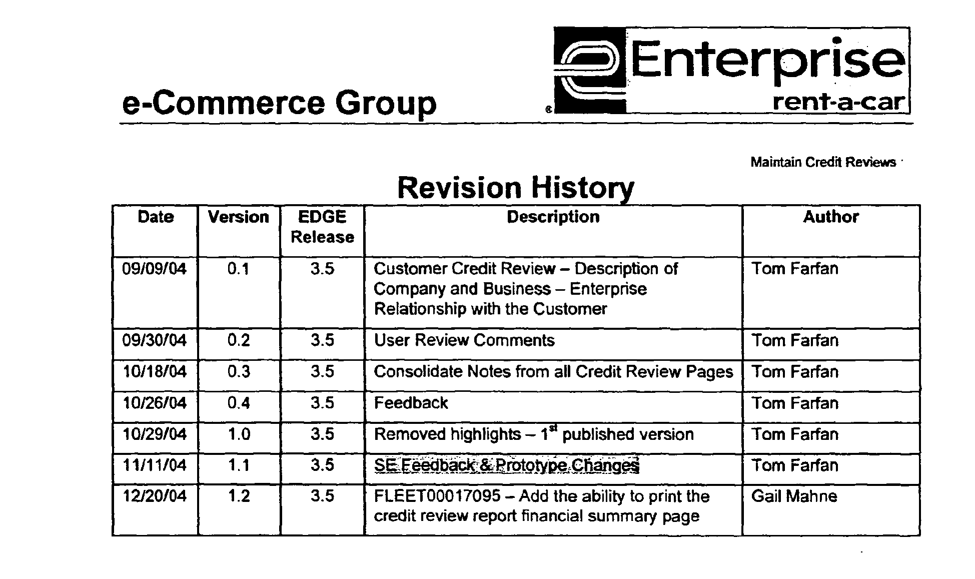

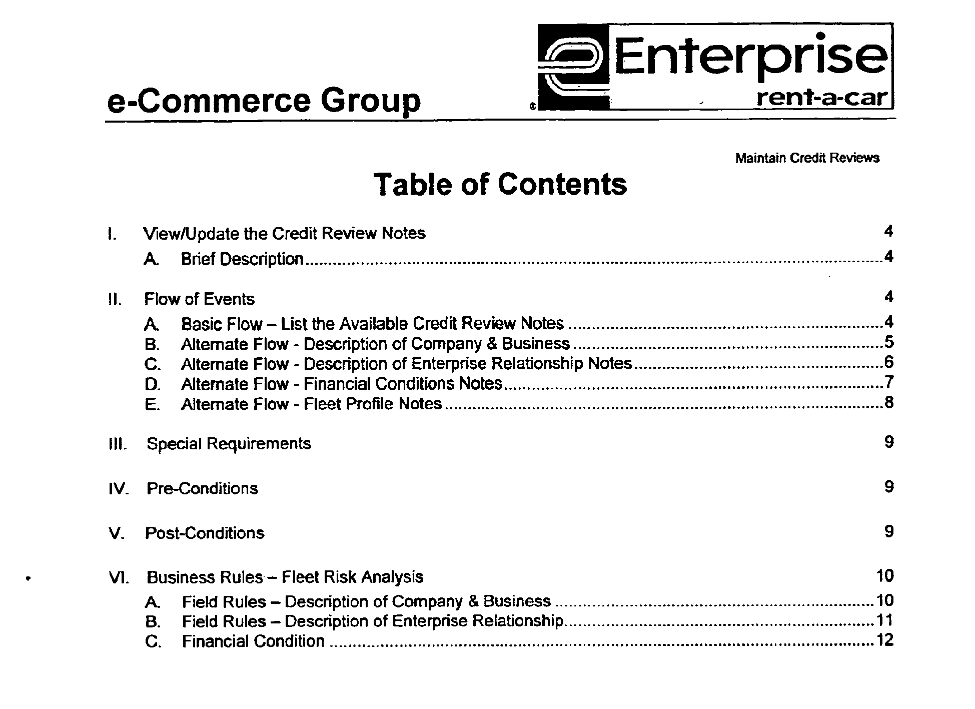

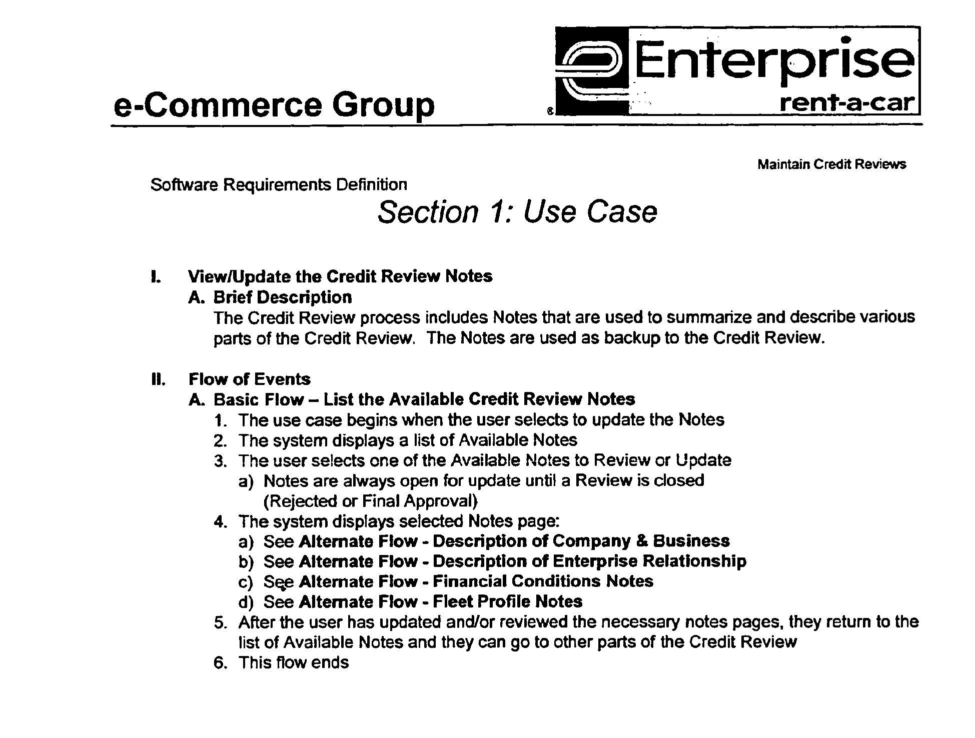

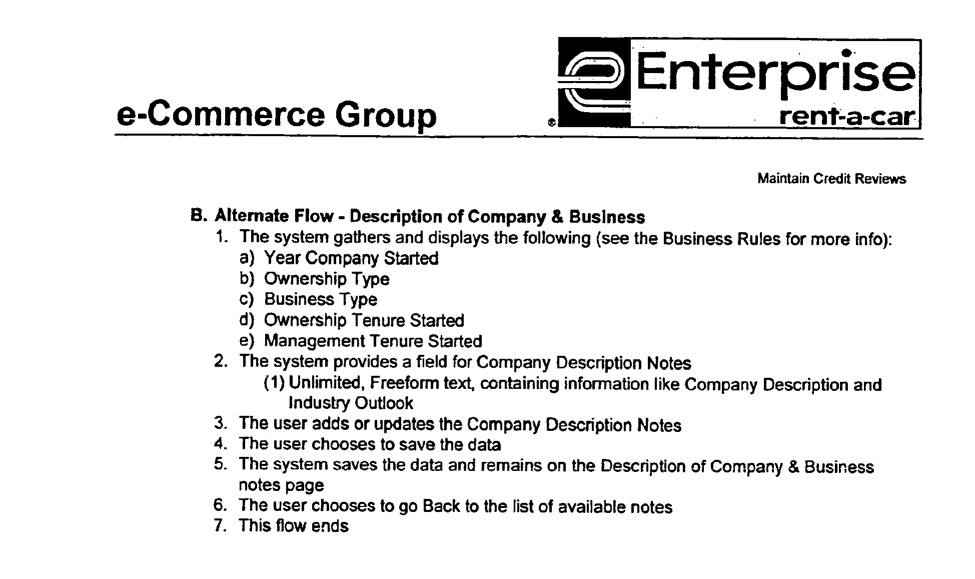

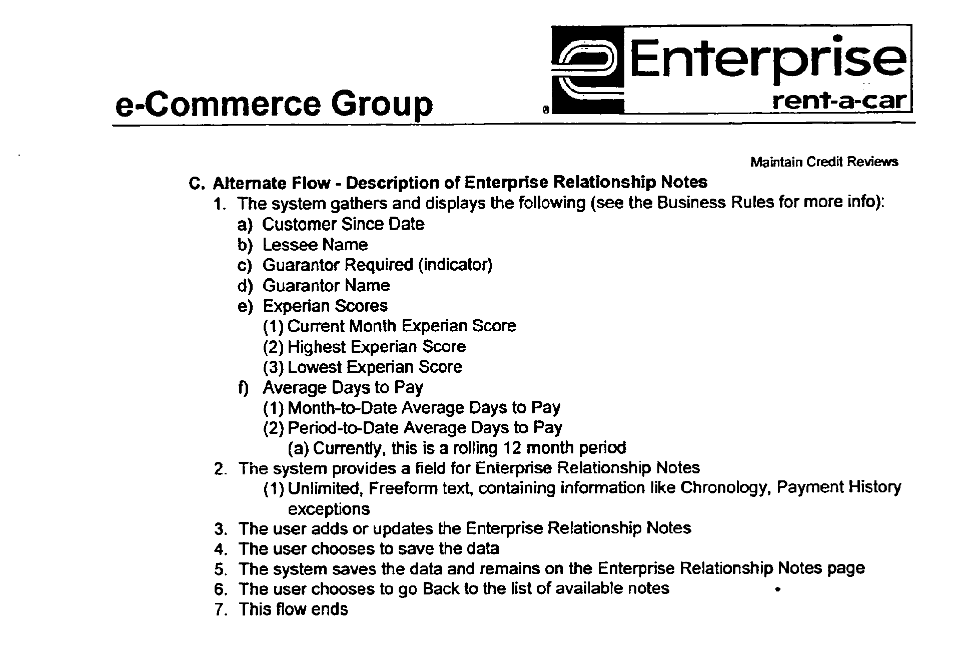

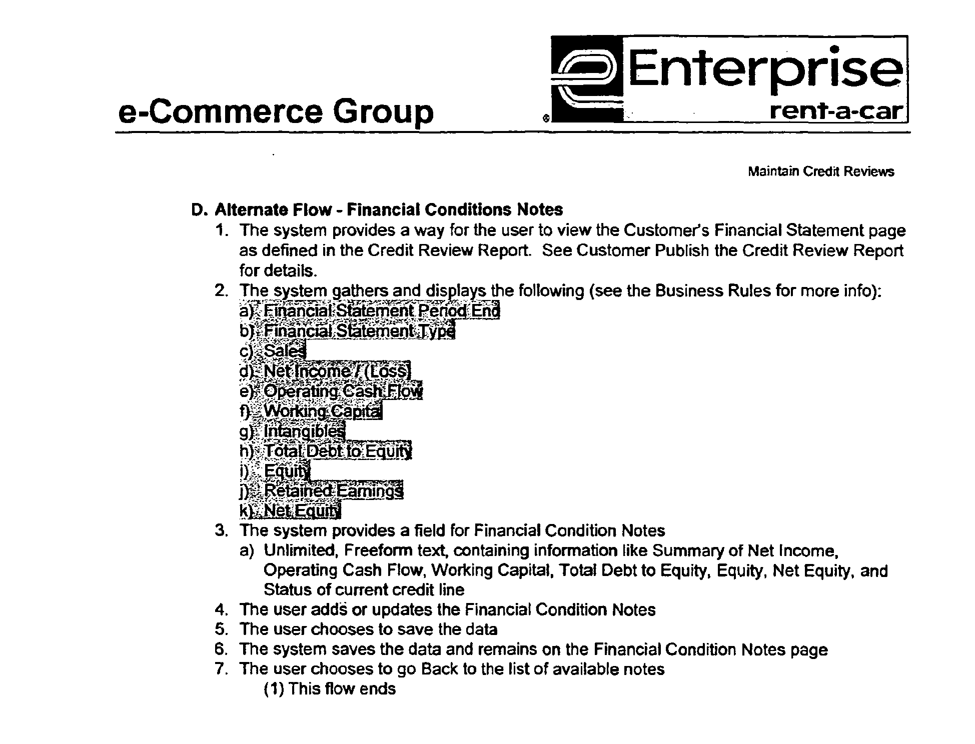

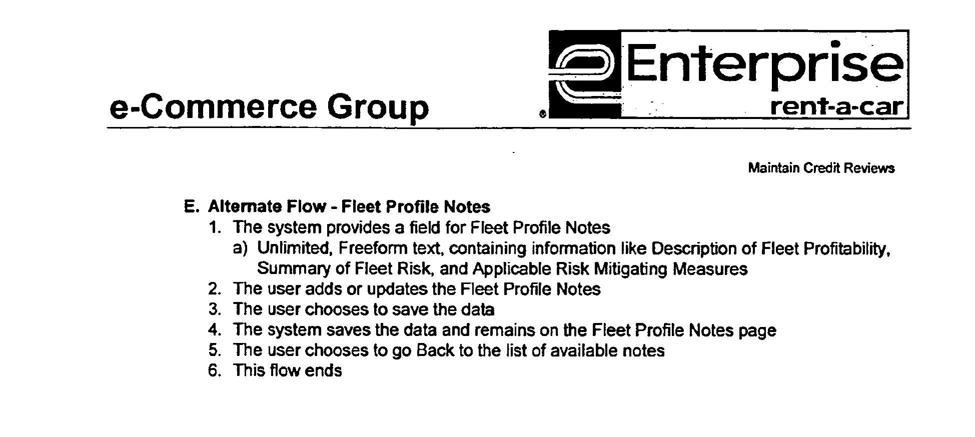

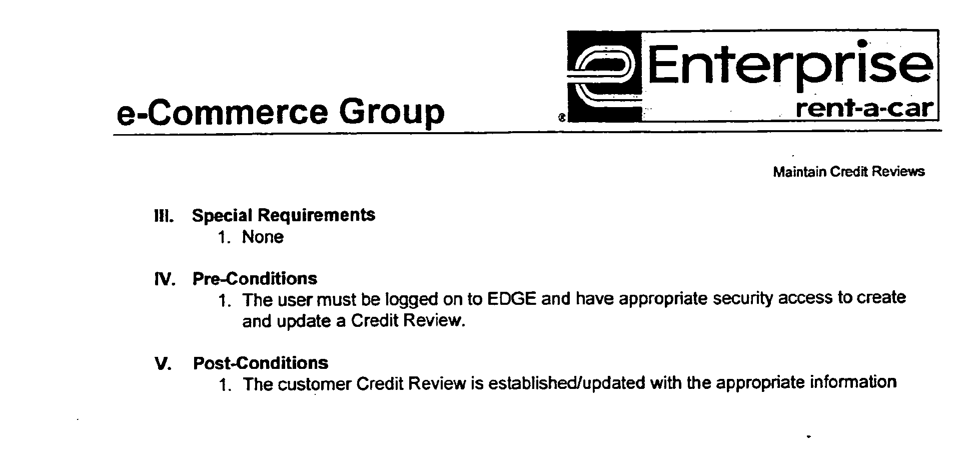

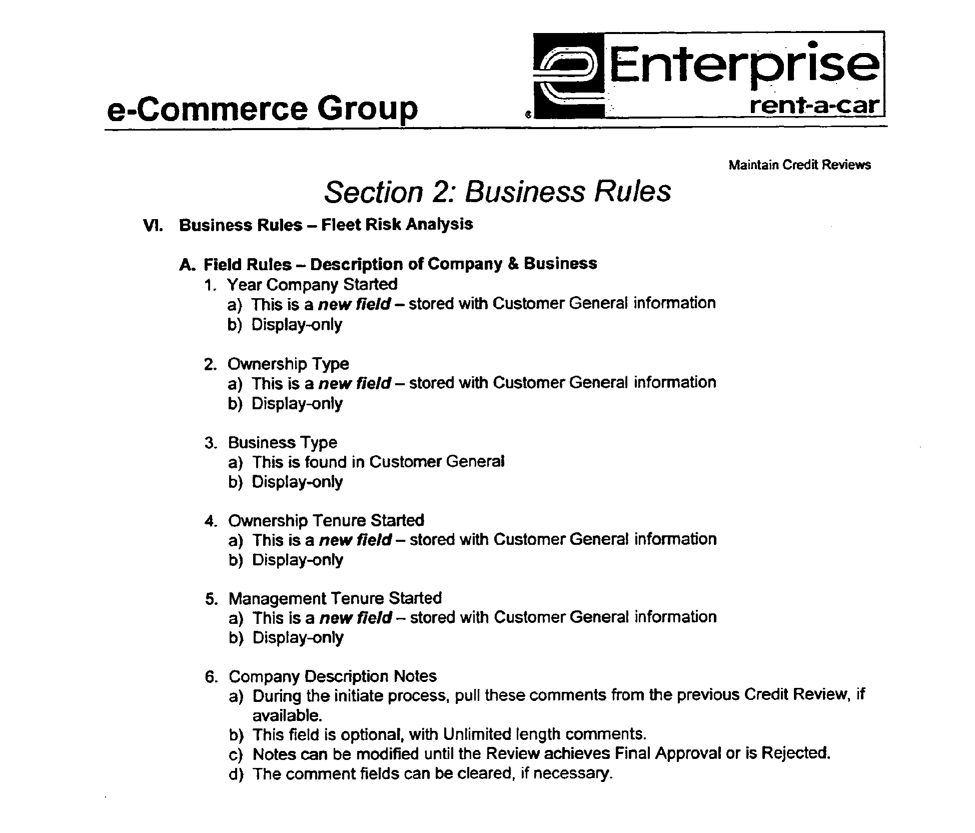

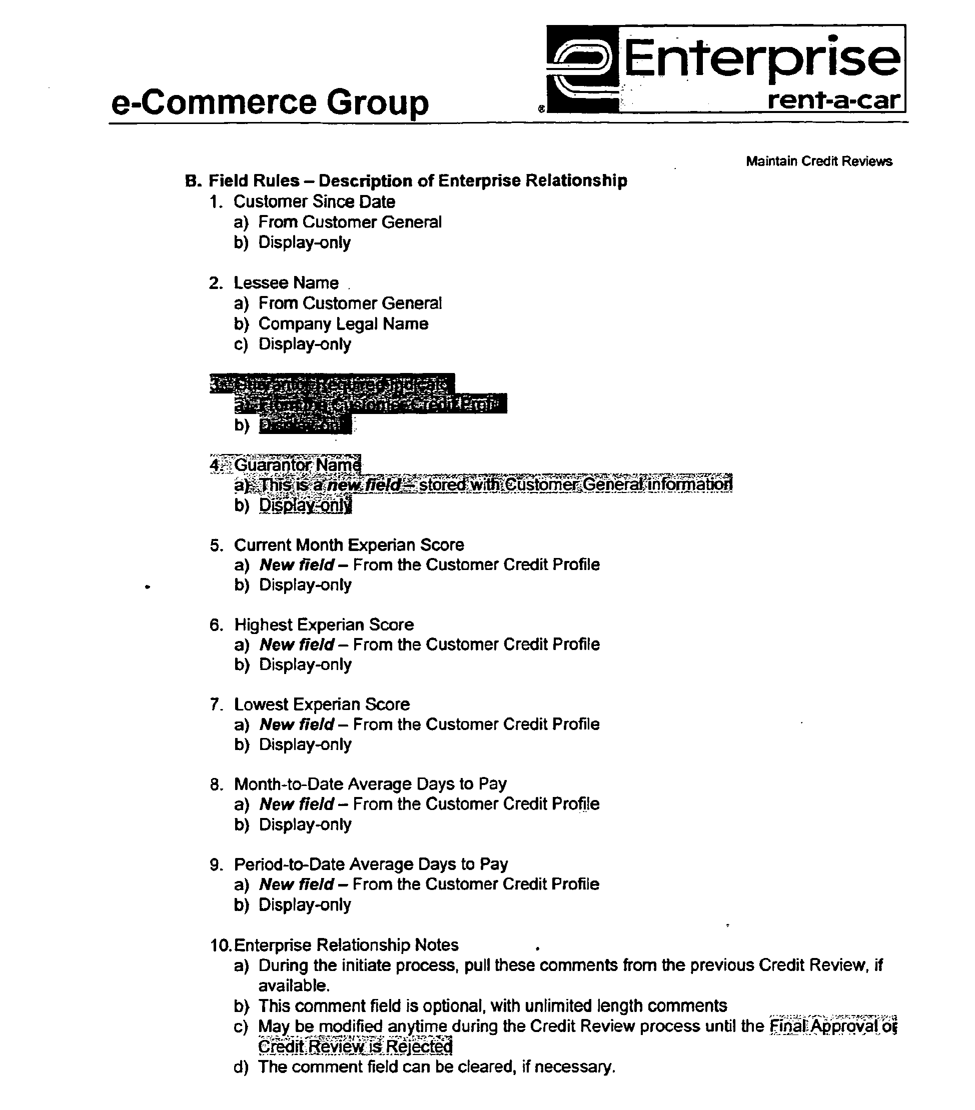

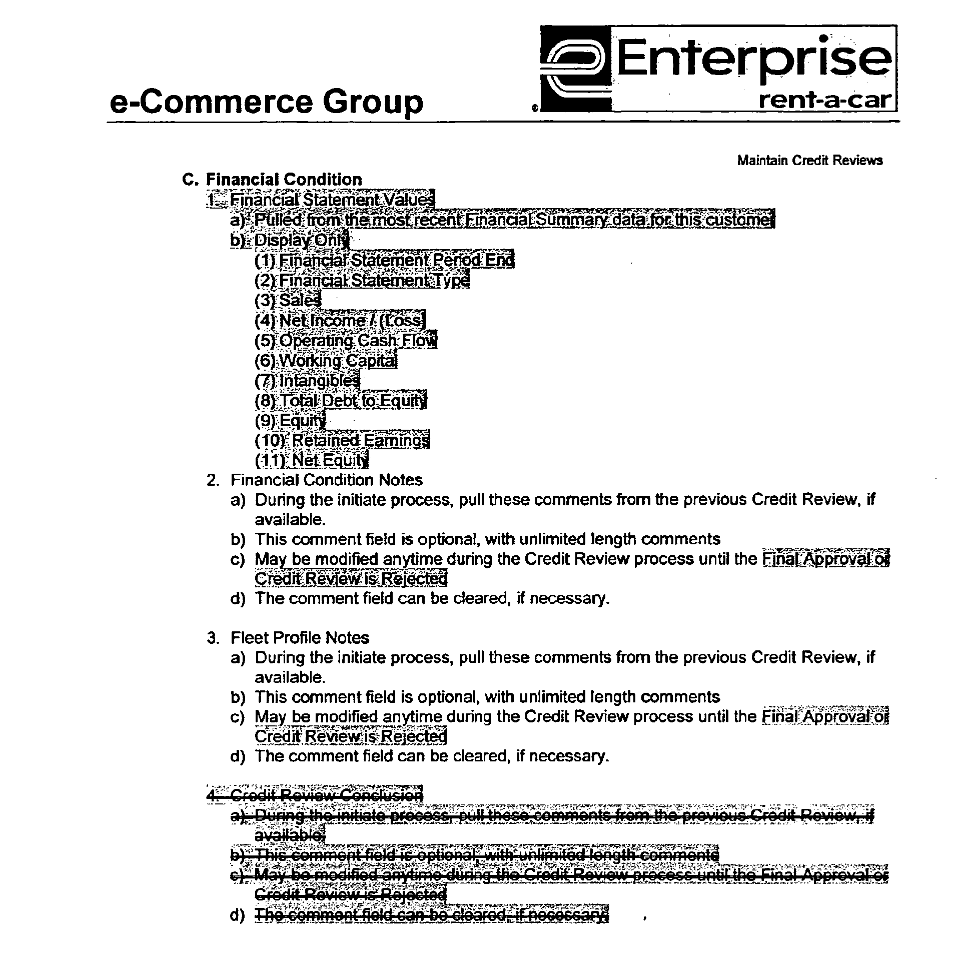

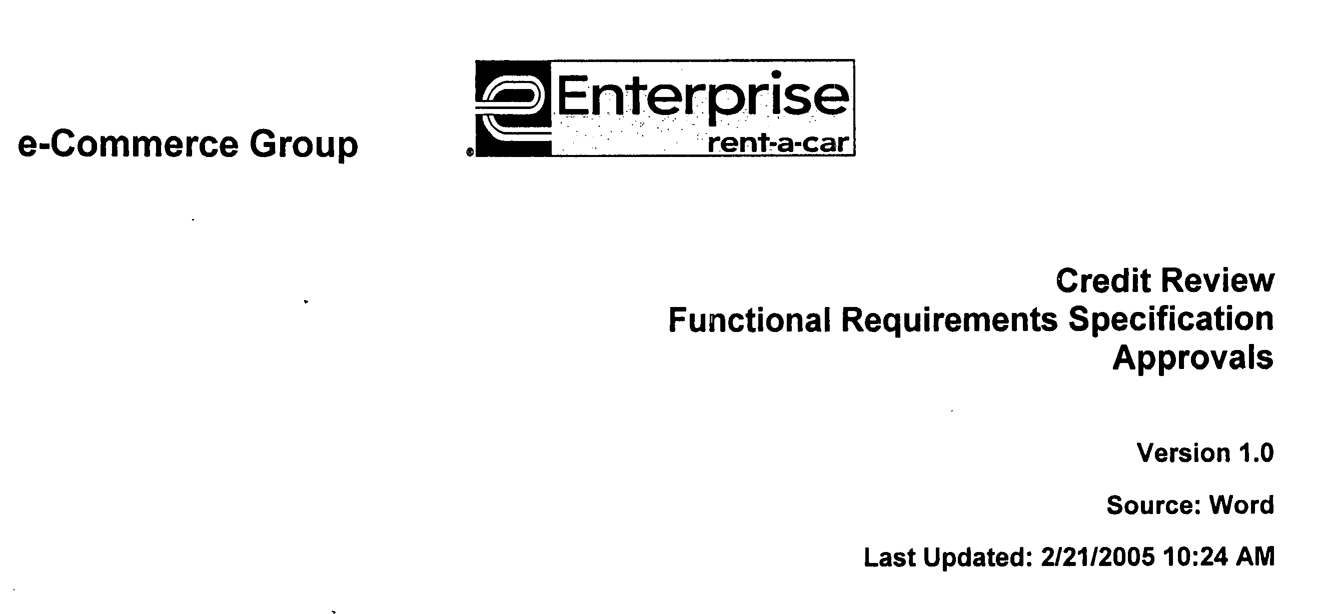

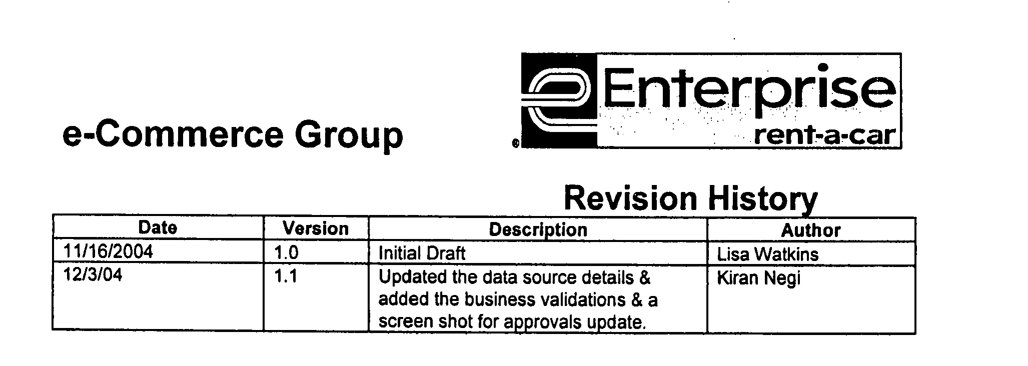

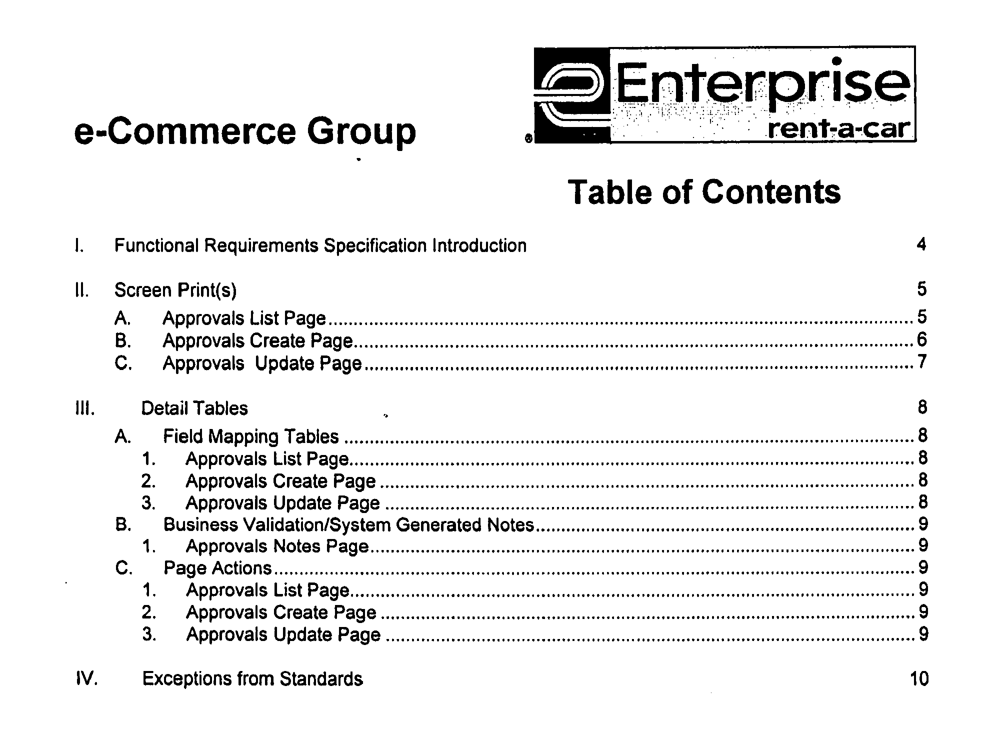

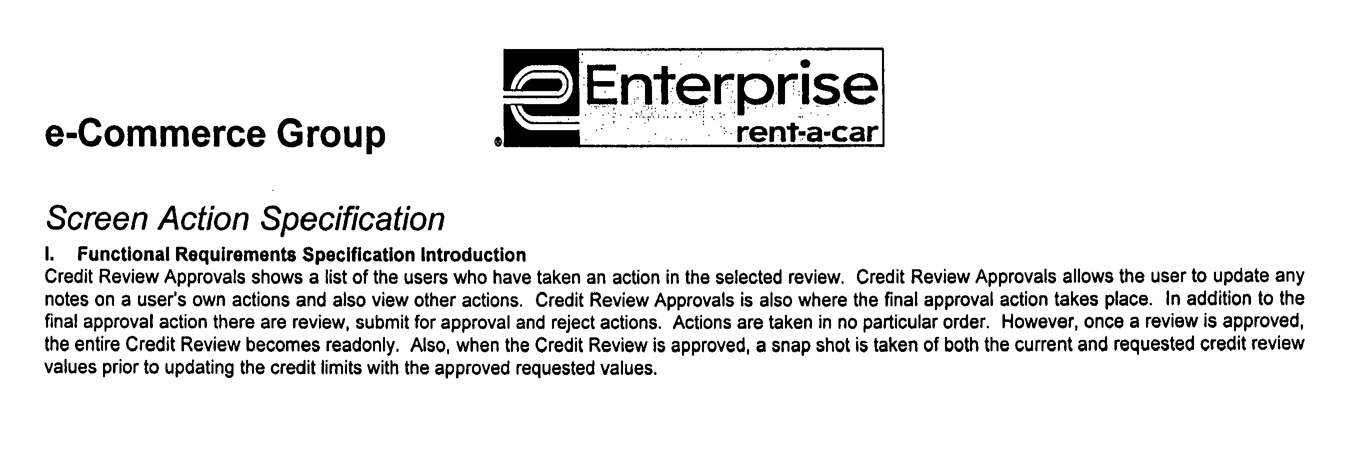

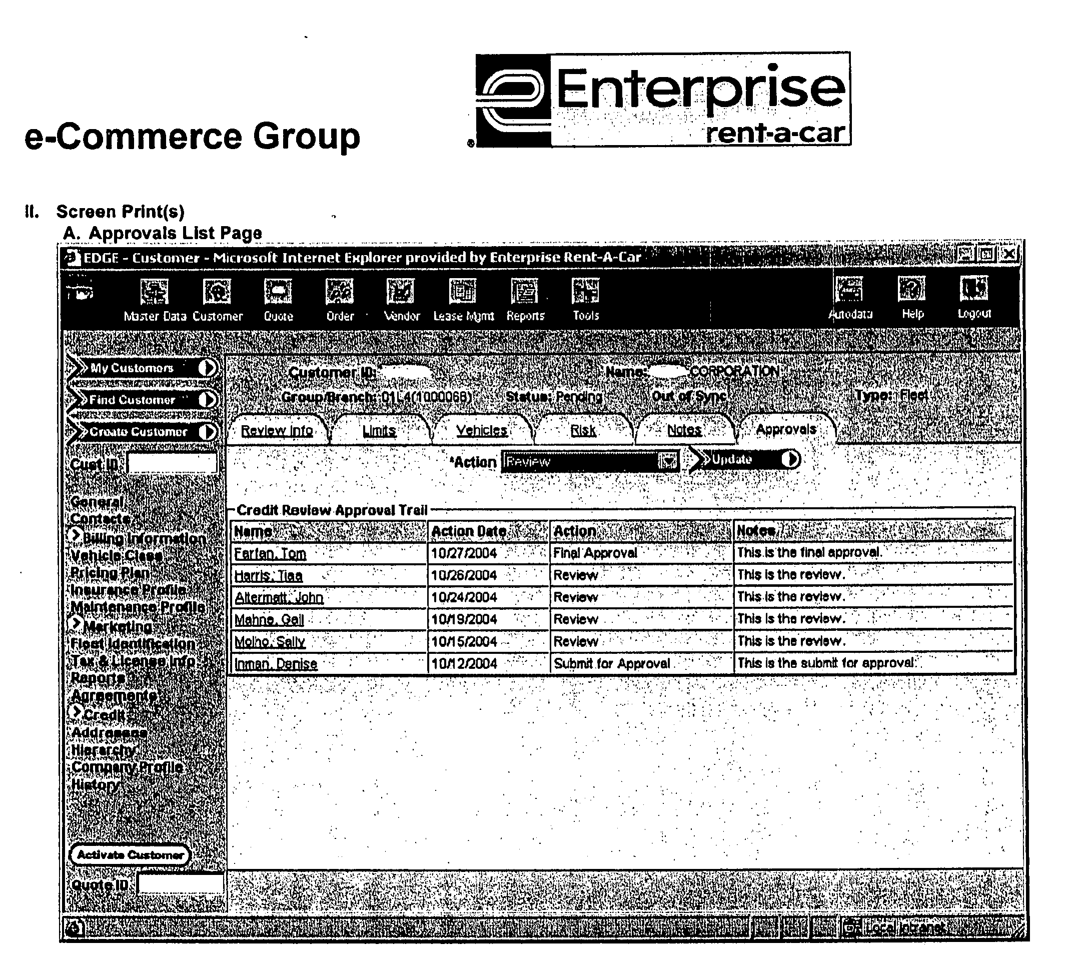

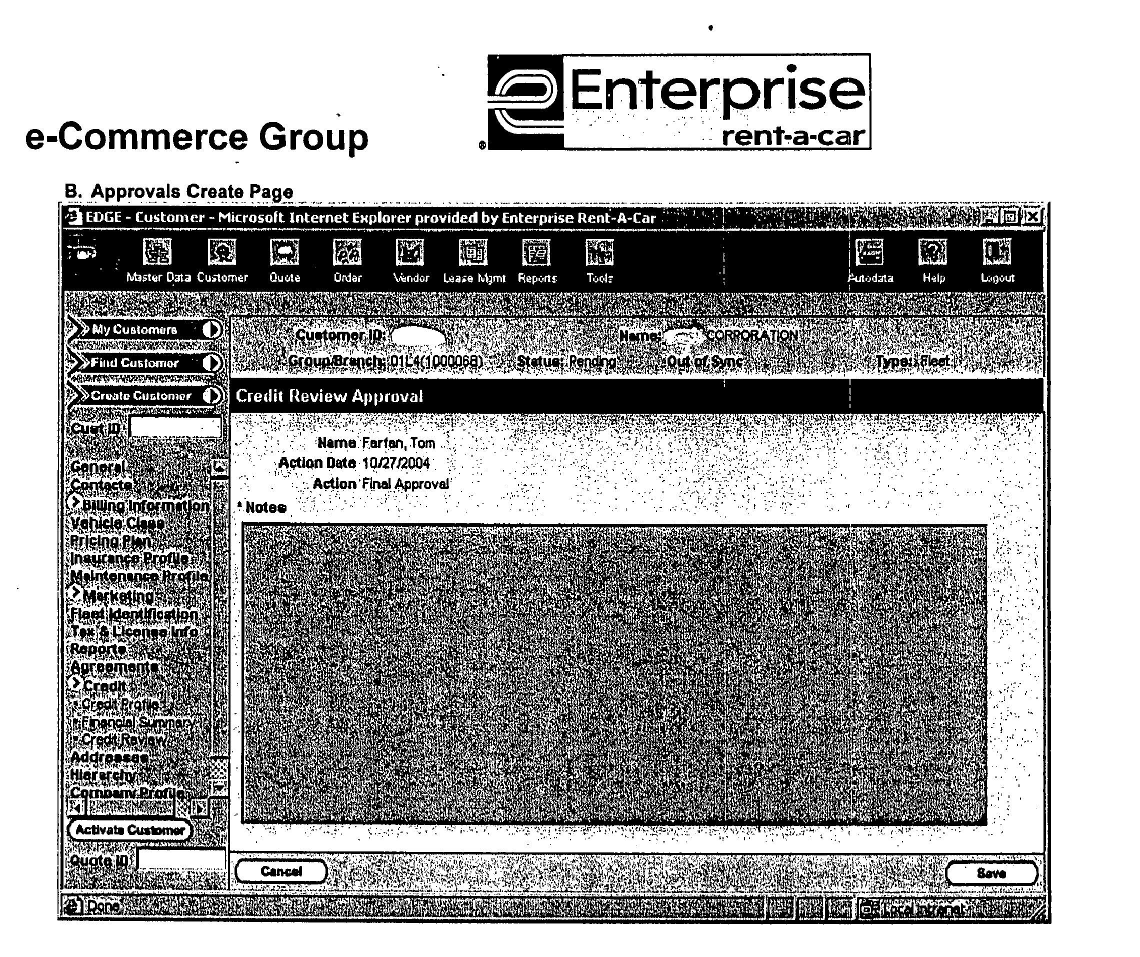

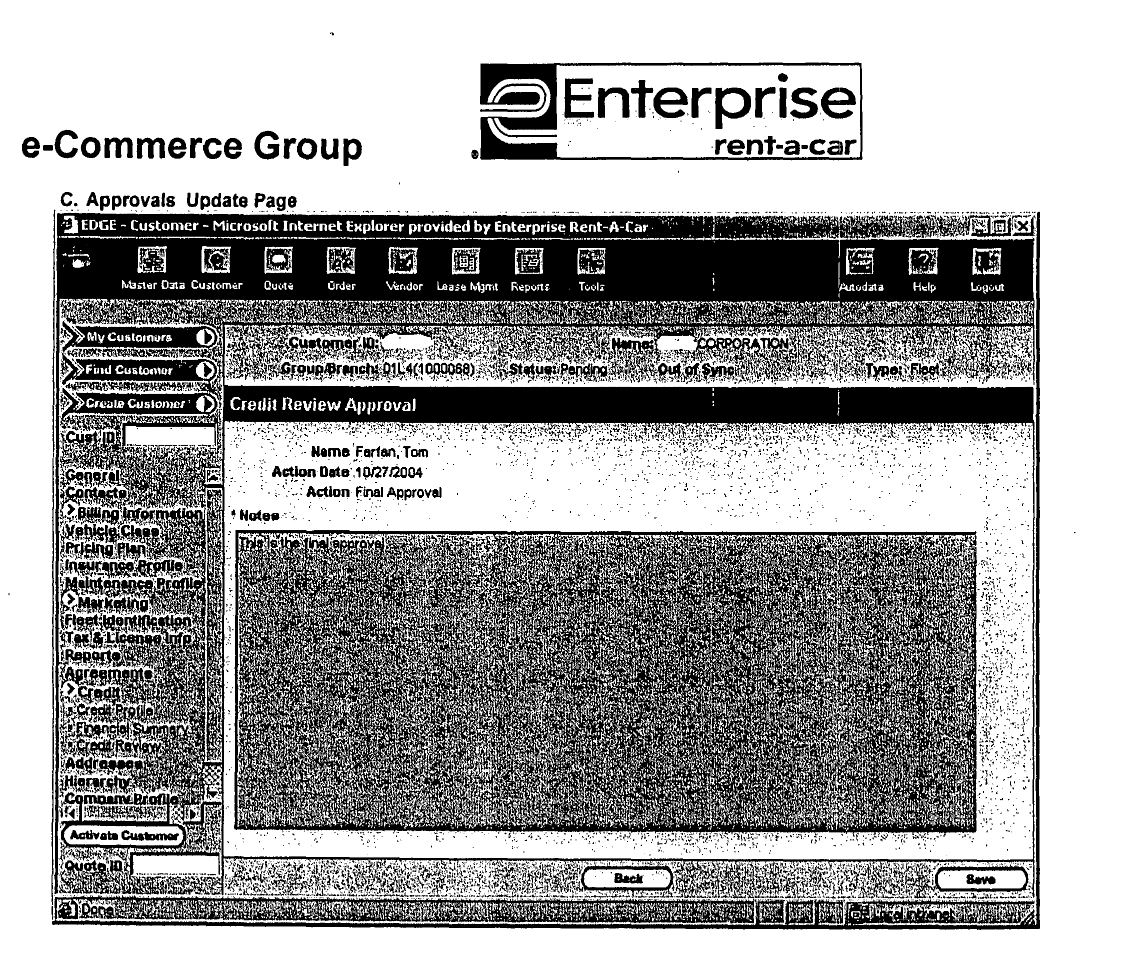

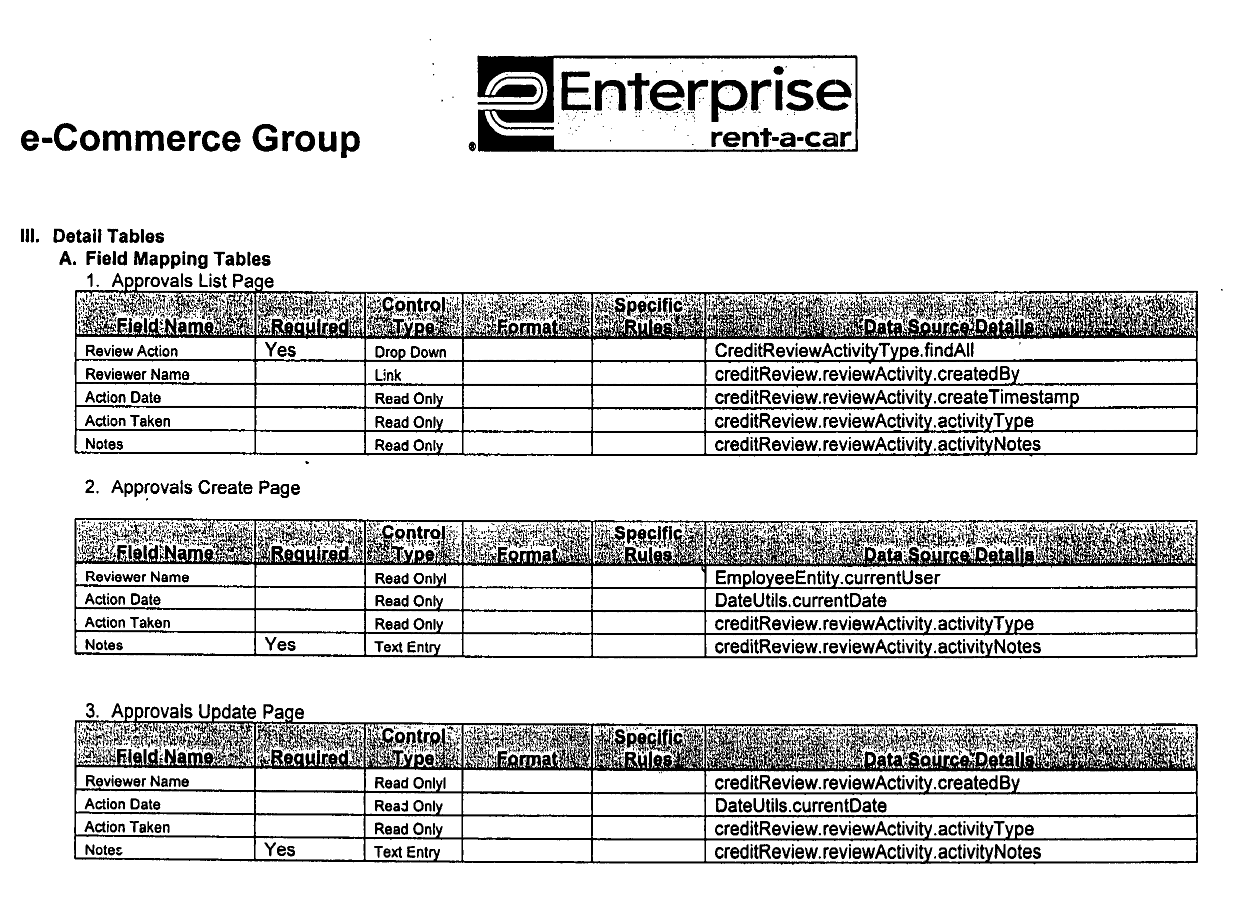

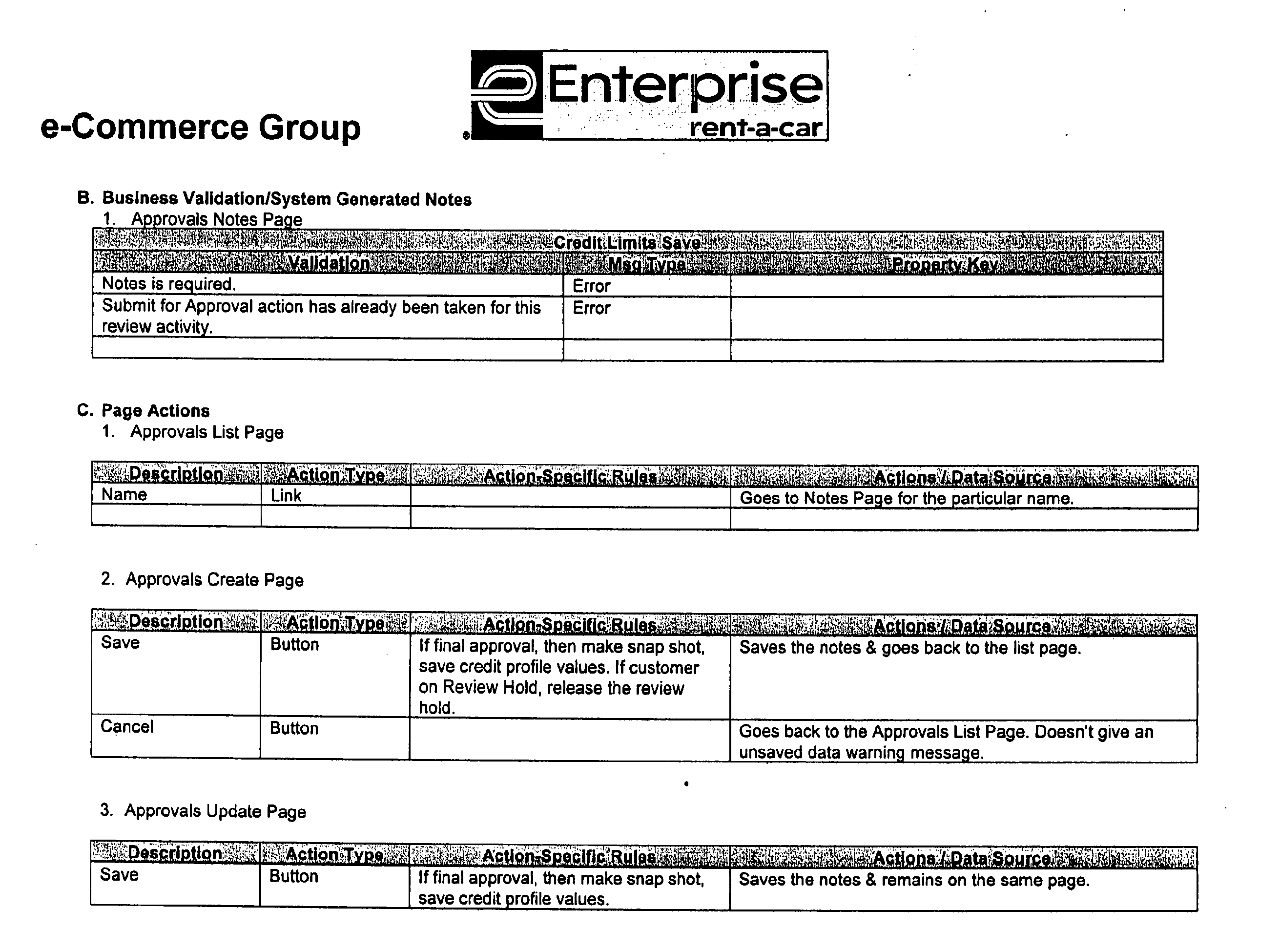

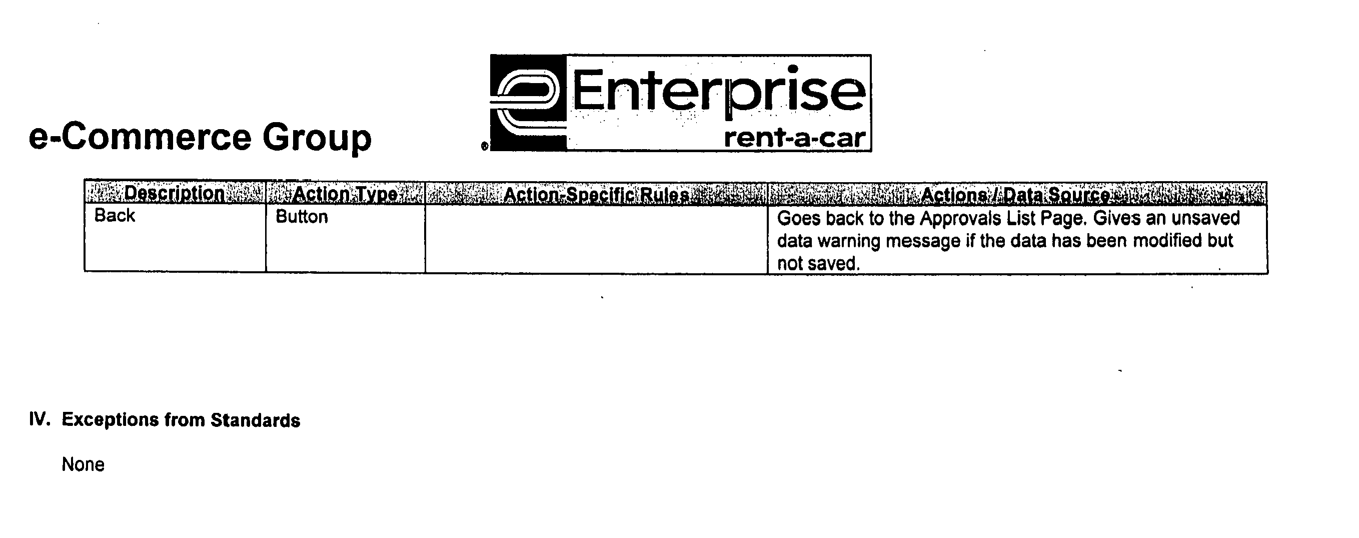

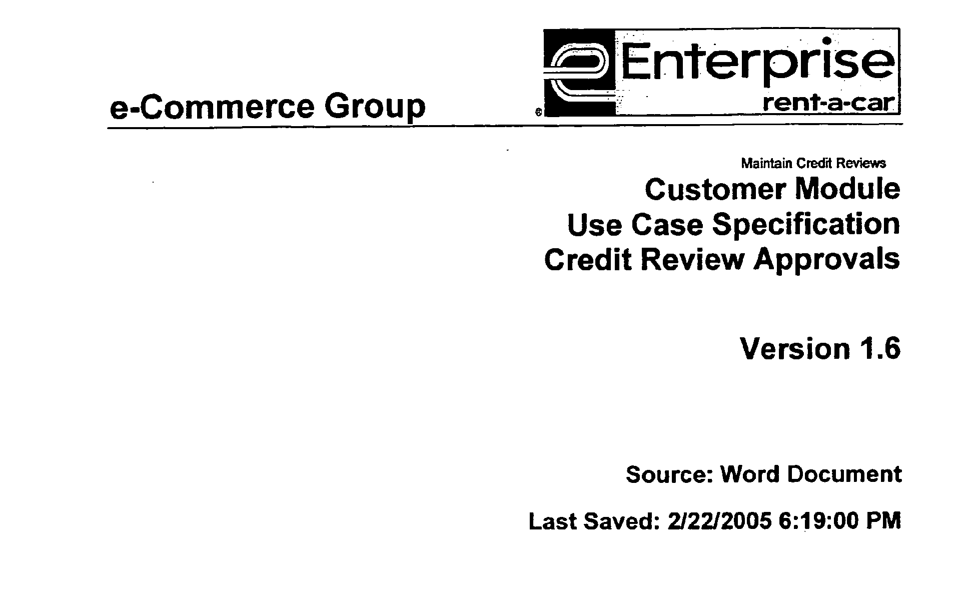

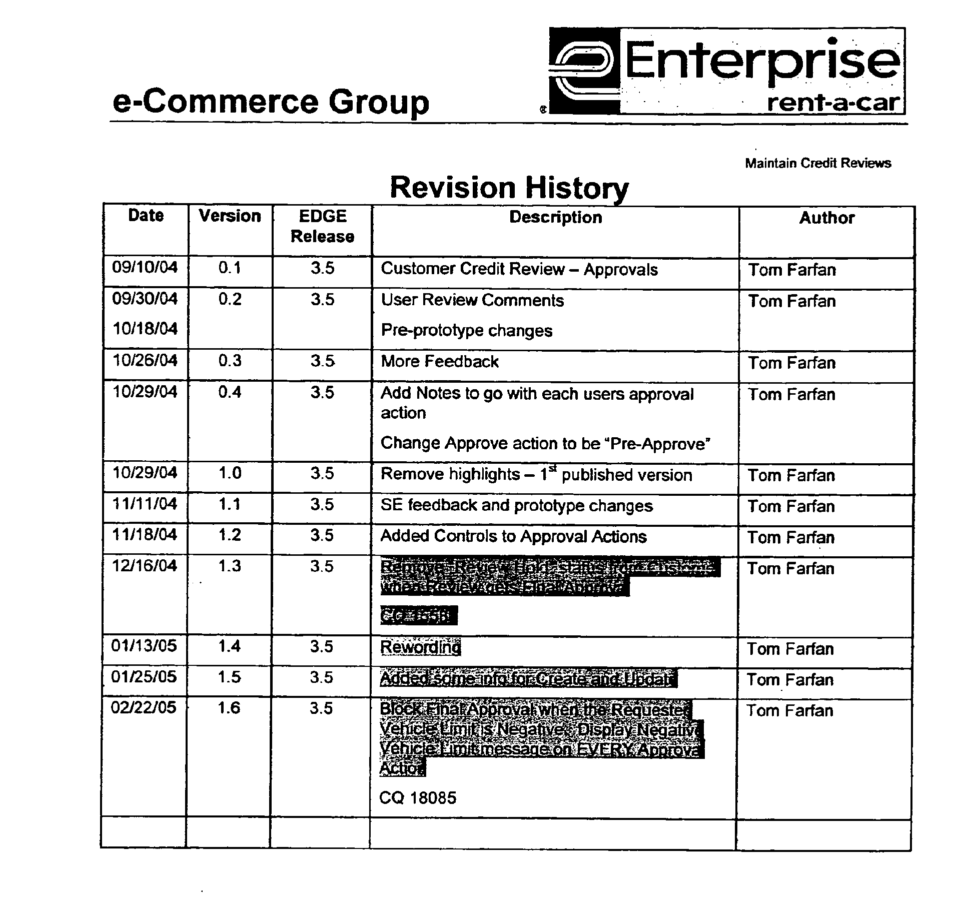

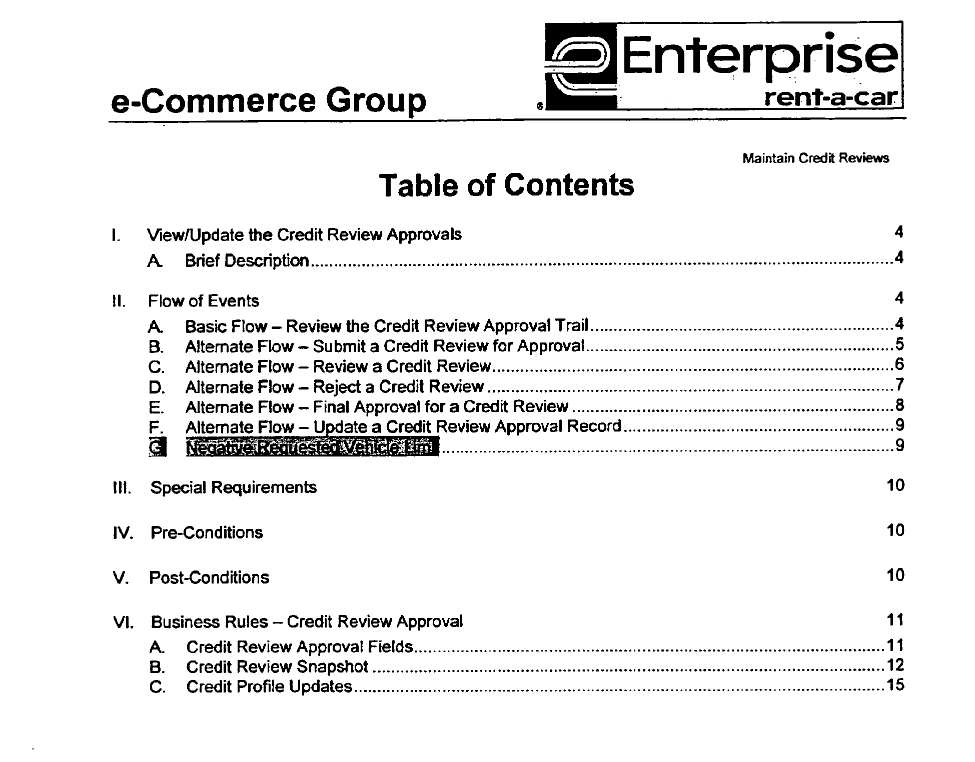

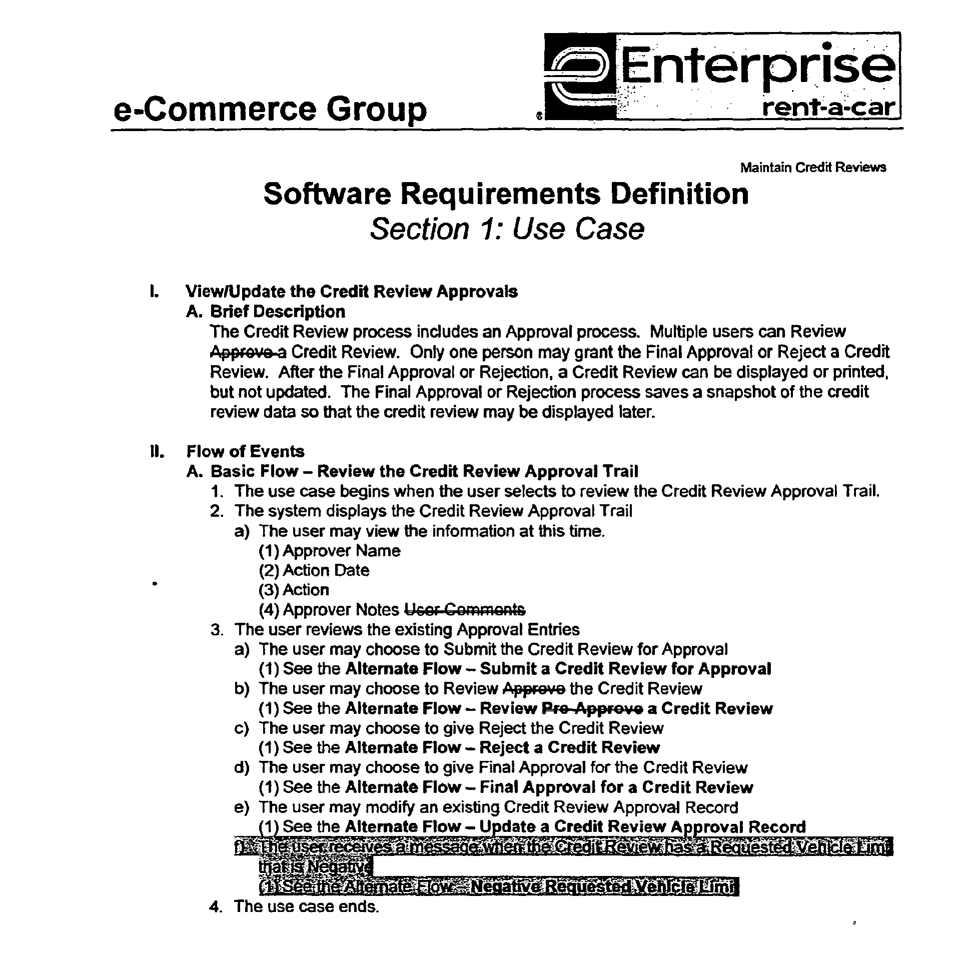

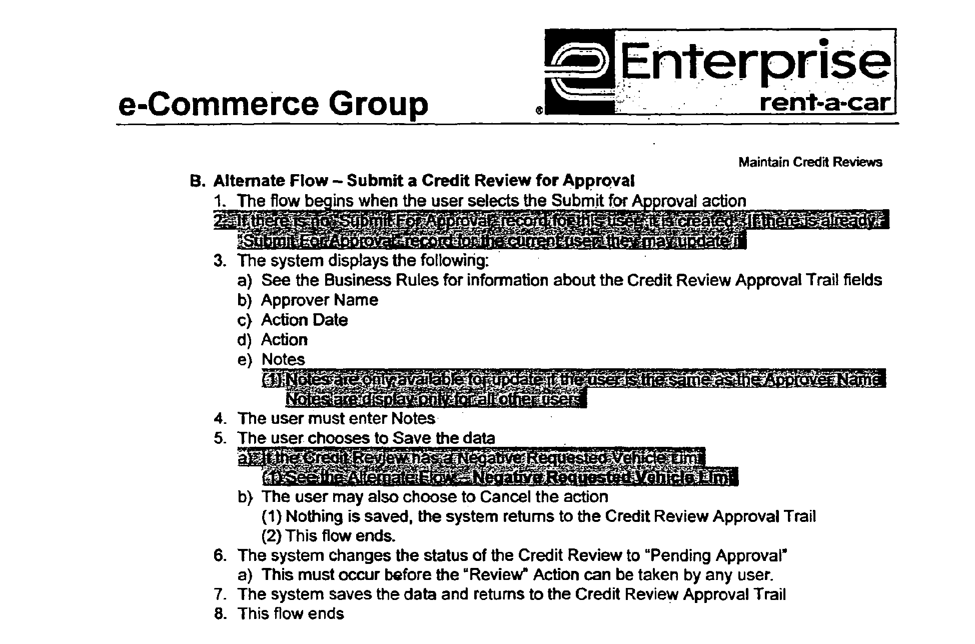

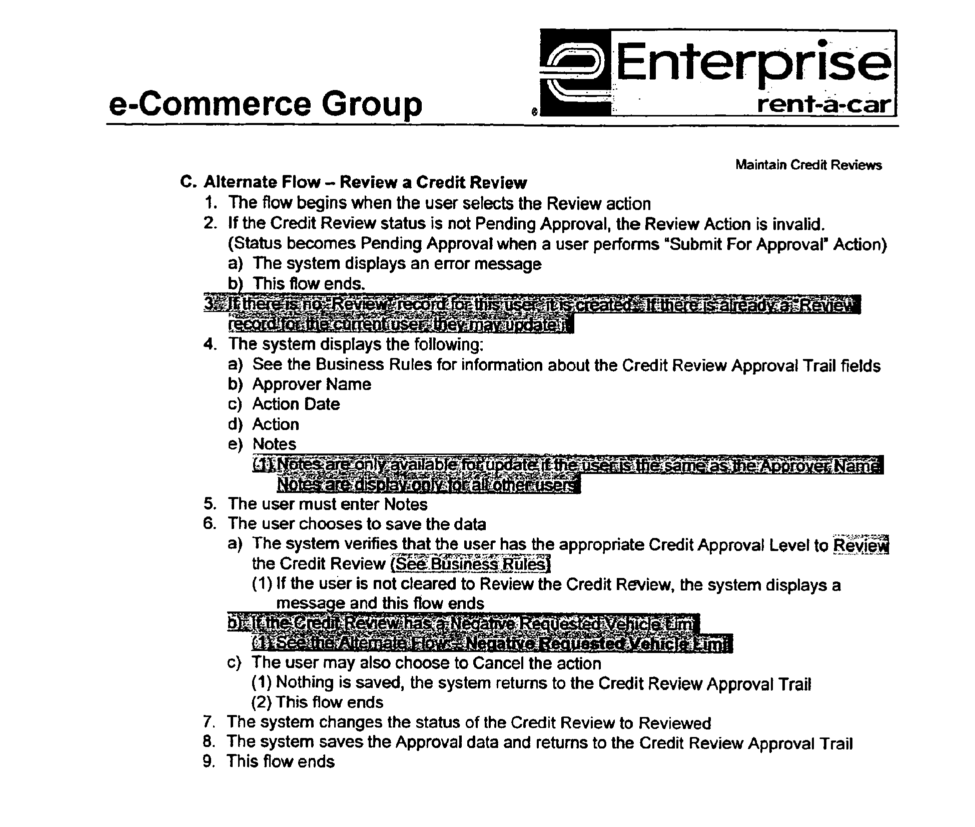

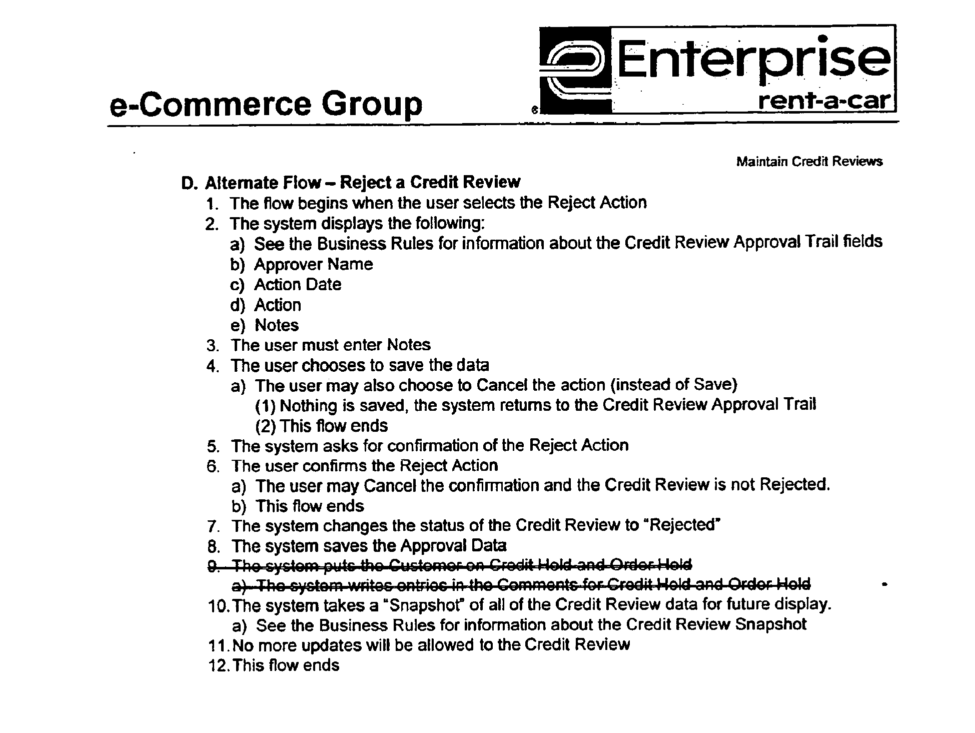

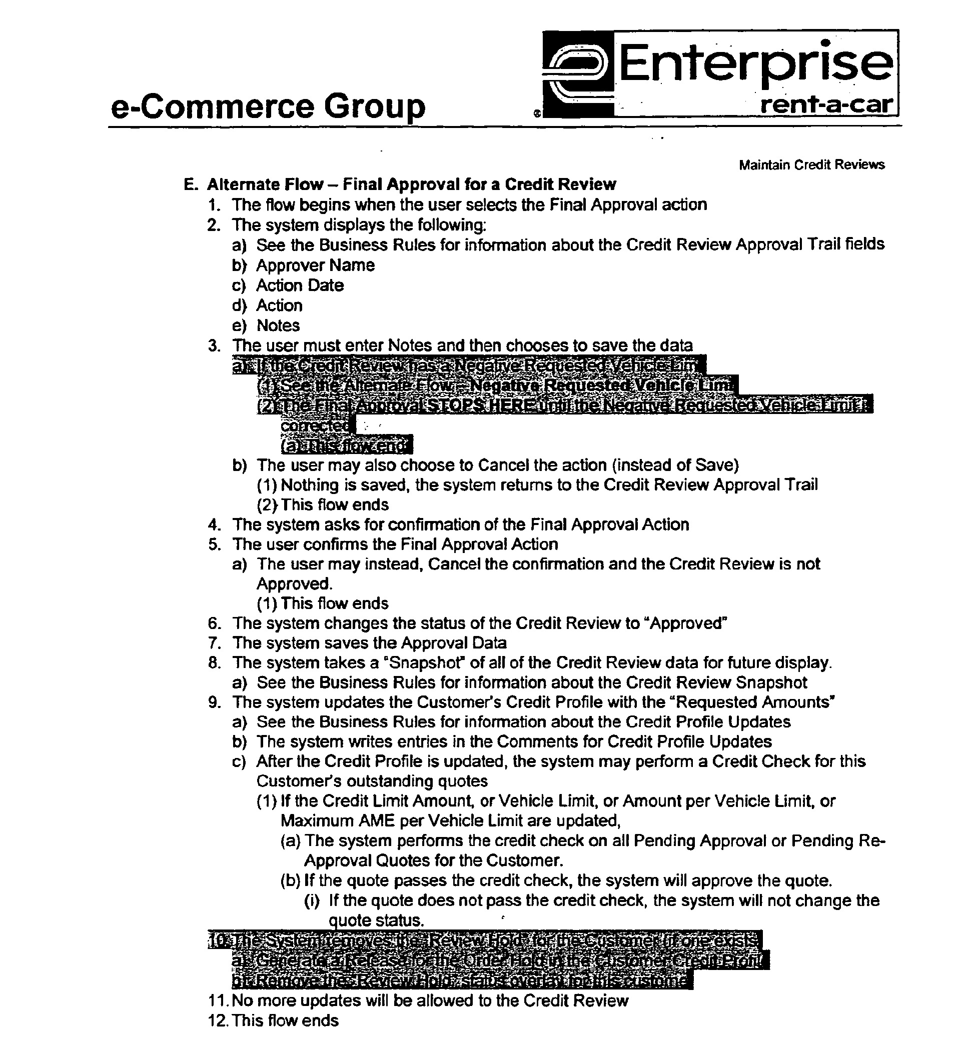

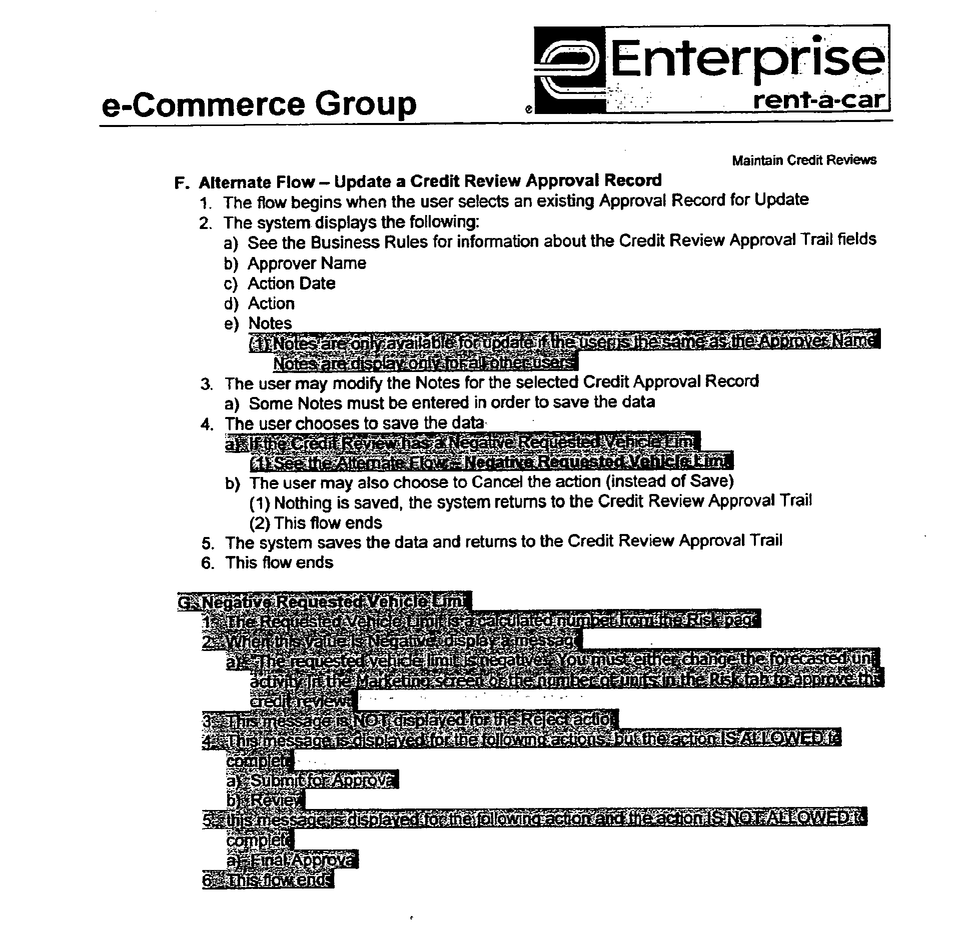

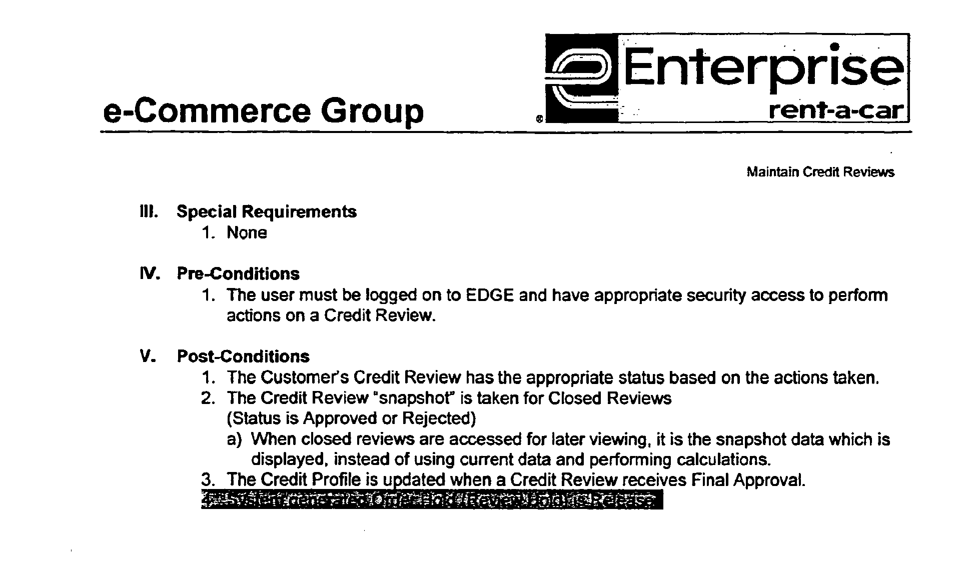

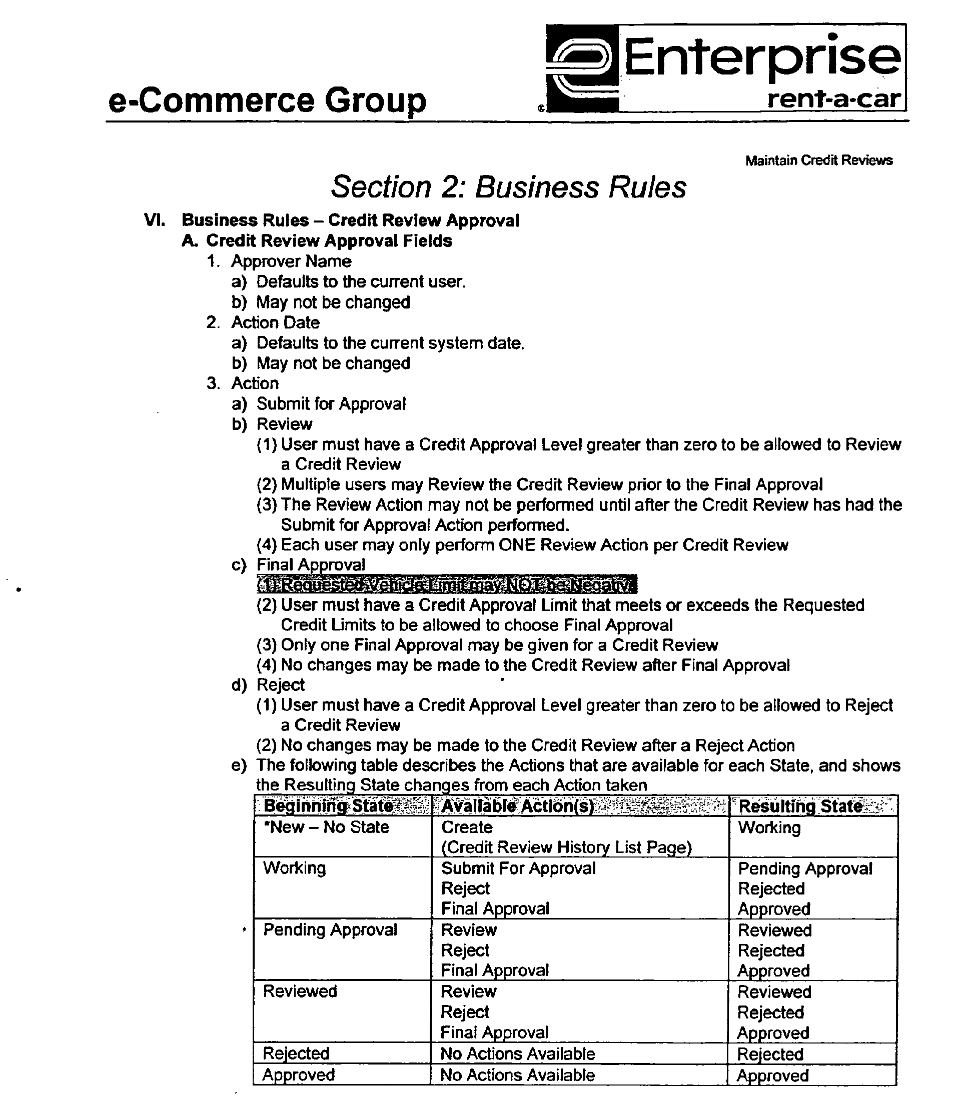

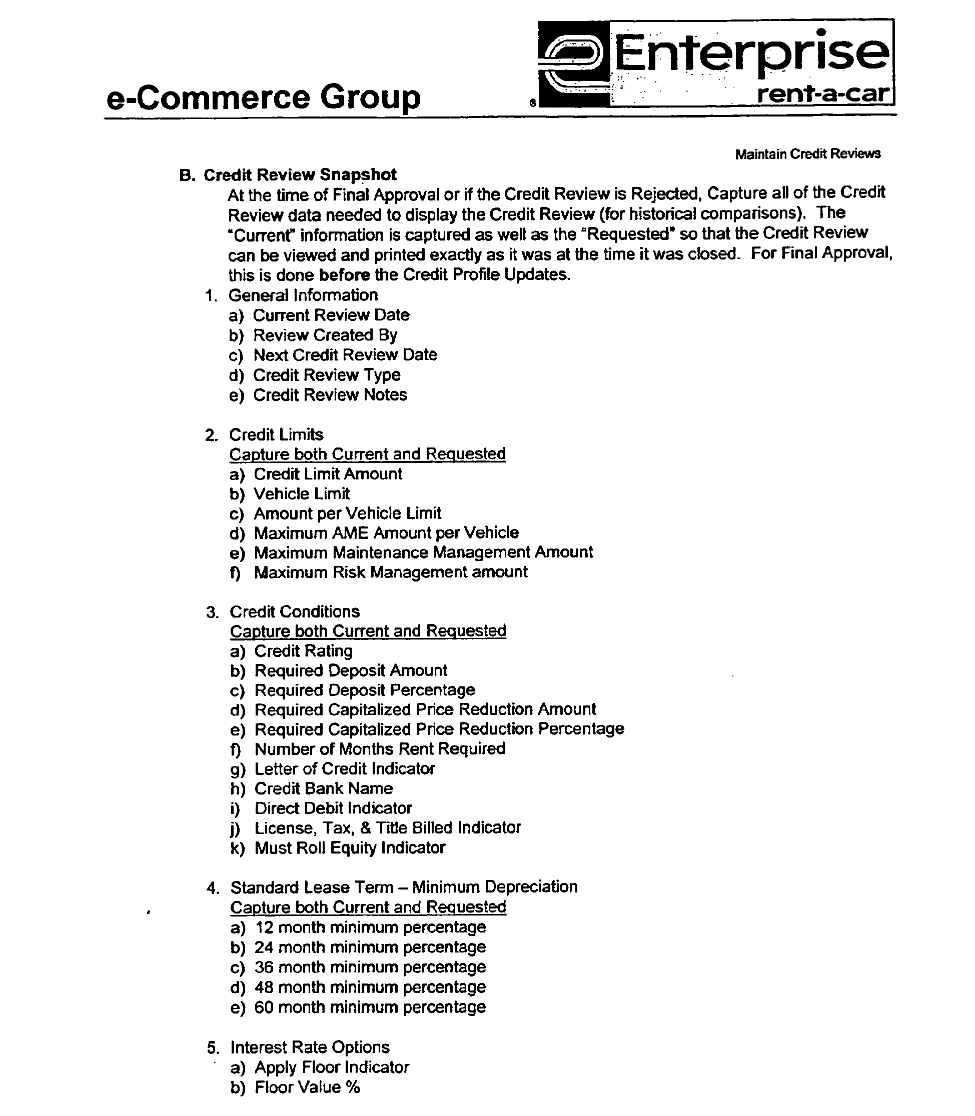

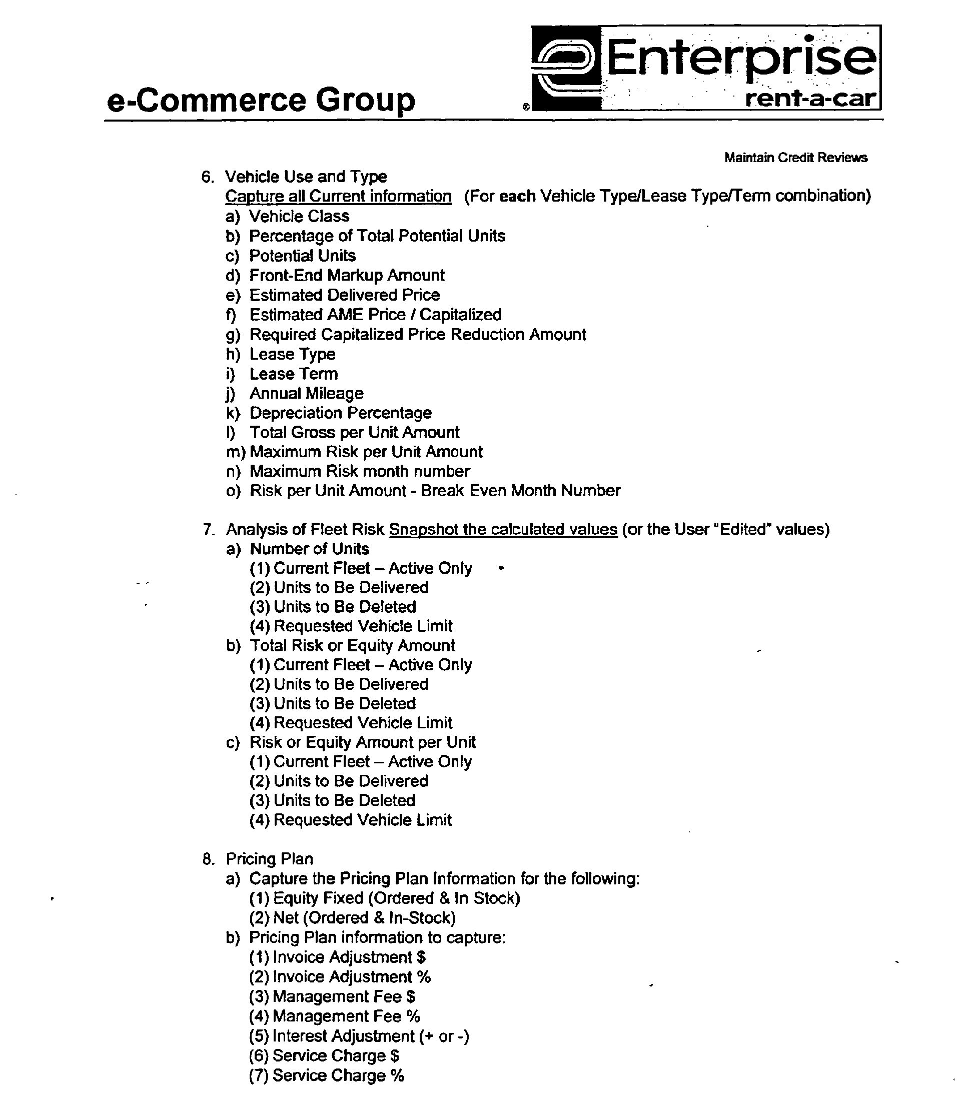

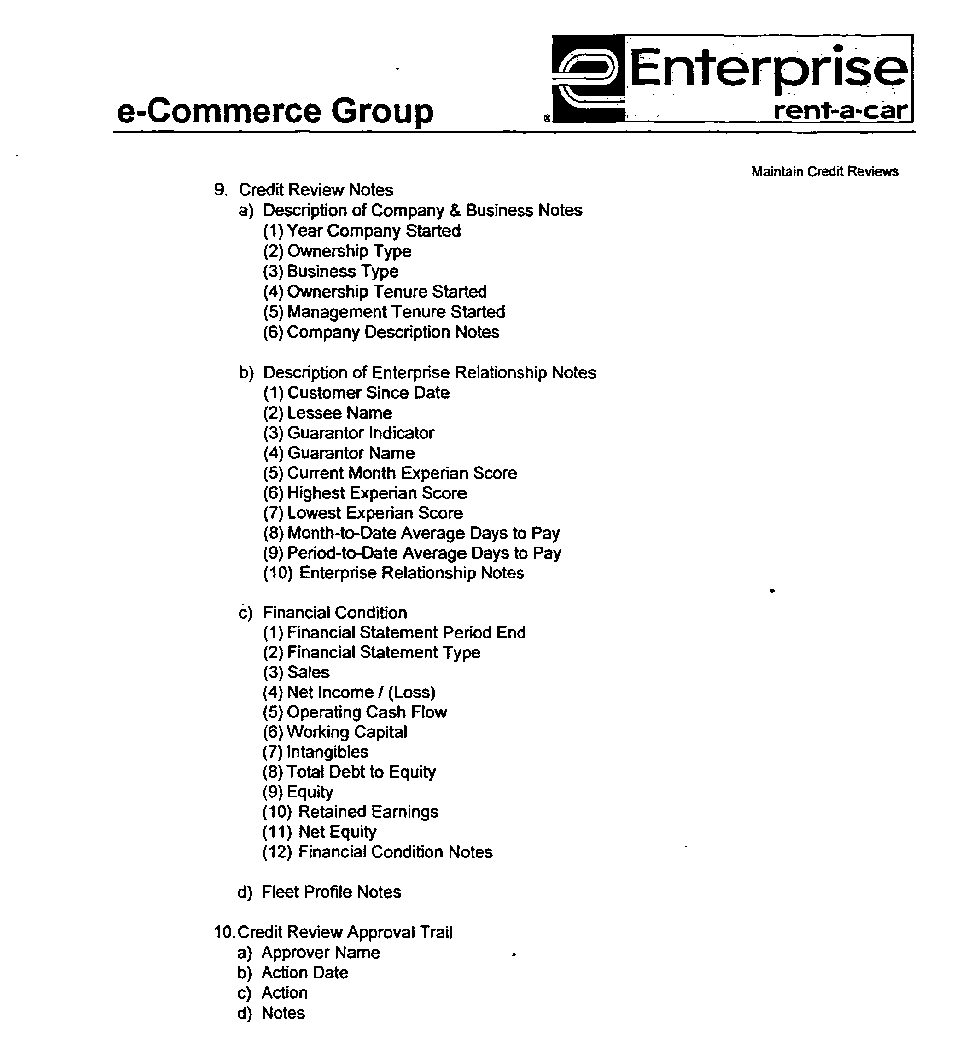

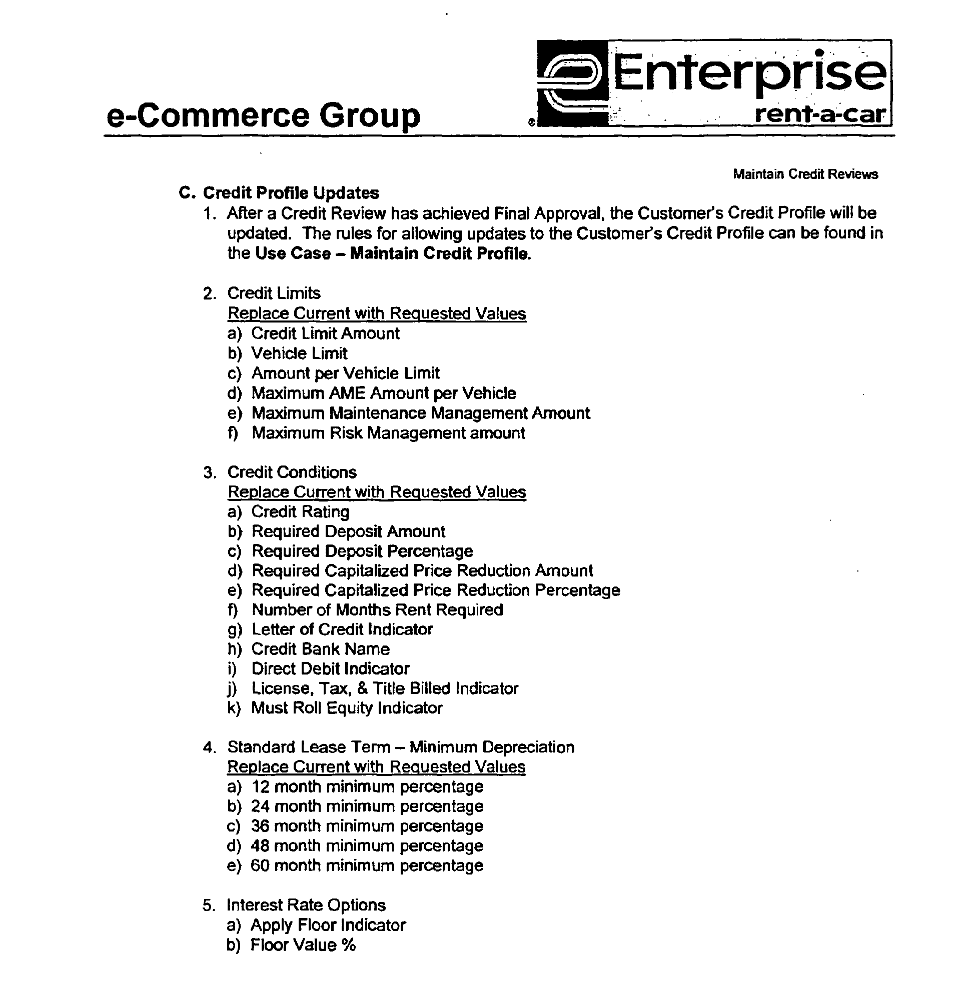

## Claims

1. A system configured for managing a plurality of credit profiles for a plurality of customers by a user, each of said customers having a fleet of leased vehicles, the system comprising:
a client computer for the user's use;
a server in communication with the client computer; and
a database in communication with the server and thus the user through the client computer, the database being configured to store a plurality of customer credit profiles; and
wherein the server is configured to (1) provide a plurality of GUIs for display on the client computer, at least one of the GUIs being configured to receive data from the user corresponding to a request for a change to one of said customer's credit profiles in response to user input, at least one of the GUIs being configured to display at least a portion of one of said customer's credit profiles in response to user input, and at least one of the GUIs being configured to receive input from the user corresponding to an action to take on the submitted request, and (2) update the customer's credit profile in accordance with the received action input.

2. The system of claim 1 wherein each credit profile comprises a credit limit and a vehicle limit, and wherein at least one of the GUIs is configured to display a selected customer credit profile's current credit limit, the selected customer credit profile's current vehicle limit, a field for user entry of a requested credit limit for the selected customer credit profile, and a field for user entry of a requested vehicle limit for the selected customer credit profile.

3. The system of claim 2 wherein the customer credit profile further comprises a per vehicle credit limit that represents a maximum amount of credit authorized for any given vehicle in the customer's fleet, and wherein at least one of the GUIs is configured to display the customer credit profile's current per vehicle credit limit and a field for user entry of a requested per vehicle credit limit for the customer credit profile.

4. The system of claim 3 wherein the customer credit profile further comprises a per vehicle aftermarket equipment (AME) credit limit that represents a maximum amount of credit authorized for AME for any given vehicle in the customer's fleet, at least one of the GUIs is configured to display the customer credit profile's current AME credit limit and a field for user entry of a requested AME credit limit for the customer credit profile, a maximum maintenance management amount, at least one of the GUIs being configured to display the customer credit profile's current maximum maintenance management amount and a field for user entry of a requested maximum maintenance management amount for the customer credit profile, a maximum risk management amount, at least one of the GUIs being configured to display the customer credit profile's current maximum risk management amount and a field for user entry of a requested maximum risk management amount for the customer credit profile, and a plurality of lease term depreciation percentages applicable to a plurality of lease months, at least one of the GUIs being configured to display the customer credit profile's current lease term depreciation percentages and a plurality of fields for user entry of a plurality of requested lease term depreciation percentages for the customer credit profile.

5. The system of claim 1 wherein at least one of the GUIs is configured to display a calculated risk amount corresponding to at least one of either a) a planned leased vehicle fleet for the customer, or b) current leased vehicles in the customer's leased vehicle fleet and a calculated risk amount corresponding to leased vehicles that are planned for delivery to the customer's leased vehicle fleet, and wherein that at least one GUI is further configured to allow the user to modify at least one of the displayed risk amounts.

6. The system of claim 1 wherein at least one of the GUIs is configured to allow the user to initiate a credit review for a customer's credit profile and specify a type of credit review that is to be undertaken, wherein the credit review type comprises a credit review for at least one selected from the group consisting of a requested increase in credit limit and a requested increase in vehicle limit, and wherein the customer credit profile further comprises a credit rating that represents a level of scrutiny that will be applied to credit checks applied to a leased vehicle order by the customer, and wherein the credit review type comprises a credit review for a requested change in credit rating.

7. A method for user management of a plurality of customer credit profiles, at least one of said customers having a fleet of leased vehicles, the method comprising:
providing at least one GUI through which a user can submit a request to review a proposed change to a customer's stored credit profile;
providing at least one GUI through which a user can view data stored in a customer's credit profile in response to a submitted credit review request;
providing at least one GUI through which a user can provide input corresponding to an approval or rejection of the credit profile change request; and
updating the customer's stored credit profile in accordance with the user's approval or rejection input.

8. The method of claim 7 wherein the credit profile comprises a credit limit and a vehicle limit, the method further comprising:
providing at least one GUI through which a user can selectively choose to request a change in either or both of the customer's credit limit and the customer's vehicle limit.

9. The method of claim 8 wherein the customer credit profile further comprises at least one member selected from the group consisting of a per vehicle credit limit that represents a maximum amount of credit authorized for any given vehicle in the customer's fleet, a per vehicle aftermarket equipment (AME) credit limit that represents a maximum amount of credit authorized for AME for any given vehicle in the customer's fleet, a maximum maintenance management amount, and a maximum risk management amount, the method further comprising:
providing at least one GUI through which a user can request a change to the at least one member selected from the group.

10. The method of claim 7 further comprising:
providing at least one GUI through which a user can view a calculated risk amount corresponding to current leased vehicles in the customer's leased vehicle fleet and a calculated risk amount corresponding to leased vehicles that are planned for delivery to the customer's leased vehicle fleet, and wherein that at least one GUI is further configures to allow the user to modify at least one of the displayed risk amounts.
